(19) Europäisches Patentamt / European Patent Office / Office européen des brevets

(11) **EP 4 514 007 A1**

(12) **EUROPEAN PATENT APPLICATION**
published in accordance with Art. 153(4) EPC

(43) Date of publication:
**26.02.2025 Bulletin 2025/09**

(21) Application number: **23795358.3**

(22) Date of filing: **24.04.2023**

(51) International Patent Classification (IPC):
***H04W 72/04*** *(2023.01)*

(52) Cooperative Patent Classification (CPC):
**H04L 5/00; H04W 72/04; H04W 72/0446;**
**H04W 72/0453; H04W 72/0457**

(86) International application number:
**PCT/CN2023/090409**

(87) International publication number:
**WO 2023/207925 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 29.04.2022 CN 202210469116
12.08.2022 CN 202210969093

(71) Applicant: **Huawei Technologies Co., Ltd.**
**Shenzhen, Guangdong 518129 (CN)**

(72) Inventors:
• **LIU, Xianda**
**Shenzhen, Guangdong 518129 (CN)**
• **GAO, Xiang**
**Shenzhen, Guangdong 518129 (CN)**
• **ZHANG, Zhening**
**Shenzhen, Guangdong 518129 (CN)**
• **LIU, Kunpeng**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57)    This application provides a communication method and apparatus, to enhance interference randomization, so as to improve channel estimation performance. The method includes: sending configuration information of a reference signal; and receiving the reference signal via M antenna ports based on the configuration information, where M is an integer greater than 0, the M antenna ports include at least one first antenna port, a comb occupied by the first antenna port is determined based on at least a first offset, and the first offset is determined based on at least a time domain resource occupied by the first antenna port and/or a frequency domain resource occupied by the first antenna port.

FIG. 13

## Description

This application claims priorities to Chinese Patent Application No. 202210469116.4, filed with the China National Intellectual Property Administration on April 29, 2022 and entitled "COMMUNICATION METHOD AND APPARATUS", and to Chinese Patent Application No. 202210969093.3, filed with the China National Intellectual Property Administration on August 12, 2022 and entitled "COMMUNICATION METHOD AND APPARATUS", both of which are incorporated herein by reference in their entireties.

## TECHNICAL FIELD

This application relates to the communication field, and in particular, to a communication method and apparatus.

## BACKGROUND

A network device may obtain uplink channel information of a terminal device by using a sounding reference signal (sounding reference signal, SRS) sent by the terminal device; or obtain downlink channel information of the terminal device based on channel reciprocity. Further, the network device may schedule the terminal device based on the uplink channel information or the downlink channel information. However, a physical resource used by the terminal device to send the SRS follows a fixed rule. This is not conducive to interference randomization and is not conducive to channel estimation.

## SUMMARY

Embodiments of this application provide a communication method and apparatus, to enhance interference randomization, so as to improve channel estimation performance.

To achieve the foregoing objective, the following technical solutions are used in this application.

According to a first aspect, a communication method is provided. The communication method includes: sending configuration information; and receiving a reference signal via M antenna ports based on the configuration information, where the configuration information indicates a configuration of the reference signal, M is an integer greater than 0, the M antenna ports include at least one first antenna port, a comb occupied by the first antenna port is determined based on at least a first offset, the first offset is an integer greater than 0, and the first offset is determined based on at least a cell identifier and a time domain resource occupied by the first antenna port; or the first offset is determined based on a cyclic shift value occupied by the first antenna port.

According to the method provided in the first aspect, the comb occupied by the first antenna port of a terminal device is determined based on the first offset, so that a frequency domain resource (the comb) occupied by the terminal device may randomly change at different sending moments. In this way, a terminal device that causes interference to the terminal device randomly changes. Therefore, frequency-domain interference randomization is implemented, and a better interference randomization effect can be achieved.

Alternatively, according to the method provided in the first aspect, the cyclic shift value is introduced. The comb occupied by the first antenna port is obtained based on the first offset, and a value of the first offset is related to the cyclic shift value. In this case, the comb occupied by the first antenna port is affected by the cyclic shift value and the first offset. In this way, a comb and a cyclic shift value that are occupied by each antenna port change randomly at different sending moments, and an antenna port that causes interference to the antenna port of the terminal device also changes randomly at different sending moments. At a same sending moment, antenna ports that cause interference to different antenna ports of the terminal device are different. In this way, two-dimensional interference randomization in code domain and in frequency domain can be implemented, the interference randomization effect can be further enhanced, and an interference randomization convergence speed can be accelerated.

In a possible design manner, the first offset is determined based on at least the cell identifier and the time domain resource occupied by the first antenna port, or the first offset may be determined based on one or more of the following parameters: a quantity of slots included in each system frame, a quantity of orthogonal frequency division multiplexing (orthogonal frequency division multiplexing, OFDM) symbols included in each slot, a comb quantity, and a comb offset, where the comb quantity is a quantity of combs included in a transmit bandwidth $m_{SRS,b_{hop}}$ of the reference signal, and the comb offset is a reference quantity of combs occupied by the reference signal. In this way, a frequency domain resource (the comb) occupied by the terminal device may randomly change at different sending moments, so that a terminal device that causes interference to the terminal device randomly changes.

In a possible design manner, the time domain resource occupied by the first antenna port includes one or more OFDM symbols, and the one or more OFDM symbols included in the time domain resource occupied by the first antenna port may be determined based on one or more of the following parameters: a system frame number corresponding to the first antenna port, a slot number corresponding to the first antenna port, and an OFDM symbol number corresponding to the first antenna port.

In other words, a quantity of OFDM symbols included in the time domain resource occupied by the first antenna port is not limited in this application.

Optionally, time domain resources occupied by the M antenna ports may be the same or different.

In a possible design manner, the first offset may be a first random number. In other words, the first offset may be a random number. For example, the first offset is a random number greater than 0.

In a possible design manner, the first offset or the first random number may satisfy

$$Q_1 = \left(\sum_{m=0}^{7} c\left(8\left(n_f N_{slot}^{frame} N_{symb}^{slot} + n_{s,f}^{\mu} N_{symb}^{slot} + l_0 + l'\right) + m\right) \cdot 2^m\right) \bmod K_{TC}$$ ; $Q_1 = $

$$\left(\sum_{m=0}^{7} c\left(8\left(n_{s,f}^{\mu} N_{symb}^{slot} + l_0 + l'\right) + m\right) \cdot 2^m\right) \bmod K_{TC}$$ ;

$$Q_1 = \sum_{m=0}^{7} c\left(8\left(n_f N_{slot}^{frame} N_{symb}^{slot} + n_{s,f}^{\mu} N_{symb}^{slot} + l_0 + l'\right) + m\right) \cdot 2^m$$ ; or

$$Q_1 = \sum_{m=0}^{7} c\left(8\left(n_{s,f}^{\mu} N_{symb}^{slot} + l_0 + l'\right) + m\right) \cdot 2^m$$ ,

where $Q_1$ represents the first offset or the first random number; a mathematical symbol $\sum$ represents summation; $c()$ is a pseudo-random sequence, where the pseudo-random sequence is related to the cell identifier; $n_f$ represents the system frame number corresponding to the first antenna port; $N_{slot}^{frame}$ represents the quantity of the slots included in each system frame; $N_{symb}^{slot}$ represents the quantity of the OFDM symbols included in each slot; $n_{s,f}^{\mu}$ represents the slot number corresponding to the first antenna port; $l_0 + l'$ represents the OFDM symbol number corresponding to the first antenna port, where $l_0$ represents an index of a start OFDM symbol in the one or more OFDM symbols included in the time domain resource occupied by the first antenna port, and $l'$ represents a relative index of one OFDM symbol in the one or more OFDM symbols included in the time domain resource occupied by the first antenna port; and a mathematical symbol mod represents a modulo operation.

The comb occupied by the first antenna port of the terminal device is determined based on the first offset, so that the frequency domain resource (comb) occupied by the terminal device may randomly change at different sending moments. In this way, a terminal device that causes interference to the terminal device randomly changes. Therefore, the better interference randomization effect can be achieved.

In a possible design manner, the M antenna ports may further include at least one second antenna port, a comb occupied by the second antenna port may be determined based on at least a second offset, the second offset is an integer greater than 0, the second offset may be determined based on at least the cell identifier and a time domain resource occupied by the second antenna port, and the second offset is different from the first offset.

In this way, the comb occupied by the first antenna port of the terminal device is determined based on the first offset, and the comb occupied by the second antenna port of the terminal device is determined based on the second offset, so that the comb occupied by the antenna port of the terminal device randomly changes at different sending moments, and intervals between a plurality of combs occupied by the antenna ports of the same terminal device may also change randomly. In this way, antenna ports that cause interference to the antenna port of the terminal device are random at different sending moments, and antenna ports that cause, at a same sending moment, interference to antenna ports that are of the terminal device and that occupy different combs may not be antenna ports of a same terminal device. This implements the frequency-domain interference randomization, and can further improve a degree of freedom of the frequency domain resource occupied by the antenna port of the terminal device, to further improve the interference randomization effect.

In a possible design manner, the second offset may be determined based on at least the cell identifier and the time domain resource occupied by the second antenna port; or the second offset may be determined based on one or more of the following parameters: the quantity of the slots included in each system frame, the quantity of the OFDM symbols included in each slot, the comb quantity, and the comb offset, where the comb quantity is the quantity of the combs included in the transmit bandwidth $m_{SRS,bhop}$ of the reference signal, and the comb offset is the reference quantity of the combs occupied by the reference signal. This can further improve the degree of freedom of the frequency domain resource occupied by the antenna port of the terminal device, to further improve the interference randomization effect.

In a possible design manner, the time domain resource occupied by the second antenna port may include one or more OFDM symbols, and the one or more OFDM symbols that may be included in the time domain resource occupied by the second antenna port are determined based on one or more of the following parameters: a system frame number corresponding to the second antenna port, a slot number corresponding to the second antenna port, and an OFDM symbol number corresponding to the second antenna port. In other words, a quantity of OFDM symbols included in the time domain resource occupied by the second antenna port is not limited in this application.

In a possible design manner, the second offset may be a second random number. In other words, the second offset may be a random number.

In a possible design manner, the second random number may satisfy $Q_2 =$

$$\left(\sum_{m=0}^{7} c\left(8\left(n_f N_{\text{slot}}^{\text{frame}} N_{\text{symb}}^{\text{slot}} + n_{\text{s,f}}^{\mu} N_{\text{symb}}^{\text{slot}} + l_0 + l'\right) + m + 1\right) \cdot 2^m\right) \bmod K_{TC}$$ ; $Q_2 =$

$$\left(\sum_{m=0}^{7} c\left(8\left(n_{\text{s,f}}^{\mu} N_{\text{symb}}^{\text{slot}} + l_0 + l'\right) + m + 1\right) \cdot 2^m\right) \bmod K_{TC}$$ ;

$$Q_2 = \sum_{m=0}^{7} c\left(8\left(n_f N_{\text{slot}}^{\text{frame}} N_{\text{symb}}^{\text{slot}} + n_{\text{s,f}}^{\mu} N_{\text{symb}}^{\text{slot}} + l_0 + l'\right) + m + 1\right) \cdot 2^m$$ ; or

$$Q_2 = \sum_{m=0}^{7} c\left(8\left(n_{\text{s,f}}^{\mu} N_{\text{symb}}^{\text{slot}} + l_0 + l'\right) + m + 1\right) \cdot 2^m,$$

where $Q_2$ represents the second random number; the mathematical symbol $\Sigma$ represents summation; c() is a pseudo-random sequence, where the pseudo-random sequence is related to the cell identifier; $n_f$ represents the system frame number corresponding to the second antenna port; $N_{\text{slot}}^{\text{frame}}$ represents the quantity of the slots included in each system frame; $N_{\text{symb}}^{\text{slot}}$ represents the quantity of the OFDM symbols included in each slot; $n_{\text{s,f}}^{\mu}$ represents the slot number corresponding to the second antenna port; $l_0 + l'$ represents the OFDM symbol number corresponding to the second antenna port, where $l_0$ represents an index of a start OFDM symbol in the one or more OFDM symbols included in the time domain resource occupied by the second antenna port, and $l'$ represents a relative index of one OFDM symbol in the one or more OFDM symbols included in the time domain resource occupied by the second antenna port; and the mathematical symbol mod represents a modulo operation. This can further improve the degree of freedom of the frequency domain resource occupied by the antenna port of the terminal device, to further improve the interference randomization effect.

In a possible design manner, the second offset may be a sum of the first offset and a third offset, and the third offset is an integer greater than 0. In this way, the comb occupied by the first antenna port of the terminal device is determined based on the first offset, and the comb occupied by the second antenna port of the terminal device is determined based on the second offset, so that the comb occupied by the antenna port of the terminal device randomly changes at different sending moments, and intervals between a plurality of combs occupied by the antenna ports of the same terminal device may also change randomly. In this way, antenna ports that cause interference to the antenna port of the terminal device are random at different sending moments, and antenna ports that cause, at a same sending moment, interference to antenna ports that are of the terminal device and that occupy different combs may not be antenna ports of a same terminal device. This implements the frequency-domain interference randomization, and can further improve the degree of freedom of the frequency domain resource occupied by the antenna port of the terminal device, to further improve the interference randomization effect.

In a possible design manner, the third offset may be determined based on at least the cell identifier and the time domain resource occupied by the second antenna port, or the third offset may be determined based on one or more of the following parameters: the quantity of the slots included in each system frame, the quantity of the OFDM symbols included in each slot, the comb quantity, and the comb offset. This can further improve the degree of freedom of the frequency domain resource occupied by the antenna port of the terminal device, to further improve the interference randomization effect.

In a possible design manner, the third offset may be a third random number. In other words, the third offset may be a random number.

In a possible design manner, the third random number may satisfy $\varDelta =$

$$\left(\sum_{m=0}^{7} c\left(8\left(n_f N_{\text{slot}}^{\text{frame}} N_{\text{symb}}^{\text{slot}} + n_{\text{s,f}}^{\mu} N_{\text{symb}}^{\text{slot}} + l_0 + l'\right) + m + 1\right) \cdot 2^m\right) \bmod (K_{\text{TC}}/2)$$ ; $\varDelta =$

$$\left(\sum_{m=0}^{7} c\left(8\left(n_{\text{s,f}}^{\mu} N_{\text{symb}}^{\text{slot}} + l_0 + l'\right) + m + 1\right) \cdot 2^m\right) \bmod (K_{\text{TC}}/2)$$ ; $\varDelta =$

$$\left(\sum_{m=0}^{7} c\left(8\left(n_f N_{\text{slot}}^{\text{frame}} N_{\text{symb}}^{\text{slot}} + n_{\text{s,f}}^{\mu} N_{\text{symb}}^{\text{slot}} + l_0 + l'\right) + m\right) \cdot 2^m\right) \bmod (K_{\text{TC}}/2)$$ ; or $\varDelta =$

$$\left(\sum_{m=0}^{7} c\left(8\left(n_{\text{s,f}}^{\mu} N_{\text{symb}}^{\text{slot}} + l_0 + l'\right) + m\right) \cdot 2^m\right) \bmod (K_{\text{TC}}/2),$$

where $\varDelta$ represents the third random number; the mathematical symbol $\Sigma$ represents summation; c() is a pseudo-random sequence, where the pseudo-random sequence is related to the cell identifier; $n_f$ represents the system frame number corresponding to the second antenna port; $N_{\text{slot}}^{\text{frame}}$ represents the quantity of the slots included in each system frame; $N_{\text{symb}}^{\text{slot}}$ represents the quantity of the OFDM symbols included in each slot; $n_{\text{s,f}}^{\mu}$ represents the slot number corresponding to the second antenna port; $l_0 + l'$ represents the OFDM symbol number corresponding to the second antenna port, where $l_0$ represents an index of a start OFDM symbol in the one or more OFDM symbols included in the time domain resource occupied by the second antenna port, and $l'$ represents a relative index of one OFDM symbol in the one or more OFDM symbols included in the time domain resource occupied by the second antenna port; and the mathematical symbol mod represents a modulo operation. This can further improve the degree of freedom of the frequency domain resource occupied by the antenna port of the terminal device, to further improve the interference randomization effect.

In a possible design manner, that the first offset is determined based on a cyclic shift value occupied by the first antenna port may include: The first offset is determined based on a range to which the cyclic shift value belongs.

In this way, the comb occupied by the antenna port is obtained based on the first offset, where the value of the first offset is related to the cyclic shift value. In this case, the comb occupied by the antenna port is affected by the cyclic shift value and the first offset, so that a comb and a cyclic shift value that are occupied by each antenna port change randomly at different sending moments, and an antenna port that causes interference to the antenna port of the terminal device also changes randomly at different sending moments. At a same sending moment, antenna ports that cause interference to different antenna ports of the terminal device are different. The two-dimensional interference randomization in code domain and in frequency domain can be implemented, the interference randomization effect can be further enhanced, and the interference randomization convergence speed can be accelerated.

In addition, due to introduction of the cyclic shift value, interference levels of interference caused by antenna port $p_a$ of UE x to antenna port $p_b$ of UE y may still vary greatly at different sending moments. In this way, an excellent interference randomization effect can be ensured.

In a possible design manner, a start position of a frequency domain resource occupied by each of the M antenna ports may be determined based on at least a fourth offset, where the fourth offset is an integer greater than 0, and the fourth offset may be determined based on at least the cell identifier and an index of a frequency hopping periodicity corresponding to the reference signal.

In this way, when the start position of the frequency domain resource occupied by the antenna port is determined, the fourth offset is introduced, so that the start position of the frequency domain resource occupied by each antenna port may randomly change in different frequency hopping periodicities, and an antenna port that causes interference to an antenna port of a terminal device also randomly changes, to implement the frequency-domain interference randomization. This brings a good interference randomization effect, can further accelerate the interference randomization convergence speed, and can further improve channel estimation performance.

In a possible design manner, the fourth offset may be a fourth random number. In other words, the fourth offset may be a random number.

In a possible design manner, the fourth random number may satisfy $k_{\text{rand}} =$

$$\left(\sum_{m=0}^{7} c\left(8\left\lfloor n_{\text{SRS}} / \prod_{b'=b_{\text{hop}}}^{B_{\text{SRS}}} N_{b'} \right\rfloor + m\right) \cdot 2^m\right) \bmod P_{\text{F}}$$

; or $k_{\text{rand}} =$

$$\sum_{m=0}^{7} c\left(8\left\lfloor n_{\text{SRS}} / \prod_{b'=b_{\text{hop}}}^{B_{\text{SRS}}} N_{b'} \right\rfloor + m\right) \cdot 2^m,$$

where $k_{\text{rand}}$ represents the fourth random number; the mathematical symbol $\sum$ represents summation; $c()$ is a pseudo-random sequence, where the pseudo-random sequence is related to the cell identifier; $\left\lfloor \frac{n_{\text{SRS}}}{\prod_{b'=b_{\text{hop}}}^{B_{\text{SRS}}} N_{b'}} \right\rfloor$ represents the index of the frequency hopping periodicity corresponding to the reference signal; a mathematical symbol $\lfloor \rfloor$ represents a floor operation; $n_{\text{SRS}}$ represents a count value of the reference signal; a mathematical symbol $\prod$ represents a product of a sequence; and the mathematical symbol mod indicates a modulo operation. This can further accelerate the interference randomization convergence speed, and can further improve the channel estimation performance.

According to a second aspect, a communication method is provided. The communication method includes: receiving configuration information; and sending a reference signal via M antenna ports based on the configuration information, where the configuration information indicates a configuration of the reference signal, M is an integer greater than 0, the M antenna ports include at least one first antenna port, a comb occupied by the first antenna port is determined based on at least a first offset, the first offset is an integer greater than 0, and the first offset is determined based on at least a cell identifier and a time domain resource occupied by the first antenna port; or the first offset is determined based on a cyclic shift value occupied by the first antenna port.

In a possible design manner, the first offset may be determined based on at least the cell identifier and the time domain resource occupied by the first antenna port; or the first offset may be determined based on one or more of the following parameters: a quantity of slots included in each system frame, a quantity of orthogonal frequency division multiplexing OFDM symbols included in each slot, a comb quantity, and a comb offset, where the comb quantity is a quantity of combs included in a transmit bandwidth $m_{\text{SRS},bhop}$ of the reference signal, and the comb offset is a reference quantity of combs occupied by the reference signal.

In a possible design manner, the time domain resource occupied by the first antenna port may include one or more OFDM symbols, and the one or more OFDM symbols included in the time domain resource occupied by the first antenna port are determined based on one or more of the following parameters: a system frame number corresponding to the first antenna port, a slot number corresponding to the first antenna port, and an OFDM symbol number corresponding to the first antenna port.

In a possible design manner, the first offset may be a first random number.

In a possible design manner, the first random number may satisfy $Q_1 =$

$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m\right) \bmod K_{TC}$$ ; $Q_1 =$

$$\left(\sum_{m=0}^{7} c(8(n_{\text{s,f}}^{\mu} N_{\text{symb}}^{\text{slot}} + l_0 + l') + m) \cdot 2^m\right) \bmod K_{TC}$$ ;

$$Q_1 = \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m$$ ; or

$$Q_1 = \sum_{m=0}^{7} c(8(n_{\text{s,f}}^{\mu} N_{\text{symb}}^{\text{slot}} + l_0 + l') + m) \cdot 2^m ,$$

where $Q_1$ represents the first random number; a mathematical symbol $\sum$ represents summation; c() is a pseudo-random sequence, where the pseudo-random sequence is related to the cell identifier; $n_f$ represents the system frame number corresponding to the first antenna port; $N_{\text{slot}}^{\text{frame}}$ represents the quantity of the slots included in each system frame; $N_{\text{symb}}^{\text{slot}}$ represents the quantity of the OFDM symbols included in each slot; $n_{\text{s,f}}^{\mu}$ represents the slot number corresponding to the first antenna port; $l_0 + l'$ represents the OFDM symbol number corresponding to the first antenna port, where $l_0$ represents an index of a start OFDM symbol in the one or more OFDM symbols included in the time domain resource occupied by the first antenna port, and $l'$ represents a relative index of one OFDM symbol in the one or more OFDM symbols included in the time domain resource occupied by the first antenna port; and a mathematical symbol mod represents a modulo operation.

In a possible design manner, the M antenna ports may further include at least one second antenna port, a comb occupied by the second antenna port may be determined based on at least a second offset, the second offset is an integer greater than 0, the second offset is determined based on at least the cell identifier and a time domain resource occupied by the second antenna port, and the second offset is different from the first offset.

In a possible design manner, the second offset may be determined based on at least the cell identifier and the time domain resource occupied by the second antenna port; or the second offset may be determined based on one or more of the following parameters: the quantity of the slots included in each system frame, the quantity of the OFDM symbols included in each slot, the comb quantity, and the comb offset, where the comb quantity is the quantity of the combs included in the transmit bandwidth $m_{\text{SRS,bhop}}$ of the reference signal, and the comb offset is the reference quantity of the combs occupied by the reference signal.

In a possible design manner, the time domain resource occupied by the second antenna port may include one or more OFDM symbols, and the one or more OFDM symbols that may be included in the time domain resource occupied by the second antenna port may be determined based on one or more of the following parameters: a system frame number corresponding to the second antenna port, a slot number corresponding to the second antenna port, and an OFDM symbol number corresponding to the second antenna port.

In a possible design manner, the second offset may be a second random number.

In a possible design manner, the second random number may satisfy $Q_2 =$

$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m\right) \bmod K_{TC}$$ ; $Q_2 =$

$$\left(\sum_{m=0}^{7} c(8(n_{\text{s,f}}^{\mu} N_{\text{symb}}^{\text{slot}} + l_0 + l') + m + 1) \cdot 2^m\right) \bmod K_{TC}$$ ;

$$Q_2 = \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m$$ ; or

$$Q_2 = \sum_{m=0}^{7} c(8(n_{\text{s,f}}^{\mu} N_{\text{symb}}^{\text{slot}} + l_0 + l') + m + 1) \cdot 2^m ,$$

where $Q_2$ represents the second random number; the mathematical symbol $\sum$ represents summation; c() is a pseudo-random sequence, where the pseudo-random sequence is related to the cell identifier; $n_f$ represents the system frame number corresponding to the second antenna port; $N_{\text{slot}}^{\text{frame}}$ represents the quantity of the slots included in each system frame; $N_{\text{symb}}^{\text{slot}}$ represents the quantity of the OFDM symbols included in each slot; $n_{\text{s,f}}^{\mu}$ represents the slot number corresponding to the second antenna port; $l_0 + l'$ represents the OFDM symbol number corresponding to the second antenna port, where $l_0$ represents an index of a start OFDM symbol in the one or more OFDM symbols included in the time domain resource occupied by the second antenna port, and $l'$ represents a relative index of one OFDM symbol in the one or more OFDM symbols included in the time domain resource occupied by the second antenna port; and the mathematical symbol mod represents a modulo operation.

In a possible design manner, the second offset may be a sum of the first offset and a third offset, and the third offset is an integer greater than 0.

In a possible design manner, the third offset may be determined based on at least the cell identifier and the time domain resource occupied by the second antenna port, or the third offset may be determined based on one or more of the following parameters: the quantity of the slots included in each system frame, the quantity of the OFDM symbols included in each slot, the comb quantity, and the comb offset.

In a possible design manner, the third offset may be a third random number.

In a possible design manner, the third random number may satisfy $\Delta =$

$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m\right) \mathrm{mod}\ (K_{\text{TC}}/2)$$ ; $\Delta =$

$$\left(\sum_{m=0}^{7} c(8(n_{\text{s,f}}^{\mu} N_{\text{symb}}^{\text{slot}} + l_0 + l') + m + 1) \cdot 2^m\right) \mathrm{mod}\ (K_{\text{TC}}/2)$$ ; $\Delta =$

$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m\right) \mathrm{mod}\ (K_{\text{TC}}/2)$$ ; or $\Delta =$

$$\left(\sum_{m=0}^{7} c(8(n_{\text{s,f}}^{\mu} N_{\text{symb}}^{\text{slot}} + l_0 + l') + m) \cdot 2^m\right) \mathrm{mod}\ (K_{\text{TC}}/2)$$ ,

where $\Delta$ represents the third random number; the mathematical symbol $\Sigma$ represents summation; c() is a pseudo-random sequence, where the pseudo-random sequence is related to the cell identifier; $n_f$ represents the system frame number corresponding to the second antenna port; $N_{\text{slot}}^{\text{frame}}$ represents the quantity of the slots included in each system frame; $N_{\text{symb}}^{\text{slot}}$ represents the quantity of the OFDM symbols included in each slot; $n_{\text{s,f}}^{\mu}$ represents the slot number corresponding to the second antenna port; $l_0 + l'$ represents the OFDM symbol number corresponding to the second antenna port, where $l_0$ represents an index of a start OFDM symbol in the one or more OFDM symbols included in the time domain resource occupied by the second antenna port, and $l'$ represents a relative index of one OFDM symbol in the one or more OFDM symbols included in the time domain resource occupied by the second antenna port; and the mathematical symbol mod represents a modulo operation.

In a possible design manner, that the first offset is determined based on a cyclic shift value occupied by the first antenna port may include: The first offset is determined based on a range to which the cyclic shift value belongs.

In a possible design manner, a start position of a frequency domain resource occupied by each of the M antenna ports is determined based on at least a fourth offset, where the fourth offset is an integer greater than 0, and the fourth offset is determined based on at least the cell identifier and an index of a frequency hopping periodicity corresponding to the reference signal.

In a possible design manner, the fourth offset may be a fourth random number.

In a possible design manner, the fourth random number may satisfy $k_{\text{rand}} =$

$$\left(\sum_{m=0}^{7} c(8\left\lfloor n_{\text{SRS}}/\prod_{b'=b_{\text{hop}}}^{B_{\text{SRS}}} N_{b'}\right\rfloor + m) \cdot 2^m\right) \mathrm{mod}\ P_{\text{F}}$$ ; or $k_{\text{rand}} =$

$$\sum_{m=0}^{7} c(8\left\lfloor n_{\text{SRS}}/\prod_{b'=b_{\text{hop}}}^{B_{\text{SRS}}} N_{b'}\right\rfloor + m) \cdot 2^m$$ ,

where $k_{\text{rand}}$ represents the fourth random number; the mathematical symbol $\Sigma$ represents summation; c() is a pseudo-random sequence, where the pseudo-random sequence is related to the cell identifier; $\left\lfloor \dfrac{n_{\text{SRS}}}{\prod_{b'=b_{\text{hop}}}^{B_{\text{SRS}}} N_{b'}} \right\rfloor$ represents the index of the frequency hopping periodicity corresponding to the reference signal; a mathematical symbol ⌊ ⌋ represents a floor operation; $n_{\text{SRS}}$ represents a count value of the reference signal; a mathematical symbol $\Pi$ represents a product of a sequence; and the mathematical symbol mod indicates a modulo operation.

In addition, for technical effects of the communication method according to the second aspect, refer to the technical effects of the method according to any possible implementation of the first aspect. Details are not described herein again.

According to a third aspect, a communication method is provided. The communication method includes: sending configuration information; and receiving a reference signal via M antenna ports based on the configuration information, where the configuration information indicates a configuration of the reference signal, and a start position of a frequency domain resource occupied by each of the M antenna ports is determined based on at least a fourth offset, where the fourth offset is an integer greater than 0, and the fourth offset is determined based on at least a cell identifier and an index of a frequency hopping periodicity corresponding to the reference signal.

In a possible design manner, the fourth offset may be a fourth random number.

In a possible design manner, the fourth random number may satisfy $k_{\text{rand}} =$

$$\left(\sum_{m=0}^{7} c(8\left\lfloor n_{\text{SRS}}/\prod_{b\prime=b_{\text{hop}}}^{B_{\text{SRS}}} N_{b\prime}\right\rfloor + m) \cdot 2^m\right) \bmod P_{\text{F}}$$

; or $k_{\text{rand}} =$

$$\sum_{m=0}^{7} c(8\left\lfloor n_{\text{SRS}}/\prod_{b\prime=b_{\text{hop}}}^{B_{\text{SRS}}} N_{b\prime}\right\rfloor + m) \cdot 2^m ,$$

where $k_{\text{rand}}$ represents the fourth random number; a mathematical symbol $\sum$ represents summation; c() is a pseudo-random sequence, where the pseudo-random sequence is related to the cell identifier; $\left\lfloor \dfrac{n_{\text{SRS}}}{\prod_{b\prime=b_{\text{hop}}}^{B_{\text{SRS}}} N_{b\prime}} \right\rfloor$ represents the index of the frequency hopping periodicity corresponding to the reference signal; a mathematical symbol $\lfloor\ \rfloor$ represents a floor operation; $n_{\text{SRS}}$ represents a count value of the reference signal; a mathematical symbol $\prod$ represents a product of a sequence; and a mathematical symbol mod indicates a modulo operation.

In addition, for technical effects of the communication method according to the third aspect, refer to the technical effects of the method according to any possible implementation of the first aspect. Details are not described herein again.

According to a fourth aspect, a communication method is provided. The communication method includes: receiving configuration information; and sending a reference signal via M antenna ports based on the configuration information, where the configuration information indicates a configuration of the reference signal, and a start position of a frequency domain resource occupied by each of the M antenna ports is determined based on at least a fourth offset, where the fourth offset is an integer greater than 0, and the fourth offset is determined based on at least a cell identifier and an index of a frequency hopping periodicity corresponding to the reference signal.

In a possible design manner, the fourth offset may be a fourth random number.

In a possible design manner, the fourth random number may satisfy $k_{\text{rand}} =$

$$\left(\sum_{m=0}^{7} c(8\left\lfloor n_{\text{SRS}}/\prod_{b\prime=b_{\text{hop}}}^{B_{\text{SRS}}} N_{b\prime}\right\rfloor + m) \cdot 2^m\right) \bmod P_{\text{F}}$$

; or $k_{\text{rand}} =$

$$\sum_{m=0}^{7} c(8\left\lfloor n_{\text{SRS}}/\prod_{b\prime=b_{\text{hop}}}^{B_{\text{SRS}}} N_{b\prime}\right\rfloor + m) \cdot 2^m ,$$

where $k_{\text{rand}}$ represents the fourth random number; a mathematical symbol $\sum$ represents summation; c() is a pseudo-random sequence, where the pseudo-random sequence is related to the cell identifier; $\left\lfloor \dfrac{n_{\text{SRS}}}{\prod_{b\prime=b_{\text{hop}}}^{B_{\text{SRS}}} N_{b\prime}} \right\rfloor$ represents the index of the frequency hopping periodicity corresponding to the reference signal; a mathematical symbol $\lfloor\ \rfloor$ represents a floor operation; $n_{\text{SRS}}$ represents a count value of the reference signal; a mathematical symbol $\prod$ represents a product of a sequence; and a mathematical symbol mod indicates a modulo operation.

In addition, for technical effects of the communication method according to the fourth aspect, refer to the technical effects of the method according to any possible implementation of the first aspect. Details are not described herein again.

According to a fifth aspect, a communication apparatus is provided. The communication apparatus includes a sending module and a receiving module, where

the sending module is configured to send configuration information, where the configuration information indicates a configuration of a reference signal; and
the receiving module is configured to receive the reference signal via M antenna ports based on the configuration information, where M is an integer greater than 0, the M antenna ports include at least one first antenna port, a comb occupied by the first antenna port is determined based on at least a first offset, the first offset is an integer greater than 0, and the first offset is determined based on at least a cell identifier and a time domain resource occupied by the first antenna port; or the first offset is determined based on a cyclic shift value occupied by the first antenna port.

In a possible design manner, the first offset may be determined based on at least the cell identifier and the time domain resource occupied by the first antenna port; or the first offset may be determined based on one or more of the following parameters: a quantity of slots included in each system frame, a quantity of orthogonal frequency division multiplexing OFDM symbols included in each slot, a comb quantity, and a comb offset, where the comb quantity is a quantity of combs included in a transmit bandwidth $m_{\text{SRS},bhop}$ of the reference signal, and the comb offset is a reference quantity of combs occupied by the reference signal.

In a possible design manner, the time domain resource occupied by the first antenna port may include one or more OFDM symbols, and the one or more OFDM symbols included in the time domain resource occupied by the first antenna port are determined based on one or more of the following parameters: a system frame number corresponding to the first antenna port, a slot number corresponding to the first antenna port, and an OFDM symbol number corresponding to the first antenna port.

In a possible design manner, the first offset may be a first random number.

In a possible design manner, the first random number may satisfy $Q_1 =$

$$\left(\sum_{m=0}^{7} c(8(n_f N_{\text{slot}}^{\text{frame}} N_{\text{symb}}^{\text{slot}} + n_{s,f}^{\mu} N_{\text{symb}}^{\text{slot}} + l_0 + l') + m) \cdot 2^m\right) \bmod K_{TC}$$ ; $Q_1 =$

$$\left(\sum_{m=0}^{7} c(8(n_{s,f}^{\mu} N_{\text{symb}}^{\text{slot}} + l_0 + l') + m) \cdot 2^m\right) \bmod K_{TC}$$ ;

$$Q_1 = \sum_{m=0}^{7} c(8(n_f N_{\text{slot}}^{\text{frame}} N_{\text{symb}}^{\text{slot}} + n_{s,f}^{\mu} N_{\text{symb}}^{\text{slot}} + l_0 + l') + m) \cdot 2^m$$ ; or

$$Q_1 = \sum_{m=0}^{7} c(8(n_{s,f}^{\mu} N_{\text{symb}}^{\text{slot}} + l_0 + l') + m) \cdot 2^m ,$$

where $Q_1$ represents the first random number; a mathematical symbol $\Sigma$ represents summation; c() is a pseudo-random sequence, where the pseudo-random sequence is related to the cell identifier; $n_f$ represents the system frame number corresponding to the first antenna port; $N_{\text{slot}}^{\text{frame}}$ represents the quantity of the slots included in each system frame; $N_{\text{symb}}^{\text{slot}}$ represents the quantity of the OFDM symbols included in each slot; $n_{s,f}^{\mu}$ represents the slot number corresponding to the first antenna port; $l_0 + l'$ represents the OFDM symbol number corresponding to the first antenna port, where $l_0$ represents an index of a start OFDM symbol in the one or more OFDM symbols included in the time domain resource occupied by the first antenna port, and $l'$ represents a relative index of one OFDM symbol in the one or more OFDM symbols included in the time domain resource occupied by the first antenna port; and a mathematical symbol mod represents a modulo operation.

In a possible design manner, the M antenna ports may further include at least one second antenna port, a comb occupied by the second antenna port may be determined based on at least a second offset, the second offset is an integer greater than 0, the second offset is determined based on at least the cell identifier and a time domain resource occupied by the second antenna port, and the second offset is different from the first offset.

In a possible design manner, the second offset may be determined based on at least the cell identifier and the time domain resource occupied by the second antenna port; or the second offset may be determined based on one or more of the following parameters: the quantity of the slots included in each system frame, the quantity of the OFDM symbols included in each slot, the comb quantity, and the comb offset, where the comb quantity is the quantity of the combs included in the transmit bandwidth $m_{\text{SRS},bhop}$ of the reference signal, and the comb offset is the reference quantity of the combs occupied by the reference signal.

In a possible design manner, the time domain resource occupied by the second antenna port may include one or more OFDM symbols, and the one or more OFDM symbols that may be included in the time domain resource occupied by the second antenna port may be determined based on one or more of the following parameters: a system frame number corresponding to the second antenna port, a slot number corresponding to the second antenna port, and an OFDM symbol number corresponding to the second antenna port.

In a possible design manner, the second offset may be a second random number.

In a possible design manner, the second random number may satisfy $Q_2 =$

$$\left(\sum_{m=0}^{7} c(8(n_f N_{\text{slot}}^{\text{frame}} N_{\text{symb}}^{\text{slot}} + n_{s,f}^{\mu} N_{\text{symb}}^{\text{slot}} + l_0 + l') + m + 1) \cdot 2^m\right) \bmod K_{TC}$$ ; $Q_2 =$

$$\left(\sum_{m=0}^{7} c(8(n_{s,f}^{\mu} N_{\text{symb}}^{\text{slot}} + l_0 + l') + m + 1) \cdot 2^m\right) \bmod K_{TC}$$ ;

$$Q_2 = \sum_{m=0}^{7} c(8(n_f N_{\text{slot}}^{\text{frame}} N_{\text{symb}}^{\text{slot}} + n_{s,f}^{\mu} N_{\text{symb}}^{\text{slot}} + l_0 + l') + m + 1) \cdot 2^m$$ ; or

$$Q_2 = \sum_{m=0}^{7} c(8(n_{s,f}^{\mu} N_{\text{symb}}^{\text{slot}} + l_0 + l') + m + 1) \cdot 2^m ,$$

where $Q_2$ represents the second random number; the mathematical symbol $\Sigma$ represents summation; c() is a pseudo-random sequence, where the pseudo-random sequence is related to the cell identifier; $n_f$ represents the system frame number corresponding to the second antenna port; $N_{\text{slot}}^{\text{frame}}$ represents the quantity of the slots included in each system frame; $N_{\text{symb}}^{\text{slot}}$ represents the quantity of the OFDM symbols included in each slot; $n_{s,f}^{\mu}$ represents the slot number corresponding to the second antenna port; $l_0 + l'$ represents the OFDM symbol number corresponding to the second antenna port, where $l_0$ represents an index of a start OFDM symbol in the one or more OFDM symbols included in the time domain resource occupied by the second antenna port, and $l'$ represents a relative index of one OFDM symbol in the one or more OFDM symbols included in the time domain resource occupied by the second antenna port; and the mathematical symbol mod represents a modulo operation.

In a possible design manner, the second offset may be a sum of the first offset and a third offset, and the third offset is an integer greater than 0.

In a possible design manner, the third offset may be determined based on at least the cell identifier and the time domain resource occupied by the second antenna port, or the third offset may be determined based on one or more of the following parameters: the quantity of the slots included in each system frame, the quantity of the OFDM symbols included in each slot, the comb quantity, and the comb offset.

In a possible design manner, the third offset may be a third random number.

In a possible design manner, the third random number may satisfy

$$\Delta = \left(\sum_{m=0}^{7} c(8(n_f N_{\text{slot}}^{\text{frame}} N_{\text{symb}}^{\text{slot}} + n_{s,f}^{\mu} N_{\text{symb}}^{\text{slot}} + l_0 + l') + m + 1) \cdot 2^m\right) \bmod (K_{\text{TC}}/2)$$

$$; \quad \Delta = \left(\sum_{m=0}^{7} c(8(n_{s,f}^{\mu} N_{\text{symb}}^{\text{slot}} + l_0 + l') + m + 1) \cdot 2^m\right) \bmod (K_{\text{TC}}/2)$$

$$; \quad \Delta = \left(\sum_{m=0}^{7} c(8(n_f N_{\text{slot}}^{\text{frame}} N_{\text{symb}}^{\text{slot}} + n_{s,f}^{\mu} N_{\text{symb}}^{\text{slot}} + l_0 + l') + m) \cdot 2^m\right) \bmod (K_{\text{TC}}/2)$$

$$; \quad \text{or} \quad \Delta = \left(\sum_{m=0}^{7} c(8(n_{s,f}^{\mu} N_{\text{symb}}^{\text{slot}} + l_0 + l') + m) \cdot 2^m\right) \bmod (K_{\text{TC}}/2),$$

where $\Delta$ represents the third random number; the mathematical symbol $\Sigma$ represents summation; c() is a pseudo-random sequence, where the pseudo-random sequence is related to the cell identifier; $n_f$ represents the system frame number corresponding to the second antenna port; $N_{\text{slot}}^{\text{frame}}$ represents the quantity of the slots included in each system frame; $N_{\text{symb}}^{\text{slot}}$ represents the quantity of the OFDM symbols included in each slot; $n_{s,f}^{\mu}$ represents the slot number corresponding to the second antenna port; $l_0 + l'$ represents the OFDM symbol number corresponding to the second antenna port, where $l_0$ represents an index of a start OFDM symbol in the one or more OFDM symbols included in the time domain resource occupied by the second antenna port, and $l'$ represents a relative index of one OFDM symbol in the one or more OFDM symbols included in the time domain resource occupied by the second antenna port; and the mathematical symbol mod represents a modulo operation.

In a possible design manner, that the first offset is determined based on a cyclic shift value occupied by the first antenna port may include: The first offset is determined based on a range to which the cyclic shift value belongs.

In a possible design manner, a start position of a frequency domain resource occupied by each of the M antenna ports may be determined based on at least a fourth offset, where the fourth offset is an integer greater than 0, and the fourth offset is determined based on at least the cell identifier and an index of a frequency hopping periodicity corresponding to the reference signal.

In a possible design manner, the fourth offset may be a fourth random number.

In a possible design manner, the fourth random number may satisfy

$$k_{\text{rand}} = \left(\sum_{m=0}^{7} c\left(8\left\lfloor n_{\text{SRS}}/\prod_{b'=b_{\text{hop}}}^{B_{\text{SRS}}} N_{b'}\right\rfloor + m\right) \cdot 2^m\right) \bmod P_F$$

$$; \quad \text{or} \quad k_{\text{rand}} = \sum_{m=0}^{7} c\left(8\left\lfloor n_{\text{SRS}}/\prod_{b'=b_{\text{hop}}}^{B_{\text{SRS}}} N_{b'}\right\rfloor + m\right) \cdot 2^m,$$

where $k_{\text{rand}}$ represents the fourth random number; the mathematical symbol $\Sigma$ represents summation; c() is a pseudo-random sequence, where the pseudo-random sequence is related to the cell identifier; $\left\lfloor \frac{n_{\text{SRS}}}{\prod_{b'=b_{\text{hop}}}^{B_{\text{SRS}}} N_{b'}} \right\rfloor$ represents the index of the frequency hopping periodicity corresponding to the reference signal; a mathematical symbol $\lfloor\ \rfloor$ represents a floor operation; $n_{\text{SRS}}$ represents a count value of the reference signal; a mathematical symbol $\Pi$ represents a product of a sequence; and the mathematical symbol mod indicates a modulo operation.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the fifth aspect may further include a processing module and a storage module. The storage module stores a program or instructions. When the processing module executes the program or the instructions, the communication apparatus according to the fifth aspect is enabled to perform the method according to the first aspect.

It should be noted that the communication apparatus according to the fifth aspect may be a network device, or may be a chip (system) or another part or component that can be disposed in the network device. This is not limited in this application.

In addition, for technical effects of the communication apparatus according to the fifth aspect, refer to the technical effects of the method according to any possible implementation of the first aspect. Details are not described herein again.

According to a sixth aspect, a communication apparatus is provided. The communication apparatus includes a sending module and a receiving module, where

the receiving module is configured to receive configuration information, where the configuration information indicates a configuration of a reference signal; and

the sending module is configured to send the reference signal via M antenna ports based on the configuration information, where M is an integer greater than 0, the M antenna ports include at least one first antenna port, a comb occupied by the first antenna port is determined based on at least a first offset, the first offset is an integer greater than 0, and the first offset is determined based on at least a cell identifier and a time domain resource occupied by the first antenna port; or the first offset is determined based on a cyclic shift value occupied by the first antenna port.

In a possible design manner, the first offset may be determined based on at least the cell identifier and the time domain resource occupied by the first antenna port; or the first offset may be determined based on one or more of the following parameters: a quantity of slots included in each system frame, a quantity of orthogonal frequency division multiplexing OFDM symbols included in each slot, a comb quantity, and a comb offset, where the comb quantity is a quantity of combs included in a transmit bandwidth $m_{SRS,bhop}$ of the reference signal, and the comb offset is a reference quantity of combs occupied by the reference signal.

In a possible design manner, the time domain resource occupied by the first antenna port may include one or more OFDM symbols, and the one or more OFDM symbols included in the time domain resource occupied by the first antenna port are determined based on one or more of the following parameters: a system frame number corresponding to the first antenna port, a slot number corresponding to the first antenna port, and an OFDM symbol number corresponding to the first antenna port.

In a possible design manner, the first offset may be a first random number.

In a possible design manner, the first random number may satisfy $Q_1 = $
$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m\right) \bmod K_{TC}$$
; $Q_1 = $
$$\left(\sum_{m=0}^{7} c(8(n_{\text{s,f}}^{\mu} N_{\text{symb}}^{\text{slot}} + l_0 + l') + m) \cdot 2^m\right) \bmod K_{TC}$$
;
$$Q_1 = \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m$$
; or
$$Q_1 = \sum_{m=0}^{7} c(8(n_{\text{s,f}}^{\mu} N_{\text{symb}}^{\text{slot}} + l_0 + l') + m) \cdot 2^m$$
,

where $Q_1$ represents the first random number; a mathematical symbol $\sum$ represents summation; c() is a pseudo-random sequence, where the pseudo-random sequence is related to the cell identifier; $n_f$ represents the system frame number corresponding to the first antenna port; $N_{\text{slot}}^{\text{frame}}$ represents the quantity of the slots included in each system frame; $N_{\text{symb}}^{\text{slot}}$ represents the quantity of the OFDM symbols included in each slot; $n_{\text{s,f}}^{\mu}$ represents the slot number corresponding to the first antenna port; $l_0 + l'$ represents the OFDM symbol number corresponding to the first antenna port, where $l_0$ represents an index of a start OFDM symbol in the one or more OFDM symbols included in the time domain resource occupied by the first antenna port, and $l'$ represents a relative index of one OFDM symbol in the one or more OFDM symbols included in the time domain resource occupied by the first antenna port; and a mathematical symbol mod represents a modulo operation.

In a possible design manner, the M antenna ports may further include at least one second antenna port, a comb occupied by the second antenna port may be determined based on at least a second offset, the second offset is an integer greater than 0, the second offset is determined based on at least the cell identifier and a time domain resource occupied by the second antenna port, and the second offset is different from the first offset.

In a possible design manner, the second offset may be determined based on at least the cell identifier and the time domain resource occupied by the second antenna port; or the second offset may be determined based on one or more of the following parameters: the quantity of the slots included in each system frame, the quantity of the OFDM symbols included in each slot, the comb quantity, and the comb offset, where the comb quantity is the quantity of the combs included in the transmit bandwidth $m_{\text{SRS,bhop}}$ of the reference signal, and the comb offset is the reference quantity of the combs occupied by the reference signal.

In a possible design manner, the time domain resource occupied by the second antenna port may include one or more OFDM symbols, and the one or more OFDM symbols that may be included in the time domain resource occupied by the second antenna port may be determined based on one or more of the following parameters: the system frame number corresponding to the second antenna port, the slot number corresponding to the second antenna port, and an OFDM symbol number corresponding to the second antenna port.

In a possible design manner, the second offset may be a second random number.

In a possible design manner, the second random number may satisfy $Q_2 =$

$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m \right) \bmod K_{TC} \quad ; \quad Q_2 =$$

$$\left(\sum_{m=0}^{7} c(8(n_{\text{s,f}}^{\mu} N_{\text{symb}}^{\text{slot}} + l_0 + l') + m + 1) \cdot 2^m \right) \bmod K_{TC} \quad ;$$

$$Q_2 = \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m \quad ; \quad \text{or}$$

$$Q_2 = \sum_{m=0}^{7} c(8(n_{\text{s,f}}^{\mu} N_{\text{symb}}^{\text{slot}} + l_0 + l') + m + 1) \cdot 2^m ,$$

where $Q_2$ represents the second random number; the mathematical symbol $\Sigma$ represents summation; c() is a pseudo-random sequence, where the pseudo-random sequence is related to the cell identifier; $n_f$ represents the system frame number corresponding to the second antenna port; $N_{\text{slot}}^{\text{frame}}$ represents the quantity of the slots included in each system frame; $N_{\text{symb}}^{\text{slot}}$ represents the quantity of the OFDM symbols included in each slot; $n_{\text{s,f}}^{\mu}$ represents the slot number corresponding to the second antenna port; $l_0 + l'$ represents the OFDM symbol number corresponding to the second antenna port, where $l_0$ represents an index of a start OFDM symbol in the one or more OFDM symbols included in the time domain resource occupied by the second antenna port, and $l'$ represents a relative index of one OFDM symbol in the one or more OFDM symbols included in the time domain resource occupied by the second antenna port; and the mathematical symbol mod represents a modulo operation.

In a possible design manner, the second offset may be a sum of the first offset and a third offset, and the third offset is an integer greater than 0.

In a possible design manner, the third offset may be determined based on at least the cell identifier and the time domain resource occupied by the second antenna port, or the third offset may be determined based on one or more of the following parameters: the quantity of the slots included in each system frame, the quantity of the OFDM symbols included in each slot, the comb quantity, and the comb offset.

In a possible design manner, the third offset may be a third random number.

In a possible design manner, the third random number may satisfy $\Delta =$

$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m \right) \bmod (K_{\text{TC}}/2) \quad ; \quad \Delta =$$

$$\left(\sum_{m=0}^{7} c(8(n_{\text{s,f}}^{\mu} N_{\text{symb}}^{\text{slot}} + l_0 + l') + m + 1) \cdot 2^m \right) \bmod (K_{\text{TC}}/2) \quad ; \quad \Delta =$$

$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m \right) \bmod (K_{\text{TC}}/2) \quad ; \quad \text{or} \quad \Delta =$$

$$\left(\sum_{m=0}^{7} c(8(n_{\text{s,f}}^{\mu} N_{\text{symb}}^{\text{slot}} + l_0 + l') + m) \cdot 2^m \right) \bmod (K_{\text{TC}}/2) ,$$

where $\Delta$ represents the third random number; the mathematical symbol $\Sigma$ represents summation; c() is a pseudo-random sequence, where the pseudo-random sequence is related to the cell identifier; $n_f$ represents the system frame number corresponding to the second antenna port; $N_{\text{slot}}^{\text{frame}}$ represents the quantity of the slots included in each system frame;

$N_{\text{symb}}^{\text{slot}}$ represents the quantity of the OFDM symbols included in each slot; $n_{\text{s,f}}^{\mu}$ represents the slot number corresponding to the second antenna port; $l_0 + l'$ represents the OFDM symbol number corresponding to the second antenna port, where $l_0$ represents an index of a start OFDM symbol in the one or more OFDM symbols included in the time domain resource occupied by the second antenna port, and $l'$ represents a relative index of one OFDM symbol in the one or more OFDM symbols included in the time domain resource occupied by the second antenna port; and the mathematical symbol mod represents a modulo operation.

In a possible design manner, that the first offset is determined based on a cyclic shift value occupied by the first antenna port may include: The first offset is determined based on a range to which the cyclic shift value belongs.

In a possible design manner, a start position of a frequency domain resource occupied by each of the M antenna ports may be determined based on at least a fourth offset, where the fourth offset is an integer greater than 0, and the fourth offset is determined based on at least the cell identifier and an index of a frequency hopping periodicity corresponding to the reference signal.

In a possible design manner, the fourth offset may be a fourth random number.

In a possible design manner, the fourth random number may satisfy $k_{\text{rand}} =$

$$\left(\sum_{m=0}^{7} c\left(8\left\lfloor n_{\text{SRS}}/\prod_{b'=b_{\text{hop}}}^{B_{\text{SRS}}} N_{b'}\right\rfloor + m\right) \cdot 2^m\right) \bmod P_{\text{F}}$$

; or $k_{\text{rand}} =$

$$\sum_{m=0}^{7} c\left(8\left\lfloor n_{\text{SRS}}/\prod_{b'=b_{\text{hop}}}^{B_{\text{SRS}}} N_{b'}\right\rfloor + m\right) \cdot 2^m,$$

where $k_{\text{rand}}$ represents the fourth random number; the mathematical symbol $\Sigma$ represents summation; c() is a pseudo-random sequence, where the pseudo-random sequence is related to the cell identifier; $\left\lfloor \dfrac{n_{\text{SRS}}}{\prod_{b'=b_{\text{hop}}}^{B_{\text{SRS}}} N_{b'}} \right\rfloor$ represents the index of the frequency hopping periodicity corresponding to the reference signal; a mathematical symbol ⌊ ⌋ represents a floor operation; $n_{\text{SRS}}$ represents a count value of the reference signal; a mathematical symbol $\Pi$ represents a product of a sequence; and the mathematical symbol mod indicates a modulo operation.

It should be noted that the receiving module and the sending module may be separately disposed, or may be integrated into one module, namely, a transceiver module. Specific implementations of the receiving module and the sending module are not specifically limited in this application.

Optionally, the communication apparatus in the sixth aspect may further include a processing module and a storage module. The storage module stores a program or instructions. When the processing module executes the program or the instructions, the communication apparatus according to the sixth aspect is enabled to perform the method according to the second aspect.

It should be noted that the communication apparatus according to the sixth aspect may be a terminal device, or may be a chip (system) or another part or component that can be disposed in the terminal device. This is not limited in this application.

In addition, for technical effects of the communication apparatus according to the sixth aspect, refer to the technical effects of the method according to any possible implementation of the second aspect. Details are not described herein again.

According to a seventh aspect, a communication apparatus is provided. The communication apparatus includes a sending module and a receiving module, where

the sending module is configured to send configuration information, where the configuration information indicates a configuration of a reference signal; and
the receiving module is configured to receive the reference signal via M antenna ports based on the configuration information, where a start position of a frequency domain resource occupied by each of the M antenna ports is determined based on at least a fourth offset, where the fourth offset is an integer greater than 0, and the fourth offset is determined based on at least a cell identifier and an index of a frequency hopping periodicity corresponding to the reference signal.

In a possible design manner, the fourth offset may be a fourth random number.

In a possible design manner, the fourth random number may satisfy $k_{\text{rand}} =$

$$\left(\sum_{m=0}^{7} c\left(8\left\lfloor n_{\text{SRS}}/\prod_{b'=b_{\text{hop}}}^{B_{\text{SRS}}} N_{b'}\right\rfloor + m\right) \cdot 2^m\right) \bmod P_{\text{F}}$$

; or $k_{\text{rand}} =$

$$\sum_{m=0}^{7} c(8 \left\lfloor n_{\text{SRS}}/\prod_{b\prime=b_{\text{hop}}}^{B_{\text{SRS}}} N_{b\prime} \right\rfloor + m) \cdot 2^m$$,

where $k_{\text{rand}}$ represents the fourth random number; the mathematical symbol $\Sigma$ represents summation; $c()$ is a pseudo-random sequence, where the pseudo-random sequence is related to the cell identifier; $\left\lfloor \dfrac{n_{\text{SRS}}}{\prod_{b\prime=b_{\text{hop}}}^{B_{\text{SRS}}} N_{b\prime}} \right\rfloor$ represents the index of the frequency hopping periodicity corresponding to the reference signal; a mathematical symbol $\lfloor \rfloor$ represents a floor operation; $n_{\text{SRS}}$ represents a count value of the reference signal; a mathematical symbol $\Pi$ represents a product of a sequence; and the mathematical symbol mod indicates a modulo operation.

It should be noted that the receiving module and the sending module may be separately disposed, or may be integrated into one module, namely, a transceiver module. Specific implementations of the receiving module and the sending module are not specifically limited in this application.

Optionally, the communication apparatus in the seventh aspect may further include a processing module and a storage module. The storage module stores a program or instructions. When the processing module executes the program or the instructions, the communication apparatus according to the seventh aspect is enabled to perform the method according to the third aspect.

It should be noted that the communication apparatus according to the seventh aspect may be a network device, or may be a chip (system) or another part or component that can be disposed in the network device. This is not limited in this application.

In addition, for technical effects of the communication apparatus according to the seventh aspect, refer to the technical effects of the method according to any possible implementation of the third aspect. Details are not described herein again.

According to an eighth aspect, a communication apparatus is provided. The communication apparatus includes a sending module and a receiving module, where

the receiving module is configured to receive configuration information, where the configuration information indicates a configuration of a reference signal; and

the sending module is configured to send the reference signal via M antenna ports based on the configuration information, where a start position of a frequency domain resource occupied by each of the M antenna ports is determined based on at least a fourth offset, where the fourth offset is an integer greater than 0, and the fourth offset is determined based on at least a cell identifier and an index of a frequency hopping periodicity corresponding to the reference signal.

In a possible design manner, the fourth offset may be a fourth random number.

In a possible design manner, the fourth random number may satisfy $k_{\text{rand}} = \left( \sum_{m=0}^{7} c(8 \left\lfloor n_{\text{SRS}}/\prod_{b\prime=b_{\text{hop}}}^{B_{\text{SRS}}} N_{b\prime} \right\rfloor + m) \cdot 2^m \right) \bmod P_{\text{F}}$; or $k_{\text{rand}} = \sum_{m=0}^{7} c(8 \left\lfloor n_{\text{SRS}}/\prod_{b\prime=b_{\text{hop}}}^{B_{\text{SRS}}} N_{b\prime} \right\rfloor + m) \cdot 2^m$,

where $k_{\text{rand}}$ represents the fourth random number; a mathematical symbol $\Sigma$ represents summation; $c()$ is a pseudo-random sequence, where the pseudo-random sequence is related to the cell identifier; $\left\lfloor \dfrac{n_{\text{SRS}}}{\prod_{b\prime=b_{\text{hop}}}^{B_{\text{SRS}}} N_{b\prime}} \right\rfloor$ represents the index of the frequency hopping periodicity corresponding to the reference signal; a mathematical symbol $\lfloor \rfloor$ represents a floor operation; $n_{\text{SRS}}$ represents a count value of the reference signal; a mathematical symbol $\Pi$ represents a product of a sequence; and a mathematical symbol mod indicates a modulo operation.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the eighth aspect may further include a processing module and a storage module. The storage module stores a program or instructions. When the processing module executes the program or the instructions, the communication apparatus according to the eighth aspect is enabled to perform the method according to the fourth aspect.

It should be noted that the communication apparatus according to the eighth aspect may be a terminal device, or may be a chip (system) or another part or component that can be disposed in the terminal device. This is not limited in this application.

In addition, for technical effects of the communication apparatus according to the eighth aspect, refer to the technical effects of the method according to any possible implementation of the fourth aspect. Details are not described herein again.

According to a ninth aspect, a communication method is provided. The method includes: sending configuration information of a reference signal; and receiving the reference signal via M antenna ports based on the configuration information, where M is an integer greater than 0, the M antenna ports include at least one first antenna port, a comb occupied by the first antenna port is determined based on at least a first offset, and the first offset is determined based on at least a time domain resource occupied by the first antenna port and/or a frequency domain resource occupied by the first antenna port.

According to a tenth aspect, a communication method is provided. The method includes: receiving configuration information of a reference signal; and sending the reference signal via M antenna ports based on the configuration information, where M is an integer greater than 0, the M antenna ports include at least one first antenna port, a comb occupied by the first antenna port is determined based on at least a first offset, and the first offset is determined based on at least a time domain resource occupied by the first antenna port and/or a frequency domain resource occupied by the first antenna port.

According to the method provided in the ninth aspect or the tenth aspect, the comb occupied by the first antenna port of a terminal device is determined based on the first offset, so that the comb occupied by the antenna port of the terminal device may randomly change at different sending moments and/or on different frequency domain resources. In this way, an antenna port of a terminal device that causes interference to the antenna port of the terminal device randomly changes. Therefore, interference randomization is implemented, and a better interference randomization effect can be achieved.

Optionally, that a comb occupied by the first antenna port is determined based on at least a first offset may include: The comb occupied by the first antenna port may be determined based on an initial value of the comb occupied by the first antenna port and the first offset.

Optionally, the first offset is an integer greater than 0.

Optionally, the initial value of the comb occupied by the first antenna port is configured by using higher layer signaling RRC.

In a possible design manner, the first offset includes a first random number and/or a fifth random number, the first random number is determined based on at least the time domain resource occupied by the first antenna port, and the fifth random number is determined based on at least the frequency domain resource occupied by the first antenna port.

In a possible design manner, that the first random number is determined based on at least the time domain resource occupied by the first antenna port includes: The first random number is determined based on one of a plurality of first correspondences and the time domain resource occupied by the first antenna port, and the first correspondence includes a correspondence between at least one first random number and at least one time domain resource. Optionally, the first random number may be replaced with a first variable.

In a possible design manner, each of the plurality of first correspondences includes a plurality of first variables, values of the plurality of first variables are different from each other, values of first variables included in a plurality of first correspondences are the same, and correspondences between the plurality of first variables and a plurality of time domain resources are different.

In a possible design manner, one frequency hopping periodicity includes at least one time of reference signal sending, and the correspondence between at least one first random number and at least one time domain resource includes: a correspondence between the at least one first random number and a relative number of the at least one time of reference signal sending in the frequency hopping periodicity.

In a possible design manner, the correspondence between at least one first random number and at least one time domain resource includes: a correspondence between the at least one first random number and an index of at least one frequency hopping periodicity. In a possible design manner, that the first random number is determined based on at least the time domain resource occupied by the first antenna port includes: The first random number is determined based on the time domain resource occupied by the first antenna port and a pseudo-random sequence.

In a possible design manner, the first random number is further determined based on one or more of the following parameters: a quantity of slots included in each system frame, a quantity of OFDM symbols included in each slot, a comb quantity, and a comb offset, where the comb quantity is a quantity of combs included in a transmit bandwidth of the reference signal, and the comb offset is a reference quantity of combs occupied by the reference signal.

In a possible design manner, the first random number satisfies $Q_1 =$

$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m\right) \bmod K_{TC}$$ ; $Q_1$ =

$$\left(\sum_{m=0}^{7} c(8(n_{\text{s,f}}^{\mu} N_{\text{symb}}^{\text{slot}} + l_0 + l') + m) \cdot 2^m\right) \bmod K_{TC}$$ ; $n_{\text{s,f}}^{\mu} N_{\text{symb}}^{\text{slot}} + l_0 + l') + m) \cdot 2^m$ ; or

$$Q_1 = \sum_{m=0}^{7} c(8(n_{\text{s,f}}^{\mu} N_{\text{symb}}^{\text{slot}} + l_0 + l') + m) \cdot 2^m$$ ,

where $Q_1$ represents the first random number, a mathematical symbol $\Sigma$ represents summation, a mathematical symbol mod represents a modulo operation, $c()$ is the pseudo-random sequence, $n_f$ represents a system frame number corresponding to the first antenna port, $N_{\text{slot}}^{\text{frame}}$ represents a quantity of slots in each system frame, $N_{\text{symb}}^{\text{slot}}$ represents a quantity of OFDM symbols in each slot, $n_{\text{s,f}}^{\mu}$ represents a slot number corresponding to the first antenna port, $l_0$ represents an index of a start OFDM symbol in one or more OFDM symbols included in the time domain resource occupied by the first antenna port, $l'$ represents a relative index of one OFDM symbol in the one or more OFDM symbols included in the time domain resource occupied by the first antenna port, and $K_{\text{TC}}$ represents the comb quantity.

In a possible design manner, that the fifth random number is determined based on at least the frequency domain resource occupied by the first antenna port includes: The fifth random number is determined based on one of a plurality of second correspondences and the frequency domain resource occupied by the first antenna port, and the second correspondence includes a correspondence between at least one fifth random number and at least one frequency domain resource. Optionally, the fifth random number may be replaced with a fifth variable.

In a possible design manner, each of the plurality of second correspondences includes a plurality of fifth variables, values of the plurality of fifth variables are different from each other, values of fifth variables included in a plurality of first correspondences are the same, and correspondences between the plurality of fifth variables and a plurality of time domain resources are different.

In a possible design manner, that the fifth random number is determined based on at least the frequency domain resource occupied by the first antenna port includes: The fifth random number is determined based on the frequency domain resource occupied by the first antenna port and a pseudo-random sequence.

In a possible design manner, the fifth random number satisfies $Q_3 = \left(\sum_{m=0}^{7} c(8k + m) \cdot 2^m\right) \bmod K_{TC}$; or

$$Q_3 = \sum_{m=0}^{7} c(8k + m) \cdot 2^m$$ ,

where $Q_3$ represents the fifth random number, the mathematical symbol $\Sigma$ represents summation, the mathematical symbol mod represents a modulo operation, $c()$ is the pseudo-random sequence, $k$ represents an index of a frequency hopping bandwidth and/or an index of a transmit bandwidth that correspond/corresponds to the frequency domain resource occupied by the first antenna port, and $K_{TC}$ represents the comb quantity.

In a possible design manner, the time domain resource occupied by the first antenna port includes one or more orthogonal frequency division multiplexing OFDM symbols, and the one or more OFDM symbols included in the time domain resource occupied by the first antenna port are determined based on one or more of the following parameters: the system frame number corresponding to the first antenna port, the slot number corresponding to the first antenna port, and an OFDM symbol number corresponding to the first antenna port.

In a possible design manner, an index of a frequency hopping periodicity in which the time domain resource is located is determined based on the time domain resource occupied by the first antenna port; or a relative index of the time domain resource in one corresponding frequency hopping periodicity is determined based on the time domain resource occupied by the first antenna port, where the relative index may be defined as follows: A relative index of a $k^{\text{th}}$ time of sending in one frequency hopping periodicity is k-1.

In a possible design manner, the frequency domain resource occupied by the first antenna port includes one or more sub-bandwidths, and the one or more sub-bandwidths included in the frequency domain resource occupied by the first antenna port are determined based on one or more of the following parameters: the index of the frequency hopping bandwidth corresponding to the first antenna port, and the index of the transmit bandwidth corresponding to the first antenna port.

In a possible design manner, an index of a frequency hopping bandwidth in which the frequency domain resource is located is determined based on the frequency domain resource occupied by the first antenna port, or an index of one subband corresponding to the frequency domain resource is determined based on the frequency domain resource occupied by the first antenna port, where the index of the subband may be defined as follows: A sounding bandwidth of the first antenna port corresponds to a*b RBs, and may be divided into a subbands whose granularities are b, where the subbands are numbered in ascending order of frequencies, including {0, a-1}.

In a possible design manner, the M antenna ports further include at least one second antenna port, a comb occupied by the second antenna port is determined based on at least a second offset, the second offset is determined based on at least a time domain resource occupied by the second antenna port and/or a frequency domain resource occupied by the second antenna port, and the second offset is different from the first offset.

Optionally, the second offset is an integer greater than 0.

Optionally, initial comb values of the first antenna port and the second antenna port are different.

Optionally, that a comb occupied by the second antenna port is determined based on at least a second offset may include: The comb occupied by the second antenna port may be determined based on an initial value of the comb occupied by the second antenna port and the second offset.

Optionally, the initial value of the comb occupied by the second antenna port is configured by using higher layer signaling RRC.

In a possible design manner, the second offset includes a second random number and/or a sixth random number, the second random number is determined based on at least the time domain resource occupied by the second antenna port, and the sixth random number is determined based on at least the frequency domain resource occupied by the second antenna port.

In a possible design manner, that the second random number is determined based on at least the time domain resource occupied by the second antenna port includes: The second random number is determined based on one of a plurality of third correspondences and the time domain resource occupied by the second antenna port, and the third correspondence includes a correspondence between at least one second random number and at least one time domain resource.

In a possible design manner, one frequency hopping periodicity includes at least one time of reference signal sending, and the correspondence between at least one second random number and at least one time domain resource includes: a correspondence between the at least one second random number and a relative number of the at least one time of reference signal sending in the frequency hopping periodicity.

In a possible design manner, the correspondence between at least one second random number and at least one time domain resource includes: a correspondence between the at least one second random number and an index of at least one frequency hopping periodicity.

In a possible design manner, that the second random number is determined based on at least the time domain resource occupied by the second antenna port includes: The second random number is determined based on the time domain resource occupied by the second antenna port and a pseudo-random sequence.

In a possible design manner, the second random number is further determined based on one or more of the following parameters: the quantity of the slots included in each system frame, the quantity of the OFDM symbols included in each slot, the comb quantity, and the comb offset, where the comb quantity is the quantity of the combs included in the transmit bandwidth of the reference signal, and the comb offset is the reference quantity of the combs occupied by the reference signal.

In a possible design manner, the second random number satisfies $Q_2$ =

$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m\right) \bmod K_{TC}$$ ; $Q_2$ =

$$\left(\sum_{m=0}^{7} c(8(n_{\text{s,f}}^{\mu} N_{\text{symb}}^{\text{slot}} + l_0 + l') + m + 1) \cdot 2^m\right) \bmod K_{TC}$$ ;

$$Q_2 = \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m$$ ; or

$$Q_2 = \sum_{m=0}^{7} c(8(n_{\text{s,f}}^{\mu} N_{\text{symb}}^{\text{slot}} + l_0 + l') + m + 1) \cdot 2^m,$$

where $Q_2$ represents the second random number, the mathematical symbol $\Sigma$ represents summation, the mathematical symbol mod represents a modulo operation, $c()$ is the pseudo-random sequence, $n_f$ represents a system frame number corresponding to the second antenna port, $N_{\text{slot}}^{\text{frame}}$ represents the quantity of the slots in each system frame, $N_{\text{symb}}^{\text{slot}}$ represents the quantity of the OFDM symbols in each slot, $n_{\text{s,f}}^{\mu}$ represents a slot number corresponding to the second antenna port, $l_0$ represents an index of a start OFDM symbol in one or more OFDM symbols included in the time domain resource occupied by the second antenna port, $l'$ represents a relative index of one OFDM symbol in the one or more OFDM symbols included in the time domain resource occupied by the second antenna port, and $K_{\text{TC}}$ represents the comb quantity.

In a possible design manner, that the sixth random number is determined based on at least the frequency domain resource occupied by the second antenna port includes: The sixth random number is determined based on one of a plurality of fourth correspondences and the frequency domain resource occupied by the second antenna port, where the fourth correspondence includes a correspondence between at least one sixth random number and at least one frequency domain resource.

In a possible design manner, that the sixth random number is determined based on at least the frequency domain resource occupied by the second antenna port includes: The sixth random number is determined based on the frequency domain resource occupied by the second antenna port and a pseudo-random sequence.

In a possible design manner, the sixth random number satisfies $Q_4 = (\sum_{m=0}^{7} c(8k + m) \cdot 2^m) \bmod K_{TC}$; or

$Q_4 = \sum_{m=0}^{7} c(8k + m) \cdot 2^m$, where $Q_4$ represents the sixth random number, the mathematical symbol $\Sigma$ represents summation, the mathematical symbol mod represents a modulo operation, $c()$ is the pseudo-random sequence, $k$ represents an index of a frequency hopping bandwidth and/or an index of a transmit bandwidth that correspond/corresponds to the frequency domain resource occupied by the second antenna port, and $K_{TC}$ represents the comb quantity.

In a possible design manner, the second offset is determined based on the first offset and a third offset.

In a possible design manner, the second offset is a sum of the first offset and a third offset, and the third offset is an integer greater than 0.

In a possible design manner, the third offset is a pre-configured constant.

In a possible design manner, the third offset is determined based on at least the time domain resource occupied by the second antenna port and/or the frequency domain resource occupied by the second antenna port.

In a possible design manner, the third offset includes a third random number and/or a seventh random number, the third random number is determined based on at least the time domain resource occupied by the second antenna port, and the seventh random number is determined based on at least the frequency domain resource occupied by the second antenna port.

In a possible design manner, that the third random number is determined based on at least the time domain resource occupied by the second antenna port includes: The third random number is determined based on one of a plurality of fifth correspondences and the time domain resource occupied by the second antenna port, and the fifth correspondence includes a correspondence between at least one third random number and at least one time domain resource.

In a possible design manner, each of the plurality of fifth correspondences includes a plurality of third variables, values of the plurality of third variables are different from each other, values of third variables included in a plurality of fifth correspondences are the same, and correspondences between the plurality of third variables and a plurality of time domain resources are different.

In a possible design manner, one frequency hopping periodicity includes at least one time of reference signal sending, and the correspondence between at least one third random number and at least one time domain resource includes: a correspondence between the at least one third random number and a relative number of the at least one time of reference signal sending in the frequency hopping periodicity.

In a possible design manner, the correspondence between at least one third random number and at least one time domain resource includes: a correspondence between the at least one third random number and an index of at least one frequency hopping periodicity.

In a possible design manner, that the third random number is determined based on at least the time domain resource occupied by the second antenna port includes: The third random number is determined based on the time domain resource occupied by the second antenna port and a pseudo-random sequence.

In a possible design manner, the third random number is further determined based on one or more of the following parameters: the quantity of the slots included in each system frame, the quantity of the OFDM symbols included in each slot, the comb quantity, and the comb offset, where the comb quantity is the quantity of the combs included in the transmit bandwidth of the reference signal, and the comb offset is the reference quantity of the combs occupied by the reference signal.

In a possible design manner, the third random number satisfies $\Delta = $

$$\left(\sum_{m=0}^{7} c(8(n_f N_{slot}^{frame} N_{symb}^{slot} + n_{s,f}^{\mu} N_{symb}^{slot} + l_0 + l') + m + 1) \cdot 2^m\right) \bmod (K_{TC}/2)$$ ; $\Delta = $

$$\left(\sum_{m=0}^{7} c(8(n_{s,f}^{\mu} N_{symb}^{slot} + l_0 + l') + m + 1) \cdot 2^m\right) \bmod (K_{TC}/2)$$ ; $\Delta = $

$$\left(\sum_{m=0}^{7} c\left(8\left(n_f N_{\text{slot}}^{\text{frame}} N_{\text{symb}}^{\text{slot}} + n_{\text{s,f}}^{\mu} N_{\text{symb}}^{\text{slot}} + l_0 + l'\right) + m\right) \cdot 2^m\right) \bmod \left(K_{\text{TC}}/2\right)$$ ; or $\Delta$ =

$$\left(\sum_{m=0}^{7} c\left(8\left(n_{\text{s,f}}^{\mu} N_{\text{symb}}^{\text{slot}} + l_0 + l'\right) + m\right) \cdot 2^m\right) \bmod \left(K_{\text{TC}}/2\right)$$ ,

where $\Delta$ represents the third random number, the mathematical symbol $\Sigma$ represents summation, the mathematical symbol mod represents a modulo operation, $c()$ is the pseudo-random sequence, $n_f$ represents the system frame number corresponding to the second antenna port, $N_{\text{slot}}^{\text{frame}}$ represents the quantity of the slots included in each system frame, $N_{\text{symb}}^{\text{slot}}$ represents the quantity of the OFDM symbols included in each slot, $n_{\text{s,f}}^{\mu}$ represents the slot number corresponding to the second antenna port, $l_0$ represents the index of the start OFDM symbol in the one or more OFDM symbols included in the time domain resource occupied by the second antenna port, $l'$ represents the relative index of the OFDM symbol in the one or more OFDM symbols included in the time domain resource occupied by the second antenna port, and $K_{\text{TC}}$ represents the comb quantity.

In a possible design manner, that the seventh random number is determined based on at least the frequency domain resource occupied by the second antenna port includes: The seventh random number is determined based on one of a plurality of sixth correspondences and the frequency domain resource occupied by the second antenna port, and the sixth correspondence includes a correspondence between at least one seventh random number and at least one frequency domain resource.

In a possible design manner, that the seventh random number is determined based on at least the frequency domain resource occupied by the second antenna port includes: The seventh random number is determined based on the frequency domain resource occupied by the second antenna port and a pseudo-random sequence.

In a possible design manner, the seventh random number satisfies $\Delta_1 = \left(\sum_{m=0}^{7} c\left(8k + (m+1)\right) \cdot 2^m\right) \bmod (K_{\text{TC}}/2)$ ; or $\Delta_1 = \left(\sum_{m=0}^{7} c\left(8k + m\right) \cdot 2^m\right) \bmod \left(K_{\text{TC}}/2\right)$, where $\Delta_1$ represents the seventh random number, the mathematical symbol $\Sigma$ represents summation, $c()$ is the pseudo-random sequence, the mathematical symbol mod represents a modulo operation, $k$ represents the index of the frequency hopping bandwidth and/or the index of the transmit bandwidth that correspond/corresponds to the frequency domain resource occupied by the second antenna port, and $K_{\text{TC}}$ represents the comb quantity.

In a possible design manner, the time domain resource occupied by the second antenna port includes the one or more OFDM symbols, and the one or more OFDM symbols included in the time domain resource occupied by the second antenna port are determined based on one or more of the following parameters: the system frame number corresponding to the second antenna port, the slot number corresponding to the second antenna port, and an OFDM symbol number corresponding to the second antenna port.

In a possible design manner, the frequency domain resource occupied by the second antenna port includes one or more sub-bandwidths, and the one or more sub-bandwidths included in the frequency domain resource occupied by the second antenna port are determined based on one or more of the following parameters: the index of the frequency hopping bandwidth corresponding to the second antenna port, and the index of the transmit bandwidth corresponding to the second antenna port.

According to an eleventh aspect, a communication method is provided. The method includes: sending configuration information of a reference signal; and receiving the reference signal via M antenna ports based on the configuration information, where M is an integer greater than 0, the M antenna ports include at least one first antenna port, a start position of a frequency domain resource occupied by the first antenna port is determined based on at least a fourth offset, and the fourth offset is determined based on at least a time domain resource occupied by the first antenna port and a pseudo-random sequence; or the fourth offset is determined based on one of a plurality of ninth correspondences and a time domain resource occupied by the first antenna port, the ninth correspondence includes a correspondence between at least one fourth offset and at least one time domain resource, and the plurality of ninth correspondences correspond to a same frequency scaling factor.

According to a twelfth aspect, a communication method is provided. The method includes: receiving configuration information of a reference signal; and sending the reference signal via M antenna ports based on the configuration information, where M is an integer greater than 0, the M antenna ports include at least one first antenna port, a start position of a frequency domain resource occupied by the first antenna port is determined based on at least a fourth offset, and the fourth offset is determined based on at least a time domain resource occupied by the first antenna port and a pseudo-random sequence; or the fourth offset is determined based on one of a plurality of ninth correspondences and a time domain resource occupied by the first antenna port, the ninth correspondence includes a correspondence between at least one fourth offset and at least one time domain resource, and the plurality of ninth correspondences correspond to a same frequency scaling factor.

According to the communication method provided in the eleventh aspect or the twelfth aspect, when the start position of the frequency domain resource occupied by the antenna port is determined, the fourth offset is introduced, so that the start position of the frequency domain resource occupied by each antenna port may randomly change on different time domain resources, an antenna port that causes interference to an antenna port of a terminal device also randomly changes, to implement frequency-domain interference randomization. This brings a good interference randomization effect, can accelerate an interference randomization convergence speed, and can improve channel estimation performance.

Optionally, that a start position of a frequency domain resource occupied by the first antenna port is determined based on at least a fourth offset may include: The start position of the frequency domain resource occupied by the first antenna port is determined based on an initial value of the start position of the frequency domain resource occupied by the first antenna port and the fourth offset.

Optionally, the initial value of the start position of the frequency domain resource occupied by the first antenna port is configured by using higher layer signaling RRC.

In a possible design manner, the fourth offset is a fourth random number.

In a possible design manner, the fourth random number satisfies $k_{\text{rand}} = \left( \sum_{m=0}^{7} c\left(8\left\lfloor n_{\text{SRS}}/\prod_{b'=b_{\text{hop}}}^{B_{\text{SRS}}} N_{b'} \right\rfloor + m\right) \cdot 2^m \right) \bmod P_{\text{F}}$; or $k_{\text{rand}} = \sum_{m=0}^{7} c\left(8\left\lfloor n_{\text{SRS}}/\prod_{b'=b_{\text{hop}}}^{B_{\text{SRS}}} N_{b'} \right\rfloor + m\right) \cdot 2^m$, where $k_{\text{rand}}$ represents the fourth random number, a mathematical symbol $\Sigma$ represents summation, $c()$ is the pseudo-random sequence, $\left\lfloor \frac{n_{\text{SRS}}}{\prod_{b'=b_{\text{hop}}}^{B_{\text{SRS}}} N_{b'}} \right\rfloor$ represents an index of a freuency hopping periodicity corresponding to the reference signal, a mathematical symbol $\lfloor \ \rfloor$ represents a floor operation, $n_{\text{SRS}}$ represents a count value of the reference signal, a mathematical symbol $\Pi$ represents a product of a sequence, and a mathematical symbol mod indicates a modulo operation.

According to a thirteenth aspect, a communication method is provided. The method includes: sending configuration information of a reference signal; and receiving the reference signal via M antenna ports based on the configuration information, where M is an integer greater than 0, the M antenna ports include at least one first antenna port, a cyclic shift value of the first antenna port is determined based on at least a first code domain offset, and the first code domain offset is determined based on at least a time domain resource occupied by the first antenna port and/or a frequency domain resource occupied by the first antenna port.

According to a fourteenth aspect, a communication method is provided. The method includes: receiving configuration information of a reference signal; and sending the reference signal via M antenna ports based on the configuration information, where M is an integer greater than 0, the M antenna ports include at least one first antenna port, a cyclic shift value of the first antenna port is determined based on at least a first code domain offset, and the first code domain offset is determined based on at least a time domain resource occupied by the first antenna port and/or a frequency domain resource occupied by the first antenna port.

According to the communication method provided in the thirteenth aspect or the fourteenth aspect, the cyclic shift value of the first antenna port of a terminal device is determined based on the first code domain offset, so that the cyclic shift value of the antenna port of the terminal device may randomly change at different sending moments and/or on different frequency domain resources. In this way, an antenna port of a terminal device that causes interference to the antenna port of the terminal device randomly changes. Therefore, interference randomization is implemented, and a better interference randomization effect can be achieved.

Optionally, that a cyclic shift value of the first antenna port is determined based on at least a first code domain offset may include: The cyclic shift value of the first antenna port is determined based on an initial value of the cyclic shift value of the first antenna port and the first code domain offset.

Optionally, the initial value of the cyclic shift value of the first antenna port is configured by using higher layer signaling RRC.

In a possible design manner, the first code domain offset includes a first code domain random number and/or a second code domain random number, the first code domain random number is determined based on at least the time domain resource occupied by the first antenna port, and the second code domain random number is determined based on at least the frequency domain resource occupied by the first antenna port.

In a possible design manner, that the first code domain random number is determined based on at least the time domain resource occupied by the first antenna port includes: The first code domain random number is determined based on one of a plurality of seventh correspondences and the time domain resource occupied by the first antenna port, and the seventh correspondence includes a correspondence between at least one first code domain random number and at least one time domain resource.

In a possible design manner, each of the plurality of seventh correspondences includes a plurality of first code domain random numbers, values of the plurality of first code domain random numbers are different from each other, values of first code domain random numbers included in a plurality of first correspondences are the same, and correspondences between the plurality of first code domain random numbers and a plurality of time domain resources are different.

In a possible design manner, one frequency hopping periodicity includes at least one time of reference signal sending, and the correspondence between at least one first code domain random number and at least one time domain resource includes: a correspondence between the at least one first code domain random number and a relative number of the at least one time of reference signal sending in the frequency hopping periodicity.

In a possible design manner, the correspondence between at least one first code domain random number and at least one time domain resource includes: a correspondence between the at least one first code domain random number and an index of at least one frequency hopping periodicity.

In a possible design manner, that the first code domain random number is determined based on at least the time domain resource occupied by the first antenna port includes: The first code domain random number is determined based on the time domain resource occupied by the first antenna port and a pseudo-random sequence.

In a possible design manner, the first code domain random number is further determined based on one or more of the following parameters: a quantity of slots included in each system frame, a quantity of OFDM symbols included in each slot, a comb quantity, and a comb offset, where the comb quantity is a quantity of combs included in a transmit bandwidth of the reference signal, and the comb offset is a reference quantity of combs occupied by the reference signal.

In a possible design manner, the first code domain random number satisfies $A_1 =$

$$\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m\right) \bmod Y$$ ; $A_1 =$

$$\left(\sum_{m=0}^{7} c(8(n_{\text{s,f}}^{\mu} N_{\text{symb}}^{\text{slot}} + l_0 + l') + m) \cdot 2^m\right) \bmod Y$$ ;

$$A_1 = \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m$$ ;

$$A_1 = \sum_{m=0}^{7} c(8(n_{\text{s,f}}^{\mu} N_{\text{symb}}^{\text{slot}} + l_0 + l') + m) \cdot 2^m$$ ; $A_1 =$

$$\frac{2\pi}{Y}\left(\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m\right) \bmod Y\right)$$ ; $A_1 =$

$$\frac{2\pi}{Y}\left(\left(\sum_{m=0}^{7} c(8(n_{\text{s,f}}^{\mu} N_{\text{symb}}^{\text{slot}} + l_0 + l') + m) \cdot 2^m\right) \bmod Y\right)$$ ;

$$A_1 = \frac{2\pi}{Y}\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m$$ ; or

$$A_1 = \frac{2\pi}{Y}\sum_{m=0}^{7} c(8(n_{\text{s,f}}^{\mu} N_{\text{symb}}^{\text{slot}} + l_0 + l') + m) \cdot 2^m$$ ,

where $A_1$ represents the first code domain random number, a mathematical symbol $\Sigma$ represents summation, a mathematical symbol mod represents a modulo operation, $c()$ is the pseudo-random sequence, $n_f$ represents a system frame number corresponding to the first antenna port, $N_{\text{slot}}^{\text{frame}}$ represents a quantity of slots in each system frame, $N_{\text{symb}}^{\text{slot}}$ represents a quantity of OFDM symbols in each slot, $n_{\text{s,f}}^{\mu}$ represents a slot number corresponding to the first antenna port, $l_0$ represents an index of a start OFDM symbol in one or more OFDM symbols included in the time domain resource occupied by the first antenna port, $l'$ represents a relative index of one OFDM symbol in the one or more OFDM symbols included in the time domain resource occupied by the first antenna port, Y is a maximum quantity of that is of supported antenna ports and that is multiplexed through cyclic shifting on one comb, a quantity of Fourier transform points, or a quantity of subcarriers occupied by the first antenna port on one OFDM symbol.

In a possible design manner, that the second code domain random number is determined based on at least the frequency domain resource occupied by the first antenna port includes: The second code domain random number is determined based on one of a plurality of eighth correspondences and the frequency domain resource occupied by the first antenna port, and the eighth correspondence includes a correspondence between at least one second code domain random number and at least one frequency domain resource.

In a possible design manner, that the second code domain random number is determined based on at least the frequency domain resource occupied by the first antenna port includes: The second code domain random number is determined based on the frequency domain resource occupied by the first antenna port and a pseudo-random sequence.

In a possible design manner, the second code domain random number satisfies:

$$A_2 = \left(\sum_{m=0}^{7} c(8k + m) \cdot 2^m\right) \bmod Y;$$

$$A_2 = \sum_{m=0}^{7} c(8k + m) \cdot 2^m;$$

$$A_2 = \frac{2\pi}{Y}\left(\left(\sum_{m=0}^{7} c(8k + m) \cdot 2^m\right) \bmod Y\right);$$

or

$$A_2 = \frac{2\pi}{Y}\sum_{m=0}^{7} c(8k + m) \cdot 2^m,$$

where $A_2$ represents the second code domain random number, the mathematical symbol $\Sigma$ represents summation, the mathematical symbol mod represents a modulo operation, $c()$ is the pseudo-random sequence, $k$ represents an index of a frequency hopping bandwidth and/or an index of a transmit bandwidth that correspond/corresponds to the frequency domain resource occupied by the first antenna port, Y is the maximum quantity that is of supported antenna ports and that is multiplexed through cyclic shifting on one comb, the quantity of the Fourier transform points, or the quantity of the subcarriers occupied by the first antenna port on one OFDM symbol.

In a possible design manner, M reference signal ports include a plurality of first reference signal ports, and on a time domain resource and/or a frequency domain resource, the plurality of first reference signal ports correspond to a same first code domain offset.

In a possible design manner, a value of the cyclic shift value satisfies $\alpha \in \{0, 1, ..., K \times Y - 1\}$, and Y is a maximum quantity $n_{SRS}^{cs,max}$ of antenna ports multiplexed through cyclic shifting on one comb, or a quantity of cyclic shift values that can be configured by using a higher-layer parameter on one comb, and a value of Y is determined based on a configured quantity of reference signal combs, and K is an integer greater than 1. Alternatively, a value of the cyclic shift value satisfies $\alpha \in \{0, 1, ..., Y - 1\}$, Y is a quantity M of Fourier transform points, $M=2^x$, x is a positive integer, and a value of M is determined based on a system bandwidth or a sounding bandwidth of the reference signal. Alternatively, a value of the cyclic shift value satisfies $\alpha \in \{0, 1, ..., Y - 1\}$, and Y is a quantity of subcarriers occupied by the first antenna port on one OFDM symbol.

In a possible design manner, the time domain resource occupied by the first antenna port includes one or more orthogonal frequency division multiplexing OFDM symbols, and the one or more OFDM symbols included in the time domain resource occupied by the first antenna port are determined based on one or more of the following parameters: the system frame number corresponding to the first antenna port, the slot number corresponding to the first antenna port, and an OFDM symbol number corresponding to the first antenna port.

In a possible design manner, the frequency domain resource occupied by the first antenna port includes one or more sub-bandwidths, and the one or more sub-bandwidths included in the frequency domain resource occupied by the first antenna port are determined based on one or more of the following parameters: the index of the frequency hopping bandwidth corresponding to the first antenna port, and the index of the transmit bandwidth corresponding to the first antenna port.

In a possible design manner, the M antenna ports further include at least one second antenna port, a cyclic shift value of the second antenna port is determined based on at least a second code domain offset, the second code domain offset is determined based on at least a time domain resource occupied by the second antenna port and/or a frequency domain resource occupied by the second antenna port, and the second code domain offset is different from the first code domain offset.

Initial cyclic shift values of the first antenna port and the second antenna port are configured to be the same, and on at least one time domain resource and/or frequency domain resource, the first code domain offset of the first antenna port is different from the second code domain offset of the second antenna port. For example, on the first time domain resource and the second time domain resource, intervals between the cyclic shift values of the first antenna port and the second antenna port are different. Alternatively, on the first frequency domain resource and the second frequency domain resource, intervals between the cyclic shift values of the first antenna port and the second antenna port are different.

In a possible design manner, the second code domain offset includes a third code domain random number and/or a fourth code domain random number, the third code domain random number is determined based on at least the time domain resource occupied by the second antenna port, and the fourth code domain random number is determined based on at least the frequency domain resource occupied by the second antenna port.

In a possible design manner, that the third code domain random number is determined based on at least the time domain resource occupied by the second antenna port includes: The third code domain random number is determined based on one of a plurality of seventeenth correspondences and the time domain resource occupied by the second antenna port, and the one seventeenth correspondence includes a correspondence between at least one third code domain random number and at least one time domain resource.

In a possible design manner, one frequency hopping periodicity includes at least one time of reference signal sending, and the correspondence between at least one third code domain random number and at least one time domain resource includes: a correspondence between the at least one third code domain random number and a relative number of the at least one time of reference signal sending in the frequency hopping periodicity.

In a possible design manner, the correspondence between at least one third code domain random number and at least one time domain resource includes: a correspondence between the at least one third code domain random number and an index of at least one frequency hopping periodicity.

In a possible design manner, that the third code domain random number is determined based on at least the time domain resource occupied by the second antenna port includes: The third code domain random number is determined based on the time domain resource occupied by the second antenna port and a pseudo-random sequence.

In a possible design manner, the third code domain random number is further determined based on one or more of the following parameters: the quantity of the slots included in each system frame, the quantity of the OFDM symbols included in each slot, the comb quantity, and the comb offset, where the comb quantity is the quantity of the combs included in the transmit bandwidth of the reference signal, and the comb offset is the reference quantity of the combs occupied by the reference signal.

In a possible design manner, that the fourth code domain random number is determined based on at least the frequency domain resource occupied by the second antenna port includes: The fourth code domain random number is determined based on one of a plurality of eighteenth correspondences and the frequency domain resource occupied by the second antenna port, and the one eighteenth correspondence includes a correspondence between at least one sixth random number and at least one frequency domain resource.

In a possible design manner, that the fourth code domain random number is determined based on at least the frequency domain resource occupied by the second antenna port includes: The fourth code domain random number is determined based on the frequency domain resource occupied by the second antenna port and a pseudo-random sequence.

According to a fifteenth aspect, a communication apparatus is provided. The communication apparatus includes a sending module and a receiving module, where

the sending module is configured to send configuration information of a reference signal; and the receiving module is configured to receive the reference signal via M antenna ports based on the configuration information, where M is an integer greater than 0, the M antenna ports include at least one first antenna port, a comb occupied by the first antenna port is determined based on at least a first offset, and the first offset is determined based on at least a time domain resource occupied by the first antenna port and/or a frequency domain resource occupied by the first antenna port.

It should be noted that all related content of the steps in any possible implementation of the ninth aspect may be cited in function descriptions of corresponding functional modules. Details are not described herein again.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the fifteenth aspect may further include a processing module and a storage module. The storage module stores a program or instructions. When the processing module executes the program or the instructions, the communication apparatus according to the fifteenth aspect is enabled to perform the method according to any possible implementation of the ninth aspect.

It should be noted that the communication apparatus according to the fifteenth aspect may be a network device, or may be a chip (system) or another part or component that can be disposed in the network device. This is not limited in this application.

In addition, for technical effects of the communication apparatus according to the fifteenth aspect, refer to the technical effects of the method according to any possible implementation of the ninth aspect. Details are not described herein again.

According to a sixteenth aspect, a communication apparatus is provided. The communication apparatus includes a sending module and a receiving module, where

the receiving module is configured to receive configuration information of a reference signal; and the sending module is configured to send the reference signal via M antenna ports based on the configuration information, where M is an integer greater than 0, the M antenna ports include at least one first antenna port, a comb occupied by the first antenna port is determined based on at least a first offset, and the first offset is determined based on at least a time domain resource occupied by the first antenna port and/or a frequency domain resource occupied by the first antenna port.

It should be noted that all related content of the steps in any possible implementation of the tenth aspect may be cited in function descriptions of corresponding functional modules. Details are not described herein again.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the sixteenth aspect may further include a processing module and a storage module. The storage module stores a program or instructions. When the processing module executes the program or the instructions, the communication apparatus according to the sixteenth aspect is enabled to perform the method according to any possible implementation of the tenth aspect.

It should be noted that the communication apparatus according to the sixteenth aspect may be a terminal device, or may be a chip (system) or another part or component that can be disposed in the terminal device. This is not limited in this application.

In addition, for technical effects of the communication apparatus according to the sixteenth aspect, refer to the technical effects of the method according to any possible implementation of the tenth aspect. Details are not described herein again.

According to a seventeenth aspect, a communication apparatus is provided. The communication apparatus includes a sending module and a receiving module, where

the sending module is configured to send configuration information of a reference signal; and the receiving module is configured to receive the reference signal via M antenna ports based on the configuration information, where M is an integer greater than 0, the M antenna ports include at least one first antenna port, a start position of a frequency domain resource occupied by the first antenna port is determined based on at least a fourth offset, and the fourth offset is determined based on at least a time domain resource occupied by the first antenna port and a pseudo-random sequence; or the fourth offset is determined based on one of a plurality of ninth correspondences and a time domain resource occupied by the first antenna port, the ninth correspondence includes a correspondence between at least one fourth offset and at least one time domain resource, and the plurality of ninth correspondences correspond to a same frequency scaling factor.

It should be noted that all related content of the steps in any possible implementation of the eleventh aspect may be cited in function descriptions of corresponding functional modules. Details are not described herein again.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the seventeenth aspect may further include a processing module and a storage module. The storage module stores a program or instructions. When the processing module executes the program or the instructions, the communication apparatus according to the seventeenth aspect is enabled to perform the method according to any possible implementation of the eleventh aspect.

It should be noted that the communication apparatus according to the seventeenth aspect may be a network device, or may be a chip (system) or another part or component that can be disposed in the network device. This is not limited in this application.

In addition, for technical effects of the communication apparatus according to the seventeenth aspect, refer to the technical effects of the method according to any possible implementation of the eleventh aspect. Details are not described herein again.

According to an eighteenth aspect, a communication apparatus is provided. The communication apparatus includes a sending module and a receiving module, where

the receiving module is configured to receive configuration information of a reference signal; and the sending module is configured to send the reference signal via M antenna ports based on the configuration information, where M is an integer greater than 0, the M antenna ports include at least one first antenna port, a start position of a frequency domain resource occupied by the first antenna port is determined based on at least a fourth offset, and the fourth offset is determined based on at least a time domain resource occupied by the first antenna port and a pseudo-random sequence; or the fourth offset is determined based on one of a plurality of ninth correspondences and a time domain resource occupied by the first antenna port, the ninth correspondence includes a correspondence between at least one fourth offset and at least one time domain resource, and the plurality of ninth correspondences correspond to a same frequency scaling factor.

It should be noted that all related content of the steps in any possible implementation of the twelfth aspect may be cited in function descriptions of corresponding functional modules. Details are not described herein again.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the eighteenth aspect may further include a processing module and a storage module. The storage module stores a program or instructions. When the processing module executes the program or the instructions, the communication apparatus according to the eighteenth aspect is enabled to perform the method according to any possible implementation of the twelfth aspect.

It should be noted that the communication apparatus according to the eighteenth aspect may be a terminal device, or may be a chip (system) or another part or component that can be disposed in the terminal device. This is not limited in this application.

In addition, for technical effects of the communication apparatus according to the eighteenth aspect, refer to the technical effects of the method according to any possible implementation of the twelfth aspect. Details are not described herein again.

According to a nineteenth aspect, a communication apparatus is provided. The communication apparatus includes a sending module and a receiving module, where

the sending module is configured to send configuration information of a reference signal; and the receiving module is configured to receive the reference signal via M antenna ports based on the configuration information, where M is an integer greater than 0, the M antenna ports include at least one first antenna port, a cyclic shift value of the first antenna port is determined based on at least a first code domain offset, and the first code domain offset is determined based on at least a time domain resource occupied by the first antenna port and/or a frequency domain resource occupied by the first antenna port. It should be noted that all related content of the steps in any possible implementation of the thirteenth aspect may be cited in function descriptions of corresponding functional modules. Details are not described herein again.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the nineteenth aspect may further include a processing module and a storage module. The storage module stores a program or instructions. When the processing module executes the program or the instructions, the communication apparatus according to the nineteenth aspect is enabled to perform the method according to any possible implementation of the thirteenth aspect.

It should be noted that the communication apparatus according to the nineteenth aspect may be a network device, or may be a chip (system) or another part or component that can be disposed in the network device. This is not limited in this application.

In addition, for technical effects of the communication apparatus according to the nineteenth aspect, refer to the technical effects of the method according to any possible implementation of the thirteenth aspect. Details are not described herein again.

According to a twentieth aspect, a communication apparatus is provided. The communication apparatus includes a sending module and a receiving module, where

the receiving module is configured to receive configuration information of a reference signal; and the sending module is configured to send the reference signal via M antenna ports based on the configuration information, where M is an integer greater than 0, the M antenna ports include at least one first antenna port, a cyclic shift value of the first antenna port is determined based on at least a first code domain offset, and the first code domain offset is determined based on at least a time domain resource occupied by the first antenna port and/or a frequency domain resource occupied by the first antenna port.

It should be noted that all related content of the steps in any possible implementation of the fourteenth aspect may be cited in function descriptions of corresponding functional modules. Details are not described herein again.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the twentieth aspect may further include a processing module and a storage module. The storage module stores a program or instructions. When the processing module executes the program or the instructions, the communication apparatus according to the twentieth aspect is enabled to perform the method according to any possible implementation of the fourteenth aspect.

It should be noted that the communication apparatus according to the twentieth aspect may be a terminal device, or may be a chip (system) or another part or component that can be disposed in the terminal device. This is not limited in this application.

In addition, for technical effects of the communication apparatus according to the twentieth aspect, refer to the technical effects of the method according to any possible implementation of the fourteenth aspect. Details are not described herein again.

According to a twenty-first aspect, a communication apparatus is provided. The communication apparatus includes a processor. The processor is coupled to a memory, and the memory is configured to store a computer program.

The processor is configured to execute the computer program stored in the memory, to perform the communication method according to any possible implementation of the first aspect to the fourth aspect and the ninth aspect to the fourteenth aspect.

In a possible design, the communication apparatus according to the twentieth aspect may further include a transceiver. The transceiver may be a transceiver circuit or an input/output port. The transceiver may be used by the communication apparatus to communicate with another device.

It should be noted that the input port may be configured to implement a receiving function related to any possible implementation of the first aspect to the fourth aspect or the ninth aspect to the fourteenth aspect, and the output port may be configured to implement a sending function related to any possible implementation of the first aspect to the fourth aspect or the ninth aspect to the fourteenth aspect.

In this application, the communication apparatus according to the twentieth aspect may be a terminal device or a network device, or a chip or a chip system disposed inside the terminal device or the network device.

In addition, for technical effects of the communication apparatus according to the twentieth aspect, refer to the technical effects of the communication method according to any implementation of the first aspect to the fourth aspect or the ninth aspect to the fourteenth aspect. Details are not described herein again.

According to a twenty-first aspect, a communication system is provided. The communication system includes the communication apparatus according to the fifth aspect and the communication apparatus according to the sixth aspect, and may further include the communication apparatus according to the seventh aspect and the communication apparatus according to the eighth aspect. Alternatively, the communication system includes the communication apparatus according to the seventh aspect and the communication apparatus according to the eighth aspect.

Alternatively, the communication system includes the communication apparatus according to the fifth aspect and configured to implement the method according to the first aspect, and the communication apparatus according to the sixth aspect and configured to implement the method according to the second aspect. Alternatively, the communication system includes the communication apparatus according to the seventh aspect and configured to implement the method according to the third aspect, and the communication apparatus according to the eighth aspect and configured to implement the method according to the fourth aspect.

Alternatively, the communication system includes the communication apparatus according to the fifteenth aspect and the communication apparatus according to the sixteenth aspect, and may further include the communication apparatus according to the seventeenth aspect and the communication apparatus according to the eighteenth aspect; and/or may include the communication apparatus according to the nineteenth aspect and the communication apparatus according to the twentieth aspect.

Alternatively, the communication system includes the communication apparatus according to the seventeenth aspect and the communication apparatus according to the eighteenth aspect, and may further include the communication apparatus according to the nineteenth aspect and the communication apparatus according to the twentieth aspect.

According to a twenty-second aspect, a chip system is provided. The chip system includes a logic circuit and an input/output port. The logic circuit is configured to implement a processing function related to any possible implementation of the first aspect to the fourth aspect or the ninth aspect to the fourteenth aspect, and the input/output port is configured to implement sending and receiving functions related to any possible implementation of the first aspect to the fourth aspect or the ninth aspect to the fourteenth aspect. Specifically, the input port may be configured to implement the receiving function related to any possible implementation of the first aspect to the fourth aspect or the ninth aspect to the fourteenth aspect, and the output port may be configured to implement the sending function related to any possible implementation of the first aspect to the fourth aspect or the ninth aspect to the fourteenth aspect.

In a possible design, the chip system further includes a memory. The memory is configured to store program instructions and data for implementing a function in any possible implementation of the first aspect to the fourth aspect or the ninth aspect to the fourteenth aspect.

The chip system may include a chip; or may include a chip and another discrete component.

According to a twenty-third aspect, a computer-readable storage medium is provided. The computer-readable storage medium stores a computer program or instructions. When the computer program is run or the instructions are run on a computer, the communication method according to any possible implementation of the first aspect to the fourth aspect or the ninth aspect to the fourteenth aspect is performed.

According to a twenty-fourth aspect, a computer program product is provided. The computer program product includes a computer program or instructions. When the computer program is run or the instructions are run on a computer, the communication method according to any possible implementation of the first aspect to the fourth aspect or the ninth aspect to the fourteenth aspect is performed.

## BRIEF DESCRIPTION OF DRAWINGS

FIG. 1 is a diagram of an architecture of a communication system according to an embodiment of this application;
FIG. 2 is a diagram of a transmit bandwidth according to an embodiment of this application;
FIG. 3 is a comb diagram according to an embodiment of this application;
FIG. 4 is an application diagram according to an embodiment of this application;
FIG. 5 is a schematic flowchart of a communication method according to an embodiment of this application;
FIG. 6 is another application diagram according to an embodiment of this application;
FIG. 7 is still another application diagram according to an embodiment of this application;
FIG. 8 is still another application diagram according to an embodiment of this application;
FIG. 9 is still another application diagram according to an embodiment of this application;
FIG. 10 is still another application diagram according to an embodiment of this application;
FIG. 11 is a schematic flowchart of another communication method according to an embodiment of this application;
FIG. 12 is still another application diagram according to an embodiment of this application;
FIG. 13 is a schematic flowchart of still another communication method according to an embodiment of this application;
FIG. 14 is a schematic flowchart of still another communication method according to an embodiment of this application;
FIG. 15 is a schematic flowchart of still another communication method according to an embodiment of this application;
FIG. 16 is a diagram of a structure of a communication apparatus according to an embodiment of this application; and
FIG. 17 is a diagram of a structure of another communication apparatus according to an embodiment of this application.

## DESCRIPTION OF EMBODIMENTS

The following describes the technical solutions in this application with reference to the accompanying drawings.

The technical solutions in embodiments of this application can be applied to various communication systems, for example, a frequency division duplex (frequency division duplex, FDD) system, a time division duplex (time division duplex, TDD) system, a wireless fidelity (wireless fidelity, Wi-Fi) system, a vehicle to everything (vehicle to everything, V2X) communication system, a device-to-device (device-to-device, D2D) communication system, a multiple-input multiple-output (multiple-input multiple-output, MIMO) system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

A communication method provided in this application is applicable to a scenario related to reference signal transmission. For example, the communication method provided in this application is applicable to a low-frequency scenario (for example, a frequency band below 6 GHz), and is also applicable to a high-frequency scenario (for example, a frequency band above 6 GHz); is applicable to a single (Single)-transmission point (transmission and reception point, TRP) scenario, and is also applicable to a multi-transmission point (Multi-TRP) scenario and any derivative scenario thereof; is applicable to a homogeneous network scenario, and is also applicable to a heterogeneous network scenario; and is applicable to a coordinated multipoint transmission scenario.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of the solutions can be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the word "example" is used to present a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences between the terms are not emphasized.

A network architecture and a service scenario that are described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

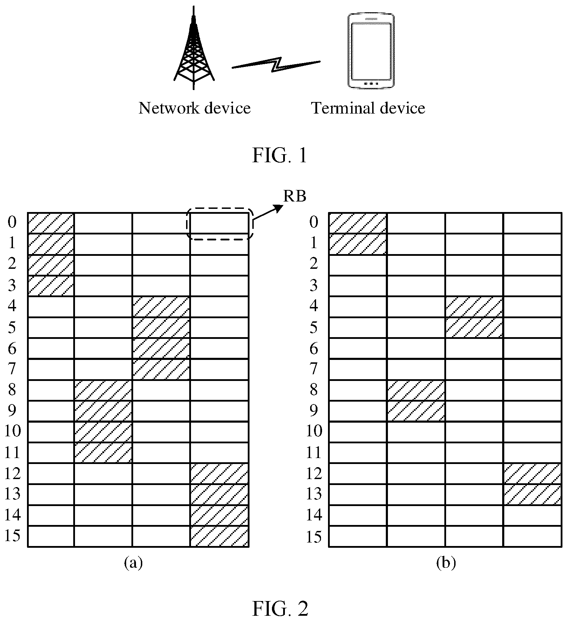

For ease of understanding of embodiments of this application, first, a communication system applicable to embodiments of this application is described in detail by using a communication system shown in FIG. 1 as an example. For example, FIG. 1 is a diagram of an architecture of a communication system to which the communication method according to embodiments of this application is applicable.

As shown in FIG. 1, the communication system includes a network device and a terminal device.

The terminal device is a terminal that accesses the communication system and has wireless sending and receiving functions, or a chip or a chip system that can be disposed in the terminal. The terminal device may also be referred to as a user equipment (user equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus.

For example, the terminal device in embodiments of this application may be a mobile phone (mobile phone), a wireless data card, a personal digital assistant (personal digital assistant, PDA) computer, a laptop computer (laptop computer), a tablet computer (Pad), a computer with wireless sending and receiving functions, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game machine, a smart television, a smart speaker, a smart refrigerator, or fitness equipment) in a smart home (smart home), a vehicle-mounted terminal, or an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device (handset) with a wireless communication function, a computing device or another processing device connected to a wireless modem, a wearable device, or the like.

For another example, the terminal device in embodiments of this application may be an express delivery terminal (for example, a device that can monitor a location of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a selfservice checkout machine, or an unmanned convenience store) in intelligent retail. For another example, the terminal device in this application may be a vehicle-mounted module, a vehicle-mounted assembly, a vehicle-mounted component, a vehicle-mounted chip, or a vehicle-mounted unit that is built in a vehicle as one or more components or units. The vehicle may implement the method provided in this application through the vehicle-mounted module, the vehicle-mounted assembly, the vehicle-mounted component, the vehicle-mounted chip, or the vehicle-mounted unit that is built in the vehicle.

The network device is a device that is located on a network side of the communication system and has wireless sending and receiving functions, or a chip or a chip system that can be disposed in the device. The network device includes but is not limited to: an access point (access point, AP) in a wireless fidelity (wireless fidelity, Wi-Fi) system, for example, a home gateway, a router, a server, a switch, a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission and reception point, TRP; or transmission point, TP), or a remote radio head (remote radio head, RRH). The network device may alternatively be a gNB or a transmission point (TRP or TP) in a 5G system, for example, a new radio (new radio, NR) system, or one antenna panel or a group of antenna panels (including a plurality of antenna panels) of a gNB in the 5G system. The network device may alternatively be a network node, such as a baseband unit (BBU), a distributed unit (distributed unit, DU), or a road side unit (road side unit, RSU) having a base station function, that constitutes a gNB or a transmission point.

It should be noted that the signal processing method provided in embodiments of this application is applicable to any two nodes shown in FIG. 1. For a specific implementation, refer to the following method embodiments. Details are not described herein again.

It should be noted that, the solutions in embodiments of this application may be further applied to another communication system, and a corresponding name may alternatively be replaced with a name of a corresponding function in the another communication system.

It should be understood that FIG. 1 is merely an example of a simplified diagram for ease of understanding. The communication system may further include another network device and/or another terminal device that are/is not shown in FIG. 1.

To make embodiments of this application clearer, the following uniformly describes some content and concepts related to embodiments of this application.

First, configuration information:

Using an example in which a reference signal is an SRS, the configuration information may be referred to as SRS resource configuration information. Reference signals to which the method provided in embodiments of this application is applicable include but are not limited to an SRS and a demodulation reference signal (demodulation reference signal, DMRS). In this application, the SRS is used as an example for description.

For example, the SRS resource configuration information may indicate an SRS resource configuration, and may be semi-statically configured by a network device for a terminal device by using a higher-layer parameter.

The SRS resource configuration information may include a time-frequency-code resource corresponding to each antenna port (antenna port), of at least one antenna port (for example, an antenna port for sending the SRS may be referred to as an SRS port).

For example, the SRS resource configuration information may include but is not limited to one or more of the following: $N_{\mathrm{ap}}^{\mathrm{SRS}} \in \{1,2,4\}$ antenna ports $\{p_i\}_{i=0}^{N_{\mathrm{ap}}^{\mathrm{SRS}}-1}$, $N_{\mathrm{symb}}^{\mathrm{SRS}} \in \{1, 2, 4, 8,10,12,14\}$ consecutive OFDM symbols, a quantity of symbols included in each slot, a time-domain start position $l_0 \in \{0, 1, \ldots, 13\}$, and a frequency-domain start position $k_0$, where antenna port $p_i = 1000 + i$, and each antenna port may correspond to a physical antenna or a virtual antenna of the terminal device.

Optionally, the SRS may be transmitted, between an antenna port of the terminal device and an antenna port of the network device, on a corresponding resource based on the SRS resource configuration indicated by the SRS resource configuration information.

A name of the antenna port is not limited in this application. For example, the antenna port may also be referred to as a reference signal port.

Second, repetition factor, sounding bandwidth, frequency hopping bandwidth, transmit bandwidth, frequency hopping periodicity, and frequency scaling factor $P_F$:

The repetition factor $R \in \{1,2,4\}$ is semi-statically configured by the network device by using a higher-layer parameter (for example, repetitionFactor). One time of reference signal sending corresponds to consecutive $R$ OFDM symbols in one reference signal resource, and a number of a 1st OFDM symbol in consecutive $R$ OFDM symbols that correspond to one time of reference signal sending and that are in a reference signal resource can be exactly divided by $R$.

For example, the sounding bandwidth may be a bandwidth range corresponding to a channel that is obtained by the network device based on a reference signal.

For example, the frequency hopping bandwidth may be a bandwidth range corresponding to a channel that is obtained by the network device after a reference signal is sent for a single time.

Optionally, the frequency hopping bandwidth may be less than or equal to the sounding bandwidth.

For example, the frequency hopping periodicity may be a quantity of times of reference signal sending needed by the network device for obtaining the channel corresponding to the sounding bandwidth.

For example, the sounding bandwidth, the frequency hopping bandwidth, and the frequency hopping periodicity may be determined based on a higher-layer parameter and a protocol-predefined table.

When the frequency scaling factor $P_F$ is not configured, the transmit bandwidth is equal to the frequency hopping bandwidth. When the network device configures the frequency scaling factor $P_F$ by using a higher-layer parameter, the transmit bandwidth is a fraction of $P_F$ of the frequency hopping bandwidth.

FIG. 2 is a diagram of a transmit bandwidth according to an embodiment of this application.

In FIG. 2, a vertical direction represents a frequency domain, a horizontal direction represents a time domain, each box represents one resource block (resource block, RB), and one RB includes 12 subcarriers in frequency domain. It is assumed that a sounding bandwidth is 16 RBs, a frequency hopping bandwidth is 4 RBs, and a frequency hopping periodicity is 4. As shown in (a) in FIG. 2, when a frequency scaling factor $P_F$ is not configured, a transmit bandwidth is 4 RBs (shaded boxes in (a) in FIG. 2). As shown in (b) in FIG. 2, when frequency scaling factor $P_F = 2$ is configured, a transmit bandwidth is 2 RBs (shaded boxes in (b) in FIG. 2).

Optionally, the SRS may be transmitted, between the terminal device and the network device, on a corresponding resource based on the repetition factor, the sounding bandwidth, the frequency hopping bandwidth, the transmit bandwidth, the frequency hopping periodicity, and the frequency scaling factor.

Third, cyclic shift value:

For example, a reference signal may be generated by using a sequence $r_{u,v}^{(\alpha,\delta)}(n)$, and the sequence $r_{u,v}^{(\alpha,\delta)}(n)$ is a cyclic shift (cyclic shift, CS) of a base sequence (base sequence) $\bar{r}_{u,v}(n)$.

For example, the sequence $r_{u,v}^{(\alpha,\delta)}(n)$ satisfies $r_{u,v}^{(\alpha,\delta)}(n)=e^{j\alpha n}\bar{r}_{u,v}(n)$, where $\alpha$ is a cyclic shift value, and $\alpha$ is a real number; $\delta = \log_2(K_{TC})$, where $\delta$ is an integer, and $K_{TC}$ is a comb quantity; u,v is an index of a base sequence in a base sequence group, where u and v are integers; $j$ is an imaginary unit, $n$ is an index of an element in the sequence, $n$ is an integer, and $0 \leq n < M_{ZC}$; $M_{ZC}$ is a length of the sequence $r_{u,v}^{(\alpha,\delta)}(n)$, and is a positive integer; and e is a natural constant. The sequence elements are sequentially mapped, in ascending order of indexes of the sequence elements, to subcarriers that correspond to an SRS resource, and whose indexes are in ascending order.

For example, the comb quantity may be a quantity of combs included in a transmit bandwidth of the reference signal.

Optionally, the base sequence $\bar{r}_{u,v}(n)$ may be a sequence generated by using a ZC (Zadoff-Chu) sequence.

For example, the base sequence $\bar{r}_{u,v}(n)$ is a ZC sequence, or a sequence generated by expanding or intercepting a ZC sequence through cyclic shifting.

Assuming that a ZC sequence whose length is N is $z_q(n)$, where $n = 0,1, ..., N - 1$ and N is a positive integer, a sequence whose length is M and that is generated by using the ZC sequence may be expressed as $z_q(m \bmod N)$, where $m = 0,1, ... , M - 1$.

For example, the ZC sequence whose length is N may be expressed as the following formula:

$$z_q(n) = \begin{cases} exp\left(-j\pi q \cdot \frac{n(n+1)}{N}\right), \text{N is an odd number} \\ exp\left(-j\pi q \cdot \frac{n^2}{N}\right), \text{N is an even number} \end{cases}$$

, where q is a root indicator of the ZC sequence, and q is a positive integer that is relatively prime to N and that is less than N; $n = 0, 1, ..., N - 1$, j is an imaginary unit, and $exp()$ is an exponential function with a natural constant e as a base.

In some embodiments, a cyclic shift $\alpha_i$ corresponding to antenna port $p_i$ satisfies the following formula (1):

$$\alpha_i = 2\pi \frac{n_{SRS}^{cs,i}}{n_{SRS}^{cs,max}} \tag{1}$$

In the foregoing formula (1), $n_{SRS}^{cs,i}$ may be expressed as the following formula:

$$n_{SRS}^{cs,i} = \begin{cases} \left(n_{SRS}^{cs} + \frac{n_{SRS}^{cs,max}\lfloor(p_i-1000)/2\rfloor}{N_{ap}^{SRS}/2}\right) \bmod n_{SRS}^{cs,max} \quad N_{ap}^{SRS} = 4, n_{SRS}^{cs,max}=6 \\ \left(n_{SRS}^{cs} + \frac{n_{SRS}^{cs,max}(p_i-1000)}{N_{ap}^{SRS}}\right) \bmod n_{SRS}^{cs,max} \quad \text{otherwise (otherwise)} \end{cases}$$

,

where $n_{SRS}^{cs}$ represents a cyclic shift reference value, $n_{SRS}^{cs} \in \{0, 1, ..., n_{SRS}^{cs,max} - 1\}$, and is semi-statically configured by the network device by using a higher-layer parameter (for example, transmissionComb); $n_{SRS}^{cs,max}$ represents a maximum cyclic shift value; $N_{ap}^{SRS}$ represents a quantity of antenna ports (refer to the foregoing descriptions in "First, configuration information"); a mathematical symbol mod represents a modulo operation; and a mathematical symbol $\lfloor \rfloor$ represents a floor operation.

Optionally, the maximum cyclic shift value $n_{\text{SRS}}^{\text{cs,max}}$ may indicate that a delay domain is equally divided into $n_{\text{SRS}}^{\text{cs,max}}$ parts, or indicate that a phase value $2\pi$ is equally divided into $n_{\text{SRS}}^{\text{cs,max}}$ parts and each cyclic shift value corresponds to a start point of each part.

For example, the maximum cyclic shift value $n_{\text{SRS}}^{\text{cs,max}}$ may correspond to a value of the comb quantity $K_{\text{TC}}$. As shown in Table 1, when $K_{\text{TC}} = 2$, $n_{\text{SRS}}^{\text{cs,max}} = 8$. When $K_{\text{TC}} = 1$, $n_{\text{SRS}}^{\text{cs,max}} = 3$. When $K_{\text{TC}} = 1$, $n_{\text{SRS}}^{\text{cs,max}} = 12$. When $K_{\text{TC}} = 8$, $n_{\text{SRS}}^{\text{cs,max}} = 6$.

**Table 1**

| $K_{TC}$ | $n_{\text{SRS}}^{\text{cs,max}}$ |
|---|---|
| 2 | 8 |
| 4 | 12 |
| 8 | 6 |

Fourth, comb (comb), comb quantity $K_{\text{TC}}$, and comb offset $\overline{k}_{\text{TC}}$:

For example, a frequency domain resource may be divided into a plurality of comb-shaped frequency domain resource groups, and one comb-shaped frequency domain resource group may be one comb.

For example, the comb quantity may be a quantity of combs included in a transmit bandwidth of a reference signal.

Optionally, the comb quantity may also be referred to as a comb number. This is not limited in this application.

Optionally, a quantity of subcarriers between any two adjacent subcarriers on a comb may be obtained based on the comb quantity.

For example, the comb quantity $K_{\text{TC}}$ may be equal to 2, 4, or 8.

Optionally, the comb quantity may be semi-statically configured by the network device by using a higher-layer parameter.

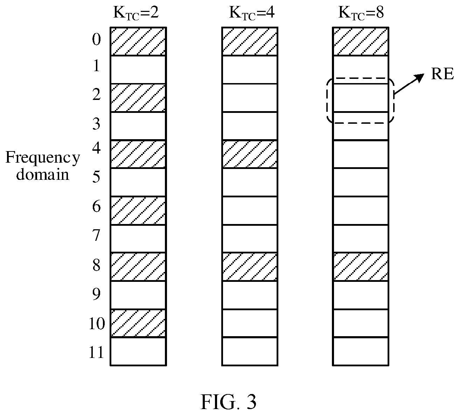

FIG. 3 shows corresponding frequency domain resource division when a comb quantity $K_{\text{TC}}$ is 2, 4, or 8. Comb quantity $K_{\text{TC}}=2$ is used as an example, even-numbered subcarriers (for example, subcarriers numbered 0, 2, 4, ...) form a comb-shaped frequency domain resource group, and odd-numbered subcarriers (for example, subcarriers numbered 1, 3, 5, ...) form a comb-shaped frequency domain resource group. Each box represents one resource element (resource element, RE), and one OFDM symbol and one subcarrier form one RE.

For example, the comb offset $\overline{k}_{\text{TC}}$ is a reference quantity of combs occupied by the reference signal.

In some embodiments, an index of a comb $k_{\text{TC}}^{(p_i)}$ occupied by antenna port $p_i$ satisfies the following formula (2):

$$k_{\text{TC}}^{(p_i)} = \begin{cases} \left(\overline{k}_{\text{TC}} + K_{\text{TC}}/2\right) \bmod K_{\text{TC}} & N_{\text{ap}}^{\text{SRS}} = 4, p_i \in \{1001, 1003\}, n_{\text{SRS}}^{\text{cs,max}} = 6 \\ \left(\overline{k}_{\text{TC}} + K_{\text{TC}}/2\right) \bmod K_{\text{TC}} & N_{\text{ap}}^{\text{SRS}} = 4, p_i \in \{1001, 1003\}, n_{\text{SRS}}^{\text{cs}} \in \left\{n_{\text{SRS}}^{\text{cs,max}}/2, ..., n_{\text{SRS}}^{\text{cs,max}} - 1\right\} \\ \overline{k}_{\text{TC}} & \text{otherwise (otherwise)} \end{cases}$$

$$(2)$$

In the foregoing formula (2), $\overline{k}_{\text{TC}}$ represents a comb offset, and $\overline{k}_{\text{TC}} \in \{0, 1, ..., K_{\text{TC}} - 1\}$.

Optionally, the comb offset $\overline{k}_{\text{TC}}$ may be configured by the network device by using a higher-layer parameter (for example, a transmission comb (transmissionComb)).

Fifth, partial sounding offset $n_{\text{offset}}^{\text{RPFS}}$:

In some embodiments, a frequency-domain start position $k_0^{(p_i)}$ of antenna port $p_i$ may satisfy the following formula (3):

$$k_0^{(p_i)} = \bar{k}_0^{(p_i)} + n_{\text{offset}}^{\text{FH}} + n_{\text{offset}}^{\text{RPFS}} \tag{3}$$

In the foregoing formula (3), $\bar{k}_0^{(p_i)}$ satisfies $\bar{k}_0^{(p_i)} = n_{\text{shift}} N_{\text{sc}}^{\text{RB}} + \left( k_{\text{TC}}^{(p_i)} + k_{\text{offset}}^{l'} \right) \bmod K_{\text{TC}}$, where $N_{\text{sc}}^{\text{RB}}$ is a quantity of subcarriers included in each resource block, for example, $N_{\text{sc}}^{\text{RB}}$ is 12; and $k_{\text{TC}}^{(p_i)}$ represents an index of a comb occupied by antenna port $p_i$.

In the foregoing formula (3), $n_{\text{offset}}^{\text{FH}}$ represents a frequency hopping offset.

In the foregoing formula (3), $n_{\text{offset}}^{\text{RPFS}}$ represents a partial sounding offset, and the partial sounding offset $n_{\text{offset}}^{\text{RPFS}}$ satisfies the following formula (4):

$$n_{\text{offset}}^{\text{RPFS}} = N_{\text{sc}}^{\text{RB}} \, m_{\text{SRS},B_{\text{SRS}}} \left( \left( k_{\text{F}} + k_{\text{hop}} \right) \bmod P_{\text{F}} \right) / P_{\text{F}} \tag{4}$$

In the foregoing formula (4), $N_{\text{sc}}^{\text{RB}}$ is a quantity of subcarriers included in each resource block; $m_{\text{SRS},B_{\text{SRS}}}$ represents a frequency hopping bandwidth, and $m_{\text{SRS},B_{\text{SRS}}}$ is a frequency hopping bandwidth determined based on higher-layer parameters $B_{\text{SRS}}$ and $C_{\text{SRS}}$ and a protocol-predefined table; $k_{\text{F}}$ is an index of a partial sounding start position, and $k_{\text{F}} \in \{0, 1, ..., P_{\text{F}} - 1\}$; $k_{\text{hop}}$ represents a start resource block hopping offset; and $P_{\text{F}}$ represents a frequency scaling factor.

Optionally, the partial sounding start position may be semi-statically configured by the network device by using a higher-layer parameter (for example, startRBIndexFScaling-r17).

In some embodiments, the start resource block hopping offset $k_{\text{hop}}$ is defined in the following formula (5) and Table 2. For example, a value of $\bar{k}_{\text{hop}}$ is determined according to the following formula (5), and $k_{\text{hop}}$ is determined based on the value of $\bar{k}_{\text{hop}}$ and Table 2.

$$\bar{k}_{\text{hop}} = \left\lfloor \frac{n_{\text{SRS}}}{\prod_{b'=b_{\text{hop}}}^{B_{\text{SRS}}} N_{b'}} \right\rfloor \bmod P_{\text{F}} \tag{5}$$

In the foregoing formula (5), $\left\lfloor \frac{n_{\text{SRS}}}{\prod_{b'=b_{\text{hop}}}^{B_{\text{SRS}}} N_{b'}} \right\rfloor$ represents an index of a frequency hopping periodicity corresponding to a reference signal; $P_{\text{F}}$ represents a frequency scaling factor; a mathematical symbol $\lfloor \ \rfloor$ represents a floor operation; $n_{\text{SRS}}$ represents a reference signal (for example, an SRS) count value, where for example, $n_{\text{SRS}}$ represents an index of a sending time quantity corresponding to current reference signal sending; a mathematical symbol $\Pi$ represents a product of a sequence; $b'$ represents a frequency hopping layer index; $b_{\text{hop}}$ represents a start frequency hopping layer index, where $b_{\text{hop}} \in \{0, 1, 2, 3\}$; $B_{\text{SRS}}$ represents a terminated frequency hopping layer index, where $B_{\text{SRS}} \in \{0, 1, 2, 3\}$; and $N_{b'}$ represents a quantity of parallel branches at a $b'$th layer.

In the foregoing formula (5), $\prod_{b'=b_{\text{hop}}}^{B_{\text{SRS}}} N_b$, represents a quantity of times of reference signal sending included in one frequency hopping periodicity.

Optionally, $b_{\text{hop}}$ and $B_{\text{SRS}}$ may be used for determining a frequency hopping layer index range, and both $b_{\text{hop}}$ and $B_{\text{SRS}}$ are semi-statically configured by the network device by using a higher-layer parameter (for example, freqHopping).

Optionally, $N_b$, may be determined based on higher-layer parameters $B_{\text{SRS}}$ and $C_{\text{SRS}}$, and a protocol-predefined table, where $N_{b_{\text{hop}}} = 1$.

**Table 2**

| $\overline{k}_{hop}$ | $k_{hop}$ | | |
|---|---|---|---|
| | $P_F = 1$ | $P_F = 2$ | $P_F = 3$ |
| 0 | 0 | 0 | 0 |
| 1 | - | 1 | 2 |
| 2 | - | - | 1 |
| 3 | - | - | 3 |

The following describes $C_{SRS}$, $B_{SRS}$, $b_{hop}$, and $N_b$, by using examples with reference to the protocol-predefined table.

Table 3 is the protocol-predefined table. Assuming that the network device semi-statically configures $C_{SRS} = 12$, $B_{SRS} = 3$, and $b_{hop} = 1$ by using higher-layer parameters, the network device and the terminal device may determine, by using a row whose row index is 12 and a column whose column index is $B_{SRS} = 1$ (namely, $B_{SRS} = b_{hop}$) in Table 3, that a transmit bandwidth of a reference signal is $m_{SRS,b_{hop}} = 16$ RBs; and determine, by using a row whose row index is 12 and a column whose column index is $B_{SRS} = 3$ (namely, $B_{SRS} = B_{SRS}$) in Table 3, that a frequency hopping bandwidth of the reference signal is $m_{SRS,B_{SRS}} = 4$ RBs. It can be learned from $b_{hop} = 1$ and $B_{SRS} = 3$ that frequency hopping in this configuration starts from a 1st layer and ends at a 3rd layer. In this case, a quantity of times of reference signal sending included in one reference signal frequency hopping periodicity is a product 2 * 2 = 4 of a quantity of parallel branches $N_2 = 2$ at a 2nd layer and a quantity of parallel branches $N_3 = 2$ at the 3rd layer.

It should be noted that, in the foregoing formula for calculating the quantity of the times of reference signal sending included in the reference signal frequency hopping periodicity, a quantity of parallel branches $N_{b_{hop}}$ at a layer corresponding to the start frequency hopping layer index $b_{hop}$ is further considered. However, due to a limitation of the formula $N_{b_{hop}} = 1$, a value, of $N_{b_{hop}}$, obtained based on the table does not cause a quantity of times of reference signal sending included in one reference signal frequency hopping periodicity to change. A reason of specifying $N_{b_{hop}} = 1$ is that when a quantity of times of reference signal sending included in a reference signal frequency hopping periodicity is calculated, only a quantity of parallel branches at a layer after a start frequency hopping layer needs to be calculated.

**Table 3**

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |

(continued)

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |

(continued)

| $C_{SRS}$ | $B_{SRS} = 0$ | | $B_{SRS} = 1$ | | $B_{SRS} = 2$ | | $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |
| 63 | 272 | 1 | 16 | 17 | 8 | 2 | 4 | 2 |

Different cyclic shifts, for example, $\alpha_1$ and $\alpha_2$, are performed on a same base sequence, to obtain different sequences. When $\alpha_1$ and $\alpha_2$ satisfy $\alpha_1 \bmod 2\pi \neq \alpha_2 \bmod 2\pi$, a sequence obtained by using a base sequence $\bar{r}_{u,v}(n)$ and the cyclic shift $\alpha_1$ and a sequence obtained by using the base sequence $\bar{r}_{u,v}(n)$ and the cyclic shift $\alpha_2$ are orthogonal to each other, that is, a cross-correlation coefficient is zero.

For example, a cross-correlation coefficient between sequences $r_1(m)$ and $r_2(m)$ ($m = 0,1, ..., M - 1$) whose lengths are M may be expressed as $\left| \frac{1}{M} \sum_{m=0}^{M-1} r_1(m) r_2^*(m) \right|$.

A network device may allocate, to different terminal devices, sequences obtained based on a same base sequence and different cyclic shift values, and these different terminal devices may send, on a same time-frequency resource, reference signals generated using these sequences (the sequences obtained based on the same base sequence and the different cyclic shift values). These sequences are orthogonal to each other. When channels between the terminal devices and the network device are flat within lengths of the sequences, no interference is generated between the terminal devices.

Sequences obtained based on different base sequences (regardless of whether a same cyclic shift value is used or different cyclic shift values are used) are not orthogonal to each other, and terminal devices may send, on a same time-frequency resource, reference signals generated using these sequences (the sequences obtained based on the different base sequences). When channels between the terminal devices and a network device are flat within lengths of the sequences, interference is generated.

For example, it is assumed that cell 1 includes UE 1 and UE 2, cell 2 includes UE 3 and UE 4, UE 1 generates a reference signal by using a base sequence $r_1$ and a cyclic shift value $\alpha_1$ and sends the reference signal, UE 2 generates a reference signal by using the base sequence $r_1$ and a cyclic shift value $\alpha_2$ and sends the reference signal, UE 3 generates a reference signal by using a base sequence $r_2$ and a cyclic shift value $\alpha_3$ and sends the reference signal, and UE 4 generates a reference signal by using the base sequence $r_2$ and a cyclic shift value $\alpha_4$ and sends the reference signal, as shown in Table 4.

**Table 4**

| Cell 1 | UE 1: $r_1, \alpha_1$ | UE 2: $r_1, \alpha_2$ |
|---|---|---|
| Cell 2 | UE 3: $r_2, \alpha_3$ | UE 4: $r_2, \alpha_4$ |

At a sending moment, UE 1 to UE 4 may send reference signals on a same time-frequency resource. It is assumed that channels between UE 1 to UE 4 and a network device are flat on M subcarriers occupied by the reference signals, and are respectively $h_1, h_2, h_3$, and $h_4$. On a $m^{th}$ subcarrier in the M subcarriers occupied by the reference signals, a received signal y(m) of the network device is $y(m) = h_1 r_1(m)e^{j\alpha_1 m} + h_2 r_1(m)e^{j\alpha_2 m} + h_3 r_2(m)e^{j\alpha_3 m} + h_4 r_2(m)e^{j\alpha_4 m}$.

The network device may perform the following operation on the received signal y(m) and a sequence $r_1(m)e^{j\alpha_1 m}$ that is used by UE 1, to obtain the channel $h_1$ of UE 1:

$$\frac{1}{M}\sum_{m=0}^{M-1} y(\mathrm{m}) \times \left(r_1(\mathrm{m})e^{j\alpha_1 m}\right)^* = h_1 + \frac{1}{M}h_3\sum_{m=0}^{M-1} r_2(\mathrm{m})\mathrm{r}_1^*(\mathrm{m})e^{j(\alpha_3-\alpha_1)m} +$$

$$\frac{1}{M}h_4\sum_{m=0}^{M-1} r_2(\mathrm{m})\mathrm{r}_1^*(\mathrm{m})e^{j(\alpha_4-\alpha_1)m}.$$

$\frac{1}{M}h_3\sum_{m=0}^{M-1} r_2(\mathrm{m})\mathrm{r}_1^*(\mathrm{m})e^{j(\alpha_3-\alpha_1)m}$ is interference generated by UE 3 to channel estimation of UE 1, and $\frac{1}{M}h_4\sum_{m=0}^{M-1} r_2(\mathrm{m})\mathrm{r}_1^*(\mathrm{m})e^{j(\alpha_4-\alpha_1)m}$ is interference generated by UE 4 to the channel estimation of UE 1. It can be learned that the interference between UE 3 and UE 1 is affected by a difference ($\alpha_3 - \alpha_1$) between cyclic shift values, and similarly, the interference between UE 4 and UE 1 is affected by a difference ($\alpha_4 - \alpha_1$) between cyclic shift values.

In this way, when reference signals are sent on a same time-frequency resource, no interference is generated between terminal devices that use a same base sequence, interference is generated between terminal devices that use different base sequences, and the interference is affected by cyclic shift values.

In some embodiments, the index $k_{\mathrm{TC}}^{(p_i)}$ of the comb occupied by antenna port $p_i$ satisfies the foregoing formula (2). After the index $k_{\mathrm{TC}}^{(p_i)}$ of the comb occupied by antenna port $p_i$ is obtained according to the formula (2), it may be learned that if higher-layer parameters (for example, the comb offset $\overline{k}_{\mathrm{TC}}$ and the comb quantity $K_{\mathrm{TC}}$) do not change, a comb occupied by each antenna port is constant at different sending moments, and an antenna port is always interfered with by a same antenna port. This is not conducive to interference randomization.

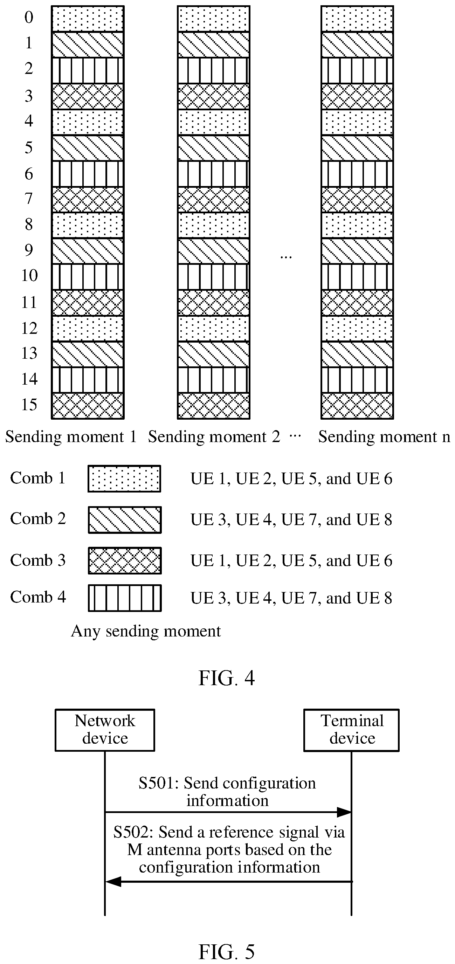

For example, with reference to Table 5 and FIG. 4, in a scenario 1, cell 1 includes UE 1, UE 2, UE 3, and UE 4, and each UE includes four antenna ports (for example, antenna port $p_0$, antenna port $p_1$, antenna port $p_2$, and antenna port $p_3$ respectively). Each antenna port of UE 1, UE 2, UE 3, and UE 4 generates a reference signal by using the base sequence $r_1$ and a cyclic shift value corresponding to the antenna port, and at least combs occupied by or the cyclic shift values used by the antenna ports of UE 1, UE 2, UE 3, and UE 4 are different. For example, the occupied combs are different, and/or the used cyclic shift values are different. Cell 2 includes UE 5, UE 6, UE 7, and UE 8, and each UE includes four antenna ports (for example, antenna port $p_0$, antenna port $p_1$, antenna port $p_2$, and antenna port $p_3$ respectively). Each of UE 5, UE 6, UE 7, and UE 8 generates a reference signal by using the base sequence $r_2$ and a cyclic shift value corresponding to each antenna port, and at least combs occupied by or the cyclic shift values used by the antenna ports of UE 5, UE 6, UE 7, and UE 8 are different. For example, the occupied combs are different, and/or the used cyclic shift values are different. As shown in FIG. 4, a frequency domain resource is divided into four combs (comb 1, comb 2, comb 3, and comb 4). In FIG. 4, each box represents one RE, differently-filled boxes represent different combs, and a comb quantity $K_{\mathrm{TC}}$ =4. Because antenna ports of UEs in a same cell generate reference signals by using a same base sequence and different cyclic shift values, generate and send reference signals by using a same base sequence and occupying different combs, or generate and send reference signals by using a same base sequence and different cyclic shift values and occupying different combs. Therefore, the antenna ports of the UEs in the same cell are orthogonal to each other, and there is no interference between the antenna ports of the UEs in the same cell.

It should be noted that the method provided in this application is described merely by using the scenario 1 as an example in this application. An application scenario is not limited in this application, and a quantity of cells, a quantity of UEs included in a cell, a quantity of antenna ports included in each UE, a comb quantity, and the like are not limited.

**Table 5**

| Cell 1 | UE 1: $r_1$, combs 1 and 3 | UE 2: $r_1$, combs 1 and 3 | UE 3: $r_1$, combs 2 and 4 | UE 4: $r_1$, combs 2 and 4 |
|---|---|---|---|---|
| Cell 2 | UE 5: $r_2$, combs 1 and 3 | UE 6: $r_2$, combs 1 and 3 | UE 7: $r_2$, combs 2 and 4 | UE8: $r_2$, combs 2 and 4 |

Combs occupied by antenna ports of UE 1 to UE 8 may be obtained according to the formula (2).

Specifically, in UE 1 to UE 8, the four antenna ports of each UE use two combs, every two antenna ports use one comb, and there are four combs in total. Four terminal devices may send reference signals on same two combs, and two antenna ports of each UE occupy one comb, as shown in Table 5 and FIG. 4. Antenna ports of UE 1, UE 2, UE 5, and UE 6 jointly occupy comb 1 and comb 3, and antenna ports of UE 3, UE 4, UE 7, and UE 8 jointly occupy comb 2 and comb 4. A specific comb occupied by two specific antenna ports of each UE to send the reference signal is fixed.

For example, antenna port $p_0$ and antenna port $p_2$ of each UE occupy one comb, and antenna port $p_1$ and antenna port $p_3$ occupy one comb. For example, the comb occupied by antenna port $p_0$ and antenna port $p_2$ is a comb with a smaller comb index in two combs occupied by the UE, and the comb occupied by antenna port $p_1$ and antenna port $p_3$ is a comb

with a larger comb index in the two combs occupied by the UE. Antenna port $p_0$ and antenna port $p_2$ of UE 1 occupy comb 1, antenna port $p_1$ and antenna port $p_3$ of UE 1 occupy comb 3, antenna port $p_0$ and antenna port $p_2$ of UE 3 occupy comb 2, and antenna port $p_1$ and antenna port $p_3$ of UE 3 occupy comb 4. Details are not described one by one. For ease of understanding, Table 5 and FIG. 4 show the UEs, corresponding base sequences, and corresponding combs, but do not show the antenna ports.

It should be noted that the comb index may also be referred to as a comb number. This is not limited in this application.

In this way, at any sending moment, each UE sends a reference signal in a manner shown in Table 5 and FIG. 4, and the antenna ports of UE 1, UE 2, UE 5, and UE 6 send reference signals by using a same comb, reference signals are generated by using different base sequences between antenna ports of UE 1 and UE 5 and between UE 1 and UE 6. Interference exists between UE 1 and UE 5, and between UE 1 and UE 6.

In embodiments of this application, the sending moment is a moment at which the reference signal is sent.

However, at any sending moment, a comb occupied by each antenna port of each UE is constant, as shown in Table 5 and FIG. 4. This causes an antenna port of one UE to suffer interference from a same antenna port of a same UE at any sending moment. With reference to Table 5 and FIG. 4, the antenna ports of UE 1 suffer interference from the antenna ports of UE 5 and UE 6 at any sending moment. Specifically, antenna port $p_0$ and antenna port $p_2$ of UE 1 suffer interference from antenna port $p_0$ and antenna port $p_2$ of UE 5 and antenna port $p_0$ and antenna port $p_2$ of UE 6 at any sending moment, antenna port $p_1$ and antenna port $p_2$ of UE 1 suffer interference from antenna port $p_1$ and antenna port $p_2$ of UE 5 and antenna port $p_1$ and antenna port $p_2$ of UE 6 at any sending moment. Other UEs are similar, and details are not described one by one. In this way, during a plurality of times of reference signal sending, interference presents a specific regularity. This is not conducive to interference randomization, and is not conducive to channel estimation.

The following describes in detail the communication method provided in embodiments of this application with reference to FIG. 5 to FIG. 12. Actions, terms, and the like in embodiments of this application may be mutually referenced. This is not limited. An object name, a parameter name, or the like in embodiments of this application is merely an example, and another name may alternatively be used in a specific implementation. This is not limited.

For example, FIG. 5 is a schematic flowchart of a communication method according to an embodiment of this application.

As shown in FIG. 5, the communication method includes the following steps.

S501: A network device sends configuration information. Correspondingly, a terminal device receives the configuration information.

For example, the configuration information indicates a configuration of a reference signal.

Optionally, the reference signal may include but is not limited to an SRS.

Optionally, for a specific implementation of the configuration information, refer to the descriptions in "First, configuration information". Details are not described herein again.

S502: The terminal device sends the reference signal via M antenna ports based on the configuration information. Correspondingly, the network device receives the reference signal via the M antenna ports based on the configuration information.

For example, M is an integer greater than 0.

Optionally, the terminal device may include the M antenna ports.

For example, the M antenna ports may include at least one first antenna port.

For example, the first antenna port may be any antenna port of the terminal device. For example, with reference to the foregoing scenario 1, the terminal device is UE 1, and the first antenna port may be any one of antenna port $p_0$ to antenna port $p_3$ of UE 1.

In some embodiments, a comb occupied by the first antenna port may be determined based on at least a first offset.

For example, with reference to the foregoing scenario 1, a comb occupied by one or more of antenna port $p_0$ to antenna port $p_3$ of UE 1 may be determined based on at least the first offset.

For example, the first offset may be an integer greater than or equal to 0.

In some embodiments, the comb occupied by the first antenna port may be determined based on a comb quantity, a comb offset, and the first offset.

Optionally, the comb quantity may be a quantity of combs included in a transmit bandwidth $m_{\mathrm{SRS},b_{\mathrm{hop}}}$ of the reference signal.

Optionally, the comb offset may be a reference quantity of combs occupied by the reference signal.

For example, the first offset may be determined based on at least a cell identifier and a time domain resource occupied by the first antenna port, or the first offset may be determined based on a cyclic shift value occupied by the first antenna port.

Optionally, the cell identifier may be configured.

Optionally, the cell identifier may be used to determine a pseudo-random sequence.

For example, the pseudo-random sequence may be $c()$.

For example, the pseudo-random sequence may satisfy $c(n) = (x_1(n + N_c) + x_2(n + N_c))\mathrm{mod}2$, $x_1(n + 31) = (x_1(n + 3) + x_1(n))\,\mathrm{mod}2$, and $x_2(n + 31) = (x_2(n + 3) + x_2(n + 2) + x_2(n + 1) + x_2(n))\mathrm{mod}2$,

where $N_C = 1600$, initialization is performed on $x_1(n)$ based on $x_1(0)=1,x_1(n)=0,n=1,2,...,30$, and initialization is performed

on $x_2(n)$ based on $c_{\mathrm{init}} = \sum_{i=0}^{30} x_2(i)\cdot 2^i$ .

For example, the cell identifier may be a configured configuration parameter. For example, the cell identifier may be a first configuration parameter.

For example, the first configuration parameter may be a configuration parameter delivered by the network device to a terminal device in a serving cell, and the first configuration parameter may be $N_{\mathrm{SRS}}^{\mathrm{ID}}$ , ranging from 0 to 65536.

For example, first configuration parameters of terminal devices in a same serving cell are the same, and first configuration parameters of terminal devices in different serving cells are different.

In a possible design method, the first offset is determined based on at least the cell identifier and the time domain resource occupied by the first antenna port, and the first offset may be further determined based on one or more of the following parameters: a quantity of slots included in each system frame, a quantity of orthogonal frequency division multiplexing OFDM symbols included in each slot, the comb quantity, and the comb offset.

Optionally, the time domain resource occupied by the first antenna port may include one or more OFDM symbols. The one or more OFDM symbols are determined based on one or more of the following parameters: a system frame number corresponding to the first antenna port, a slot number corresponding to the first antenna port, and an OFDM symbol number corresponding to the first antenna port.

In other words, a quantity of OFDM symbols included in the time domain resource occupied by the first antenna port is not limited in this application.

Optionally, time domain resources occupied by the M antenna ports may be the same or different.

Optionally, all first antenna ports included in the terminal device belong to a same reference signal resource, all second antenna ports included in the terminal device belong to a same reference signal resource, and the reference signal resource to which all the first antenna ports belong may be the same as or different from the reference signal resource to which all the second antenna ports belong.

In some embodiments, the first offset may be a first random number.

In other words, the first offset may be a random number. For example, the first offset is a random number greater than 0.

Optionally, the first offset or the first random number may satisfy a formula (6), a formula (7), a formula (8), or a formula (9).

$$Q_1 = \left(\sum_{m=0}^{7} c(8(n_f N_{\mathrm{slot}}^{\mathrm{frame}} N_{\mathrm{symb}}^{\mathrm{slot}} + n_{\mathrm{s,f}}^{\mu} N_{\mathrm{symb}}^{\mathrm{slot}} + l_0 + l') + m) \cdot 2^m\right)\mathrm{mod}\, K_{TC} \qquad (6)$$

$$Q_1 = \left(\sum_{m=0}^{7} c(8(n_{\mathrm{s,f}}^{\mu} N_{\mathrm{symb}}^{\mathrm{slot}} + l_0 + l') + m) \cdot 2^m\right)\mathrm{mod}\, K_{TC} \qquad (7)$$

$$Q_1 = \sum_{m=0}^{7} c(8(n_f N_{\mathrm{slot}}^{\mathrm{frame}} N_{\mathrm{symb}}^{\mathrm{slot}} + n_{\mathrm{s,f}}^{\mu} N_{\mathrm{symb}}^{\mathrm{slot}} + l_0 + l') + m) \cdot 2^m \qquad (8)$$

$$Q_1 = \sum_{m=0}^{7} c(8(n_{\mathrm{s,f}}^{\mu} N_{\mathrm{symb}}^{\mathrm{slot}} + l_0 + l') + m) \cdot 2^m \qquad (9)$$

In the formula (6), the formula (7), the formula (8), or the formula (9), $Q_1$ represents the first offset or the first random number ($Q_1$ may represent the first offset; and when the first offset is the first random number, $Q_1$ may represent the first random number); a mathematical symbol $\Sigma$ represents summation; c() is a pseudo-random sequence, where the pseudo-random sequence is related to the cell identifier; $n_f$ represents the system frame number corresponding to the first antenna port; $N_{\mathrm{slot}}^{\mathrm{frame}}$ represents the quantity of the slots included in each system frame, $N_{\mathrm{symb}}^{\mathrm{slot}}$ represents the quantity of the OFDM symbols included in each slot; $n_{\mathrm{s,f}}^{\mu}$ represents the slot number corresponding to the first antenna port; $l_0 + l'$ represents the OFDM symbol number corresponding to the first antenna port, where $l_0$ represents an index of a start OFDM symbol in the one or more OFDM symbols included in the time domain resource occupied by the first antenna port, and $l'$ represents a relative index of one OFDM symbol in the one or more OFDM symbols included in the time domain resource occupied by the first antenna port; and a mathematical symbol mod represents a modulo operation.

It should be noted that m in the formula (6), the formula (7), the formula (8), or the formula (9) is irrelevant to a sequence length M. In the formula (6), the formula (7), the formula (8), or the formula (9), an example in which m is an integer ranging from 0 to 7 is used for description, and a value range of m in the formula (6), the formula (7), the formula (8), or the formula (9) is not limited in this application.

In this application, the comb occupied by the first antenna port of the terminal device is determined based on the first offset, so that a frequency domain resource (the comb) occupied by the terminal device may randomly change at different sending moments. In this way, a terminal device that causes interference to the terminal device randomly changes. Therefore, frequency-domain interference randomization is implemented, and a better interference randomization effect can be achieved.

In some embodiments, an index $k_{\mathrm{TC}}^{(p_i)}$ that is of a comb occupied by antenna port $p_i$ and that is determined based on the comb quantity, the comb offset, and the first offset may satisfy the following formula:

$$k_{\mathrm{TC}}^{(p_i)} = \left(\overline{k}_{\mathrm{TC}} + K_{\mathrm{TC}}/2 + Q_1\right) \bmod K_{\mathrm{TC}} \qquad , \text{ or } \qquad k_{\mathrm{TC}}^{(p_i)} = \left(\overline{k}_{\mathrm{TC}} + Q_1\right) \bmod K_{\mathrm{TC}}$$

, where $\overline{k}_{\mathrm{TC}}$ represents the comb offset, $\overline{k}_{\mathrm{TC}} \in \{0,1,...,K_{TC}-1\}$, $K_{TC}$ represents the comb quantity, and $Q_1$ represents the first offset.

For example, the index $k_{\mathrm{TC}}^{(p_i)}$ that is of the comb occupied by antenna port $p_i$ of the terminal device and that is determined based on the comb quantity, the comb offset, and the first offset may satisfy the following formula (10):

$$k_{\mathrm{TC}}^{(p_i)} =$$

$$\begin{cases} \left(\overline{k}_{\mathrm{TC}} + K_{\mathrm{TC}}/2 + Q_1\right) \bmod K_{\mathrm{TC}} & N_{\mathrm{ap}}^{\mathrm{SRS}} = 4, p_i \in \{1001,1003\}, n_{\mathrm{SRS}}^{\mathrm{cs,max}} = 6 \\ \left(\overline{k}_{\mathrm{TC}} + K_{\mathrm{TC}}/2 + Q_1\right) \bmod K_{\mathrm{TC}} & N_{\mathrm{ap}}^{\mathrm{SRS}} = 4, p_i \in \{1001,1003\}, n_{\mathrm{SRS}}^{\mathrm{cs}} \in \left\{n_{\mathrm{SRS}}^{\mathrm{cs,max}}/2, ..., n_{\mathrm{SRS}}^{\mathrm{cs,max}} - 1\right\} \\ \left(\overline{k}_{\mathrm{TC}} + Q_1\right) \bmod K_{\mathrm{TC}} & \text{otherwise (otherwise)} \end{cases} \qquad (10)$$

Similar to the foregoing formula (2), in the formula (10), $\overline{k}_{\mathrm{TC}}$ represents the comb offset, $\overline{k}_{\mathrm{TC}} \in \{0,1,...,K_{TC}-1\}$, $K_{TC}$ represents the comb quantity, and $Q_1$ represents the first offset.

When a first condition is satisfied: $N_{\mathrm{ap}}^{\mathrm{SRS}} = 4$, and $p_i \in \{1001, 1003\}$, and $n_{\mathrm{SRS}}^{\mathrm{cs,max}} = 6$; or when a second condition is satisfied: $N_{\mathrm{ap}}^{\mathrm{SRS}} = 4$, and $p_i \in \{1001, 1003\}$, and $n_{\mathrm{SRS}}^{\mathrm{cs}} \in \left\{n_{\mathrm{SRS}}^{\mathrm{cs,max}}/2, ..., n_{\mathrm{SRS}}^{\mathrm{cs,max}} - 1\right\}$, the index $k_{\mathrm{TC}}^{(p_i)}$ that is of the comb occupied by antenna port $p_i$ and that is determined based on the comb quantity, the comb offset,

$$k_{\mathrm{TC}}^{(p_i)} = \left(\overline{k}_{\mathrm{TC}} + K_{\mathrm{TC}}/2 + Q_1\right) \bmod K_{\mathrm{TC}}$$

and the first offset may be expressed as . When neither the first condition nor the second condition is satisfied, the index $k_{\mathrm{TC}}^{(p_i)}$ that is of the comb occupied by antenna port $p_i$ and that is determined based on the comb quantity, the comb offset, and the first offset may be expressed as

$$k_{\mathrm{TC}}^{(p_i)} = \left(\overline{k}_{\mathrm{TC}} + Q_1\right) \bmod K_{\mathrm{TC}}$$

.

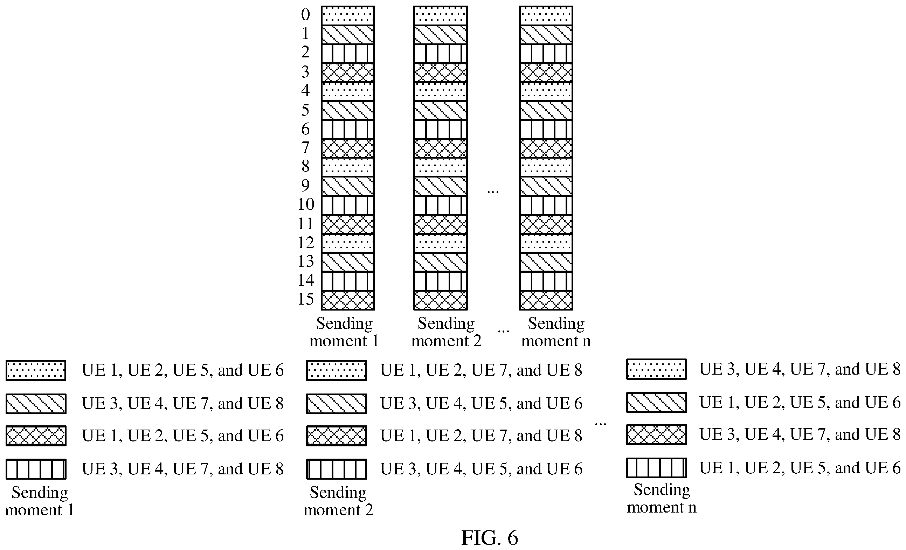

With reference to Table 6 and FIG. 6, the following describes a comb occupied by an antenna port of each terminal device after the comb occupied by the first antenna port is determined based on at least the first offset.

The foregoing scenario 1 is used as an example. The comb occupied by each antenna port (antenna port $p_0$ to antenna port $p_3$) of UE 1 to UE 8 is determined based on at least the first offset. The comb occupied by the antenna port of each UE may be shown in Table 6 and FIG. 6.

At sending moment 1, antenna ports of UE 1, UE 2, UE 5, and UE 6 occupy comb 1 and comb 3, and antenna ports of UE 3, UE 4, UE 7, and UE 8 occupy same comb 2 and same comb 4. UE 1 is used as an example. The antenna ports of UE 1 suffer interference, on comb 1 and comb 3, from antenna ports of UE 5 and UE 6.

It should be noted that, in Table 6 and FIG. 6, an example in which antenna port $p_0$ and antenna port $p_2$ of each UE occupy one comb, and antenna port $p_1$ and antenna port $p_3$ occupy one comb is used. For example, the comb occupied by antenna port $p_0$ and antenna port $p_2$ is a comb with a smaller comb index in two combs occupied by the UE, and the comb occupied by antenna port $p_1$ and antenna port $p_3$ is a comb with a larger comb index in the two combs occupied by the UE.

For ease of understanding, Table 6 and FIG. 6 show the UEs, corresponding base sequences, and corresponding combs, but do not show the antenna ports.

At sending moment 2, antenna ports of UE 1, UE 2, UE 7, and UE 8 occupy comb 1 and comb 3, and antenna ports of UE 3, UE 4, UE 5, and UE 6 occupy comb 2 and comb 4. The antenna ports of UE 1 suffer interference, on comb 1 and comb 3, from antenna ports of UE 7 and UE 8.

At sending moment n, the antenna ports of UE 1, UE 2, UE 7, and UE 8 occupy comb 2 and comb 4, and the antenna ports of UE 3, UE 4, UE 5, and UE 6 occupy comb 7 and comb 8. The antenna ports of UE 1 suffer interference, on comb 2 and comb 4, from the antenna ports of UE 7 and UE 8.

**Table 6**

| Sending moment 1 | | | | |
|---|---|---|---|---|
| Cell 1 | UE 1: $r_1$, combs 1 and 3 | UE 2: $r_1$, combs 1 and 3 | UE 3: $r_1$, combs 2 and 4 | UE 4: $r_1$, combs 2 and 4 |
| Cell 2 | UE 5: $r_2$, combs 1 and 3 | UE 6: $r_2$, combs 1 and 3 | UE 7: $r_2$, combs 2 and 4 | UE8: $r_2$, combs 2 and 4 |
| Sending moment 2 | | | | |
| Cell 1 | UE 1: $r_1$, combs 1 and 3 | UE 2: $r_1$, combs 1 and 3 | UE 3: $r_1$, combs 2 and 4 | UE 4: $r_1$, combs 2 and 4 |
| Cell 2 | UE 5: $r_2$, combs 2 and 4 | UE 6: $r_2$, combs 2 and 4 | UE 7: $r_2$, combs 1 and 3 | UE8: $r_2$, combs 1 and 3 |
| ... | | | | |
| Sending moment n | | | | |
| Cell 1 | UE 1: $r_1$, combs 2 and 4 | UE 2: $r_1$, combs 2 and 4 | UE 3: $r_1$, combs 1 and 3 | UE 4: $r_1$, combs 1 and 3 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |

In this way, frequency domain resources (combs) occupied by the antenna ports of UE 1 randomly change at different sending moments, so that a UE that causes interference to UE 1 randomly changes. At some sending moments, UE 5 and UE 6 cause interference to UE 1. At some sending moments, UE 7 and UE 8 cause interference to UE 1. An antenna port that causes interference to the antenna port of UE 1 randomly changes, to achieve the better interference randomization effect.

In a possible design method, the M antenna ports may further include at least one second antenna port.

Optionally, the second antenna port may be any antenna port of the terminal device.

For example, with reference to the foregoing scenario 1, the terminal device is UE 1, antenna port $p_0$ and antenna port $p_2$ of UE 1 may be first antenna ports, and antenna port $p_1$ and antenna port $p_3$ of UE 1 may be second antenna ports.

Optionally, a comb occupied by the second antenna port may be determined based on at least a second offset $Q_2$.

Optionally, the second offset $Q_2$ is different from the first offset.

For example, with reference to the foregoing scenario 1, a comb occupied by antenna port $p_0$ and antenna port $p_2$ of UE 1 may be determined based on at least the first offset, and a comb occupied by antenna port $p_1$ and antenna port $p_3$ of UE 1 may be determined based on at least the second offset.

For example, the second offset $Q_2$ may be an integer greater than 0 or equal to 0.

In some embodiments, the comb occupied by the second antenna port may be determined based on the comb quantity, the comb offset, and the second offset.

Optionally, the comb quantity may be the quantity of combs included in the transmit bandwidth of the reference signal.

Optionally, the comb offset may be the reference quantity of the combs occupied by the reference signal.

In some embodiments, the second offset $Q_2$ may be determined based on at least the cell identifier and a time domain resource occupied by the second antenna port.

In some embodiments, the second offset $Q_2$ may be determined based on at least the cell identifier and the time domain resource occupied by the second antenna port, or the second offset may be determined based on one or more of the following parameters: the quantity of the slots included in each system frame, the quantity of the OFDM symbols included in each slot, the comb quantity, and the comb offset.

Optionally, the time domain resource occupied by the second antenna port includes one or more OFDM symbols. Optionally, the one or more OFDM symbols are determined based on one or more of the following parameters: a system frame number corresponding to the second antenna port, a slot number corresponding to the second antenna port, and an OFDM symbol number corresponding to the second antenna port.

In other words, a quantity of OFDM symbols included in the time domain resource occupied by the second antenna port is not limited in this application.

In some embodiments, the second offset $Q_2$ may be a second random number.

In other words, the second offset may be a random number. For example, the second offset is a random number greater than 0.

Optionally, the second offset or the second random number may satisfy a formula (11), a formula (12), a formula (13), or a formula (14).

$$Q_2 = \left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m\right) \bmod K_{TC}$$

$$(11)$$

$$Q_2 = \left(\sum_{m=0}^{7} c(8(n_{\text{s,f}}^{\mu} N_{\text{symb}}^{\text{slot}} + l_0 + l') + m + 1) \cdot 2^m\right) \bmod K_{TC} \tag{12}$$

$$Q_2 = \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m \tag{13}$$

$$Q_2 = \sum_{m=0}^{7} c(8(n_{\text{s,f}}^{\mu} N_{\text{symb}}^{\text{slot}} + l_0 + l') + m + 1) \cdot 2^m \tag{14}$$

In the formula (11), the formula (12), the formula (13), or the formula (14), $Q_2$ represents the second offset or the second random number ($Q_2$ may represent the second offset; and when the second offset is the second random number, $Q_2$ may represent the second random number); $n_f$ represents the system frame number corresponding to the second antenna port; $n_{\text{s,f}}^{\mu}$ represents the slot number corresponding to the second antenna port; and $l_0 + l'$ represents the OFDM symbol number corresponding to the second antenna port, where $l_0$ represents an index of a start OFDM symbol in the one or more OFDM symbols included in the time domain resource occupied by the second antenna port, and $l'$ represents a relative index of one OFDM symbol in the one or more OFDM symbols included in the time domain resource occupied by the second antenna port.

Meanings represented by other symbols are similar to those in the formula (6), the formula (7), the formula (8), or the formula (9), where the mathematical symbol $\Sigma$ represents summation; c() is a pseudo-random sequence, where the pseudo-random sequence is related to the cell identifier; $N_{\text{slot}}^{\text{frame}}$ represents the quantity of the slots included in each system frame; $N_{\text{symb}}^{\text{slot}}$ represents the quantity of the OFDM symbols included in each slot; and the mathematical symbol mod represents a modulo operation.

In some other embodiments, the second offset $Q_2$ may be a sum of the first offset $Q_1$ and a third offset $\Delta$.

Optionally, the third offset $\Delta$ may be an integer greater than or equal to 0.

In some embodiments, the third offset may be determined based on at least the cell identifier and the time domain resource occupied by the second antenna port.

Optionally, the third offset may alternatively be determined based on one or more of the following parameters: the quantity of the slots included in each system frame, the quantity of the OFDM symbols included in each slot, the comb quantity, and the comb offset.

In some embodiments, the third offset may be a third random number.

Optionally, the third random number may satisfy a formula (15), a formula (16), a formula (17), or a formula (18).

$$\Delta = \left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m\right) \bmod (K_{\text{TC}}/2) \tag{15}$$

$$\Delta = \left(\sum_{m=0}^{7} c(8(n_{\text{s,f}}^{\mu} N_{\text{symb}}^{\text{slot}} + l_0 + l') + m + 1) \cdot 2^m\right) \bmod (K_{\text{TC}}/2) \tag{16}$$

$$\Delta = \left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m\right) \bmod (K_{\text{TC}}/2)$$

$$(17)$$

$$\Delta = \left(\sum_{m=0}^{7} c\left(8\left(n_{s,f}^{\mu} N_{symb}^{slot} + l_0 + l'\right) + m\right) \cdot 2^m\right) \mathrm{mod}\,(K_{TC}/2) \tag{18}$$

In the formula (15), the formula (16), the formula (17), or the formula (18), $\Delta$ represents the third random number, and meanings represented by other symbols are the same as those in the formula (11), the formula (12), the formula (13), or the formula (14). Details are not described herein again.

In this application, the comb occupied by the first antenna port of the terminal device is determined based on the first offset, and the comb occupied by the second antenna port of the terminal device is determined based on the second offset, so that the comb occupied by the antenna port of the terminal device randomly changes at different sending moments, and intervals between a plurality of combs occupied by the antenna ports of the same terminal device may also change randomly. In this way, antenna ports that cause interference to the antenna port of the terminal device are random at different sending moments, and antenna ports that cause, at a same sending moment, interference to antenna ports that are of the terminal device and that occupy different combs may not be antenna ports of a same terminal device. This can implement the frequency-domain interference randomization, and can further improve a degree of freedom of the frequency domain resource occupied by the antenna port of the terminal device, to further improve the interference randomization effect.

In some embodiments, an index $k_{TC}^{(p_i)}$ that is of a comb occupied by antenna port $p_i$ and that is determined based on the comb quantity, the comb offset, and the second offset may satisfy the following formula:

$$k_{TC}^{(p_i)} = \left(\bar{k}_{TC} + K_{TC}/2 + Q_2\right) \mathrm{mod}\, K_{TC}, \qquad k_{TC}^{(p_i)} = \left(\bar{k}_{TC} + Q_2\right) \mathrm{mod}\, K_{TC},$$

$$k_{TC}^{(p_i)} = \left(\bar{k}_{TC} + K_{TC}/2 + Q_1 + \Delta\right) \mathrm{mod}\, K_{TC} \,\text{, or}\, k_{TC}^{(p_i)} = \left(\bar{k}_{TC} + Q_1 + \Delta\right) \mathrm{mod}\, K_{TC}$$, where $\bar{k}_{TC}$ represents the comb offset, $\bar{k}_{TC} \in \{0,1, ..., K_{TC} - 1\}$, $K_{TC}$ represents the comb quantity, $Q_1$ represents the first offset, $Q_2$ represents the second offset, and $\Delta$ represents the third random number.

For example, combs occupied by some antenna ports of the terminal device may be determined based on the first offset, and combs occupied by the other antenna ports of the terminal device may be determined based on the second offset. The index $k_{TC}^{(p_i)}$ of the comb occupied by antenna port $p_i$ of the terminal device may satisfy the following formula (19), formula (20), formula (21), or formula (22).

$$k_{TC}^{(p_i)} =$$

$$\begin{cases} \left(\bar{k}_{TC} + K_{TC}/2 + Q_1\right) \mathrm{mod}\, K_{TC} & N_{ap}^{SRS} = 4, p_i \in \{1001, 1003\}, n_{SRS}^{cs,max} = 6 \\ \left(\bar{k}_{TC} + K_{TC}/2 + Q_1\right) \mathrm{mod}\, K_{TC} & N_{ap}^{SRS} = 4, p_i \in \{1001, 1003\}, n_{SRS}^{cs} \in \{n_{SRS}^{cs,max}/2, ..., n_{SRS}^{cs,max} - 1\} \\ \left(\bar{k}_{TC} + Q_2\right) \mathrm{mod}\, K_{TC} & \text{otherwise (otherwise)} \end{cases} \tag{19}$$

$$k_{TC}^{(p_i)} =$$

$$\begin{cases} \left(\bar{k}_{TC} + K_{TC}/2 + Q_2\right) \mathrm{mod}\, K_{TC} & N_{ap}^{SRS} = 4, p_i \in \{1001, 1003\}, n_{SRS}^{cs,max} = 6 \\ \left(\bar{k}_{TC} + K_{TC}/2 + Q_2\right) \mathrm{mod}\, K_{TC} & N_{ap}^{SRS} = 4, p_i \in \{1001, 1003\}, n_{SRS}^{cs} \in \{n_{SRS}^{cs,max}/2, ..., n_{SRS}^{cs,max} - 1\} \\ \left(\bar{k}_{TC} + Q_1\right) \mathrm{mod}\, K_{TC} & \text{otherwise (otherwise)} \end{cases} \tag{20}$$

$$k_{TC}^{(p_i)} =$$

$$\begin{cases} \left(\bar{k}_{TC} + K_{TC}/2 + Q_1\right) \mathrm{mod}\, K_{TC} & N_{ap}^{SRS} = 4, p_i \in \{1001, 1003\}, n_{SRS}^{cs,max} = 6 \\ \left(\bar{k}_{TC} + K_{TC}/2 + Q_1\right) \mathrm{mod}\, K_{TC} & N_{ap}^{SRS} = 4, p_i \in \{1001, 1003\}, n_{SRS}^{cs} \in \{n_{SRS}^{cs,max}/2, ..., n_{SRS}^{cs,max} - 1\} \\ \left(\bar{k}_{TC} + Q_1 + \Delta\right) \mathrm{mod}\, K_{TC} & \text{otherwise (otherwise)} \end{cases} \tag{21}$$

$$k_{\mathrm{TC}}^{(p_i)} =$$

$$\begin{cases} \left(\bar{k}_{\mathrm{TC}} + K_{\mathrm{TC}}/2 + Q_1 + \Delta\right) \bmod K_{\mathrm{TC}} & N_{\mathrm{ap}}^{\mathrm{SRS}} = 4, p_i \in \{1001, 1003\}, n_{\mathrm{SRS}}^{\mathrm{cs,max}} = 6 \\ \left(\bar{k}_{\mathrm{TC}} + K_{\mathrm{TC}}/2 + Q_1 + \Delta\right) \bmod K_{\mathrm{TC}} & N_{\mathrm{ap}}^{\mathrm{SRS}} = 4, p_i \in \{1001, 1003\}, n_{\mathrm{SRS}}^{\mathrm{cs}} \in \{n_{\mathrm{SRS}}^{\mathrm{cs,max}}/2, ..., n_{\mathrm{SRS}}^{\mathrm{cs,max}} - 1\} \quad (22) \\ \left(\bar{k}_{\mathrm{TC}} + Q_1\right) \bmod K_{\mathrm{TC}} & \text{otherwise (otherwise)} \end{cases}$$

Similar to the foregoing formula (2), in the formula (19), formula (20), formula (21), or formula (22), $\bar{k}_{\mathrm{TC}}$ represents the comb offset, $\bar{k}_{\mathrm{TC}} \in \{0, 1, ..., K_{\mathrm{TC}} - 1\}$, $K_{\mathrm{TC}}$ represents the comb quantity, $Q_1$ represents the first offset, $Q_2$ represents the second offset, and $\Delta$ represents the third random number.

In the formula (19), when a first condition is satisfied: $N_{\mathrm{ap}}^{\mathrm{SRS}} = 4, p_i \in$ {1001, 1003}, and $n_{\mathrm{SRS}}^{\mathrm{cs,max}} = 6$; or when a second condition is satisfied: $N_{\mathrm{ap}}^{\mathrm{SRS}} = 4, p_i \in$ {1001, 1003}, and $n_{\mathrm{SRS}}^{\mathrm{cs}} \in \{n_{\mathrm{SRS}}^{\mathrm{cs,max}}/2, ..., n_{\mathrm{SRS}}^{\mathrm{cs,max}} - 1\}$, the index $k_{\mathrm{TC}}^{(p_i)}$ that is of the comb occupied by antenna port $p_i$ and that is determined based on the comb quantity, the comb offset, and the first offset may be expressed as $k_{\mathrm{TC}}^{(p_i)} = \left(\bar{k}_{\mathrm{TC}} + K_{\mathrm{TC}}/2 + Q_1\right) \bmod K_{\mathrm{TC}}$. When neither the first condition nor the second condition is satisfied, the index $k_{\mathrm{TC}}^{(p_i)}$ that is of the comb occupied by antenna port $p_i$ and that is determined based on the comb quantity, the comb offset, and the second offset may be expressed as $k_{\mathrm{TC}}^{(p_i)} = \left(\bar{k}_{\mathrm{TC}} + Q_2\right) \bmod K_{\mathrm{TC}}$.

In the formula (20), when a first condition is satisfied: $N_{\mathrm{ap}}^{\mathrm{SRS}} = 4, p_i \in$ {1001, 1003}, and $n_{\mathrm{SRS}}^{\mathrm{cs,max}} = 6$; or when a second condition is satisfied: $N_{\mathrm{ap}}^{\mathrm{SRS}} = 4, p_i \in$ {1001, 1003}, and $n_{\mathrm{SRS}}^{\mathrm{cs}} \in \{n_{\mathrm{SRS}}^{\mathrm{cs,max}}/2, ..., n_{\mathrm{SRS}}^{\mathrm{cs,max}} - 1\}$, the index $k_{\mathrm{TC}}^{(p_i)}$ that is of the comb occupied by antenna port $p_i$ and that is determined based on the comb quantity, the comb offset, and the second offset may be expressed as $k_{\mathrm{TC}}^{(p_i)} = \left(\bar{k}_{\mathrm{TC}} + K_{\mathrm{TC}}/2 + Q_2\right) \bmod K_{\mathrm{TC}}$. When neither the first condition nor the second condition is satisfied, the index $k_{\mathrm{TC}}^{(p_i)}$ that is of the comb occupied by antenna port $p_i$ and that is determined based on the comb quantity, the comb offset, and the first offset may be expressed as $k_{\mathrm{TC}}^{(p_i)} = \left(\bar{k}_{\mathrm{TC}} + Q_1\right) \bmod K_{\mathrm{TC}}$.

In the formula (21), when a first condition is satisfied: $N_{\mathrm{ap}}^{\mathrm{SRS}} = 4, p_i \in$ {1001, 1003}, and $n_{\mathrm{SRS}}^{\mathrm{cs,max}} = 6$; or when a second condition is satisfied: $N_{\mathrm{ap}}^{\mathrm{SRS}} = 4, p_i \in$ {1001, 1003}, and $n_{\mathrm{SRS}}^{\mathrm{cs}} \in \{n_{\mathrm{SRS}}^{\mathrm{cs,max}}/2, ..., n_{\mathrm{SRS}}^{\mathrm{cs,max}} - 1\}$, the index $k_{\mathrm{TC}}^{(p_i)}$ that is of the comb occupied by antenna port $p_i$ and that is determined based on the comb quantity, the comb offset, and the first offset may be expressed as $k_{\mathrm{TC}}^{(p_i)} = \left(\bar{k}_{\mathrm{TC}} + K_{\mathrm{TC}}/2 + Q_1\right) \bmod K_{\mathrm{TC}}$. When neither the first condition nor the second condition is satisfied, the index $k_{\mathrm{TC}}^{(p_i)}$ that is of the comb occupied by antenna port $p_i$ and that is determined based on the comb quantity, the comb offset, and the second offset may be expressed as $k_{\mathrm{TC}}^{(p_i)} = \left(\bar{k}_{\mathrm{TC}} + Q_1 + \Delta\right) \bmod K_{\mathrm{TC}}$.

In the formula (22), when a first condition is satisfied: $N_{\mathrm{ap}}^{\mathrm{SRS}} = 4, p_i \in$ {1001, 1003}, and $n_{\mathrm{SRS}}^{\mathrm{cs,max}} = 6$; or when a second condition is satisfied: $N_{\mathrm{ap}}^{\mathrm{SRS}} = 4, p_i \in$ {1001, 1003}, and $n_{\mathrm{SRS}}^{\mathrm{cs}} \in \{n_{\mathrm{SRS}}^{\mathrm{cs,max}}/2, ..., n_{\mathrm{SRS}}^{\mathrm{cs,max}} - 1\}$,

the index $k_{\text{TC}}^{(p_i)}$ that is of the comb occupied by antenna port $p_i$ and that is determined based on the comb quantity, the comb offset, and the second offset may be expressed as $k_{\text{TC}}^{(p_i)} = \left(\bar{k}_{\text{TC}} + K_{\text{TC}}/2 + Q_1 + \Delta\right) \bmod K_{\text{TC}}$. When

neither the first condition nor the second condition is satisfied, the index $k_{\text{TC}}^{(p_i)}$ that is of the comb occupied by antenna port $p_i$ and that is determined based on the comb quantity, the comb offset, and the first offset may be expressed as

$$k_{\text{TC}}^{(p_i)} = \left(\bar{k}_{\text{TC}} + Q_1\right) \bmod K_{\text{TC}}.$$

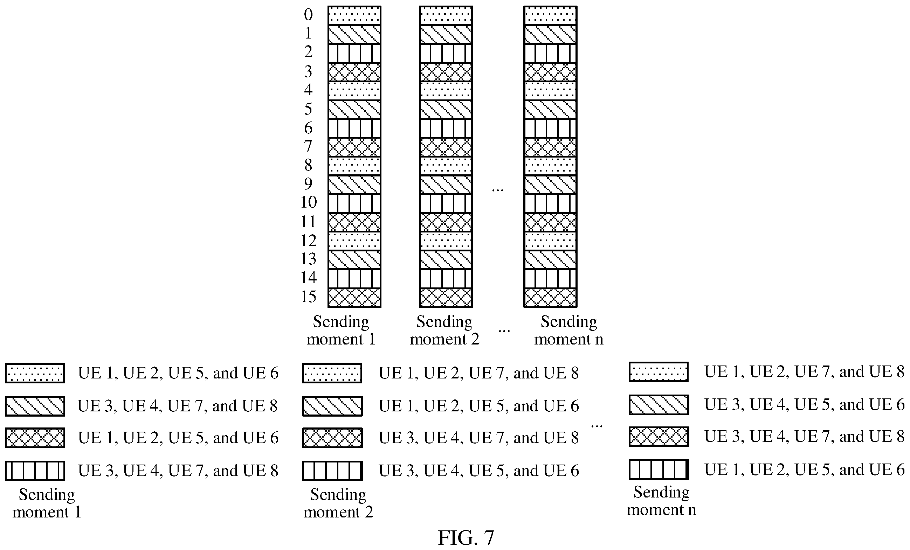

With reference to Table 7 and FIG. 7, the following describes a comb occupied by an antenna port of each terminal device after combs occupied by different antenna ports are determined based on at least the first offset or the second offset.

The foregoing scenario 1 is used as an example. That a comb occupied by two antenna ports of each of UE 1 to UE 8 is determined based on at least the first offset, and a comb occupied by the other two antenna ports of each of UE 1 to UE 8 is determined based on at least the second offset is used as an example. The comb occupied by the antenna port of each UE may be shown in Table 7 and FIG. 7.

At sending moment 1, antenna ports of UE 1, UE 2, UE 5, and UE 6 occupy comb 1 and comb 3, and antenna ports of UE 3, UE 4, UE 7, and UE 8 occupy same comb 2 and same comb 4.

UE 1 is used as an example. At sending moment 1, the antenna ports of UE 1 suffer interference, on comb 1 and comb 3, from antenna ports of UE 5 and UE 6.

It should be noted that, in Table 7 and FIG. 7, an example in which antenna port $p_0$ and antenna port $p_2$ of each UE occupy one comb, and antenna port $p_1$ and antenna port $p_3$ occupy one comb is used. For example, the comb occupied by antenna port $p_0$ and antenna port $p_2$ is a comb with a smaller comb index in two combs occupied by the UE, and the comb occupied by antenna port $p_1$ and antenna port $p_3$ is a comb with a larger comb index in the two combs occupied by the UE. For ease of understanding, Table 7 and FIG. 7 show the UEs, corresponding base sequences, and corresponding combs, but do not show the antenna ports.

At sending moment 2, antenna ports of UE 1, UE 2, UE 7, and UE 8 occupy comb 1, the antenna ports of UE 1, UE 2, UE 5, and UE 6 occupy comb 2, the antenna ports of UE 3, UE 4, UE 7, and UE 8 occupy comb 3, and antenna ports of UE 3, UE 4, UE 5, and UE 6 occupy comb 4.

UE 1 is used as an example. At sending moment 2, the antenna ports (for example, antenna port $p_0$ and antenna port $p_2$) of UE 1 suffer interference, on comb 1, from antenna ports (for example, antenna port $p_0$ and antenna port $p_2$) of UE 7 and UE 8. The antenna ports (for example, antenna port $p_1$ and antenna port $p_3$) of UE 1 suffer interference, on comb 2, the antenna ports (for example, antenna port $p_0$ and antenna port $p_2$) of UE 5 and UE 6.

At sending moment n, the antenna ports of UE 1, UE 2, UE 7, and UE 8 occupy comb 1, the antenna ports of UE 1, UE 2, UE 5, and UE 6 occupy comb 4, the antenna ports of UE 3, UE 4, UE 5, and UE 6 occupy comb 2, and the antenna ports of UE 3, UE 4, UE 7, and UE 8 occupy comb 4.

UE 1 is used as an example. At sending moment n, the antenna ports (for example, antenna port $p_0$ and antenna port $p_2$) of UE 1 suffer interference, on comb 1, from the antenna ports (for example, antenna port $p_0$ and antenna port $p_2$) of UE 7 and UE 8. The antenna ports (for example, antenna port $p_1$ and antenna port $p_3$) of UE 1 suffer interference, on comb 4, the antenna ports (for example, antenna port $p_0$ and antenna port $p_2$) of UE 5 and UE 6.

**Table 7**

| Sending moment 1 | | | |
|---|---|---|---|
| Cell 1 | UE 1: $r_1$, combs 1 and 3 | UE 2: $r_1$, combs 1 and 3 | UE 3: $r_1$, combs 2 and 4 | UE 4: $r_1$, combs 2 and 4 |
| Cell 2 | UE 5: $r_2$, combs 1 and 3 | UE 6: $r_2$, combs 1 and 3 | UE 7: $r_2$, combs 2 and 4 | UE 8: $r_2$, combs 2 and 4 |
| Sending moment 2 | | | |
| Cell 1 | UE 1: $r_1$, combs 1 and 2 | UE 2: $r_1$, combs 1 and 2 | UE 3: $r_1$, combs 3 and 4 | UE 4: $r_1$, combs 3 and 4 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |
| ... | | | |
| Sending moment n | | | |
| Cell 1 | UE 1: $r_1$, combs 1 and 4 | UE 2: $r_1$, combs 1 and 4 | UE 3: $r_1$, combs 2 and 3 | UE 4: $r_1$, combs 2 and 3 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |

In this way, after the comb occupied by the two antenna ports of each of UE 1 to UE 8 is determined based on at least the first offset, and the comb occupied by the other two antenna ports of each of UE 1 to UE 8 is determined based on at least the second offset, the comb occupied by the antenna port of UE 1 randomly changes at different sending moments. For example, at sending moment 1, UE 1 sends a reference signal through comb 1 and comb 3; and at sending moment 2, UE 1 sends a reference signal through comb 1 and comb 4, so that an antenna port that causes interference to the antenna port of UE 1 randomly changes. In addition, antenna ports that cause, at a same sending moment, interference to antenna ports, that are of the terminal device (antenna port $p_0$ and antenna port $p_2$ of UE 1, and antenna port $p_1$ and antenna port $p_3$ of UE 1) and that occupy different combs may not be antenna ports of a same terminal device. For example, at sending moment 2, antenna port $p_0$ and antenna port $p_2$ of UE 1 suffer interference, on comb 1, from antenna ports $p_0$ and antenna ports $p_2$ of UE 7 and UE 8, and antenna port $p_1$ and antenna port $p_3$ of UE 1 suffer interference, on comb 2, from antenna ports $p_0$ and antenna ports $p_2$ of UE 5 and UE 6. This can further improve the degree of freedom of the frequency domain resource occupied by the antenna port of the terminal device, and can further improve a degree of interference randomization caused to the terminal device, to further improve the interference randomization effect.

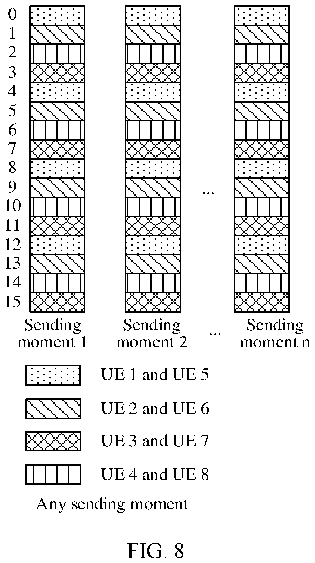

In some embodiments, with reference to the foregoing scenario 1, it is assumed that for each UE, cyclic shift reference value $n_{\mathrm{SRS}}^{\mathrm{cs}} =$ . After the index $k_{\mathrm{TC}}^{(p_i)}$ of the comb occupied by antenna port $p_i$ is obtained according to the formula (2), the comb occupied by each antenna port of each UE is shown in Table 8 and FIG. 8.

At sending moment 1, antenna port $p_0$, antenna port $p_1$, antenna port $p_2$, and antenna port $p_3$ of UE 1 occupy comb 1. Antenna port $p_0$, antenna port $p_1$, antenna port $p_2$, and antenna port $p_3$ of UE 5 occupy comb 1. Other UEs are not listed one by one. For details, refer to Table 8. UE 1 is used as an example. Antenna port $p_0$ to antenna port $p_3$ of UE 1 suffer interference, on comb 1, from antenna port $p_0$ to antenna port $p_3$ of UE 5.

**Table 8**

| Sending moment 1 | | | | |
|---|---|---|---|---|
| Cell 1 | UE 1 $p_0$: $r_1$, comb 1 | UE 1 $p_1$: $r_1$, comb 1 | UE 1 $p_2$: $r_1$, comb 1 | UE 1 $p_3$: $r_1$, comb 1 |
| | UE 2 $p_0$: $r_1$, comb 2 | UE 2 $p_1$: $r_1$, comb 2 | UE 2 $p_2$: $r_1$, comb 2 | UE 2 $p_3$: $r_1$, comb 2 |
| | UE 3 $p_0$: $r_1$, comb 3 | UE 3 $p_1$: $r_1$, comb 3 | UE 3 $p_2$: $r_1$, comb 3 | UE 3 $p_3$: $r_1$, comb 3 |
| | UE 4 $p_0$: $r_1$, comb 4 | UE 4 $p_1$: $r_1$, comb 4 | UE 4 $p_2$: $r_1$, comb 4 | UE 4 $p_3$: $r_1$, comb 4 |
| Cell 2 | UE 5 $p_0$: $r_2$, comb 1 | UE 5 $p_1$: $r_2$, comb 1 | UE 5 $p_2$: $r_2$, comb 1 | UE 5 $p_3$: $r_2$, comb 1 |
| | UE 6 $p_0$: $r_2$, comb 2 | UE 6 $p_1$: $r_2$, comb 2 | UE 6 $p_2$: $r_2$, comb 2 | UE 6 $p_3$: $r_2$, comb 2 |
| | UE 7 $p_0$: $r_2$, comb 3 | UE 7 $p_1$: $r_2$, comb 3 | UE 7 $p_2$: $r_2$, comb 3 | UE 7 $p_3$: $r_2$, comb 3 |
| | UE 8 $p_0$: $r_2$, comb 4 | UE 8 $p_1$: $r_2$, comb 4 | UE 8 $p_2$: $r_2$, comb 4 | UE 8 $p_3$: $r_2$, comb 4 |
| Sending moment 2 | | | | |
| Cell 1 | UE 1 $p_0$: $r_1$, comb 1 | UE 1 $p_1$: $r_1$, comb 1 | UE 1 $p_2$: $r_1$, comb 1 | UE 1 $p_3$: $r_1$, comb 1 |
| | UE 2 $p_0$: $r_1$, comb 2 | UE 2 $p_1$: $r_1$, comb 2 | UE 2 $p_2$: $r_1$, comb 2 | UE 2 $p_3$: $r_1$, comb 2 |
| | UE 3 $p_0$: $r_1$, comb 3 | UE 3 $p_1$: $r_1$, comb 3 | UE 3 $p_2$: $r_1$, comb 3 | UE 3 $p_3$: $r_1$, comb 3 |
| | UE 4 $p_0$: $r_1$, comb 4 | UE 4 $p_1$: $r_1$, comb 4 | UE 4 $p_2$: $r_1$, comb 4 | UE 4 $p_3$: $r_1$, comb 4 |
| Cell 2 | UE 5 $p_0$: $r_2$, comb 1 | UE 5 $p_1$: $r_2$, comb 1 | UE 5 $p_2$: $r_2$, comb 1 | UE 5 $p_3$: $r_2$, comb 1 |
| | UE 6 $p_0$: $r_2$, comb 2 | UE 6 $p_1$: $r_2$, comb 2 | UE 6 $p_2$: $r_2$, comb 2 | UE 6 $p_3$: $r_2$, comb 2 |
| | UE 7 $p_0$: $r_2$, comb 3 | UE 7 $p_1$: $r_2$, comb 3 | UE 7 $p_2$: $r_2$, comb 3 | UE 7 $p_3$: $r_2$, comb 3 |
| | UE 8 $p_0$: $r_2$, comb 4 | UE 8 $p_1$: $r_2$, comb 4 | UE 8 $p_2$: $r_2$, comb 4 | UE 8 $p_3$: $r_2$, comb 4 |
| ... | | | | |
| Sending moment n | | | | |
| Cell 1 | UE 1 $p_0$: $r_1$, comb 1 | UE 1 $p_1$: $r_1$, comb 1 | UE 1 $p_2$: $r_1$, comb 1 | UE 1 $p_3$: $r_1$, comb 1 |
| | UE 2 $p_0$: $r_1$, comb 2 | UE 2 $p_1$: $r_1$, comb 2 | UE 2 $p_2$: $r_1$, comb 2 | UE 2 $p_3$: $r_1$, comb 2 |
| | UE 3 $p_0$: $r_1$, comb 3 | UE 3 $p_1$: $r_1$, comb 3 | UE 3 $p_2$: $r_1$, comb 3 | UE 3 $p_3$: $r_1$, comb 3 |
| | UE 4 $p_0$: $r_1$, comb 4 | UE 4 $p_1$: $r_1$, comb 4 | UE 4 $p_2$: $r_1$, comb 4 | UE 4 $p_3$: $r_1$, comb 4 |

(continued)

| Sending moment n | | | | |
|---|---|---|---|---|
| Cell 2 | UE 5 $p_0$: $r_2$, comb 1 | UE 5 $p_1$: $r_2$, comb 1 | UE 5 $p_2$: $r_2$, comb 1 | UE 5 $p_3$: $r_2$, comb 1 |
| | UE 6 $p_0$: $r_2$, comb 2 | UE 6 $p_1$: $r_2$, comb 2 | UE 6 $p_2$: $r_2$, comb 2 | UE 6 $p_3$: $r_2$, comb 2 |
| | UE 7 $p_0$: $r_2$, comb 3 | UE 7 $p_1$: $r_2$, comb 3 | UE 7 $p_2$: $r_2$, comb 3 | UE 7 $p_3$: $r_2$, comb 3 |
| | UE 8 $p_0$: $r_2$, comb 4 | UE 8 $p_1$: $r_2$, comb 4 | UE 8 $p_2$: $r_2$, comb 4 | UE 8 $p_3$: $r_2$, comb 4 |

At sending moment 2, antenna port $p_0$, antenna port $p_1$, antenna port $p_2$, and antenna port $p_3$ of UE 1 occupy comb 1. Antenna port $p_0$, antenna port $p_1$, antenna port $p_2$, and antenna port $p_3$ of UE 5 occupy comb 1. Other UEs are not listed one by one. For details, refer to Table 8. UE 1 is used as an example. Antenna port $p_0$ to antenna port $p_3$ of UE 1 suffer interference, on comb 1, from antenna port $p_0$ to antenna port $p_3$ of UE 5.

Similarly, at sending moment n, antenna port $p_0$, antenna port $p_1$, antenna port $p_2$, and antenna port $p_3$ of UE 1 occupy comb 1. Antenna port $p_0$, antenna port $p_1$, antenna port $p_2$, and antenna port $p_3$ of UE 5 occupy comb 1. Other UEs are not listed one by one. For details, refer to Table 8. UE 1 is used as an example. Antenna port $p_0$ to antenna port $p_3$ of UE 1 suffer interference, on comb 1, from antenna port $p_0$ to antenna port $p_3$ of UE 5.

At any sending moment, each antenna port suffers interference from a same antenna port. UE 1 is used as an example. At any sending moment, antenna port $p_0$ to antenna port $p_3$ of UE 1 suffer interference from antenna port $p_0$ to antenna port $p_3$ of UE 5. This is not conducive to interference randomization.

In a possible design method, the first offset is determined based on the cyclic shift value occupied by the first antenna port.

Optionally, there may be a correspondence between the first offset and the cyclic shift value.

In this way, the comb occupied by the antenna port is obtained based on the first offset, where a value of the first offset is related to the cyclic shift value. In this case, the comb occupied by the antenna port is affected by the cyclic shift value and the first offset, so that a comb occupied by and a cyclic shift value used by each antenna port change randomly at different sending moments, and an antenna port that causes interference to the antenna port of the terminal device also changes randomly at different sending moments. At a same sending moment, antenna ports that cause interference to different antenna ports of the terminal device are different. Two-dimensional interference randomization in code domain and in frequency domain can be implemented, the interference randomization effect can be further enhanced, and an interference randomization convergence speed can be accelerated.

In addition, due to introduction of the cyclic shift value, interference levels of interference caused by antenna port $p_a$ of UE x to antenna port $p_b$ of UE y may still vary greatly at different sending moments. In this way, an excellent interference randomization effect can be ensured.

In a possible design method, that the first offset is determined based on a cyclic shift value occupied by the first antenna port may include: The first offset is determined based on a range to which the cyclic shift value belongs.

Optionally, the range to which the cyclic shift value belongs may be divided into at least two intervals.

For example, it is assumed that the range of the cyclic shift value is divided into a first range and a second range, and the cyclic shift value is $\alpha_1$. If $\alpha_1$ belongs to the first range, the value of the first offset is $k_{\text{offset0}}$; or if $\alpha_1$ belongs to the second range, the value of the first offset is $k_{\text{offset1}}$.

In some embodiments, if $\alpha_i \bmod 2\pi \in R_0$ for a cyclic shift value corresponding to antenna port $p_i$, the value of the first offset is $k_{\text{offset0}}$; if $\alpha_i \bmod 2\pi \in R_1$, the value of the first offset is $k_{\text{offset1}}$; and similarly, if $\alpha_i \bmod 2\pi \in R_{y-1}$, the value of the first offset is $k_{\text{offsety-1}}$, where $R_0$ represents the first range, $R_1$ represents the second range, and similarly, $R_{y-1}$ represents a $y^{\text{th}}$ range; and a mathematical symbol $\in$ represents belonging to.

Optionally, $R_0 \cup R_1 \cup ... \cup R_{y-1} = 2\pi$, $Vc, d \in \{0, 1, ..., y - 1\}$, $c \neq d$, and $R_c \cap R_d = \emptyset$. To be specific, a union set of y ranges is $2\pi$, and an intersection set of any two ranges is empty.

In some embodiments, the cyclic shift value may satisfy a formula: $\alpha_i$ =

$$\frac{2\pi}{M_{ZC}}\left(\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m\right) \bmod M_{ZC}\right) +$$

$$\frac{2\pi}{n_{\text{SRS}}^{\text{cs,max}}}\left(\left(n_{\text{SRS}}^{\text{cs}} + \frac{n_{\text{SRS}}^{\text{cs,max}}(p_i - 1000)}{N_{\text{ap}}^{\text{SRS}}}\right) \bmod n_{\text{SRS}}^{\text{cs,max}}\right),$$

where $M_{ZC}$ represents a length of a sequence; c() is a pseudo-random sequence, where the pseudo-random sequence is related to the cell identifier; $n_f$ represents the system frame number corresponding to the first antenna port; $N_{\text{slot}}^{\text{frame}}$

represents the quantity of the slots included in each system frame; $N_{\text{symb}}^{\text{slot}}$ represents the quantity of the OFDM symbols included in each slot; $n_{\text{s,f}}^{\mu}$ represents the slot number corresponding to the first antenna port in a subcarrier configuration $\mu$; and $l_0 + l'$ represents the OFDM symbol number corresponding to the first antenna port, where $l_0$ represents the index of the start OFDM symbol in the one or more OFDM symbols included in the time domain resource occupied by the first antenna port, and $l'$ represents a relative index of one OFDM symbol in the one or more OFDM symbols included in the time domain resource occupied by the first antenna port.

In some other embodiments, the cyclic shift value may satisfy a formula: $\alpha_i =$

$$\frac{2\pi}{M_{\text{ZC}}} \left( \left( \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m \right) \bmod M_{\text{ZC}} \right) + 2\pi \frac{n_{\text{SRS}}^{\text{cs},i}}{n_{\text{SRS}}^{\text{cs,max}}}$$ . For

a meaning represented by $n_{\text{SRS}}^{\text{cs},i}$, refer to the corresponding descriptions of $n_{\text{SRS}}^{\text{cs},i}$ in the foregoing "Third, cyclic shift value". Details are not described herein again.

In still some embodiments, the cyclic shift value may satisfy a formula: $\alpha_i =$

$$\frac{2\pi}{M_{\text{ZC}}} \left( \left( \sum_{m=0}^{7} c(8(n_{\text{s,f}}^{\mu} N_{\text{symb}}^{\text{slot}} + l_0 + l') + m) \cdot 2^m \right) \bmod M_{\text{ZC}} \right) + 2\pi \frac{n_{\text{SRS}}^{\text{cs},i}}{n_{\text{SRS}}^{\text{cs,max}}}$$ .

It should be noted that, unless otherwise specified in embodiments of this application, meanings represented by the parameters in the formulas may be mutually referenced. This is not limited.

It should be noted that the cyclic shift value is not limited in embodiments of this application.

In some embodiments, the first offset is determined based on the cyclic shift value occupied by the first antenna port, and the index $k_{\text{TC}}^{(p_i)}$ that is of the comb occupied by antenna port $p_i$ and that is determined based on the comb quantity, the comb offset, and the first offset may satisfy the following formula:

$$k_{\text{TC}}^{(p_i)} = \left( \overline{k}_{\text{TC}} + K_{\text{TC}}/2 + k_{\text{offset}} \right) \bmod K_{\text{TC}}$$ , or $k_{\text{TC}}^{(p_i)} = $ $(\overline{k}_{\text{TC}} + k_{\text{offset}}) \bmod K_{\text{TC}}$, where $\overline{k}_{\text{TC}}$ represents the comb offset, $\overline{k}_{\text{TC}} \in \{0, 1, ..., K_{\text{TC}} - 1\}$, $K_{\text{TC}}$ represents the comb quantity, and $k_{\text{offset}}$ represents the first offset.

For example, the first offset is determined based on the range to which the cyclic shift value belongs, and the index $k_{\text{TC}}^{(p_i)}$ that is of the comb occupied by antenna port $p_i$ and that is determined based on the comb quantity, the comb offset, and the first offset may satisfy the following formula (23):

$$
k_{\text{TC}}^{(p_i)} =
$$

$$
\begin{cases}
\left( \overline{k}_{\text{TC}} + K_{\text{TC}}/2 + k_{\text{offset}_{y-1}} \right) \bmod K_{\text{TC}} & \alpha_i \bmod 2\pi \in R_{y-1}, N_{\text{ap}}^{\text{SRS}} = 4, p_i \in \{1001, 1003\}, n_{\text{SRS}}^{\text{cs,max}} = 6 \\
\quad\quad\quad \vdots \\
\left( \overline{k}_{\text{TC}} + K_{\text{TC}}/2 + k_{\text{offset}_1} \right) \bmod K_{\text{TC}} & \alpha_i \bmod 2\pi \in R_1, N_{\text{ap}}^{\text{SRS}} = 4, p_i \in \{1001, 1003\}, n_{\text{SRS}}^{\text{cs,max}} = 6 \\
\left( \overline{k}_{\text{TC}} + K_{\text{TC}}/2 + k_{\text{offset}_0} \right) \bmod K_{\text{TC}} & \alpha_i \bmod 2\pi \in R_0, N_{\text{ap}}^{\text{SRS}} = 4, p_i \in \{1001, 1003\}, n_{\text{SRS}}^{\text{cs,max}} = 6 \\
\left( \overline{k}_{\text{TC}} + K_{\text{TC}}/2 + k_{\text{offset}_{y-1}} \right) \bmod K_{\text{TC}} & \alpha_i \bmod 2\pi \in R_{y-1}, N_{\text{ap}}^{\text{SRS}} = 4, p_i \in \{1001, 1003\}, \\
& \quad\quad n_{\text{SRS}}^{\text{cs}} \in \{n_{\text{SRS}}^{\text{cs,max}}/2, ..., n_{\text{SRS}}^{\text{cs,max}} - 1\} \\
\quad\quad\quad \vdots \\
\left( \overline{k}_{\text{TC}} + K_{\text{TC}}/2 + k_{\text{offset}_1} \right) \bmod K_{\text{TC}} & \alpha_i \bmod 2\pi \in R_1, N_{\text{ap}}^{\text{SRS}} = 4, p_i \in \{1001, 1003\}, n_{\text{SRS}}^{\text{cs}} \in \{n_{\text{SRS}}^{\text{cs,max}}/2, ..., n_{\text{SRS}}^{\text{cs,max}} - 1\} \\
\left( \overline{k}_{\text{TC}} + K_{\text{TC}}/2 + k_{\text{offset}_0} \right) \bmod K_{\text{TC}} & \alpha_i \bmod 2\pi \in R_0, N_{\text{ap}}^{\text{SRS}} = 4, p_i \in \{1001, 1003\}, n_{\text{SRS}}^{\text{cs}} \in \{n_{\text{SRS}}^{\text{cs,max}}/2, ..., n_{\text{SRS}}^{\text{cs,max}} - 1\} \\
\left( \overline{k}_{\text{TC}} + k_{\text{offset}_{y-1}} \right) \bmod K_{\text{TC}} & \alpha_i \bmod 2\pi \in R_{y-1}, \\
& N_{\text{ap}}^{\text{SRS}} \neq 4 \text{ or } p_i \in \{1000, 1002\} \text{ or } \left( n_{\text{SRS}}^{\text{cs}} \in \{0, ..., n_{\text{SRS}}^{\text{cs,max}}/2 - 1\}, n_{\text{SRS}}^{\text{cs,max}} \neq 6 \right) \\
\quad\quad\quad \vdots \\
\left( \overline{k}_{\text{TC}} + k_{\text{offset}_1} \right) \bmod K_{\text{TC}} & \alpha_i \bmod 2\pi \in R_1, \\
& N_{\text{ap}}^{\text{SRS}} \neq 4 \text{ or } p_i \in \{1000, 1002\} \text{ or } \left( n_{\text{SRS}}^{\text{cs}} \in \{0, ..., n_{\text{SRS}}^{\text{cs,max}}/2 - 1\}, n_{\text{SRS}}^{\text{cs,max}} \neq 6 \right) \\
\left( \overline{k}_{\text{TC}} + k_{\text{offset}_0} \right) \bmod K_{\text{TC}} & \alpha_i \bmod 2\pi \in R_0, \\
& N_{\text{ap}}^{\text{SRS}} \neq 4 \text{ or } p_i \in \{1000, 1002\} \text{ or } \left( n_{\text{SRS}}^{\text{cs}} \in \{0, ..., n_{\text{SRS}}^{\text{cs,max}}/2 - 1\}, n_{\text{SRS}}^{\text{cs,max}} \neq 6 \right)
\end{cases}
\quad (23)
$$

Similar to the foregoing formula (2), in the foregoing formula (23), $\overline{k}_{\text{TC}}$ represents the comb offset, $\overline{k}_{\text{TC}} \in \{0, 1, ..., K_{\text{TC}} - 1\}$, $K_{\text{TC}}$ represents the comb quantity, and each of $k_{\text{offset}_0}$ to $k_{\text{offset}_{n-1}}$ may represent the first offset.

When the first condition is satisfied: $N_{\mathrm{ap}}^{\mathrm{SRS}} = 4, p_i \in \{1001, 1003\}$, and $n_{\mathrm{SRS}}^{\mathrm{cs,max}} = 6$, the index $k_{\mathrm{TC}}^{(p_i)}$ of the comb occupied by antenna port $p_i$ is related to the cyclic shift value. For example, when the cyclic shift value $\alpha_i \bmod 2\pi \in R_0$, the index $k_{\mathrm{TC}}^{(p_i)}$ of the comb occupied by antenna port $p_i$ satisfies $k_{\mathrm{TC}}^{(p_i)} = \left(\overline{k}_{\mathrm{TC}} + K_{\mathrm{TC}}/2 + k_{\mathrm{offset}_0}\right) \bmod K_{\mathrm{TC}}$. For example, when the cyclic shift value $\alpha_i \bmod 2\pi \in R_1$, the index $k_{\mathrm{TC}}^{(p_i)}$ of the comb occupied by antenna port $p_i$ satisfies $k_{\mathrm{TC}}^{(p_i)} = \left(\overline{k}_{\mathrm{TC}} + K_{\mathrm{TC}}/2 + k_{\mathrm{offset}_1}\right) \bmod K_{\mathrm{TC}}$. For example, when the cyclic shift value $\alpha_i \bmod 2\pi \in R_{y\text{-}1}$, the index $k_{\mathrm{TC}}^{(p_i)}$ of the comb occupied by antenna port $p_i$ satisfies $k_{\mathrm{TC}}^{(p_i)} = (\overline{k}_{\mathrm{TC}} + K_{\mathrm{TC}}/2 + k_{\mathrm{offset}_{y\text{-}1}}) \bmod$ .

Similarly, when the second condition is satisfied: $N_{\mathrm{ap}}^{\mathrm{SRS}} = 4, p_i \in$ {1001, 1003}, and $n_{\mathrm{SRS}}^{\mathrm{cs}} \in \{n_{\mathrm{SRS}}^{\mathrm{cs,max}}/2, ..., n_{\mathrm{SRS}}^{\mathrm{cs,max}} - 1\}$, the index $k_{\mathrm{TC}}^{(p_i)}$ of the comb occupied by antenna port $p_i$ is related to the cyclic shift value. For details, refer to the foregoing formula. Details are not described again. When neither the first condition nor the second condition is satisfied (as shown in the foregoing formula (23), $N_{\mathrm{ap}}^{\mathrm{SRS}} \neq 4$ or $p_i \in \{1000, 1002\}$ or $\left(n_{\mathrm{SRS}}^{\mathrm{cs}} \in \{0, ..., n_{\mathrm{SRS}}^{\mathrm{cs,max}}/2 - 1\}\right.$, and $\left.n_{\mathrm{SRS}}^{\mathrm{cs,max}} \neq 6\right)$), the index $k_{\mathrm{TC}}^{(p_i)}$ of the comb occupied by antenna port $p_i$ is related to the cyclic shift value. For example, when the cyclic shift value $\alpha_i \bmod 2\pi \in R_0$, the index $k_{\mathrm{TC}}^{(p_i)}$ of the comb occupied by antenna port $p_i$ satisfies $k_{\mathrm{TC}}^{(p_i)} = \left(\overline{k}_{\mathrm{TC}} + k_{\mathrm{offset}_0}\right) \bmod K_{\mathrm{TC}}$. For example, when the cyclic shift value $\alpha_i \bmod 2\pi \in R_1$, the index $k_{\mathrm{TC}}^{(p_i)}$ of the comb occupied by antenna port $p_i$ satisfies $k_{\mathrm{TC}}^{(p_i)} = \left(\overline{k}_{\mathrm{TC}} + k_{\mathrm{offset}_1}\right) \bmod K_{\mathrm{TC}}$. For example, when the cyclic shift value $\alpha_i \bmod 2\pi \in R_{y\text{-}1}$, the index $k_{\mathrm{TC}}^{(p_i)}$ of the comb occupied by antenna port $p_i$ satisfies $k_{\mathrm{TC}}^{(p_i)} = \left(\overline{k}_{\mathrm{TC}} + k_{\mathrm{offset}_{y-1}}\right) \bmod K_{\mathrm{TC}}$.

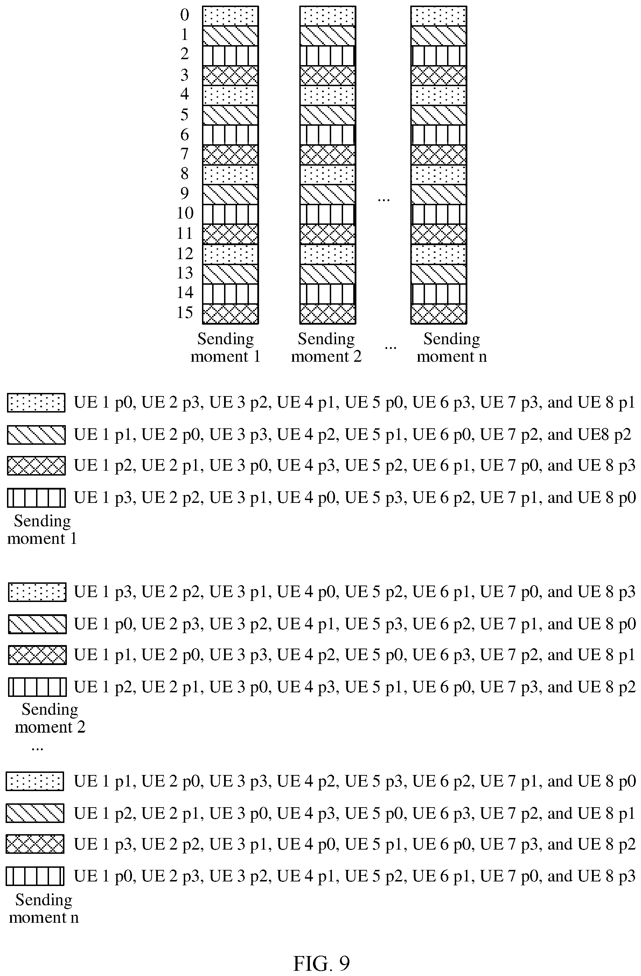

With reference to Table 9 and FIG. 9, the following describes a comb occupied by each terminal device after the first offset is determined based on the cyclic shift value occupied by the first antenna port, and the comb occupied by the antenna port is determined based on at least the first offset.

The foregoing scenario 1 is used as an example. The first offset is determined based on the cyclic shift value occupied by the first antenna port, and a comb occupied by each antenna port (antenna port $p_0$ to antenna port $p_3$) of UE 1 to UE 8 is determined based on at least the first offset. It is assumed that in the foregoing formula (23), $R_c = \left[0, \frac{\pi}{2}\right) + \frac{\pi}{2}c$, c = 0,1, 2, 3, y = 4, and $k_{\mathrm{offset}_c}$ = c. In this case, an index $k_{\mathrm{TC}}^{(p_i)}$ of the comb occupied by each SRS port $p_i$ may be expressed as:

$$k_{\mathrm{TC}}^{(p_i)} = \begin{cases} (\bar{k}_{\mathrm{TC}} + K_{\mathrm{TC}}/2 + 3) \bmod K_{\mathrm{TC}} & \alpha_i \bmod 2\pi \in \left[\frac{3}{2}\pi, 2\pi\right), N_{\mathrm{ap}}^{\mathrm{SRS}} = 4, p_i \in \{1001, 1003\}, n_{\mathrm{SRS}}^{\mathrm{cs,max}} = 6 \\ (\bar{k}_{\mathrm{TC}} + K_{\mathrm{TC}}/2 + 2) \bmod K_{\mathrm{TC}} & \alpha_i \bmod 2\pi \in \left[\pi, \frac{3}{2}\pi\right), N_{\mathrm{ap}}^{\mathrm{SRS}} = 4, p_i \in \{1001, 1003\}, n_{\mathrm{SRS}}^{\mathrm{cs,max}} = 6 \\ (\bar{k}_{\mathrm{TC}} + K_{\mathrm{TC}}/2 + 1) \bmod K_{\mathrm{TC}} & \alpha_i \bmod 2\pi \in \left[\frac{\pi}{2}, \pi\right), N_{\mathrm{ap}}^{\mathrm{SRS}} = 4, p_i \in \{1001, 1003\}, n_{\mathrm{SRS}}^{\mathrm{cs,max}} = 6 \\ (\bar{k}_{\mathrm{TC}} + K_{\mathrm{TC}}/2) \bmod K_{\mathrm{TC}} & \alpha_i \bmod 2\pi \in \left[0, \frac{\pi}{2}\right), N_{\mathrm{ap}}^{\mathrm{SRS}} = 4, p_i \in \{1001, 1003\}, n_{\mathrm{SRS}}^{\mathrm{cs,max}} = 6 \\ (\bar{k}_{\mathrm{TC}} + K_{\mathrm{TC}}/2 + 3) \bmod K_{\mathrm{TC}} & \alpha_i \bmod 2\pi \in \left[\frac{3}{2}\pi, 2\pi\right), N_{\mathrm{ap}}^{\mathrm{SRS}} = 4, p_i \in \{1001, 1003\}, n_{\mathrm{SRS}}^{\mathrm{cs}} \in \{n_{\mathrm{SRS}}^{\mathrm{cs,max}}/2, \dots, n_{\mathrm{SRS}}^{\mathrm{cs,max}} - 1\} \\ (\bar{k}_{\mathrm{TC}} + K_{\mathrm{TC}}/2 + 2) \bmod K_{\mathrm{TC}} & \alpha_i \bmod 2\pi \in \left[\pi, \frac{3}{2}\pi\right), N_{\mathrm{ap}}^{\mathrm{SRS}} = 4, p_i \in \{1001, 1003\}, n_{\mathrm{SRS}}^{\mathrm{cs}} \in \{n_{\mathrm{SRS}}^{\mathrm{cs,max}}/2, \dots, n_{\mathrm{SRS}}^{\mathrm{cs,max}} - 1\} \\ (\bar{k}_{\mathrm{TC}} + K_{\mathrm{TC}}/2 + 1) \bmod K_{\mathrm{TC}} & \alpha_i \bmod 2\pi \in \left[\frac{\pi}{2}, \pi\right), N_{\mathrm{ap}}^{\mathrm{SRS}} = 4, p_i \in \{1001, 1003\}, n_{\mathrm{SRS}}^{\mathrm{cs}} \in \{n_{\mathrm{SRS}}^{\mathrm{cs,max}}/2, \dots, n_{\mathrm{SRS}}^{\mathrm{cs,max}} - 1\} \\ (\bar{k}_{\mathrm{TC}} + K_{\mathrm{TC}}/2) \bmod K_{\mathrm{TC}} & \alpha_i \bmod 2\pi \in \left[0, \frac{\pi}{2}\right), N_{\mathrm{ap}}^{\mathrm{SRS}} = 4, p_i \in \{1001, 1003\}, n_{\mathrm{SRS}}^{\mathrm{cs}} \in \{n_{\mathrm{SRS}}^{\mathrm{cs,max}}/2, \dots, n_{\mathrm{SRS}}^{\mathrm{cs,max}} - 1\} \\ (\bar{k}_{\mathrm{TC}} + 3) \bmod K_{\mathrm{TC}} & \alpha_i \bmod 2\pi \in \left[\frac{3}{2}\pi, 2\pi\right), \left(N_{\mathrm{ap}}^{\mathrm{SRS}} \neq 4 \text{ or } p_i \in \{1000, 1002\} \text{ or } \left(n_{\mathrm{SRS}}^{\mathrm{cs}} \in \{0, \dots, n_{\mathrm{SRS}}^{\mathrm{cs,max}}/2 - 1\} \text{ and } n_{\mathrm{RS}}^{\mathrm{cs,max}} \neq 6\right)\right) \\ (\bar{k}_{\mathrm{TC}} + 2) \bmod K_{\mathrm{TC}} & \alpha_i \bmod 2\pi \in \left[\pi, \frac{3}{2}\pi\right), \left(N_{\mathrm{ap}}^{\mathrm{SRS}} \neq 4 \text{ or } p_i \in \{1000, 1002\} \text{ or } \left(n_{\mathrm{SRS}}^{\mathrm{cs}} \in \{0, \dots, n_{\mathrm{SRS}}^{\mathrm{cs,max}}/2 - 1\} \text{ and } n_{\mathrm{SRS}}^{\mathrm{cs,max}} \neq 6\right)\right) \\ (\bar{k}_{\mathrm{TC}} + 1) \bmod K_{\mathrm{TC}} & \alpha_i \bmod 2\pi \in \left[\frac{\pi}{2}, \pi\right), \left(N_{\mathrm{ap}}^{\mathrm{SRS}} \neq 4 \text{ or } p_i \in \{1000, 1002\} \text{ or } \left(n_{\mathrm{SRS}}^{\mathrm{cs}} \in \{0, \dots, n_{\mathrm{SRS}}^{\mathrm{cs,max}}/2 - 1\} \text{ and } n_{\mathrm{SRS}}^{\mathrm{cs,max}} \neq 6\right)\right) \\ (\bar{k}_{\mathrm{TC}}) \bmod K_{\mathrm{TC}} & \alpha_i \bmod 2\pi \in \left[0, \frac{\pi}{2}\right), \left(N_{\mathrm{ap}}^{\mathrm{SRS}} \neq 4 \text{ or } p_i \in \{1000, 1002\} \text{ or } \left(n_{\mathrm{SRS}}^{\mathrm{cs}} \in \{0, \dots, n_{\mathrm{SRS}}^{\mathrm{cs,max}}/2 - 1\} \text{ and } n_{\mathrm{SRS}}^{\mathrm{cs,max}} \neq 6\right)\right) \end{cases}$$

, and combs occupied by each UE may be shown in Table 9 and FIG. 9.

With reference to Table 9 and FIG. 9, at sending moment 1, antenna port $p_0$ to antenna port $p_3$ of UE 1 respectively occupy comb 1, comb 2, comb 3, and comb 4; and antenna port $p_0$ to antenna port $p_3$ of UE 2 respectively occupy comb 2, comb 3, comb 4, and comb 1. Details are not listed one by one. For details, refer to Table 9 and FIG. 9.

UE 1 is used as an example. At sending moment 1, antenna port $p_0$ of UE 1 suffers interference, on comb 1, from antenna port $p_3$ of UE 2, antenna port $p_2$ of UE 3, antenna port $p_1$ of UE 4, antenna port $p_0$ of UE 5, antenna port $p_3$ of UE 6, antenna port $p_3$ of UE 7, and antenna port $p_1$ of UE 8; and antenna port $p_1$ of UE 1 suffers interference, on comb 2, from antenna port $p_0$ of UE 2, antenna port $p_3$ of UE 3, antenna port $p_2$ of UE 4, antenna port $p_1$ of UE 5, antenna port $p_0$ of UE 6, antenna port $p_2$ of UE 7, and antenna port $p_2$ of UE 8. Details are not listed one by one. For details, refer to Table 9 and FIG. 9.

At sending moment 2, antenna port $p_0$ to antenna port $p_3$ of UE 1 respectively occupy comb 2, comb 3, comb 4, and comb 1; and antenna port $p_0$ to antenna port $p_3$ of UE 2 respectively occupy comb 3, comb 4, comb 1, and comb 2. Details are not listed one by one. For details, refer to Table 9 and FIG. 9.

UE 1 is used as an example. At sending moment 2, antenna port $p_0$ of UE 1 suffers interference, on comb 1, from antenna port $p_3$ of UE 2, antenna port $p_2$ of UE 3, antenna port $p_1$ of UE 4, antenna port $p_3$ of UE 5, antenna port $p_2$ of UE 6, antenna port $p_1$ of UE 7, and antenna port $p_0$ of UE 8. Details are not listed one by one. For details, refer to Table 9 and FIG. 9.

It can be learned that, the comb occupied by each antenna port of each UE changes at different sending moments, and an antenna port that causes interference to a same antenna port changes randomly. For example, antenna ports that cause interference to antenna port $p_0$ of UE 1 at sending moment 1 and sending moment 2 are different. At a same sending moment, antenna ports that cause interference to different antenna ports of the UE are different. For example, at sending moment 1, antenna ports that cause interference to antenna port $p_0$ of UE 1 and cause interference to antenna port $p_1$ of UE 1 are different, so that the interference randomization effect can be further enhanced.

In addition, due to introduction of the cyclic shift value, levels of interference caused by antenna port $p_a$ of UE x to antenna port $p_b$ of UE y may still vary greatly at different sending moments. In this way, an excellent interference randomization effect can be ensured.

**Table 9**

| Sending moment 1 | | | | |
| --- | --- | --- | --- | --- |
| Cell 1 | UE 1 $p_0$: $r_1$, comb 1 | UE 1 $p_1$: $r_1$, comb 2 | UE 1 $p_2$: $r_1$, comb 3 | UE 1 $p_3$: $r_1$, comb 4 |
| | UE 2 $p_0$: $r_1$, comb 2 | UE 2 $p_1$: $r_1$, comb 3 | UE 2 $p_2$: $r_1$, comb 4 | UE 2 $p_3$: $r_1$, comb 1 |
| | UE 3 $p_0$: $r_1$, comb 3 | UE 3 $p_1$: $r_1$, comb 4 | UE 3 $p_2$: $r_1$, comb 1 | UE 3 $p_3$: $r_1$, comb 2 |
| | UE 4 $p_0$: $r_1$, comb 4 | UE 4 $p_1$: $r_1$, comb 1 | UE 4 $p_2$: $r_1$, comb 2 | UE 4 $p_3$: $r_1$, comb 3 |

(continued)

| Sending moment 1 | | | | |
|---|---|---|---|---|
| Cell 2 | UE 5 $p_0$: $r_2$, comb 1 | UE 5 $p_1$: $r_2$, comb 2 | UE 5 $p_2$: $r_2$, comb 3 | UE 5 $p_3$: $r_2$, comb 4 |
| | UE 6 $p_0$: $r_2$, comb 2 | UE 6 $p_1$: $r_2$, comb 3 | UE 6 $p_2$: $r_2$, comb 4 | UE 6 $p_3$: $r_2$, comb 1 |
| | UE 7 $p_0$: $r_2$, comb 3 | UE 7 $p_1$: $r_2$, comb 4 | UE 7 $p_2$: $r_2$, comb 1 | UE 7 $p_3$: $r_2$, comb 2 |
| | UE 8 $p_0$: $r_2$, comb 4 | UE 8 $p_1$: $r_2$, comb 1 | UE 8 $p_2$: $r_2$, comb 2 | UE 8 $p_3$: $r_2$, comb 3 |
| Sending moment 2 | | | | |
| Cell 1 | UE 1 $p_0$: $r_1$, comb 2 | UE 1 $p_1$: $r_1$, comb 3 | UE 1 $p_2$: $r_1$, comb 4 | UE 1 $p_3$: $r_1$, comb 1 |
| | UE 2 $p_0$: $r_1$, comb 3 | UE 2 $p_1$: $r_1$, comb 4 | UE 2 $p_2$: $r_1$, comb 1 | UE 2 $p_3$: $r_1$, comb 2 |
| | UE 3 $p_0$: $r_1$, comb 4 | UE 3 $p_1$: $r_1$, comb 1 | UE 3 $p_2$: $r_1$, comb 2 | UE 3 $p_3$: $r_1$, comb 3 |
| | UE 4 $p_0$: $r_1$, comb 1 | UE 4 $p_1$: $r_1$, comb 2 | UE 4 $p_2$: $r_1$, comb 3 | UE 4 $p_3$: $r_1$, comb 4 |
| Cell 2 | UE 5 $p_0$: $r_2$, comb 3 | UE 5 $p_1$: $r_2$, comb 4 | UE 5 $p_2$: $r_2$, comb 1 | UE 5 $p_3$: $r_2$, comb 2 |
| | UE 6 $p_0$: $r_2$, comb 4 | UE 6 $p_1$: $r_2$, comb 1 | UE 6 $p_2$: $r_2$, comb 2 | UE 6 $p_3$: $r_2$, comb 3 |
| | UE 7 $p_0$: $r_2$, comb 1 | UE 7 $p_1$: $r_2$, comb 2 | UE 7 $p_2$: $r_2$, comb 3 | UE 7 $p_3$: $r_2$, comb 4 |
| | UE 8 $p_0$: $r_2$, comb 2 | UE 8 $p_1$: $r_2$, comb 3 | UE 8 $p_2$: $r_2$, comb 4 | UE 8 $p_3$: $r_2$, comb 1 |
| ... | | | | |
| Sending moment n | | | | |
| Cell 1 | UE 1 $p_0$: $r_1$, comb 2 | UE 1 $p_1$: $r_1$, comb 3 | UE 1 $p_2$: $r_1$, comb 4 | UE 1 $p_3$: $r_1$, comb 1 |
| | UE 2 $p_0$: $r_1$, comb 3 | UE 2 $p_1$: $r_1$, comb 4 | UE 2 $p_2$: $r_1$, comb 1 | UE 2 $p_3$: $r_1$, comb 2 |
| | UE 3 $p_0$: $r_1$, comb 4 | UE 3 $p_1$: $r_1$, comb 1 | UE 3 $p_2$: $r_1$, comb 2 | UE 3 $p_3$: $r_1$, comb 3 |
| | UE 4 $p_0$: $r_1$, comb 1 | UE 4 $p_1$: $r_1$, comb 2 | UE 4 $p_2$: $r_1$, comb 3 | UE 4 $p_3$: $r_1$, comb 4 |
| Cell 2 | UE 5 $p_0$: $r_2$, comb 3 | UE 5 $p_1$: $r_2$, comb 4 | UE 5 $p_2$: $r_2$, comb 1 | UE 5 $p_3$: $r_2$, comb 2 |
| | UE 6 $p_0$: $r_2$, comb 4 | UE 6 $p_1$: $r_2$, comb 1 | UE 6 $p_2$: $r_2$, comb 2 | UE 6 $p_3$: $r_2$, comb 3 |
| | UE 7 $p_0$: $r_2$, comb 1 | UE 7 $p_1$: $r_2$, comb 2 | UE 7 $p_2$: $r_2$, comb 3 | UE 7 $p_3$: $r_2$, comb 4 |
| | UE 8 $p_0$: $r_2$, comb 2 | UE 8 $p_1$: $r_2$, comb 3 | UE 8 $p_2$: $r_2$, comb 4 | UE 8 $p_3$: $r_2$, comb 1 |

According to the communication method shown in FIG. 5, the comb occupied by the first antenna port of the terminal device is determined based on the first offset, so that a frequency domain resource (the comb) occupied by the antenna port of the terminal device may randomly change at different sending moments. In this way, an antenna port of a terminal device that causes interference to the antenna port of the terminal device randomly changes. Therefore, the frequency-domain interference randomization is implemented, and the better interference randomization effect can be achieved.

Alternatively, the cyclic shift value is introduced. The comb occupied by the first antenna port is obtained based on the first offset, and the value of the first offset is related to the cyclic shift value. In this case, the comb occupied by the first antenna port is affected by the cyclic shift value and the first offset. In this way, the comb occupied by and the cyclic shift value used by each antenna port change randomly at different sending moments, and an antenna port that causes interference to the antenna port of the terminal device also changes randomly at different sending moments. At a same sending moment, antenna ports that cause interference to different antenna ports of the terminal device are different. In this way, two-dimensional interference randomization in code domain and in frequency domain can be implemented, the interference randomization effect can be further enhanced, and an interference randomization convergence speed can be accelerated.

In some embodiments, a partial sounding offset $n_{\text{offset}}^{\text{RPFS}}$ satisfies the foregoing formula (4):

$$n_{\text{offset}}^{\text{RPFS}} = N_{\text{sc}}^{\text{RB}} \, m_{\text{SRS}, B_{\text{SRS}}} \left( \left( k_{\text{F}} + k_{\text{hop}} \right) \bmod P_{\text{F}} \right) / P_{\text{F}}.$$

If higher-layer parameters (for example, $k_{\text{F}}$ and $P_{\text{F}}$) do not change, a relative position of a partial detection bandwidth in a frequency hopping bandwidth is determined only by using a start resource block hopping offset $k_{\text{hop}}$.

However, $k_{\text{hop}}$ is determined based on an index of a frequency hopping periodicity corresponding to the reference signal and a protocol-predefined table (for example, Table 3). Therefore, a partial detection bandwidth occupied by each antenna port has a strong regularity. This is not conductive to interference randomization.

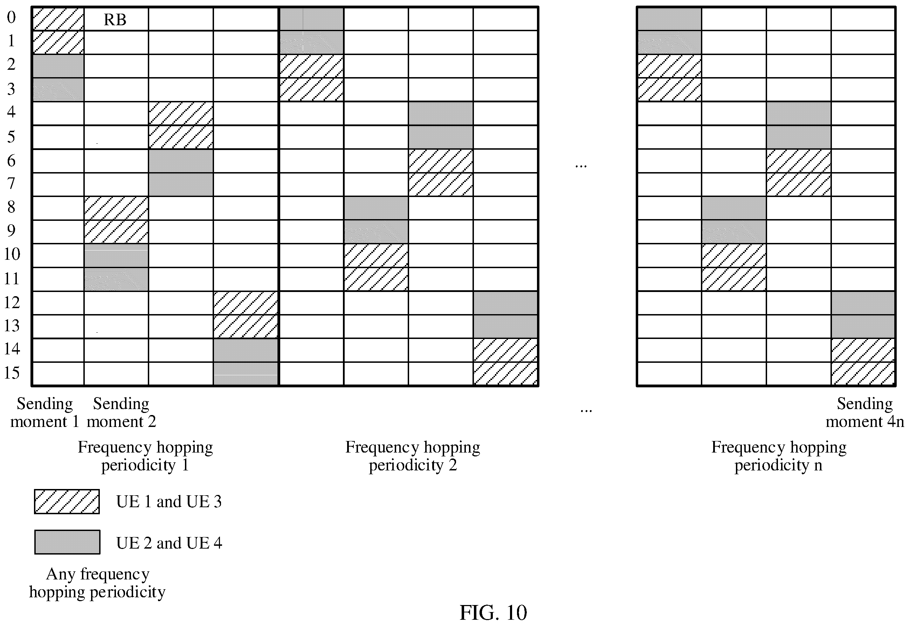

With reference to Table 10 and FIG. 10, in a scenario 2, cell 1 includes UE 1 and UE 2, and each UE includes two antenna ports (for example, antenna port $p_0$ and antenna port $p_1$ respectively). Each antenna port of UE 1 and UE 2 generates a reference signal by using a base sequence $r_1$ and a cyclic shift value that corresponds to the antenna port, and at least combs occupied by or cyclic shift values used by the antenna ports of UE 1 and UE 2 are different. Cell 2 includes UE 3 and UE 4, and each UE includes two antenna ports (for example, antenna port $p_0$ and antenna port $p_1$ respectively). Each antenna port of UE 3 and UE 4 generates a reference signal by using a base sequence $r_2$ and a cyclic shift value that corresponds to the antenna port, and at least combs occupied by or cyclic shift values used by the antenna ports of UE 3 and UE 4 are different. In FIG. 10, each box represents one RB, a sounding bandwidth is 16 RBs, a frequency hopping bandwidth is 4 RBs, and a frequency hopping periodicity is 4. It should be noted that the antenna ports are not shown in Table 10 and FIG. 10.

Partial sounding start position indexes $k_F$ and frequency scaling factors $P_F$ that correspond to antenna ports of terminal devices are the same. Specifically, as shown in Table 10, two UEs may send reference signals on a same time-frequency resource.

**Table 10**

| Cell 1 | UE 1: $r_1$, $k_F = 0$, $P_F = 2$ | UE 2: $r_1$, $k_F = 1$, $P_F = 2$ |
|--------|-----------------------------------|-----------------------------------|
| Cell 2 | UE 3: $r_2$, $k_F = 0$, $P_F = 2$ | UE 4: $r_2$, $k_F = 1$, $P_F = 2$ |

It is assumed that antenna ports of UEs in a same cell are orthogonal to each other. If higher-layer parameters (for example, $k_F$ and $P_F$) do not change, an antenna port of one UE suffers fixed interference at any sending moment. For example, the antenna port of UE 1 receives interference from the antenna port of UE 3.

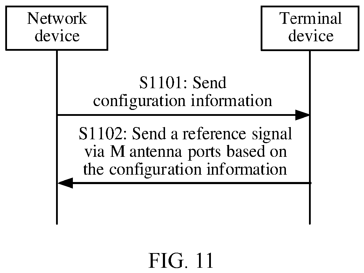

For example, FIG. 11 is a schematic flowchart of another communication method according to an embodiment of this application. The method shown in FIG. 11 may be used in combination with the method shown in FIG. 5, to achieve a better interference randomization effect. The method shown in FIG. 11 and the method shown in FIG. 5 may alternatively be separately used.

As shown in FIG. 11, the communication method includes the following steps.

S1101: A network device sends configuration information. Correspondingly, a terminal device receives the configuration information.

For a specific implementation of S1101, refer to S501. Details are not described herein again.

S1102: The terminal device sends a reference signal via M antenna ports based on the configuration information. Correspondingly, the reference signal is received via the M antenna ports based on the configuration information.

For example, M is an integer greater than 0.

Optionally, the terminal device may include the M antenna ports.

In a possible design method, a start position of a frequency domain resource occupied by each of the M antenna ports is determined based on at least a fourth offset.

For example, with reference to the foregoing scenario 2, a start position of a frequency domain resource occupied by each of antenna port $p_0$ and antenna port $p_1$ of UE 1 may be determined based on at least the fourth offset.

Optionally, the fourth offset may be an integer greater than or equal to 0.

In some embodiments, the fourth offset may be determined based on at least a cell identifier and an index of a frequency hopping periodicity corresponding to the reference signal.

For example, with reference to FIG. 10, the index of the frequency hopping periodicity corresponding to the reference signal may be: frequency hopping periodicity 1 or the like.

In some embodiments, the fourth offset may be a fourth random number.

In other words, the fourth offset may be a random number. For example, the fourth offset is a random number greater than 0.

Optionally, the fourth offset or the fourth random number may satisfy a formula (24) or a formula (25).

$$k_{\text{rand}} = \left( \sum_{m=0}^{7} c\left(8 \left\lfloor n_{\text{SRS}} / \prod_{b\prime=b_{\text{hop}}}^{B_{\text{SRS}}} N_{b\prime} \right\rfloor + m \right) \cdot 2^m \right) \bmod P_F \tag{24}$$

$$k_{\text{rand}} = \sum_{m=0}^{7} c\left(8 \left\lfloor n_{\text{SRS}} / \prod_{b\prime=b_{\text{hop}}}^{B_{\text{SRS}}} N_{b\prime} \right\rfloor + m \right) \cdot 2^m \tag{25}$$

In the formula (24) or the formula (25), $k_{\text{rand}}$ represents the fourth offset or the fourth random number ($k_{\text{rand}}$ may represent the fourth offset; and when the fourth offset is the fourth random number, $k_{\text{rand}}$ may represent the fourth random number); a mathematical symbol $\Sigma$ represents summation; c() is a pseudo-random sequence, where the pseudo-random sequence is related to the cell identifier; $\left\lfloor \dfrac{n_{\text{SRS}}}{\prod_{b'=b_{\text{hop}}}^{B_{\text{SRS}}} N_{b'}} \right\rfloor$ represents the index of the frequency hopping periodicity corresponding to the reference signal; a mathematical symbol $\llcorner \lrcorner$ represents a floor operation; $n_{\text{SRS}}$ represents a count value of the reference signal; a mathematical symbol $\Pi$ represents a product of a sequence; and a mathematical symbol mod represents a modulo operation.

Optionally, $N_{b_{\text{hop}}} = 1$.

It should be noted that for meanings of the parameters in the foregoing formula (25) and $N_{b_{\text{hop}}} = 1$, refer to the foregoing descriptions of the formula (5) and Table 3. Details are not described herein again.

It should be noted that m in the formula (24) or the formula (25) is irrelevant to a sequence length M. In the formula (24) or the formula (25), an example in which m is an integer ranging from 0 to 7 is used for description, and a value range of m in the formula (24) or the formula (25) is not limited in this application.

In some embodiments, that a start position of a frequency domain resource occupied by each of the M antenna ports is determined based on at least a fourth offset may include: The start position of the frequency domain resource occupied by each of the M antenna ports may be determined based on a partial sounding offset $n_{\text{offset}}^{\text{RPFS}}$.

Optionally, the partial sounding offset $n_{\text{offset}}^{\text{RPFS}}$ may be determined based on a quantity of subcarriers included in each resource block, a frequency hopping bandwidth, an index of a partial sounding start position, a start resource block hopping offset, a frequency scaling factor, and the fourth offset.

For example, the partial sounding offset $n_{\text{offset}}^{\text{RPFS}}$ may satisfy the following formula (26):

$$n_{\text{offset}}^{\text{RPFS}} = N_{\text{SC}}^{\text{RB}} \, m_{\text{SRS},B_{\text{SRS}}} \left( \left( k_F + k_{\text{hop}} + k_{\text{rand}} \right) \bmod P_F \right) / P_F \tag{26}$$

In the formula (26), $k_{\text{rand}}$ represents the fourth offset.

Meanings of other parameters in the formula (26) are similar to those in the formula (4). $N_{\text{sc}}^{\text{RB}}$ is a quantity of subcarriers included in each resource block; $m_{\text{SRS},B_{\text{SRS}}}$ represents the frequency hopping bandwidth, and $m_{\text{SRS},B_{\text{SRS}}}$ is a frequency hopping bandwidth determined based on higher-layer parameters $B_{\text{SRS}}$ and $C_{\text{SRS}}$, and a protocol-predefined table (for example, Table 3); $k_F$ is the index of the partial sounding start position, and $k_F \in \{0, 1, ..., P_F - 1\}$; $k_{\text{hop}}$ represents the start resource block hopping offset; and $P_F$ represents the frequency scaling factor.

In some embodiments, a frequency-domain start position $k_0^{(p_i)}$ of antenna port $p_i$ may satisfy the following formula (27):

$$k_0^{(p_i)} = \bar{k}_0^{(p_i)} + n_{\text{offset}}^{\text{FH}} + n_{\text{offset}}^{\text{RPFS}} \tag{27}$$

In the foregoing formula (27), $\bar{k}_0^{(p_i)}$ satisfies $\bar{k}_0^{(p_i)} = n_{\text{shift}} N_{\text{sc}}^{\text{RB}} + \left( k_{\text{TC}}^{(p_i)} + k_{\text{offset}}^{l'} \right) \bmod K_{\text{TC}}$. $N_{\text{sc}}^{\text{RB}}$ is a quantity of subcarriers included in each resource block. For example, $N_{\text{sc}}^{\text{RB}}$ is 12. $k_{\text{TC}}^{(p_i)}$ represents an index of the comb occupied by antenna port $p_i$.

In the foregoing formula (27), $n_{\text{offset}}^{\text{FH}}$ represents a frequency hopping offset. Optionally, the frequency hopping offset $n_{\text{offset}}^{\text{FH}}$ may satisfy $n_{\text{offset}}^{\text{FH}} = \sum_{b=0}^{B_{\text{SRS}}} m_{\text{SRS},b} N_{\text{sc}}^{\text{RB}} n_b$, where $N_{\text{sc}}^{\text{RB}}$ is the quantity of the subcarriers included in each resource block.

In the foregoing formula (27), $n_{\text{offset}}^{\text{RPFS}}$ may represent a partial sounding offset, and the partial sounding offset

$n_{\text{offset}}^{\text{RPFS}}$ may be determined based on the quantity of the subcarriers included in each resource block, a frequency hopping bandwidth, an index of a partial sounding start position, a start resource block hopping offset, a frequency scaling factor, and the fourth offset, for example, the foregoing formula (26).

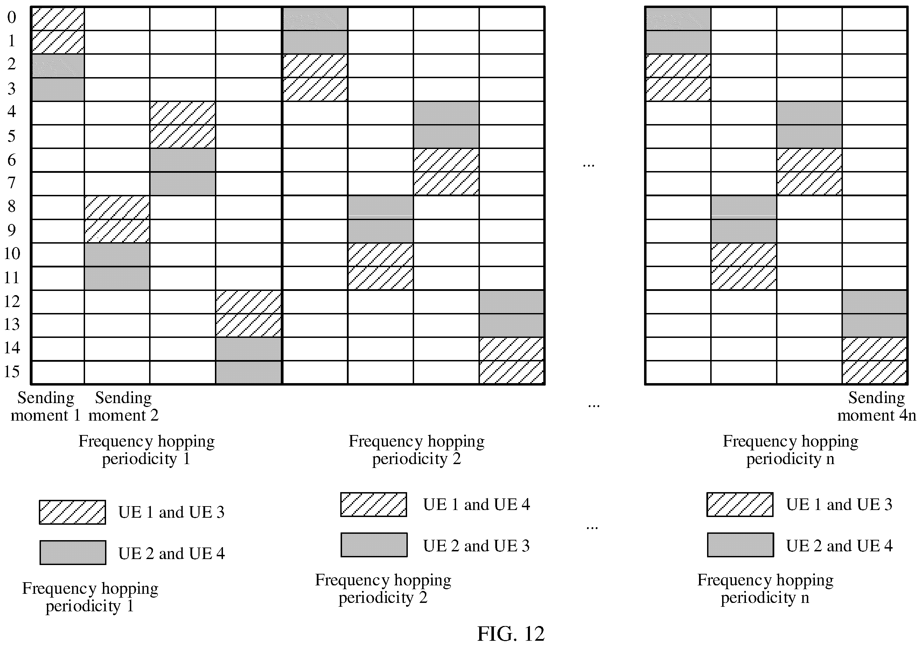

With reference to FIG. 12, the foregoing scenario 2 is used as an example. A start position of a frequency domain resource occupied by each antenna port (antenna port $p_0$ and antenna port $p_1$) of UE 1 to UE 4 is determined based on at least the fourth offset. The start position of the frequency domain resource occupied by each UE may be shown in FIG. 12.

In frequency hopping periodicity 1, the antenna port of UE 1 and the antenna port of UE 3 occupy a start position of a same frequency domain resource, and the antenna port of UE 2 and the antenna port of UE 4 occupy a start position of a same frequency domain resource. In frequency hopping periodicity 2, the antenna port of UE 1 and the antenna port of UE 4 occupy a start position of a same frequency domain resource, and the antenna port of UE 2 and the antenna port of UE 3 occupy a start position of a same frequency domain resource. Similarly, in frequency hopping periodicity n, the antenna port of UE 1 and the antenna port of UE 3 occupy a start position of a same frequency domain resource, and the antenna port of UE 2 and the antenna port of UE 4 occupy a start position of a same frequency domain resource.

UE 1 is used as an example. In frequency hopping periodicity 1, the antenna port of UE 3 causes interference to the antenna port of UE 1. In frequency hopping periodicity 2, the antenna port of UE 4 causes interference to the antenna port of UE 1. It can be learned that different antenna ports cause interference to the antenna port of UE 1 in different frequency hopping periodicities. This brings a good interference randomization effect, can accelerate an interference randomization convergence speed, and can improve channel estimation performance.

According to the communication method shown in FIG. 11, when the start position of the frequency domain resource occupied by the antenna port is determined, the fourth offset is introduced, so that the start position of the frequency domain resource occupied by each antenna port may randomly change in different frequency hopping periodicities, and an antenna port that causes interference to an antenna port of a terminal device also randomly changes, to implement frequency-domain interference randomization. This brings the good interference randomization effect, can accelerate the interference randomization convergence speed, and can improve the channel estimation performance.

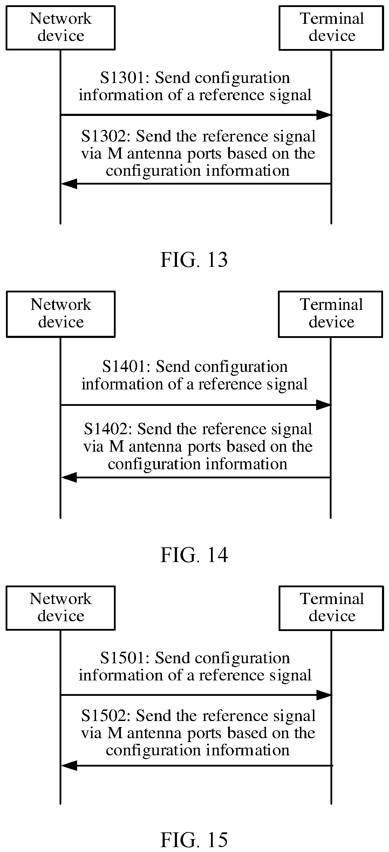

For example, FIG. 13 is a schematic flowchart of a communication method according to an embodiment of this application. The method shown in FIG. 13 and the method shown in FIG. 5 may be parallel solutions, or may be used in combination.

As shown in FIG. 13, the communication method includes the following steps.

S1301: A network device sends configuration information of a reference signal. Correspondingly, a terminal device receives the configuration information of the reference signal.

For specific implementations of S1301 and the configuration information, refer to the corresponding descriptions in S501. Details are not described herein again.

S1302: The terminal device sends the reference signal via M antenna ports based on the configuration information. Correspondingly, the network device receives the reference signal via the M antenna ports based on the configuration information.

For example, M is an integer greater than 0, and the M antenna ports include at least one first antenna port. For specific implementations of M, the M antenna ports, and the first antenna port, refer to the corresponding descriptions in S502. Details are not described herein again.

In some embodiments, a comb occupied by the first antenna port is determined based on at least a first offset.

For example, with reference to the foregoing scenario 1, a comb occupied by one or more of antenna port $p_0$ to antenna port $p_3$ of UE 1 may be determined based on at least the first offset.

Optionally, the first offset may be an integer greater than or equal to 0.

Optionally, that a comb occupied by the first antenna port is determined based on at least a first offset may include: The comb occupied by the first antenna port may be determined based on an initial value of the comb occupied by the first antenna port and the first offset.

Optionally, the initial value of the comb occupied by the first antenna port may be determined based on a comb offset; or the initial value of the comb occupied by the first antenna port may be determined based on a comb quantity and a comb offset.

Optionally, the comb quantity may be a quantity of combs included in a transmit bandwidth of the reference signal.

Optionally, the comb offset may be a reference quantity of combs occupied by the reference signal.

For example, the initial value of the comb occupied by the first antenna port may satisfy the foregoing formula (2).

For example, the comb occupied by the first antenna port may be determined based on the comb offset and the first offset; or the comb occupied by the first antenna port may be determined based on the comb quantity, the comb offset, and the first offset.

For example, the first offset may be determined based on at least a time domain resource occupied by the first antenna port and/or a frequency domain resource occupied by the first antenna port.

Optionally, the time domain resource occupied by the first antenna port may include one or more OFDM symbols.

The one or more OFDM symbols included in the time domain resource occupied by the first antenna port may be determined based on one or more of the following parameters: a system frame number corresponding to the first antenna port, a slot number corresponding to the first antenna port, and an OFDM symbol number corresponding to the first antenna port.

A quantity of OFDM symbols included in the time domain resource occupied by the first antenna port is not limited in this application.

In a possible design manner, an index of a frequency hopping periodicity in which the time domain resource is located is determined based on the time domain resource occupied by the first antenna port; or a relative index of the time domain resource in one corresponding frequency hopping periodicity is determined based on the time domain resource occupied by the first antenna port, where the relative index may be defined as follows: A relative index of a $k^{th}$ time of sending in one frequency hopping periodicity is k-1.

Optionally, time domain resources occupied by the M antenna ports may be the same or different.

Optionally, the frequency domain resource occupied by the first antenna port may include one or more sub-bandwidths. The one or more sub-bandwidths included in the frequency domain resource occupied by the first antenna port may be determined based on one or more of the following parameters: an index of a frequency hopping bandwidth corresponding to the first antenna port, and an index of a transmit bandwidth corresponding to the first antenna port.

In a possible design manner, an index of a frequency hopping bandwidth in which the frequency domain resource is located is determined based on the frequency domain resource occupied by the first antenna port, or an index of one subband corresponding to the frequency domain resource is determined based on the frequency domain resource occupied by the first antenna port, where the index of the subband may be defined as follows: A sounding bandwidth of the first antenna port corresponds to a*b RBs, and may be divided into a subbands whose granularities are b, where the subbands are numbered in ascending order of frequencies, including {0, ..., a-1}.

Optionally, frequency domain resources occupied by the M antenna ports may be the same or different.

In some embodiments, the first offset may include a first random number and/or a fifth random number.

Optionally, the first random number may be determined based on at least the time domain resource occupied by the first antenna port. For example, the first random number may be denoted by $Q_1$.

For example, the first random number may be a random number greater than 0.

Optionally, the fifth random number may be determined based on at least the frequency domain resource occupied by the first antenna port. For example, the fifth random number may be denoted by $Q_3$.

For example, the fifth random number may be a random number greater than 0.

In this way, the comb occupied by the first antenna port may be determined based on the first random number and/or the fifth random number.

For example, the comb occupied by the first antenna port may be determined based on the comb quantity, the comb offset, and the first random number; the comb occupied by the first antenna port may be determined based on the comb quantity, the comb offset, and the fifth random number; or the comb occupied by the first antenna port may be determined based on the comb quantity, the comb offset, the first random number, and the fifth random number.

In some embodiments, that the first random number is determined based on at least the time domain resource occupied by the first antenna port may include: The first random number is determined based on the time domain resource occupied by the first antenna port and a pseudo-random sequence.

Optionally, the pseudo-random sequence may be $c()$. For a specific implementation of the pseudo-random sequence, refer to the corresponding descriptions in S502. Details are not described herein again.

Optionally, the first random number is determined based on the time domain resource occupied by the first antenna port and the pseudo-random sequence, and the first random number may be further determined based on one or more of the following parameters: a quantity of slots included in each system frame, and a quantity of OFDM symbols included in each slot. In addition, a value range of the first random number may alternatively be determined based on the comb quantity and the comb offset.

For example, in this application, the quantity of the slots included in each system frame may be a quantity of slots included in one system frame.

For example, in this application, the quantity of the OFDM symbols included in each slot may be a quantity of OFDM symbols included in one slot.

Optionally, the first random number may satisfy the formula (6), the formula (7), the formula (8), or the formula (9) in S502. Details are not described herein again.

In the formula (6), the formula (7), the formula (8), or the formula (9), $Q_1$ represents the first random number, a mathematical symbol represents $\Sigma$ summation, a mathematical symbol mod represents a modulo operation, $c()$ is the pseudo-random sequence, $n_f$ represents the system frame number corresponding to the first antenna port (or $n_f$ represents a system frame number of the time domain resource occupied by the first antenna port), $N_{slot}^{frame}$ represents the quantity of the slots in each system frame, $N_{\mathrm{symb}}^{\mathrm{slot}}$ represents the quantity of the OFDM symbols in each slot, $n_{\mathrm{s,f}}^{\mu}$ represents the slot number corresponding to the first antenna port (or $n_{\mathrm{s,f}}^{\mu}$ represents a slot number of the time domain resource occupied by the first antenna port), $l_0$ represents an index of a start OFDM symbol in the one or more OFDM symbols included in the time domain resource occupied by the first antenna port (or $l_0$ represents the index of the start OFDM symbol), $l'$ represents a relative index of one OFDM symbol in the one or more OFDM symbols included in the time domain resource occupied by the first antenna port (or $l'$ represents a relative index of an OFDM symbol of the time domain resource occupied by the first antenna port), and $K_{\mathrm{TC}}$ represents the comb quantity.

In this application, the comb occupied by the first antenna port of the terminal device is determined based on the first random number, so that a frequency domain resource (the comb) occupied by the terminal device may randomly change at different sending moments. In this way, a terminal device that causes interference to the terminal device randomly changes. Therefore, frequency-domain interference randomization is implemented, and a better interference randomization effect can be achieved.

In some other embodiments, that the first random number is determined based on at least the time domain resource occupied by the first antenna port may include: The first random number is determined based on one of a plurality of first correspondences and the time domain resource occupied by the first antenna port. Optionally, the first random number may be replaced with a first variable.

Optionally, one of the plurality of first correspondences may be indicated by the network device to the terminal device. For example, the configuration information of the reference signal may include indication information indicating one of the plurality of first correspondences, and/or one of the plurality of first correspondences.

For example, the network device may select one first correspondence from the plurality of first correspondences, and indicate the selected first correspondence to the terminal device.

Optionally, one first correspondence may include a correspondence between at least one first random number and at least one time domain resource.

For example, the at least one first random number corresponds one-to-one to the at least one time domain resource. For example, the time domain resource may be an OFDM symbol, a system frame number, or a slot number.

For example, the terminal device may obtain, from the correspondence between at least one first random number and at least one time domain resource based on the time domain resource occupied by the first antenna port, the first random number corresponding to the time domain resource occupied by the first antenna port.

For example, first correspondence 1 includes: First random number 1 corresponds to time domain resource 1, and first random number 2 corresponds to time domain resource 2. If the first antenna port of the terminal device occupies time domain resource 1, the terminal device obtains, based on first correspondence 1 and time domain resource 1 occupied by the first antenna port of terminal device 1, that the first random number is first random number 1.

For example, it is assumed that each first correspondence (which may be referred to as a pattern (pattern)) includes correspondences between n time domain resources and n first random numbers. If first random numbers sequentially corresponding to n time domain resources $\{y_1, y_2, ...y_n\}$ are $\{x_1, x_2, ...x_n\}$ for a $k$th first correspondence, first random numbers sequentially corresponding to n time domain resources are $\{x_{(1+a)\bmod n}, x_{(2+a)\bmod n}, ...x_{(m+a)\bmod n}\}$ for a $(k+1)$th first correspondence. A value of $\{x_1, x_2, ...x_n\}$ belongs to $\{0, 1, ..., K_{TC}-1\}$, and $K_{TC}$ is a comb number. Optionally, a=1.

In this way, on different time domain resources, the first random number obtained by the terminal device randomly changes, and then the comb occupied by the first antenna port of the terminal device is determined based on the first random number, so that the comb occupied by the terminal device randomly changes at different sending moments.

Optionally, one frequency hopping periodicity may include at least one time of reference signal sending, and the correspondence between at least one first random number and at least one time domain resource includes: a correspondence between the at least one first random number and a relative number of the at least one time of reference signal sending in the frequency hopping periodicity.

For example, the at least one first random number corresponds one-to-one to a number of the at least one time of reference signal sending.

For example, the terminal device may obtain, based on a number of a current time of reference signal sending via the first antenna port, the first random number from the correspondence between the at least one first random number and a relative number of the at least one time of reference signal sending in the frequency hopping periodicity.

Alternatively, optionally, the correspondence between at least one first random number and at least one time domain resource may include: a correspondence between the at least one first random number and an index of at least one frequency hopping periodicity.

For example, the at least one first random number corresponds one-to-one to the index of the at least one frequency hopping periodicity.

For example, the terminal device may obtain the first random number from the correspondence between the at least one first random number and an index of at least one frequency hopping periodicity based on the index of the frequency hopping periodicity in which the time domain resource occupied by the first antenna port is located.

Optionally, the network device may indicate different first correspondences to terminal devices in different cells.

In this way, the network device indicates different first correspondences to terminal devices in different cells, so that a terminal device that causes interference to the terminal device randomly changes, to implement the frequency-domain interference randomization, and achieve the better interference randomization effect.

In some embodiments, when the first offset is the first random number (the first random number is determined based on the time domain resource occupied by the first antenna port), an index $k_{\mathrm{TC}}^{(p_i)}$ that is of a comb occupied by antenna port $p_i$ and that is determined based on the first offset may satisfy the following formula:

$$k_{\mathrm{TC}}^{(p_i)} = \left(\overline{k}_{\mathrm{TC}} + K_{\mathrm{TC}}/2 + Q_1\right) \bmod K_{\mathrm{TC}}, \text{ or } k_{\mathrm{TC}}^{(p_i)} = (\overline{k}_{\mathrm{TC}} + Q_1) \bmod K_{\mathrm{TC}},$$

where $\overline{k}_{\mathrm{TC}}$ represents the comb offset, $k_{\mathrm{TC}} \in \{0,1, ..., K_{\mathrm{TC}} - 1\}$, $K_{\mathrm{TC}}$ represents the comb quantity, and $Q_1$ represents the first random number or the first offset.

For example, the index $k_{\mathrm{TC}}^{(p_i)}$ that is of the comb occupied by antenna port $p_i$ of the terminal device and that is determined based on the first random number may satisfy the formula (10) in S502, where $Q_1$ represents the first random number or the first offset. For a specific implementation, refer to the descriptions of the formula (10) in S502. Details are not described herein again.

For example, after the comb occupied by the first antenna port is determined based on the first offset (the first offset is determined based on the time domain resource occupied by the first antenna port, and the first offset is the first random number), for a comb occupied by an antenna port of each terminal device, refer to the descriptions of Table 6 and FIG. 6 in S502. Details are not described herein again.

In some embodiments, that the fifth random number is determined based on at least the frequency domain resource occupied by the first antenna port may include: The fifth random number is determined based on the frequency domain resource occupied by the first antenna port and a pseudo-random sequence.

Optionally, the pseudo-random sequence may be c().

Optionally, the fifth random number may satisfy a formula (28) or a formula (29).

$$Q_3 = \left(\sum_{m=0}^{7} c(8k + m) \cdot 2^m\right) \bmod K_{TC} \tag{28}$$

$$Q_3 = \sum_{m=0}^{7} c(8k + m) \cdot 2^m \tag{29}$$

In the formula (28) or the formula (29), $Q_3$ represents the fifth random number, the mathematical symbol $\Sigma$ represents summation, the mathematical symbol mod represents a modulo operation, $c()$ is the pseudo-random sequence, $k$ represents an index of a frequency hopping bandwidth and/or an index of a transmit bandwidth that correspond/corresponds to the frequency domain resource occupied by the first antenna port, and $K_{TC}$ represents the comb quantity.

It should be noted that m in the formula (28) or the formula (29) is irrelevant to a sequence length M. In the formula (28) or the formula (29), an example in which m is an integer ranging from 0 to 7 is used for description, and a value range of m in the formula (28) or the formula (29) is not limited in this application.

In some other embodiments, that the fifth random number is determined based on at least the frequency domain resource occupied by the first antenna port may include: The fifth random number is determined based on one of a plurality of second correspondences and the frequency domain resource occupied by the first antenna port.

Optionally, one of the plurality of second correspondences may be indicated by the network device to the terminal device. For example, the configuration information of the reference signal may include indication information indicating one of the plurality of second correspondences, and/or one of the plurality of second correspondences.

For example, the network device may select one second correspondence from the plurality of second correspondences, and indicate the selected second correspondence to the terminal device.

Optionally, one second correspondence may include a correspondence between at least one fifth random number and at least one frequency domain resource.

For example, the at least one fifth random number corresponds one-to-one to the at least one frequency domain resource.

For example, the terminal device may obtain, from the correspondence between at least one fifth random number and at least one frequency domain resource based on the frequency domain resource occupied by the first antenna port, the fifth random number corresponding to the frequency domain resource occupied by the first antenna port.

For example, a specific implementation of the second correspondence is similar to that of the first correspondence. For details, refer to the descriptions of the first correspondence. Details are not described herein again.

In this way, on different frequency domain resources, the fifth random number obtained by the terminal device randomly changes, and then the comb occupied by the first antenna port of the terminal device is determined based on the fifth random number, so that the frequency domain resource (comb) occupied by the terminal device randomly changes at different sending moments.

Optionally, the network device may indicate different second correspondences to terminal devices in different cells.

In this way, the network device indicates different second correspondences to terminal devices in different cells, so that a terminal device that causes interference to the terminal device randomly changes, to implement the interference randomization, and achieve the better interference randomization effect.

In some embodiments, when the first offset is the fifth random number (the first offset is determined based on the frequency domain resource occupied by the first antenna port), an index $k_{\text{TC}}^{(p_i)}$ that is of a comb occupied by antenna port $p_i$ and that is determined based on the fifth offset may satisfy the following formula:

$$k_{\text{TC}}^{(p_i)} = \left(\overline{k}_{\text{TC}} + K_{\text{TC}}/2 + Q_3\right) \bmod K_{\text{TC}}, \text{ or } k_{\text{TC}}^{(p_i)} = \left(\overline{k}_{\text{TC}} + Q_3\right) \bmod K_{\text{TC}},$$ where $k_{\text{TC}}$ represents the comb offset, $\overline{k}_{\text{TC}} \in \{0, 1, ..., K_{\text{TC}} - 1\}$, $K_{\text{TC}}$ represents the comb quantity, and $Q_3$ represents the fifth random number or the first offset.

For example, the index $k_{\text{TC}}^{(p_i)}$ that is of the comb occupied by antenna port $p_i$ of the terminal device and that is determined based on the fifth random number may satisfy the following formula (30):

$$k_{\text{TC}}^{(p_i)} =$$
$$\begin{cases} \left(\overline{k}_{\text{TC}} + K_{\text{TC}}/2 + Q_3\right) \bmod K_{\text{TC}} & N_{\text{ap}}^{\text{SRS}} = 4, p_i \in \{1001, 1003\}, n_{\text{SRS}}^{\text{cs,max}} = 6 \\ \left(\overline{k}_{\text{TC}} + K_{\text{TC}}/2 + Q_3\right) \bmod K_{\text{TC}} & N_{\text{ap}}^{\text{SRS}} = 4, p_i \in \{1001, 1003\}, n_{\text{SRS}}^{\text{cs}} \in \left\{n_{\text{SRS}}^{\text{cs,max}}/2, ..., n_{\text{SRS}}^{\text{cs,max}} - 1\right\} \quad (30) \\ \left(\overline{k}_{\text{TC}} + Q_3\right) \bmod K_{\text{TC}} & \text{otherwise (otherwise)} \end{cases}$$

Similar to the foregoing formula (10), in the formula (30), $\overline{k}_{\text{TC}}$ represents the comb offset, $k_{\text{TC}} \in \{0, 1, ..., K_{\text{TC}} - 1\}$, $K_{\text{TC}}$ represents the comb quantity, and $Q_3$ represents the fifth random number or the first offset.

With reference to Table 11, the following describes a comb occupied by an antenna port of each terminal device after the comb occupied by the first antenna port is determined based on at least the fifth random number.

The foregoing scenario 1 is used as an example. The comb occupied by each antenna port (antenna port $p_0$ to antenna port $p_3$) of UE 1 to UE 8 is determined based on at least the fifth random number. The comb occupied by the antenna port of each UE may be shown in Table 11.

On frequency domain resource 1, antenna ports of UE 1, UE 2, UE 5, and UE 6 occupy comb 1 and comb 3, and antenna ports of UE 3, UE 4, UE 7, and UE 8 occupy same comb 2 and same comb 4. UE 1 is used as an example. The antenna ports of UE 1 suffer interference, on comb 1 and comb 3, from antenna ports of UE 5 and UE 6.

It should be noted that, in Table 11, an example in which antenna port $p_0$ and antenna port $p_2$ of each UE occupy one comb, and antenna port $p_1$ and antenna port $p_3$ occupy one comb is used. For example, the comb occupied by antenna port $p_0$ and antenna port $p_2$ is a comb with a smaller comb index in two combs occupied by the UE, and the comb occupied by antenna port $p_1$ and antenna port $p_3$ is a comb with a larger comb index in the two combs occupied by the UE. For ease of understanding, Table 11 shows the UEs, corresponding base sequences, and corresponding combs, but do not show the antenna ports.

On frequency domain resource 2, antenna ports of UE 1, UE 2, UE 7, and UE 8 occupy comb 1 and comb 3, and antenna ports of UE 3, UE 4, UE 5, and UE 6 occupy comb 2 and comb 4. The antenna ports of UE 1 suffer interference, on comb 1 and comb 3, from antenna ports of UE 7 and UE 8.

On frequency domain resource n, the antenna ports of UE 1, UE 2, UE 7, and UE 8 occupy comb 2 and comb 4, and the antenna ports of UE 3, UE 4, UE 5, and UE 6 occupy the comb 7 and the comb 8. The antenna ports of UE 1 suffer interference, on comb 2 and comb 4, from the antenna ports of UE 7 and UE 8.

Optionally, in Table 11, frequency domain resource 1 may be replaced with frequency domain unit 1, subband 1, frequency hopping bandwidth 1, frequency hopping bandwidth 1, or the like. Frequency domain resource 2 to frequency domain resource n are similar to frequency domain resource 1, and details are not described one by one.

**Table 11**

| Frequency domain resource 1 | | | | |
|---|---|---|---|---|
| Cell 1 | UE 1: $r_1$, combs 1 and 3 | UE 2: $r_1$, combs 1 and 3 | UE 3: $r_1$, combs 2 and 4 | UE 4: $r_1$, combs 2 and 4 |
| Cell 2 | UE 5: $r_2$, combs 1 and 3 | UE 6: $r_2$, combs 1 and 3 | UE 7: $r_2$, combs 2 and 4 | UE 8: $r_2$, combs 2 and 4 |
| Frequency domain resource 2 | | | | |
| Cell 1 | UE 1: $r_1$, combs 1 and 3 | UE 2: $r_1$, combs 1 and 3 | UE 3: $r_1$, combs 2 and 4 | UE 4: $r_1$, combs 2 and 4 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |
| ... | | | | |
| Frequency domain resource n | | | | |
| Cell 1 | UE 1: $r_1$, combs 2 and 4 | UE 2: $r_1$, combs 2 and 4 | UE 3: $r_1$, combs 1 and 3 | UE 4: $r_1$, combs 1 and 3 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |

In this way, combs occupied by the antenna ports of UE 1 randomly change on different frequency domain resources, so that a UE that causes interference to UE 1 randomly changes. UEs that cause interference to UE 1 on some frequency domain resources are UE 5 and UE 6. UEs that cause interference to UE 1 on some frequency domain resources are UE 7 and UE 8. An antenna port that causes interference to the antenna port of UE 1 randomly changes, to achieve the better interference randomization effect.

In some embodiments, when the first offset includes the first random number and the fifth random number (the first random number is determined based on the time domain resource occupied by the first antenna port, and the fifth random number is determined based on the frequency domain resource occupied by the first antenna port), an index $k_{\mathrm{TC}}^{(p_i)}$ that is of the comb occupied by antenna port $p_i$ and that is determined based on the comb quantity, the comb offset, the first random number, and the fifth random number may satisfy the following formula: $k_{\mathrm{TC}}^{(p_i)} = (\bar{k}_{\mathrm{TC}} + K_{\mathrm{TC}}/2 + Q_1 + Q_3)$ mod $K_{\mathrm{TC}}$, or $k_{\mathrm{TC}}^{(p_i)} = (\bar{k}_{\mathrm{TC}} + Q_1 + Q_3) \bmod K_{\mathrm{TC}}$, where $\bar{k}_{\mathrm{TC}}$ represents the comb offset, $\bar{k}_{\mathrm{TC}} \in \{0, 1, ..., K_{\mathrm{TC}} - 1\}$, $K_{\mathrm{TC}}$ represents the comb quantity, $Q_1$ represents the first random number, and $Q_3$ represents the fifth random number.

For example, the index $k_{\mathrm{TC}}^{(p_i)}$ that is of the comb occupied by antenna port $p_i$ of the terminal device and that is determined based on the comb quantity, the comb offset, the first random number, and the fifth random number may satisfy the following formula (31):

$$k_{\mathrm{TC}}^{(p_i)} =$$

$$\begin{cases} (\bar{k}_{\mathrm{TC}} + K_{\mathrm{TC}}/2 + Q_1 + Q_3) \bmod K_{\mathrm{TC}} & N_{\mathrm{ap}}^{\mathrm{SRS}} = 4, p_i \in \{1001, 1003\}, n_{\mathrm{SRS}}^{\mathrm{cs,max}} = 6 \\ (\bar{k}_{\mathrm{TC}} + K_{\mathrm{TC}}/2 + Q_1 + Q_3) \bmod K_{\mathrm{TC}} & N_{\mathrm{ap}}^{\mathrm{SRS}} = 4, p_i \in \{1001, 1003\}, n_{\mathrm{SRS}}^{\mathrm{cs}} \in \{n_{\mathrm{SRS}}^{\mathrm{cs,max}}/2, ..., n_{\mathrm{SRS}}^{\mathrm{cs,max}} - 1\} \\ (\bar{k}_{\mathrm{TC}} + Q_1 + Q_3) \bmod K_{\mathrm{TC}} & \text{otherwise (otherwise)} \end{cases} \quad (31)$$

Similar to the foregoing formula (10), in the formula (31), $\bar{k}_{\mathrm{TC}}$ represents the comb offset, $\bar{k}_{\mathrm{TC}} \in \{0, 1, ..., K_{\mathrm{TC}} - 1\}$, $K_{\mathrm{TC}}$ represents the comb quantity, $Q_1$ represents the first random number, and $Q_3$ represents the fifth random number.

The following describes a comb occupied by an antenna port of each terminal device after the comb occupied by the first antenna port is determined based on the first random number and the fifth random number.

The foregoing scenario 1 is used as an example. The comb occupied by each antenna port (antenna port $p_0$ to antenna port $p_3$) of UE 1 to UE 8 is determined based on the first random number and the fifth random number. The comb occupied by the antenna port of each UE may be a combination of Table 6 and Table 11, for example, as shown in Table 12.

On frequency domain resource 1 and at sending moment 1, antenna ports of UE 1, UE 2, UE 5, and UE 6 occupy comb 1 and comb 3, and antenna ports of UE 3, UE 4, UE 7, and UE 8 occupy same comb 2 and same comb 4. UE 1 is used as an example. The antenna ports of UE 1 suffer interference, on comb 1 and comb 3, from antenna ports of UE 5 and UE 6.

On frequency domain resource 2 and at sending moment 2, antenna ports of UE 1, UE 2, UE 7, and UE 8 occupy comb 1 and comb 3, and antenna ports of UE 3, UE 4, UE 5, and UE 6 occupy comb 2 and comb 4. The antenna ports of UE 1 suffer interference, on comb 1 and comb 3, from antenna ports of UE 7 and UE 8.

On frequency domain resource n and at sending moment n, the antenna ports of UE 1, UE 2, UE 7, and UE 8 occupy comb 2 and comb 4, and the antenna ports of UE 3, UE 4, UE 5, and UE 6 occupy comb 7 and comb 8. The antenna ports of UE 1 suffer interference, on comb 2 and comb 4, from the antenna ports of UE 7 and UE 8.

**Table 12**

| Sending moment 1 and frequency domain resource 1 | | | | |
|---|---|---|---|---|
| Cell 1 | UE 1: $r_1$, combs 1 and 3 | UE 2: $r_1$, combs 1 and 3 | UE 3: $r_1$, combs 2 and 4 | UE 4: $r_1$, combs 2 and 4 |
| Cell 2 | UE 5: $r_2$, combs 1 and 3 | UE 6: $r_2$, combs 1 and 3 | UE 7: $r_2$, combs 2 and 4 | UE 8: $r_2$, combs 2 and 4 |
| Sending moment 2 and frequency domain resource 2 | | | | |
| Cell 1 | UE 1: $r_1$, combs 1 and 3 | UE 2: $r_1$, combs 1 and 3 | UE 3: $r_1$, combs 2 and 4 | UE 4: $r_1$, combs 2 and 4 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |
| ... | | | | |
| Sending moment n and frequency domain resource n | | | | |
| Cell 1 | UE 1: $r_1$, combs 2 and 4 | UE 2: $r_1$, combs 2 and 4 | UE 3: $r_1$, combs 1 and 3 | UE 4: $r_1$, combs 1 and 3 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |

In this way, combs occupied by the antenna ports of UE 1 randomly change at different sending moments and on different frequency domain resources, so that a UE that causes interference to UE 1 randomly changes. UEs that cause interference to UE 1 on some frequency domain resources and at some sending moments are UE 5 and UE 6. UEs that cause interference to UE 1 on some frequency domain resources and at some sending moments are UE 7 and UE 8. An antenna port that causes interference to the antenna port of UE 1 randomly changes, to achieve the better interference randomization effect.

In some other embodiments, the comb occupied by the first antenna port may be determined based on one of a plurality of tenth correspondences and the time domain resource occupied by the first antenna port.

Optionally, one of the plurality of tenth correspondences may be indicated by the network device to the terminal device. For example, the configuration information of the reference signal may include indication information indicating one of the plurality of tenth correspondences, and/or one of the plurality of tenth correspondences.

For example, the network device may select one first correspondence from the plurality of tenth correspondences, and indicate the selected tenth correspondence to the terminal device.

Optionally, the network device may indicate different tenth correspondences to terminal devices in different cells.

Optionally, one tenth correspondence may include a correspondence between at least one comb value and at least one time domain resource.

For example, at least one comb corresponds one-to-one to at least one time domain resource.

For example, it is assumed that each tenth correspondence (which may be referred to as a pattern (pattern)) includes correspondences between n time domain resources and n comb values. If first random numbers sequentially corresponding to n time domain resources $\{y_1, y_2, ... y_n\}$ are $\{cb_1, cb_2, ... cb_n\}$ for a $k^{th}$ first correspondence, comb values sequentially corresponding to n time domain resources are $\{cb_{(1+a)modn}, cb_{(2+a)modn}, ...cb_{(M+a)modn}\}$ for a $(k+1)^{th}$ first correspondence. A value of $\{cb_1, cb_2, ...cb_n\}$ belongs to $\{0, 1, ..., K_{TC}-1\}$, and $K_{TC}$ is a comb number. Optionally, a=1.

For example, the terminal device may obtain, from the correspondence between at least one comb and at least one time domain resource based on the time domain resource occupied by the first antenna port, the comb occupied by the first antenna port.

The plurality of tenth correspondences may be shown in Table 13. In Table 13, for example, there are four tenth correspondences, each tenth correspondence includes four time domain resources, and there are four combs. Tenth correspondence 1 to tenth correspondence 4 are different from each other. For details, refer to Table 13.

For example, in Table 13, sending moment 1 may be replaced with OFDM symbol 1, system frame number 1, slot number 1, time domain resource 1, or time unit 1. Sending moment 2 to sending moment 4 are similar to sending moment 1, and details are not described one by one.

Optionally, in Table 13, the tenth correspondence further includes sending moment 1 to sending moment 8, and combs respectively corresponding to sending moment 5 to sending moment 8 are the same as combs respectively corresponding to sending moment 1 to sending moment 4.

For example, in tenth correspondence 1, sending moment 1 to sending moment 4 respectively correspond to comb 1 to comb 4, and sending moment 5 to sending moment 8 respectively correspond to comb 1 to comb 4.

**Table 13**

| Tenth correspondence 1 (or pattern (pattern) 1) | | | |
|---|---|---|---|
| Sending moment 1 | Sending moment 2 | Sending moment 3 | Sending moment 4 |
| Comb 1 | Comb 3 | Comb 2 | Comb 4 |
| Tenth correspondence 2 | | | |
| Sending moment 1 | Sending moment 2 | Sending moment 3 | Sending moment 4 |
| Comb 3 | Comb 2 | Comb 4 | Comb 1 |
| Tenth correspondence 3 | | | |
| Sending moment 1 | Sending moment 2 | Sending moment 3 | Sending moment 4 |
| Comb 2 | Comb 4 | Comb 1 | Comb 3 |
| Tenth correspondence 4 | | | |
| Sending moment 1 | Sending moment 2 | Sending moment 3 | Sending moment 4 |
| Comb 4 | Comb 1 | Comb 3 | Comb 2 |

In this way, the terminal device obtains, by using one of the plurality of tenth correspondences and the time domain resource occupied by the first antenna port, the comb occupied by the first antenna port, so that combs occupied at different sending moments change randomly. The network device allocates different tenth correspondences (patterns) to terminal devices in different cells, so that a terminal device that causes interference to the terminal device randomly changes, to implement the frequency-domain interference randomization, and achieve the better interference randomization effect.

In some other embodiments, the comb occupied by the first antenna port may be determined based on one of a plurality of eleventh correspondences and the frequency domain resource occupied by the first antenna port.

Optionally, one of the plurality of eleventh correspondences may be indicated by the network device to the terminal device. For example, the configuration information of the reference signal may include indication information indicating one of the plurality of eleventh correspondences, and/or one of the plurality of eleventh correspondences.

For example, the network device may select one eleventh correspondence from the plurality of eleventh correspondences, and indicate the selected eleventh correspondence to the terminal device.

Optionally, the network device may indicate different eleventh correspondences to terminal devices in different cells.

Optionally, one eleventh correspondence may include a correspondence between at least one comb and at least one frequency domain resource.

For example, the at least one comb corresponds one-to-one to the at least one frequency domain resource.

For example, it is assumed that each tenth correspondence (which may be referred to as a pattern (pattern)) includes correspondences between n frequency domain resources and n comb values. If first random numbers sequentially corresponding to n frequency domain resources $\{y_1, y_2, ...y_n\}$ are $\{cb_1, cb_2, ...cb_n\}$ for a $k^{th}$ first correspondence, comb values sequentially corresponding to n frequency domain resources are $\{cb_{(1+a)modn}, cb_{(2+a)modn}, ...cb_{(M+a)modn}\}$ for a $(k+1)^{th}$ first correspondence. A value of $\{cb_1, cb_2, ...cb_n\}$ belongs to $\{0, 1, ..., K_{TC}-1\}$, and $K_{TC}$ is a comb number. Optionally, a=1.

For example, the terminal device may obtain, from the correspondence between at least one comb and at least one frequency domain resource based on the frequency domain resource occupied by the first antenna port, the comb occupied by the first antenna port.

The plurality of eleventh correspondences may be shown in Table 14. In Table 14, for example, there are four eleventh correspondences, each eleventh correspondence includes four time domain resources, and there are four combs. Eleventh correspondence 1 to eleventh correspondence 4 are different from each other. For details, refer to Table 14.

Optionally, in Table 14, frequency domain resource 1 may be replaced with frequency domain unit 1, subband 1, frequency hopping bandwidth 1, frequency hopping bandwidth 1, or the like. Frequency domain resource 2 to frequency domain resource 4 are similar to frequency domain resource 1, and details are not described one by one.

Optionally, in Table 14, the eleventh correspondence further includes frequency domain resource 1 to frequency domain resource 8, and combs respectively corresponding to frequency domain resource 5 to frequency domain resource 8 are the same as combs respectively corresponding to frequency domain resource 1 to frequency domain resource 4.

**Table 14**

| Eleventh correspondence 1 (or pattern (pattern) 1) | | | |
|---|---|---|---|
| Frequency domain resource 1 | Frequency domain resource 2 | Frequency domain resource 3 | Frequency domain resource 4 |
| Comb 1 | Comb 3 | Comb 2 | Comb 4 |
| Eleventh correspondence 2 | | | |
| Frequency domain resource 1 | Frequency domain resource 2 | Frequency domain resource 3 | Frequency domain resource 4 |
| Comb 3 | Comb 2 | Comb 4 | Comb 1 |
| Eleventh correspondence 3 | | | |
| Frequency domain resource 1 | Frequency domain resource 2 | Frequency domain resource 3 | Frequency domain resource 4 |
| Comb 2 | Comb 4 | Comb 1 | Comb 3 |
| Eleventh correspondence 4 | | | |
| Frequency domain resource 1 | Frequency domain resource 2 | Frequency domain resource 3 | Frequency domain resource 4 |
| Comb 4 | Comb 1 | Comb 3 | Comb 2 |

In this way, the terminal device obtains, by using one of the plurality of eleventh correspondences and the frequency domain resource occupied by the first antenna port, the comb occupied by the first antenna port, so that combs occupied on different frequency resources change randomly. The network device allocates different eleventh correspondences (patterns) to terminal devices in different cells, so that a terminal device that causes interference to the terminal device randomly changes, to implement the interference randomization, and achieve the better interference randomization effect.

In some other embodiments, the comb occupied by the first antenna port may be determined based on one of a plurality of twelfth correspondences, and the time domain resource and the frequency domain resource that are occupied by the first antenna port.

Optionally, one of the plurality of twelfth correspondences may be indicated by the network device to the terminal device. For example, the configuration information of the reference signal may include indication information indicating one of the plurality of twelfth correspondences, and/or one of the plurality of twelfth correspondences.

For example, the network device may select one twelfth correspondence from the plurality of twelfth correspondences, and indicate the selected twelfth correspondence to the terminal device.

Optionally, the network device may indicate different twelfth correspondences to terminal devices in different cells.

Optionally, one twelfth correspondence may include a correspondence between at least one comb, at least one time domain resource, and at least one frequency domain resource.

For example, the at least one comb corresponds one-to-one to the at least one time domain resource and the at least one frequency domain resource.

For example, the terminal device may obtain, from the correspondence between at least one comb, at least one time domain resource, and at least one frequency domain resource based on the time domain resource and the frequency domain resource that are occupied by the first antenna port, the comb occupied by the first antenna port.

The plurality of twelfth correspondences may be a combination of Table 13 and Table 14, for example, as shown in Table 15.

In Table 15, for example, there are four twelfth correspondences, each twelfth correspondence includes four time domain resources and four frequency domain resources, and there are four combs. Twelfth correspondence 1 to twelfth correspondence 4 are different from each other. For details, refer to Table 15.

**Table 15**

| Twelfth correspondence 1 (or pattern (pattern) 1) | | | |
|---|---|---|---|
| Frequency domain resource 1 and sending moment 1 | Frequency domain resource 2 and sending moment 2 | Frequency domain resource 3 and sending moment 3 | Frequency domain resource 4 and sending moment 4 |
| Comb 1 | Comb 3 | Comb 2 | Comb 4 |
| Twelfth correspondence 2 | | | |
| Frequency domain resource 1 and sending moment 1 | Frequency domain resource 2 and sending moment 2 | Frequency domain resource 3 and sending moment 3 | Frequency domain resource 4 and sending moment 4 |
| Comb 3 | Comb 2 | Comb 4 | Comb 1 |
| Twelfth correspondence 3 | | | |
| Frequency domain resource 1 and sending moment 1 | Frequency domain resource 2 and sending moment 2 | Frequency domain resource 3 and sending moment 3 | Frequency domain resource 4 and sending moment 4 |
| Comb 2 | Comb 4 | Comb 1 | Comb 3 |
| Twelfth correspondence 4 | | | |
| Frequency domain resource 1 and sending moment 1 | Frequency domain resource 2 and sending moment 2 | Frequency domain resource 3 and sending moment 3 | Frequency domain resource 4 and sending moment 4 |
| Comb 4 | Comb 1 | Comb 3 | Comb 2 |

In this way, the terminal device obtains, by using one of the plurality of twelfth correspondences and the frequency domain resource and the time domain resource that are occupied by the first antenna port, the comb occupied by the first antenna port, so that the comb occupied by the first antenna port randomly changes on different frequency domain resources and time domain resources. The network device allocates different twelfth correspondences (patterns) to terminal devices in different cells, so that a terminal device that causes interference to the terminal device randomly changes, to implement the interference randomization, and achieve the better interference randomization effect.

In a possible design method, the M antenna ports may further include at least one second antenna port. For descriptions of the second antenna port, refer to the corresponding descriptions in S502. Details are not described herein again.

Optionally, a comb occupied by the second antenna port may be determined based on at least a second offset.

Optionally, the second offset is different from the first offset.

For example, the second offset may be an integer greater than 0 or equal to 0.

Optionally, that a comb occupied by the second antenna port is determined based on at least a second offset may include: The comb occupied by the second antenna port may be determined based on an initial value of the comb occupied by the second antenna port and the second offset.

Optionally, the initial value of the comb occupied by the second antenna port may be determined based on a comb offset; or the initial value of the comb occupied by the second antenna port may be determined based on a comb quantity and a comb offset.

For example, the initial value of the comb occupied by the second antenna port may satisfy the foregoing formula (2).

For example, the comb occupied by the second antenna port may be determined based on the comb offset and the second offset; or the comb occupied by the second antenna port may be determined based on the comb quantity, the comb offset, and the second offset.

For example, the second offset may be determined based on at least a time domain resource occupied by the second antenna port and/or a frequency domain resource occupied by the second antenna port.

Optionally, the time domain resource occupied by the second antenna port may include one or more OFDM symbols. Optionally, the one or more OFDM symbols that may be included in the time domain resource occupied by the second antenna port are determined based on one or more of the following parameters: a system frame number corresponding to the second antenna port, a slot number corresponding to the second antenna port, and an OFDM symbol number corresponding to the second antenna port.

A quantity of OFDM symbols included in the time domain resource occupied by the second antenna port is not limited in this application.

Optionally, the frequency domain resource occupied by the second antenna port may include one or more sub-bandwidths. Optionally, the one or more sub-bandwidths included in the frequency domain resource occupied by the second antenna port are determined based on one or more of the following parameters: an index of a frequency hopping bandwidth corresponding to the second antenna port, and an index of a transmit bandwidth corresponding to the second antenna port.

Optionally, all first antenna ports included in the terminal device belong to a same reference signal resource, all second antenna ports included in the terminal device belong to a same reference signal resource, and the reference signal resource to which all the first antenna ports belong may be the same as or different from the reference signal resource to which all the second antenna ports belong.

In some embodiments, the second offset may include a second random number and/or a sixth random number.

Optionally, the second random number may be determined based on at least the time domain resource occupied by the second antenna port. For example, the second random number may be denoted by $Q_2$.

For example, the second random number may be a random number greater than 0 or equal to 0.

Optionally, the sixth random number may be determined based on at least the frequency domain resource occupied by the second antenna port. For example, the sixth random number may be denoted by $Q_4$.

For example, the sixth random number may be a random number greater than 0 or equal to 0.

In this way, the comb occupied by the second antenna port may be determined based on the second random number and/or the sixth random number.

For example, the comb occupied by the second antenna port may be determined based on the comb quantity, the comb offset, and the second random number; the comb occupied by the second antenna port may be determined based on the comb quantity, the comb offset, and the sixth random number; or the comb occupied by the second antenna port may be determined based on the comb quantity, the comb offset, the second random number, and the sixth random number.

In some embodiments, that the second random number is determined based on at least the time domain resource occupied by the second antenna port may include: The second random number is determined based on the time domain resource occupied by the second antenna port and a pseudo-random sequence.

Optionally, the second random number is determined based on the time domain resource occupied by the second antenna port and the pseudo-random sequence, and the second random number may be further determined based on one or more of the following parameters: the quantity of the slots included in each system frame, the quantity of the OFDM symbols included in each slot, the comb quantity, and the comb offset.

Optionally, the first random number may satisfy the formula (11), the formula (12), the formula (13), or the formula (14) in S502. Details are not described herein again.

In the formula (11), the formula (12), the formula (13), or the formula (14), $Q_2$ represents the second random number, the mathematical symbol $\Sigma$ represents summation, the mathematical symbol mod represents a modulo operation, $c()$ is the pseudo-random sequence, $n_f$ represents the system frame number corresponding to the second antenna port (or $n_f$ represents a system frame number of the time domain resource occupied by the second antenna port), $N_{\text{slot}}^{\text{frame}}$ represents the quantity of the slots in each system frame, $N_{\text{symb}}^{\text{slot}}$ represents the quantity of the OFDM symbols in each slot, $n_{\text{s,f}}^{\mu}$ represents the slot number corresponding to the second antenna port (or $n_{\text{s,f}}^{\mu}$ represents a slot number of the time domain resource occupied by the second antenna port), $l_0$ represents an index of a start OFDM symbol in the one or more OFDM symbols included in the time domain resource occupied by the second antenna port, $l'$ represents a relative index of one OFDM symbol in the one or more OFDM symbols included in the time domain resource occupied by the second antenna port (or $l'$ represents a relative index of an OFDM symbol of the time domain resource occupied by the second antenna port), and $K_{\text{TC}}$ represents the comb quantity.

In some other embodiments, that the second random number is determined based on at least the time domain resource occupied by the second antenna port may include: The second random number is determined based on one of a plurality of third correspondences and the time domain resource occupied by the second antenna port.

Optionally, one of the plurality of third correspondences may be indicated by the network device to the terminal device. For example, the configuration information of the reference signal may include indication information indicating one of the plurality of third correspondences, and/or one of the plurality of third correspondences.

For example, the network device may select one third correspondence from the plurality of third correspondences, and indicate the selected third correspondence to the terminal device.

Optionally, one third correspondence may include a correspondence between at least one second random number and at least one time domain resource. A specific implementation of the third correspondence is similar to that of the first correspondence. For details, refer to the foregoing descriptions of the first correspondence. Details are not described herein again.

For example, the at least one second random number corresponds one-to-one to the at least one time domain resource. For example, the time domain resource may be an OFDM symbol, a system frame number, or a slot number.

For example, the terminal device may obtain, from the correspondence between at least one second random number and at least one time domain resource based on the time domain resource occupied by the second antenna port, the second random number corresponding to the time domain resource occupied by the second antenna port.

In this way, the second random number obtained by the terminal device randomly changes at different sending moments, and then the comb occupied by the second antenna port of the terminal device is determined based on the second random number, so that the frequency domain resource (comb) occupied by the second antenna port of the terminal device may randomly change at different sending moments.

Optionally, one frequency hopping periodicity may include at least one time of reference signal sending, and the correspondence between at least one second random number and at least one time domain resource may include: a correspondence between the at least one second random number and a relative number of the at least one time of reference signal sending in the frequency hopping periodicity.

For example, the at least one second random number corresponds one-to-one to a number of the at least one time of reference signal sending.

For example, the terminal device may obtain, based on a number of a current time of reference signal sending via the second antenna port, the second random number from the correspondence between the at least one second random number and a relative number of the at least one time of reference signal sending in the frequency hopping periodicity.

Optionally, the correspondence between at least one second random number and at least one time domain resource may include: a correspondence between the at least one second random number and an index of at least one frequency hopping periodicity.

For example, the at least one second random number corresponds one-to-one to the index of the at least one frequency hopping periodicity.

For example, the terminal device may obtain the second random number from the correspondence between the at least one second random number and an index of at least one frequency hopping periodicity based on an index of a frequency hopping periodicity in which the time domain resource occupied by the second antenna port is located.

Optionally, the network device may indicate different second correspondences to terminal devices in different cells.

In this way, the network device indicates different second correspondences to terminal devices in different cells, so that a terminal device that causes interference to the terminal device randomly changes, to implement the frequency-domain interference randomization, and achieve the better interference randomization effect.

In some embodiments, that the sixth random number is determined based on at least the frequency domain resource occupied by the second antenna port may include: The sixth random number is determined based on the frequency domain resource occupied by the second antenna port and a pseudo-random sequence.

Optionally, the pseudo-random sequence may be c().

Optionally, the sixth random number may satisfy a formula (32) or a formula (33).

$$Q_4 = \left(\sum_{m=0}^{7} c(8k + m) \cdot 2^m\right) \bmod K_{TC} \qquad (32)$$

$$Q_4 = \sum_{m=0}^{7} c(8k + m) \cdot 2^m \qquad (33)$$

In the formula (32) or the formula (33), $Q_4$ represents the sixth random number, the mathematical symbol $\Sigma$ represents summation, the mathematical symbol mod represents a modulo operation, $c()$ is the pseudo-random sequence, $k$ represents the index of the frequency hopping bandwidth and/or the index of the transmit bandwidth that correspond/corresponds to the frequency domain resource occupied by the second antenna port, and $K_{TC}$ represents the comb quantity.

It should be noted that m in the formula (32) or the formula (33) is irrelevant to a sequence length M. In the formula (32) or the formula (33), an example in which m is an integer ranging from 0 to 7 is used for description, and a value range of m in the formula (32) or the formula (33) is not limited in this application.

In some other embodiments, that the sixth random number is determined based on at least the frequency domain resource occupied by the second antenna port may include: The sixth random number is determined based on one of a plurality of fourth correspondences and the frequency domain resource occupied by the second antenna port.

Optionally, one of the plurality of fourth correspondences may be indicated by the network device to the terminal device. For example, the configuration information of the reference signal may include indication information indicating one of the plurality of fourth correspondences, and/or one of the plurality of fourth correspondences.

For example, the network device may select one fourth correspondence from the plurality of fourth correspondences, and indicate the selected fourth correspondence to the terminal device.

Optionally, one fourth correspondence may include a correspondence between at least one sixth random number and at least one frequency domain resource.

For example, the at least one sixth random number corresponds one-to-one to the at least one frequency domain resource.

For example, the terminal device may obtain, from the correspondence between at least one sixth random number and at least one frequency domain resource based on the frequency domain resource occupied by the second antenna port, the sixth random number corresponding to the frequency domain resource occupied by the second antenna port.

For example, a specific implementation of the fourth correspondence is similar to that of the first correspondence. For details, refer to the descriptions of the first correspondence. Details are not described herein again.

In this way, the sixth random number obtained by the terminal device randomly changes on different frequency domain resources, and then the comb occupied by the second antenna port of the terminal device is determined based on the sixth random number, so that the frequency domain resource (comb) occupied by the second antenna port of the terminal device may randomly change at different sending moments.

Optionally, the network device may indicate different fourth correspondences to terminal devices in different cells.

In this way, the network device indicates different fourth correspondences to terminal devices in different cells, so that a terminal device that causes interference to the terminal device randomly changes, to implement the interference randomization, and achieve the better interference randomization effect.

In another possible design method, the second offset may be a sum of the first offset and a third offset.

Optionally, the third offset may be an integer greater than or equal to 0.

In some embodiments, the third offset may be determined based on at least the time domain resource occupied by the second antenna port and/or the frequency domain resource occupied by the second antenna port. For specific implementations of the time domain resource occupied by the second antenna port and the frequency domain resource occupied by the second antenna port, refer to the foregoing descriptions. Details are not described herein again.

In some embodiments, the third offset may include a third random number and/or a seventh random number.

Optionally, the third random number may be determined based on at least the time domain resource occupied by the second antenna port. For example, the third random number may be denoted by $\Delta$.

For example, the third random number may be a random number greater than 0 or equal to 0.

Optionally, the seventh random number is determined based on at least the frequency domain resource occupied by the second antenna port. For example, the seventh random number may be denoted by $\Delta_1$.

For example, the seventh random number may be a random number greater than 0 or equal to 0.

In this way, the comb occupied by the second antenna port may be determined based on the third random number and/or the seventh random number.

For example, the comb occupied by the second antenna port may be determined based on the comb quantity, the comb offset, and the third random number; the comb occupied by the second antenna port may be determined based on the comb quantity, the comb offset, and the seventh random number; or the comb occupied by the second antenna port may be determined based on the comb quantity, the comb offset, the third random number, and the seventh random number.

In some embodiments, that the third random number is determined based on at least the time domain resource occupied by the second antenna port may include: The third random number is determined based on the time domain resource occupied by the second antenna port and a pseudo-random sequence.

Optionally, the third random number is determined based on the time domain resource occupied by the second antenna port and the pseudo-random sequence, or the third random number may be determined based on one or more of the following parameters: the quantity of the slots included in each system frame, the quantity of the OFDM symbols included in each slot, the comb quantity, and the comb offset.

Optionally, the third random number may satisfy the formula (15), the formula (16), the formula (17), the formula (18), the formula (34), or the formula (35) in S502. Details are not described herein again.

$$\Delta = \left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m\right) \bmod K_{\text{TC}}$$

$$(34)$$

$$\Delta = \left(\sum_{m=0}^{7} c(8(n_{\text{s,f}}^{\mu} N_{\text{symb}}^{\text{slot}} + l_0 + l') + m + 1) \cdot 2^m\right) \bmod K_{\text{TC}} \qquad (35)$$

In the formula (15), the formula (16), the formula (17), the formula (18), the formula (34), or the formula (35), $\Delta$

represents the third random number, the mathematical symbol Σ represents summation, the mathematical symbol mod represents a modulo operation, $c()$ is the pseudo-random sequence, $n_f$ represents the system frame number corresponding to the second antenna port (or $n_f$ represents the system frame number of the time domain resource occupied by the second antenna port), $N_{\text{slot}}^{\text{frame}}$ represents the quantity of the slots in each system frame, $N_{\text{symb}}^{\text{slot}}$ represents the quantity of the OFDM symbols in each slot, $n_{\text{s,f}}^{\mu}$ represents the slot number corresponding to the second antenna port (or $n_{\text{s,f}}^{\mu}$ represents the slot number of the time domain resource occupied by the second antenna port), $l_0$ represents the index of the start OFDM symbol in the one or more OFDM symbols included in the time domain resource occupied by the second antenna port, $l'$ represents the relative index of the OFDM symbol in the one or more OFDM symbols included in the time domain resource occupied by the second antenna port (or $l'$ represents the relative index of the OFDM symbol of the time domain resource occupied by the second antenna port), and $K_{\text{TC}}$ represents the comb quantity.

In some other embodiments, that the third random number is determined based on at least the time domain resource occupied by the second antenna port may include: The third random number is determined based on one of a plurality of fifth correspondences and the time domain resource occupied by the second antenna port.

Optionally, one of the plurality of fifth correspondences may be indicated by the network device to the terminal device. For example, the configuration information of the reference signal may include indication information indicating one of the plurality of fifth correspondences, and/or one of the plurality of fifth correspondences.

For example, the network device may select one fifth correspondence from the plurality of fifth correspondences, and indicate the selected fifth correspondence to the terminal device.

Optionally, one fifth correspondence may include a correspondence between at least one third random number and at least one time domain resource.

For example, the at least one third random number corresponds one-to-one to the at least one time domain resource. For example, the time domain resource may be an OFDM symbol, a system frame number, or a slot number.

For example, the terminal device may obtain, from the correspondence between at least one third random number and at least one time domain resource based on the time domain resource occupied by the second antenna port, the third random number corresponding to the time domain resource occupied by the second antenna port.

For example, a specific implementation of the fifth correspondence is similar to that of the first correspondence. For details, refer to the descriptions of the first correspondence. Details are not described herein again.

In this way, the third random number obtained by the terminal device randomly changes at different sending moments, and then the comb occupied by the second antenna port of the terminal device is determined based on the third random number, so that the frequency domain resource (comb) occupied by the terminal device randomly changes at different sending moments.

Optionally, one frequency hopping periodicity may include at least one time of reference signal sending, and the correspondence between at least one third random number and at least one time domain resource may include: a correspondence between the at least one third random number and a relative number of the at least one time of reference signal sending in the frequency hopping periodicity.

For example, the at least one third random number corresponds one-to-one to a number of the at least one time of reference signal sending.

For example, the terminal device may obtain, based on a number of a current time of reference signal sending via the second antenna port, the third random number from the correspondence between the at least one third random number and a relative number of the at least one time of reference signal sending in the frequency hopping periodicity.

Alternatively, optionally, the correspondence between at least one third random number and at least one time domain resource may include: a correspondence between the at least one third random number and an index of at least one frequency hopping periodicity.

For example, the at least one third random number corresponds one-to-one to the index of the at least one frequency hopping periodicity.

For example, the terminal device may obtain the third random number from the correspondence between the at least one third random number and an index of at least one frequency hopping periodicity based on an index of a frequency hopping periodicity in which the time domain resource occupied by the second antenna port is located.

Optionally, the network device may indicate different fifth correspondences to terminal devices in different cells.

In this way, the network device indicates different fifth correspondences to terminal devices in different cells, so that a terminal device that causes interference to the terminal device randomly changes, to implement the frequency-domain interference randomization, and achieve the better interference randomization effect.

In some embodiments, that the seventh random number is determined based on at least the frequency domain resource occupied by the second antenna port may include: The seventh random number is determined based on the frequency domain resource occupied by the second antenna port and a pseudo-random sequence. Optionally, the pseudo-random sequence may be c().

Optionally, the seventh random number may satisfy a formula (36), a formula (37), or a formula (38).

$$\Delta_1 = (\textstyle\sum_{m=0}^{7} c(8k + m + 1) \cdot 2^m) \bmod (K_{TC}/2) \qquad (36)$$

$$\Delta_1 = (\textstyle\sum_{m=0}^{7} c(8k + m) \cdot 2^m) \bmod (K_{TC}/2) \qquad (37)$$

$$\Delta_1 = (\textstyle\sum_{m=0}^{7} c(8k + m + 1) \cdot 2^m) \bmod K_{TC} \qquad (38)$$

In the formula (36), the formula (37), or the formula (38), $\Delta_1$ represents the seventh random number, the mathematical symbol $\Sigma$ represents summation, c() is the pseudo-random sequence, the mathematical symbol mod represents a modulo operation, k represents the index of the frequency hopping bandwidth and/or the index of the transmit bandwidth that correspond/corresponds to the frequency domain resource occupied by the second antenna port, and $K_{TC}$ represents the comb quantity.

It should be noted that m in the formula (36), the formula (37), or the formula (38) is irrelevant to a sequence length M. In the formula (36), the formula (37), or the formula (38), an example in which m is an integer ranging from 0 to 7 is used for description, and a value range of m in the formula (36), the formula (37), or the formula (38) is not limited in this application.

In some other embodiments, that the seventh random number is determined based on at least the frequency domain resource occupied by the second antenna port may include: The seventh random number is determined based on one of a plurality of sixth correspondences and the frequency domain resource occupied by the second antenna port.

Optionally, one of the plurality of sixth correspondences may be indicated by the network device to the terminal device. For example, the configuration information of the reference signal may include indication information indicating one of the plurality of sixth correspondences, and/or one of the plurality of sixth correspondences.

For example, the network device may select one sixth correspondence from the plurality of sixth correspondences, and indicate the selected sixth correspondence to the terminal device.

Optionally, the sixth correspondence includes a correspondence between at least one seventh random number and at least one frequency domain resource.

For example, the at least one seventh random number corresponds one-to-one to the at least one frequency domain resource.

For example, the terminal device may obtain, from the correspondence between at least one seventh random number and at least one frequency domain resource based on the frequency domain resource occupied by the second antenna port, the seventh random number corresponding to the frequency domain resource occupied by the second antenna port.

For example, a specific implementation of the sixth correspondence is similar to that of the first correspondence. For details, refer to the descriptions of the first correspondence. Details are not described herein again.

In this way, the seventh random number obtained by the terminal device randomly changes on different frequency domain resources, and then the comb occupied by the second antenna port of the terminal device is determined based on the seventh random number, so that the frequency domain resource (comb) occupied by the second antenna port of the terminal device may randomly change at different sending moments.

Optionally, the network device may indicate different sixth correspondences to terminal devices in different cells.

In this way, the network device indicates different sixth correspondences to terminal devices in different cells, so that a terminal device that causes interference to the terminal device randomly changes, to implement the interference randomization, and achieve the better interference randomization effect.

In this application, the comb occupied by the first antenna port of the terminal device is determined based on the first offset, and the comb occupied by the second antenna port of the terminal device is determined based on the second offset, so that the comb occupied by the antenna port of the terminal device randomly changes at different sending moments, and intervals between a plurality of combs occupied by the antenna ports of the same terminal device may also change randomly. In this way, antenna ports that cause interference to the antenna port of the terminal device are random at different sending moments, and antenna ports that cause, at a same sending moment, interference to antenna ports that are of the terminal device and that occupy different combs may not be antenna ports of a same terminal device. This can implement interference randomization, and can further improve a degree of freedom of the resource occupied by the antenna port of the terminal device, to further improve an interference randomization effect.

In some embodiments, when the second offset is a second random number $Q_2$ (the second random number is determined based on the time domain resource occupied by the second antenna port), an index $k_{TC}^{(p_i)}$ that is of a comb occupied by antenna port $p_i$ and that is determined based on the second offset may satisfy the following formula:

$$k_{\text{TC}}^{(p_i)} = \left(\overline{k}_{\text{TC}} + K_{\text{TC}}/2 + Q_2\right) \bmod K_{\text{TC}}, \text{ or } k_{\text{TC}}^{(p_i)} = \left(\overline{k}_{\text{TC}} + Q_2\right) \bmod K_{\text{TC}}$$

, where $\overline{k}_{\text{TC}}$ represents the comb offset, $\overline{k}_{\text{TC}} \in \{0, 1, ..., K_{\text{TC}} - 1\}$, $K_{\text{TC}}$ represents the comb quantity, and $Q_2$ represents the second random number or the second offset.

In some embodiments, when the second offset is a sixth random number $Q_4$ (the sixth random number is determined based on the frequency domain resource occupied by the first antenna port), an index $k_{\text{TC}}^{(p_i)}$ that is of a comb occupied by antenna port $p_i$ and that is determined based on the second offset may satisfy the following formula:

$$k_{\text{TC}}^{(p_i)} = \left(\overline{k}_{\text{TC}} + K_{\text{TC}}/2 + Q_4\right) \bmod K_{\text{TC}}, \text{ or } k_{\text{TC}}^{(p_i)} = \left(\overline{k}_{\text{TC}} + Q_4\right) \bmod K_{\text{TC}}$$

, where $\overline{k}_{\text{TC}}$ represents the comb offset, $\overline{k}_{\text{TC}} \in \{0, 1, ..., K_{\text{TC}} - 1\}$, $K_{\text{TC}}$ represents the comb quantity, and $Q_4$ represents the sixth random number or the second offset.

In some embodiments, when the second offset is the sum of the first offset and the third offset, the first offset is a first random number $Q_1$, and the third offset is a third random number $\Delta$, an index $k_{\text{TC}}^{(p_i)}$ that is of a comb occupied by antenna port $p_i$ and that is determined based on the second offset may satisfy the following formula:

$$k_{\text{TC}}^{(p_i)} = \left(\overline{k}_{\text{TC}} + K_{\text{TC}}/2 + Q_1 + \Delta\right) \bmod K_{\text{TC}} \text{ or } k_{\text{TC}}^{(p_i)} = \left(\overline{k}_{\text{TC}} + Q_1 + \Delta\right) \bmod K_{\text{TC}}.$$

In some embodiments, when the second offset is the sum of the first offset and the third offset, the first offset is a fifth random number $Q_3$, and the third offset is a seventh random number $\Delta_1$, an index $k_{\text{TC}}^{(p_i)}$ that is of a comb occupied by antenna port $p_i$ and that is determined based on the second offset may satisfy the following formula:

$$k_{\text{TC}}^{(p_i)} = \left(\overline{k}_{\text{TC}} + K_{\text{TC}}/2 + Q_3 + \Delta_1\right) \bmod K_{\text{TC}} \text{ or } k_{\text{TC}}^{(p_i)} = \left(\overline{k}_{\text{TC}} + Q_3 + \Delta_1\right) \bmod K_{\text{TC}}.$$

In some embodiments, when the second offset is the sum of the first offset and the third offset, the first offset includes a first random number $Q_1$ and a fifth random number $Q_3$, and the third offset includes a third random number $\Delta$ and a seventh random number $\Delta_1$, an index $k_{\text{TC}}^{(p_i)}$ that is of a comb occupied by antenna port $p_i$ and that is determined based on the second offset may satisfy the following formula:

$$k_{\text{TC}}^{(p_i)} = \left(\overline{k}_{\text{TC}} + K_{\text{TC}}/2 + Q_1 + \Delta + Q_3 + \Delta_1\right) \bmod K_{\text{TC}}$$

or

$$k_{\text{TC}}^{(p_i)} = \left(\overline{k}_{\text{TC}} + Q_1 + \Delta + Q_3 + \Delta_1\right) \bmod K_{\text{TC}}.$$

For example, combs occupied by some antenna ports of the terminal device may be determined based on the first offset, and combs occupied by the other antenna ports of the terminal device may be determined based on the second offset. The index $k_{\text{TC}}^{(p_i)}$ of the comb occupied by antenna port $p_i$ of the terminal device may satisfy the foregoing formula (19), formula (20), formula (21), or formula (22); or the following formula (39), formula (40), formula (41), formula (42), formula (43), or formula (44).

$$k_{\text{TC}}^{(p_i)} = \begin{cases} \left(\overline{k}_{\text{TC}} + K_{\text{TC}}/2 + Q_3\right) \bmod K_{\text{TC}} & N_{\text{ap}}^{\text{SRS}} = 4, p_i \in \{1001, 1003\}, n_{\text{SRS}}^{\text{cs,max}} = 6 \\ \left(\overline{k}_{\text{TC}} + K_{\text{TC}}/2 + Q_3\right) \bmod K_{\text{TC}} & N_{\text{ap}}^{\text{SRS}} = 4, p_i \in \{1001, 1003\}, n_{\text{SRS}}^{\text{cs}} \in \{n_{\text{SRS}}^{\text{cs,max}}/2, ..., n_{\text{SRS}}^{\text{cs,max}} - 1\} \\ \left(\overline{k}_{\text{TC}} + Q_4\right) \bmod K_{\text{TC}} & \text{otherwise (otherwise)} \end{cases} \quad (39)$$

$$k_{\text{TC}}^{(p_i)} = \begin{cases} \left(\overline{k}_{\text{TC}} + K_{\text{TC}}/2 + Q_4\right) \bmod K_{\text{TC}} & N_{\text{ap}}^{\text{SRS}} = 4, p_i \in \{1001, 1003\}, n_{\text{SRS}}^{\text{cs,max}} = 6 \\ \left(\overline{k}_{\text{TC}} + K_{\text{TC}}/2 + Q_4\right) \bmod K_{\text{TC}} & N_{\text{ap}}^{\text{SRS}} = 4, p_i \in \{1001, 1003\}, n_{\text{SRS}}^{\text{cs}} \in \{n_{\text{SRS}}^{\text{cs,max}}/2, ..., n_{\text{SRS}}^{\text{cs,max}} - 1\} \\ \left(\overline{k}_{\text{TC}} + Q_3\right) \bmod K_{\text{TC}} & \text{otherwise (otherwise)} \end{cases} \quad (40)$$

$$k_{\text{TC}}^{(p_i)} = \begin{cases} \left(\overline{k}_{\text{TC}} + K_{\text{TC}}/2 + Q_3\right) \bmod K_{\text{TC}} & N_{\text{ap}}^{\text{SRS}} = 4, p_i \in \{1001, 1003\}, n_{\text{SRS}}^{\text{cs,max}} = 6 \\ \left(\overline{k}_{\text{TC}} + K_{\text{TC}}/2 + Q_3\right) \bmod K_{\text{TC}} & N_{\text{ap}}^{\text{SRS}} = 4, p_i \in \{1001, 1003\}, n_{\text{SRS}}^{\text{cs}} \in \{n_{\text{SRS}}^{\text{cs,max}}/2, ..., n_{\text{SRS}}^{\text{cs,max}} - 1\} \\ \left(\overline{k}_{\text{TC}} + Q_3 + \Delta_1\right) \bmod K_{\text{TC}} & \text{otherwise (otherwise)} \end{cases} \quad (41)$$

$$k_{\mathrm{TC}}^{(p_i)} = \begin{cases} \left(\bar{k}_{\mathrm{TC}} + K_{\mathrm{TC}}/2 + Q_3 + \Delta_1\right) \bmod K_{\mathrm{TC}} & N_{\mathrm{ap}}^{\mathrm{SRS}} = 4, p_i \in \{1001, 1003\}, n_{\mathrm{SRS}}^{\mathrm{cs,max}} = 6 \\ \left(\bar{k}_{\mathrm{TC}} + K_{\mathrm{TC}}/2 + Q_3 + \Delta_1\right) \bmod K_{\mathrm{TC}} & N_{\mathrm{ap}}^{\mathrm{SRS}} = 4, p_i \in \{1001, 1003\}, n_{\mathrm{SRS}}^{\mathrm{cs}} \in \{n_{\mathrm{SRS}}^{\mathrm{cs,max}}/2, \dots, n_{\mathrm{SRS}}^{\mathrm{cs,max}} - 1\} \\ \left(\bar{k}_{\mathrm{TC}} + Q_3\right) \bmod K_{\mathrm{TC}} & \text{otherwise (otherwise)} \end{cases}$$

$$\tag{42}$$

$$k_{\mathrm{TC}}^{(p_i)} = \begin{cases} \left(\bar{k}_{\mathrm{TC}} + K_{\mathrm{TC}}/2 + Q_1 + \Delta\right) \bmod K_{\mathrm{TC}} & N_{\mathrm{ap}}^{\mathrm{SRS}} = 4, p_i \in \{1001, 1003\}, n_{\mathrm{SRS}}^{\mathrm{cs,max}} = 6 \\ \left(\bar{k}_{\mathrm{TC}} + K_{\mathrm{TC}}/2 + Q_1 + \Delta\right) \bmod K_{\mathrm{TC}} & N_{\mathrm{ap}}^{\mathrm{SRS}} = 4, p_i \in \{1001, 1003\}, n_{\mathrm{SRS}}^{\mathrm{cs}} \in \{n_{\mathrm{SRS}}^{\mathrm{cs,max}}/2, \dots, n_{\mathrm{SRS}}^{\mathrm{cs,max}} - 1\} \\ \left(\bar{k}_{\mathrm{TC}} + Q_1 + \Delta + Q_3 + \Delta_1\right) \bmod K_{\mathrm{TC}} & \text{otherwise (otherwise)} \end{cases}$$

$$\tag{43}$$

$$k_{\mathrm{TC}}^{(p_i)} =$$
$$\begin{cases} \left(\bar{k}_{\mathrm{TC}} + K_{\mathrm{TC}}/2 + Q_1 + \Delta + Q_3 + \Delta_1\right) \bmod K_{\mathrm{TC}} & N_{\mathrm{ap}}^{\mathrm{SRS}} = 4, p_i \in \{1001, 1003\}, n_{\mathrm{SRS}}^{\mathrm{cs,max}} = 6 \\ \left(\bar{k}_{\mathrm{TC}} + K_{\mathrm{TC}}/2 + Q_1 + \Delta + Q_3 + \Delta_1\right) \bmod K_{\mathrm{TC}} & N_{\mathrm{ap}}^{\mathrm{SRS}} = 4, p_i \in \{1001, 1003\}, n_{\mathrm{SRS}}^{\mathrm{cs}} \in \{n_{\mathrm{SRS}}^{\mathrm{cs,max}}/2, \dots, n_{\mathrm{SRS}}^{\mathrm{cs,max}} - 1\} \\ \left(\bar{k}_{\mathrm{TC}} + Q_1 + \Delta\right) \bmod K_{\mathrm{TC}} & \text{otherwise (otherwise)} \end{cases} \tag{44}$$

With reference to Table 7 and FIG. 7, the following describes a comb occupied by an antenna port of each terminal device after combs occupied by different antenna ports are determined based on at least the first offset or the second offset.

For example, after the combs occupied by the different antenna ports of the terminal device are determined based on the first offset (the first offset is determined based on the time domain resource occupied by the first antenna port) or the second offset (the second offset is determined based on the time domain resource occupied by the second antenna port), for the comb occupied by the antenna port of each terminal device, refer to the descriptions of Table 7 and FIG. 7 in S502. Details are not described herein again.

For example, after the combs occupied by the different antenna ports of the terminal device are determined based on the first offset (the first offset is determined based on the frequency domain resource occupied by the first antenna port) or the second offset (the second offset is determined based on the frequency domain resource occupied by the second antenna port), for the comb occupied by the antenna port of each terminal device, refer to Table 16.

The foregoing scenario 1 is used as an example. That a comb occupied by two antenna ports of each of UE 1 to UE 8 is determined based on at least the first offset, and a comb occupied by the other two antenna ports of each of UE 1 to UE 8 is determined based on at least the second offset is used as an example. The comb occupied by the antenna port of each UE may be shown in Table 16.

On frequency domain resource 1, antenna ports of UE 1, UE 2, UE 5, and UE 6 occupy comb 1 and comb 3, and antenna ports of UE 3, UE 4, UE 7, and UE 8 occupy same comb 2 and same comb 4.

UE 1 is used as an example. On frequency domain resource 1, the antenna ports of UE 1 suffer interference, on comb 1 and comb 3, from antenna ports of UE 5 and UE 6.

It should be noted that, in Table 16, an example in which antenna port $p_0$ and antenna port $p_2$ of each UE occupy one comb, and antenna port $p_1$ and antenna port $p_3$ occupy one comb is used. For example, the comb occupied by antenna port $p_0$ and antenna port $p_2$ is a comb with a smaller comb index in two combs occupied by the UE, and the comb occupied by antenna port $p_1$ and antenna port $p_3$ is a comb with a larger comb index in the two combs occupied by the UE. For ease of understanding, Table 16 shows the UEs, corresponding base sequences, and corresponding combs, but do not show the antenna port.

On frequency domain resource 2, antenna ports of UE 1, UE 2, UE 7, and UE 8 occupy comb 1, the antenna ports of UE 1, UE 2, UE 5, and UE 6 occupy comb 2, the antenna ports of UE 3, UE 4, UE 7, and UE 8 occupy comb 3, and antenna ports of UE 3, UE 4, UE 5, and UE 6 occupy comb 4.

UE 1 is used as an example. On frequency domain resource 2, the antenna ports (for example, antenna port $p_0$ and antenna port $p_2$) of UE 1 suffer interference, on comb 1, from antenna ports (for example, antenna port $p_0$ and antenna port $p_2$) of UE 7 and UE 8. The antenna ports (for example, antenna port $p_1$ and antenna port $p_3$) of UE 1 suffer interference, on comb 2, the antenna ports (for example, antenna port $p_0$ and antenna port $p_2$) of UE 5 and UE 6.

On frequency domain resource n, the antenna ports of UE 1, UE 2, UE 7, and UE 8 occupy comb 1, the antenna ports of UE 1, UE 2, UE 5, and UE 6 occupy comb 4, the antenna ports of UE 3, UE 4, UE 5, and UE 6 occupy comb 2, and the antenna ports of UE 3, UE 4, UE 7, and UE 8 occupy comb 4.

UE 1 is used as an example. On frequency domain resource n, the antenna ports (for example, antenna port $p_0$ and antenna port $p_2$) of UE 1 suffer interference, on comb 1, from the antenna ports (for example, antenna port $p_0$ and antenna port $p_2$) of UE 7 and UE 8. The antenna ports (for example, antenna port $p_1$ and antenna port $p_3$) of UE 1 suffer interference, on comb 4, the antenna ports (for example, antenna port $p_0$ and antenna port $p_2$) of UE 5 and UE 6.

Optionally, in Table 16, frequency domain resource 1 may be replaced with frequency domain unit 1, subband 1, frequency hopping bandwidth 1, frequency hopping bandwidth 1, or the like. Frequency domain resource 2 to frequency domain resource n are similar to frequency domain resource 1, and details are not described one by one.

**Table 16**

| Frequency domain resource 1 | | | | |
|---|---|---|---|---|
| Cell 1 | UE 1: $r_1$, combs 1 and 3 | UE 2: $r_1$, combs 1 and 3 | UE 3: $r_1$, combs 2 and 4 | UE 4: $r_1$, combs 2 and 4 |
| Cell 2 | UE 5: $r_2$, combs 1 and 3 | UE 6: $r_2$, combs 1 and 3 | UE 7: $r_2$, combs 2 and 4 | UE 8: $r_2$, combs 2 and 4 |
| Frequency domain resource 2 | | | | |
| Cell 1 | UE 1: $r_1$, combs 1 and 2 | UE 2: $r_1$, combs 1 and 2 | UE 3: $r_1$, combs 3 and 4 | UE 4: $r_1$, combs 3 and 4 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |
| ... | | | | |
| Frequency domain resource n | | | | |
| Cell 1 | UE 1: $r_1$, combs 1 and 4 | UE 2: $r_1$, combs 1 and 4 | UE 3: $r_1$, combs 2 and 3 | UE 4: $r_1$, combs 2 and 3 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |

In this way, after the comb occupied by the two antenna ports of each of UE 1 to UE 8 is determined based on at least the first offset, and the comb occupied by the other two antenna ports of each of UE 1 to UE 8 is determined based on at least the second offset, the comb occupied by the antenna port of UE 1 randomly changes on different frequency domain resources. For example, on frequency domain resource 1, UE 1 sends a reference signal through comb 1 and comb 3; and on frequency domain resource 2, UE 1 sends a reference signal through comb 1 and comb 4, so that an antenna port that causes interference to the antenna port of UE 1 randomly changes. In addition, antenna ports that cause, on a same frequency domain resource, interference to antenna ports, that are of the terminal device, (antenna port $p_0$ and antenna port $p_2$ of UE 1, and antenna port $p_1$ and antenna port $p_3$ of UE 1) and that occupy different combs may not be antenna ports of a same terminal device. For example, on frequency domain resource 2, antenna port $p_0$ and antenna port $p_2$ of UE 1 suffer interference, on comb 1, from antenna ports $p_0$ and antenna ports $p_2$ of UE 7 and UE 8, and antenna port $p_1$ and antenna port $p_3$ of UE 1 suffer interference, on comb 2, from antenna ports $p_0$ and antenna ports $p_2$ of UE 5 and UE 6. This can further improve the degree of freedom of the resource occupied by the antenna port of the terminal device, and can further improve the degree of interference randomization caused to the terminal device, to further improve the interference randomization effect.

For example, after the combs occupied by the different antenna ports of the terminal device are determined based on the first offset (the first offset is determined based on the time domain resource occupied by the first antenna port and the frequency domain resource occupied by the first antenna port) or the second offset (the second offset is determined based on the time domain resource occupied by the second antenna port and the frequency domain resource occupied by the second antenna port), the comb occupied by the antenna port of each terminal device may be a combination of Table 7 and Table 16, for example, as shown in Table 17.

The foregoing scenario 1 is used as an example. That a comb occupied by two antenna ports of each of UE 1 to UE 8 is determined based on at least the first offset, and a comb occupied by the other two antenna ports of each of UE 1 to UE 8 is determined based on at least the second offset is used as an example. The comb occupied by the antenna port of each UE may be shown in Table 17. For specific descriptions, refer to Table 7 or Table 16.

**Table 17**

| Sending moment 1 and frequency domain resource 1 | | | | |
|---|---|---|---|---|
| Cell 1 | UE 1: $r_1$, combs 1 and 3 | UE 2: $r_1$, combs 1 and 3 | UE 3: $r_1$, combs 2 and 4 | UE 4: $r_1$, combs 2 and 4 |
| Cell 2 | UE 5: $r_2$, combs 1 and 3 | UE 6: $r_2$, combs 1 and 3 | UE 7: $r_2$, combs 2 and 4 | UE 8: $r_2$, combs 2 and 4 |
| Sending moment 2 and frequency domain resource 2 | | | | |
| Cell 1 | UE 1: $r_1$, combs 1 and 2 | UE 2: $r_1$, combs 1 and 2 | UE 3: $r_1$, combs 3 and 4 | UE 4: $r_1$, combs 3 and 4 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |
| ... | | | | |

(continued)

| Sending moment n and frequency domain resource n | | | |
|---|---|---|---|
| Cell 1 | UE 1: $r_1$, combs 1 and 4 | UE 2: $r_1$, combs 1 and 4 | UE 3: $r_1$, combs 2 and 3 | UE 4: $r_1$, combs 2 and 3 |
| Cell 2 | UE 5: $r_2$, combs 2 and 4 | UE 6: $r_2$, combs 2 and 4 | UE 7: $r_2$, combs 1 and 3 | UE 8: $r_2$, combs 1 and 3 |

In this way, after the comb occupied by the two antenna ports of each of UE 1 to UE 8 is determined based on at least the first offset, and the comb occupied by the other two antenna ports of each of UE 1 to UE 8 is determined based on at least the second offset, the comb occupied by the antenna port of UE 1 randomly changes at different sending moments and on different frequency domain resources. For example, at sending moment 1 and on frequency domain resource 1, UE 1 sends a reference signal through comb 1 and comb 3; and at sending moment 2 and on frequency domain resource 2, UE 1 sends a reference signal through comb 1 and comb 4, so that an antenna port that causes interference to the antenna port of UE 1 randomly changes. In addition, antenna ports that cause, at a same sending moment and on a same frequency domain resource, interference to antenna ports that are, of the terminal device, (antenna port $p_0$ and antenna port $p_2$ of UE 1, and antenna port $p_1$ and antenna port $p_3$ of UE 1) and that occupy different combs may not be antenna ports of a same terminal device. For example, at sending moment 2 and on frequency domain resource 2, antenna port $p_0$ and antenna port $p_2$ of UE 1 suffer interference, on comb 1, from antenna ports $p_0$ and antenna ports $p_2$ of UE 7 and UE 8, and antenna port $p_1$ and antenna port $p_3$ of UE 1 suffer interference, on comb 2, from antenna ports $p_0$ and antenna ports $p_2$ of UE 5 and UE 6. This can further improve the degree of freedom of the resource occupied by the antenna port of the terminal device, and can further improve the degree of interference randomization caused to the terminal device, to further improve the interference randomization effect.

In some other embodiments, the comb occupied by the second antenna port may be determined based on one of a plurality of thirteenth correspondences and the time domain resource occupied by the second antenna port.

Optionally, one of the plurality of thirteenth correspondences may be indicated by the network device to the terminal device. Optionally, the network device may indicate different thirteenth correspondences to terminal devices in different cells.

Optionally, one thirteenth correspondence may include a correspondence between at least one comb and at least one time domain resource.

For example, the at least one comb corresponds one-to-one to the at least one time domain resource.

Optionally, the thirteenth correspondence is different from the tenth correspondence.

For example, the terminal device may obtain, from the correspondence between at least one comb and at least one time domain resource based on the time domain resource occupied by the second antenna port, the comb occupied by the second antenna port.

Optionally, a specific implementation of the thirteenth correspondence is similar to that of the tenth correspondence. For details, refer to the foregoing descriptions of the tenth correspondence. Details are not described herein again.

In some other embodiments, the comb occupied by the second antenna port may be determined based on one of a plurality of fourteenth correspondences and the frequency domain resource occupied by the second antenna port.

Optionally, one of the plurality of fourteenth correspondences may be indicated by the network device to the terminal device. Optionally, the network device may indicate different fourteenth correspondences to terminal devices in different cells.

Optionally, one fourteenth correspondence may include a correspondence between at least one comb and at least one frequency domain resource.

For example, the at least one comb corresponds one-to-one to the at least one frequency domain resource.

Optionally, the fourteenth correspondence is different from the eleventh correspondence.

For example, the terminal device may obtain, from the correspondence between at least one comb and at least one frequency domain resource based on the frequency domain resource occupied by the second antenna port, the comb occupied by the second antenna port.

Optionally, a specific implementation of the fourteenth correspondence is similar to that of the eleventh correspondence. For details, refer to the foregoing descriptions of the eleventh correspondence. Details are not described herein again.

In some other embodiments, the comb occupied by the second antenna port may be determined based on one of a plurality of fifteenth correspondences, and the time domain resource and the frequency domain resource that are occupied by the second antenna port.

Optionally, one of the plurality of fifteenth correspondences may be indicated by the network device to the terminal device. Optionally, the network device may indicate different fifteenth correspondences to terminal devices in different cells.

Optionally, one fifteenth correspondence may include a correspondence between at least one comb, at least one time domain resource, and at least one frequency domain resource.

For example, the at least one comb corresponds one-to-one to the at least one time domain resource and the at least one frequency domain resource.

Optionally, the fifteenth correspondence is different from the twelfth correspondence.

For example, the terminal device may obtain, from the correspondence between at least one comb, at least one time domain resource, and at least one frequency domain resource based on the frequency domain resource and the frequency domain resource that are occupied by the second antenna port, the comb occupied by the second antenna port.

Optionally, a specific implementation of the fifteenth correspondence is similar to that of the twelfth correspondence. For details, refer to the foregoing descriptions of the twelfth correspondence. Details are not described herein again.

In this way, after the comb occupied by the two antenna ports of each of UE 1 to UE 8 is determined based on the tenth correspondence, the eleventh correspondence, the twelfth correspondence, or the first offset, and the comb occupied by the other two antenna ports of each of UE 1 to UE 8 is determined based on the thirteenth correspondence, the fourteenth correspondence, or the fifteenth correspondence, the comb occupied by the antenna port of UE 1 randomly changes at different sending moments and/or on frequency domain resources. In addition, antenna ports that cause, at a same sending moment and on a same frequency domain resource, interference to antenna ports that are of the terminal device (antenna port $p_0$ and antenna port $p_2$ of UE 1, and antenna port $p_1$ and antenna port $p_3$ of UE 1) and that occupy different combs may not be antenna ports of a same terminal device. This can further improve the degree of freedom of the resource occupied by the antenna port of the terminal device, and can further improve the degree of interference randomness caused to the terminal device, to further improve the interference randomization effect.

According to the communication method shown in FIG. 13, the comb occupied by the first antenna port of the terminal device is determined based on the first offset, so that the comb occupied by the antenna port of the terminal device may randomly change at different sending moments and/or on different frequency domain resources. In this way, an antenna port of a terminal device that causes interference to the antenna port of the terminal device randomly changes. Therefore, the interference randomization is implemented, and the better interference randomization effect can be achieved.

For example, FIG. 14 is a schematic flowchart of a communication method according to an embodiment of this application. The method shown in FIG. 14 may be used in combination with the method shown in FIG. 5 or FIG. 13, to achieve a better interference randomization effect. The method shown in FIG. 14 and the method shown in FIG. 5 or FIG. 13 may alternatively be separately used.

As shown in FIG. 14, the communication method includes the following steps.

S1401: A network device sends configuration information of a reference signal. Correspondingly, a terminal device receives the configuration information of the reference signal.

For a specific implementation of S1401, refer to S501. Details are not described herein again.

S1402: The terminal device sends a reference signal via M antenna ports based on the configuration information. Correspondingly, the network device receives the reference signal via the M antenna ports based on the configuration information.

For example, M is an integer greater than 0, and the M antenna ports include at least one first antenna port. For specific implementations of M, the M antenna ports, and the first antenna port, refer to the corresponding descriptions in S502. Details are not described herein again.

In a possible design method, a start position of a frequency domain resource occupied by each of the M antenna ports is determined based on at least a fourth offset.

In some embodiments, a start position of a frequency domain resource occupied by the first antenna port is determined based on at least the fourth offset.

For example, with reference to the foregoing scenario 2, a start position of a frequency domain resource occupied by each of antenna port $p_0$ and antenna port $p_1$ of UE 1 may be determined based on at least the fourth offset.

Optionally, the fourth offset may be an integer greater than or equal to 0.

Optionally, that a start position of a frequency domain resource occupied by the first antenna port is determined based on at least a fourth offset may include: The start position of the frequency domain resource occupied by the first antenna port is determined based on an initial value of the start position of the frequency domain resource occupied by the first antenna port and the fourth offset.

Optionally, the initial value of the start position of the frequency domain resource occupied by the first antenna port may be determined based on a frequency hopping offset and a frequency hopping bandwidth.

For example, the initial value of the start position of the frequency domain resource occupied by the first antenna port may satisfy the foregoing formula (3).

For example, the start position of the frequency domain resource occupied by the first antenna port is determined based on the frequency hopping offset, a partial sounding offset, and the fourth offset.

For example, the fourth offset may be determined based on at least a time domain resource occupied by the first antenna port and a pseudo-random sequence.

Optionally, the time domain resource occupied by the first antenna port may include an index of a frequency hopping periodicity corresponding to the reference signal.

For example, with reference to FIG. 10, the index of the frequency hopping periodicity corresponding to the reference signal may be: frequency hopping periodicity 1 or the like.

Optionally, the time domain resource occupied by the first antenna port may include one or more OFDM symbols. The one or more OFDM symbols included in the time domain resource occupied by the first antenna port may be determined based on one or more of the following parameters: a system frame number corresponding to the first antenna port, a slot number corresponding to the first antenna port, and an OFDM symbol number corresponding to the first antenna port.

A quantity of OFDM symbols included in the time domain resource occupied by the first antenna port is not limited in this application.

In a possible design manner, an index of a frequency hopping periodicity in which the time domain resource is located is determined based on the time domain resource occupied by the first antenna port; or a relative index of the time domain resource in one corresponding frequency hopping periodicity is determined based on the time domain resource occupied by the first antenna port, where the relative index may be defined as follows: A relative index of a $k^{th}$ time of sending in one frequency hopping periodicity is k-1.

Optionally, the pseudo-random sequence may be c(). For a specific implementation of the pseudo-random sequence, refer to the corresponding descriptions in S502. Details are not described herein again.

Optionally, the fourth offset may be a fourth random number.

For example, the fourth offset may be a random number. For example, the fourth offset is a random number greater than 0.

Optionally, the fourth random number may satisfy the foregoing formula (24) or formula (25).

In the foregoing formula (24) or formula (25), $k_{rand}$ represents the fourth random number, a mathematical symbol

$$\left\lfloor \frac{n_{SRS}}{\prod_{b'=b_{hop}}^{B_{SRS}} N_{b'}} \right\rfloor$$

$\Sigma$ represents summation, $c()$ is the pseudo-random sequence, represents the index of the freqency hopping periodicity corresponding to the reference signal, a mathematical symbol $\lfloor \rfloor$ represents a floor operation, $n_{SRS}$ represents a count value of the reference signal, a mathematical symbol $\Pi$ represents a product of a sequence, and a mathematical symbol mod indicates a modulo operation.

Optionally, $N_{bhop} = 1$.

It should be noted that for meanings of the parameters in the foregoing formula (25) and $N_{bhop} = 1$, refer to the foregoing descriptions of the formula (5) and Table 3. Details are not described herein again.

It should be noted that m in the formula (24) or the formula (25) is irrelevant to a sequence length M. In the formula (24) or the formula (25), an example in which m is an integer ranging from 0 to 7 is used for description, and a value range of m in the formula (24) or the formula (25) is not limited in this application.

Alternatively, for example, the fourth offset is determined based on one of a plurality of ninth correspondences and the time domain resource occupied by the first antenna port.

Optionally, one of the plurality of ninth correspondences may be indicated by the network device to the terminal device. For example, the configuration information of the reference signal may include indication information indicating one of the plurality of ninth correspondences, and/or one of the plurality of ninth correspondences.

For example, the network device may select one ninth correspondence from the plurality of ninth correspondences, and indicate the selected ninth correspondence to the terminal device.

Optionally, one ninth correspondence may include a correspondence between at least one fourth offset and at least one time domain resource.

For example, the at least one fourth offset corresponds one-to-one to the at least one time domain resource. For example, the time domain resource may be an OFDM symbol, a system frame number, or a slot number.

Optionally, the plurality of ninth correspondences correspond to a same frequency scaling factor.

Optionally, one frequency hopping periodicity may include at least one time of reference signal sending, and the correspondence between at least one fourth offset and at least one time domain resource may include: a correspondence between the at least one fourth offset and a relative number of the at least one time of reference signal sending in the frequency hopping periodicity.

For example, the at least one fourth offset corresponds one-to-one to a number of the at least one time of reference signal sending.

For example, the terminal device may obtain, based on a number of a current time of reference signal sending via the first antenna port, the fourth offset from the correspondence between the at least one fourth offset and a relative number of the at least one time of reference signal sending in the frequency hopping periodicity.

Alternatively, optionally, the correspondence between at least one fourth offset and at least one time domain resource may include: a correspondence between the at least one fourth offset and an index of at least one frequency hopping periodicity.

For example, the at least one fourth offset corresponds one-to-one to the index of the at least one frequency hopping periodicity.

For example, the terminal device may obtain the fourth offset from the correspondence between the at least one fourth offset and an index of at least one frequency hopping periodicity based on the index of the frequency hopping periodicity in which the time domain resource occupied by the first antenna port is located.

In some embodiments, that a start position of a frequency domain resource occupied by each of the M antenna ports is determined based on at least a fourth offset may include: The start position of the frequency domain resource occupied by each of the M antenna ports may be determined based on a partial sounding offset $n_{\text{offset}}^{\text{RPFS}}$. For a specific implementation, refer to the corresponding descriptions in S1101. Details are not described herein again.

For a specific implementation of the partial sounding offset, refer to the corresponding descriptions in S1101. Details are not described herein again.

In some embodiments, a frequency-domain start position $k_0^{(p_i)}$ of antenna port $p_i$ may satisfy the foregoing formula (27). For a specific implementation, refer to the corresponding descriptions in S1101. Details are not described herein again.

The foregoing scenario 2 is used as an example. A start position of a frequency domain resource occupied by each antenna port (antenna port $p_0$ and antenna port $p_1$) of UE 1 to UE 4 is determined based on at least the fourth offset. The start position of the frequency domain resource occupied by each UE may be shown in FIG. 12. For a specific implementation, refer to the corresponding descriptions in S1101. Details are not described herein again.

The foregoing scenario 1 is used as an example. A start position of a frequency domain resource occupied by each antenna port (antenna port $p_0$ and antenna port $p_1$) of UE 1 to UE 8 is determined based on at least the fourth offset. The start position of the frequency domain resource occupied by each UE may be shown in Table 18.

For example, in Table 13, sending moment 1 may be replaced with frequency hopping periodicity 1, OFDM symbol 1, system frame number 1, slot number 1, time domain resource 1, or time unit 1. Sending moment 2 to sending moment n are similar to sending moment 1, and details are not described one by one.

UE 1 is used as an example. At sending moment 1, the antenna port of UE 5 causes interference to the antenna port of UE 1. At sending moment 2, the antenna port of UE 7 causes interference to the antenna port of UE 1. It can be learned that different antenna ports cause interference to the antenna port of UE 1 at different sending moments. This brings a good interference randomization effect, can accelerate an interference randomization convergence speed, and can improve channel estimation performance.

**Table 18**

| Sending moment 1 (each subband includes N RBs) | | | | |
|---|---|---|---|---|
| Cell 1 | UE 1: $r_1$, start RB 0 | UE 2: $r_1$, start RB N/4 | UE 3: $r_1$, start RB N/2 | UE 4: $r_1$, start RB 3*N/4 |
| Cell 2 | UE 5: $r_2$, start RB 0 | UE 6: $r_2$, start RB N/4 | UE 7: $r_2$, start RB N/2 | UE 8: $r_2$, start RB 3*N/4 |
| Sending moment 2 | | | | |
| Cell 1 | UE 1: $r_1$, start RB 0 | UE 2: $r_1$, start RB N/4 | UE 3: $r_1$, start RB N/2 | UE 4: $r_1$, start RB 3*N/4 |
| Cell 2 | UE 5: $r_2$, start RB N/2 | UE 6: $r_2$, start RB 3*N/4 | UE 7: $r_2$, start RB 0 | UE 8: $r_2$, start RB N/4 |
| ... | | | | |
| Sending moment n | | | | |
| Cell 1 | UE 1: $r_1$, start RB N/4 | UE 2: $r_1$, start RB N/2 | UE 3: $r_1$, start RB 3*N/4 | UE 4: $r_1$, start RB 0 |
| Cell 2 | UE 5: $r_2$, start RB 3*N/2 | UE 6: $r_2$, start RB 0 | UE 7: $r_2$, start RB N/4 | UE 8: $r_2$, start RB N/2 |

In some other embodiments, the start position of the frequency domain resource occupied by the first antenna port may be determined based on one of a plurality of sixteenth correspondences and the time domain resource occupied by the first antenna port.

Optionally, one of the plurality of sixteenth correspondences may be indicated by the network device to the terminal device.

Optionally, the network device may indicate different sixteenth correspondences to terminal devices in different cells.

Optionally, one sixteenth correspondence may include a correspondence between a start position of at least one frequency domain resource and at least one time domain resource.

For example, the start position of the at least one frequency domain resource corresponds one-to-one to the at least one time domain resource.

For example, it is assumed that each sixteenth correspondence (which may be referred to as a pattern (pattern)) has n time domain resources. Offsets between start positions of frequency domain resources corresponding to the n time domain resources are $\{x_1, x_2, ...x_n\}$ for sixteenth correspondence 1. In this case, there is sixteenth correspondence 1+a, a is an integer greater than 0, and combs corresponding to the n time domain resources are $\{x_{(1+a)modn}, x_{(2+a)modn}, ...x_{(M+a)modn}\}$. A value of $\{x_1, x_2, ...x_n\}$ belongs to $\{0, N/S, ..., (S-1)*N/S\}$, S is a quantity of partial bandwidths included in one subband, and N is a quantity of RBs included in one subband.

For example, the terminal device may obtain, from the correspondence between a start position of at least one frequency domain resource and at least one time domain resource based on the time domain resource occupied by the first antenna port, the start position of the frequency domain resource occupied by the first antenna port.

The plurality of tenth correspondences may be shown in Table 19. In Table 19, for example, there are four sixteenth correspondences and each sixteenth correspondence includes four time domain resources. Sixteenth correspondence 1 to sixteenth correspondence 4 are different from each other. For details, refer to Table 19.

For example, in Table 19, sending moment 1 may be replaced with OFDM symbol 1, system frame number 1, slot number 1, time domain resource 1, or time unit 1. Sending moment 2 to sending moment 14 are similar to sending moment 1, and details are not described one by one.

Optionally, in Table 19, the sixteenth correspondence further includes sending moment 1 to sending moment 8, and start positions of frequency domain resources respectively corresponding to sending moment 5 to sending moment 8 are the same as start positions of frequency domain resources respectively corresponding to sending moment 1 to sending moment 4.

**Table 19**

| Sixteenth correspondence 1 (or pattern 1) | | | |
|---|---|---|---|
| Sending moment 1 | Sending moment 2 | Sending moment 3 | Sending moment 4 |
| Start RB 0 | Start RB N/4 | Start RB N/2 | Start RB 3*N/4 |
| Sixteenth correspondence 2 | | | |
| Sending moment 1 | Sending moment 2 | Sending moment 3 | Sending moment 4 |
| Start RB N/4 | Start RB N/2 | Start RB 3*N/4 | Start RB 0 |
| Sixteenth correspondence 3 | | | |
| Sending moment 1 | Sending moment 2 | Sending moment 3 | Sending moment 4 |
| Start RB N/2 | Start RB 3*N/4 | Start RB 0 | Start RB N/4 |
| Sixteenth correspondence 4 | | | |
| Sending moment 1 | Sending moment 2 | Sending moment 3 | Sending moment 4 |
| Start RB 3*N/4 | Start RB 0 | Start RB N/4 | Start RB N/2 |

In this way, the terminal device obtains, by using one of the plurality of sixteenth correspondences and the time domain resource occupied by the first antenna port, the start position of the frequency domain resource occupied by the first antenna port, so that antenna ports that cause interference to the antenna port of the terminal device at different sending moments are different. This brings a good interference randomization effect, can accelerate an interference randomization convergence speed, and can improve channel estimation performance.

According to the communication method shown in FIG. 14, when the start position of the frequency domain resource occupied by the antenna port is determined, the fourth offset is introduced, so that the start position of the frequency domain resource occupied by each antenna port may randomly change on different time domain resources, and an antenna port that causes interference to an antenna port of a terminal device also randomly changes, to implement frequency-domain interference randomization. This brings the good interference randomization effect, can accelerate the interference randomization convergence speed, and can improve the channel estimation performance.

For example, FIG. 15 is a schematic flowchart of a communication method according to an embodiment of this application. The method shown in FIG. 15 may be used in combination with the method shown in FIG. 13 and/or FIG. 14.

Alternatively, the method shown in FIG. 15 may be used in combination with the method shown in FIG. 5 and/or FIG. 11, to achieve a better interference randomization effect. Alternatively, the method shown in FIG. 15 may be used independently.

As shown in FIG. 15, the communication method includes the following steps.

S1501: A network device sends configuration information of a reference signal. Correspondingly, a terminal device receives the configuration information of the reference signal.

S1502: The terminal device sends a reference signal via M antenna ports based on the configuration information. Correspondingly, the network device receives the reference signal via the M antenna ports based on the configuration information.

M is an integer greater than 0, and the M antenna ports include at least one first antenna port. For specific implementations of M, the M antenna ports, and the first antenna port, refer to the corresponding descriptions in S502. Details are not described herein again.

In some embodiments, a cyclic shift value of the first antenna port is determined based on at least a first code domain offset.

Optionally, the first offset may be an integer greater than or equal to 0.

Optionally, that a cyclic shift value of the first antenna port is determined based on at least a first code domain offset may include: The cyclic shift value of the first antenna port is determined based on an initial value of the cyclic shift value of the first antenna port and the first code domain offset.

Optionally, the cyclic shift value of the first antenna port may be determined based on the initial value of the cyclic shift value and the first code domain offset.

In some embodiments, the first code domain offset may be determined based on at least a time domain resource occupied by the first antenna port and/or a frequency domain resource occupied by the first antenna port.

Optionally, the time domain resource occupied by the first antenna port may include one or more OFDM symbols. The one or more OFDM symbols included in the time domain resource occupied by the first antenna port may be determined based on one or more of the following parameters: a system frame number corresponding to the first antenna port, a slot number corresponding to the first antenna port, and an OFDM symbol number corresponding to the first antenna port.

A quantity of OFDM symbols included in the time domain resource occupied by the first antenna port is not limited in this application.

Optionally, the frequency domain resource occupied by the first antenna port may include one or more sub-bandwidths. The one or more sub-bandwidths included in the frequency domain resource occupied by the first antenna port may be determined based on one or more of the following parameters: an index of a frequency hopping bandwidth corresponding to the first antenna port, and an index of a transmit bandwidth corresponding to the first antenna port.

Optionally, the M reference signal ports include a plurality of first reference signal ports, and on a time domain resource and/or a frequency domain resource, the plurality of first reference signal ports correspond to a same first code domain offset.

In some embodiments, the first code domain offset includes a first code domain random number and/or a second code domain random number.

Optionally, the first code domain random number is determined based on at least the time domain resource occupied by the first antenna port. For example, the first code domain random number may be denoted by $A_1$.

Optionally, the second code domain random number is determined based on at least the frequency domain resource occupied by the first antenna port. For example, the first code domain random number may be denoted by $A_2$.

In this way, the cyclic shift value occupied by the first antenna port may be determined based on a first random number and/or a fifth random number.

In some embodiments, that the first code domain random number is determined based on at least the time domain resource occupied by the first antenna port includes: The first code domain random number is determined based on the time domain resource occupied by the first antenna port and a pseudo-random sequence.

Optionally, the pseudo-random sequence may be c(). For a specific implementation of the pseudo-random sequence, refer to the corresponding descriptions in S502. Details are not described herein again.

Optionally, the first code domain random number is determined based on the time domain resource occupied by the first antenna port and the pseudo-random sequence, and the first code domain random number may be further determined based on one or more of the following parameters: a quantity of slots included in each system frame, a quantity of OFDM symbols included in each slot, a comb quantity, and a comb offset.

For example, in this application, the quantity of the slots included in each system frame may be a quantity of slots included in one system frame.

For example, in this application, the quantity of the OFDM symbols included in each slot may be a quantity of OFDM symbols included in one slot.

Optionally, the comb quantity may be a quantity of combs included in a transmit bandwidth of the reference signal.

Optionally, the comb offset may be a reference quantity of combs occupied by the reference signal.

Optionally, the first code domain random number may satisfy a formula (45), a formula (46), a formula (47), a formula (48), a formula (49), a formula (50), a formula (51), or a formula (52).

$$A_1 = \left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m\right) \bmod Y \qquad (45)$$

$$A_1 = \left(\sum_{m=0}^{7} c(8(n_{\text{s,f}}^{\mu} N_{\text{symb}}^{\text{slot}} + l_0 + l') + m) \cdot 2^m\right) \bmod Y \qquad (46)$$

$$A_1 = \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m \qquad (47)$$

$$A_1 = \sum_{m=0}^{7} c(8(n_{\text{s,f}}^{\mu} N_{\text{symb}}^{\text{slot}} + l_0 + l') + m) \cdot 2^m \qquad (48)$$

$$A_1 = \frac{2\pi}{Y}\left(\left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m\right) \bmod Y\right) \quad (49)$$

$$A_1 = \frac{2\pi}{Y}\left(\left(\sum_{m=0}^{7} c(8(n_{\text{s,f}}^{\mu} N_{\text{symb}}^{\text{slot}} + l_0 + l') + m) \cdot 2^m\right) \bmod Y\right) \quad (50)$$

$$A_1 = \frac{2\pi}{Y}\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m \qquad (51)$$

$$A_1 = \frac{2\pi}{Y}\sum_{m=0}^{7} c(8(n_{\text{s,f}}^{\mu} N_{\text{symb}}^{\text{slot}} + l_0 + l') + m) \cdot 2^m \qquad (52)$$

In the formula (45), the formula (46), the formula (47), the formula (48), the formula (49), the formula (50), the formula (51), or the formula (52), $A_1$ represents the first code domain random number, a mathematical symbol $\Sigma$ represents summation, a mathematical symbol mod represents a modulo operation, $c()$ is the pseudo-random sequence, $n_f$ represents the system frame number corresponding to the first antenna port (or $n_f$ represents a system frame number of the time domain resource occupied by the first antenna port), $N_{\text{slot}}^{\text{frame}}$ represents the quantity of the slots in each system frame, $N_{\text{symb}}^{\text{slot}}$ represents the quantity of the OFDM symbols in each slot, $n_{\text{s,f}}^{\mu}$ represents the slot number corresponding to the first antenna port (or $n_{\text{s,f}}^{\mu}$ represents a slot number of the time domain resource occupied by the first antenna port), $l_0$ represents an index of a start OFDM symbol in the one or more OFDM symbols included in the time domain resource occupied by the first antenna port (or $l_0$ represents the index of the start OFDM symbol), $l'$ represents a relative index of one OFDM symbol in the one or more OFDM symbols included in the time domain resource occupied by the first antenna port (or $l'$ represents a relative index of an OFDM symbol of the time domain resource occupied by the first antenna port), and Y is a maximum quantity that is of supported antenna ports and that is multiplexed through cyclic shifting on one comb, a quantity of Fourier transform points, or a quantity of subcarriers occupied by the first antenna port on one OFDM symbol.

It should be noted that m in the formula (45), the formula (46), the formula (47), the formula (48), the formula (49), the formula (50), the formula (51), or the formula (52) is irrelevant to the sequence length M. In the formula (45), the formula (46), the formula (47), the formula (48), the formula (49), the formula (50), the formula (51), or the formula (52), an example in which m is an integer ranging from 0 to 7 is used for description, and a value range of m in the formula (45), the formula (46), the formula (47), the formula (48), the formula (49), the formula (50), the formula (51), or the formula (52) is not limited in this application.

In this application, the cyclic shift value of the first antenna port of the terminal device is determined based on the first code domain random number, so that the cyclic shift value of the terminal device may randomly change at different sending moments. In this way, a terminal device that causes interference to the terminal device randomly changes. Therefore, frequency-domain interference randomization is implemented, and a better interference randomization effect can be achieved.

In some other embodiments, that the first code domain random number is determined based on at least the time domain resource occupied by the first antenna port may include: The first code domain random number is determined based on one of a plurality of seventh correspondences and the time domain resource occupied by the first antenna port.

Optionally, one of the plurality of seventh correspondences may be indicated by the network device to the terminal device. For example, the configuration information of the reference signal may include indication information indicating one of the plurality of seventh correspondences, and/or one of the plurality of seventh correspondences.

For example, the network device may select one seventh correspondence from the plurality of seventh correspondences, and indicate the selected seventh correspondence to the terminal device.

Optionally, one seventh correspondence may include a correspondence between at least one first code domain random number and at least one time domain resource.

For example, the at least one first code domain random number corresponds one-to-one to the at least one time domain resource. For example, the time domain resource may be an OFDM symbol, a system frame number, or a slot number.

For example, it is assumed that each first correspondence (which may be referred to as a pattern (pattern)) has n time domain resources. First code domain random numbers corresponding to the n time domain resources are $\{x_1, x_2, ...x_n\}$ for seventh correspondence 1. In this case, there is seventh correspondence 1+a, a is an integer greater than 0, and first code domain random numbers corresponding to the n time domain resources are $\{x_{(1+a)modn}, x_{(2+a)modn}, ...x_{(M+a)modn}\}$. A value of $\{x_1, x_2, ...x_n\}$ belongs to $\{0, 1, ..., ncs-1\}$, and ncs is a maximum quantity of CSs that can be supported on a comb.

Optionally, one frequency hopping periodicity includes at least one time of reference signal sending, and the correspondence between at least one first code domain random number and at least one time domain resource may include: a correspondence between the at least one first random number and a relative number of the at least one time of reference signal sending in the frequency hopping periodicity.

For example, the at least one first code domain random number corresponds one-to-one to a number of the at least one time of reference signal sending.

For example, the terminal device may obtain, based on a number of a current time of reference signal sending via the first antenna port, the first code domain random number from the correspondence between the at least one first code domain random number and a relative number of the at least one time of reference signal sending in the frequency hopping periodicity.

Alternatively, optionally, the correspondence between at least one first code domain random number and at least one time domain resource may include: a correspondence between the at least one first code domain random number and an index of at least one frequency hopping periodicity.

For example, the at least one first code domain random number corresponds one-to-one to the index of the at least one frequency hopping periodicity.

For example, the terminal device may obtain the first code domain random number from the correspondence between the at least one first code domain random number and an index of at least one frequency hopping periodicity based on an index of a frequency hopping periodicity in which the time domain resource occupied by the first antenna port is located.

Optionally, the network device may indicate different seventh correspondences to terminal devices in different cells.

In this way, the network device indicates different seventh correspondences to terminal devices in different cells, so that a terminal device that causes interference to the terminal device randomly changes, to implement the frequency-domain interference randomization, and achieve the better interference randomization effect.

In some embodiments, that the second code domain random number is determined based on at least the frequency domain resource occupied by the first antenna port may include: The second code domain random number is determined based on the frequency domain resource occupied by the first antenna port and a pseudo-random sequence.

Optionally, the pseudo-random sequence may be c().

Optionally, the second code domain random number may satisfy a formula (53), a formula (54), a formula (55), or a formula (56).

$$A_2 = \left(\sum_{m=0}^{7} c(8k + m) \cdot 2^m\right) \bmod Y \tag{53}$$

$$A_2 = \sum_{m=0}^{7} c(8k + m) \cdot 2^m \tag{54}$$

$$A_2 = \frac{2\pi}{Y}\left(\left(\sum_{m=0}^{7} c(8k + m) \cdot 2^m\right) \bmod Y\right) \tag{55}$$

$$A_2 = \frac{2\pi}{Y} \sum_{m=0}^{7} c(8k + m) \cdot 2^m \qquad\qquad (56)$$

In the formula (53), the formula (54), the formula (55), or the formula (56), $A_2$ represents the second code domain random number, the mathematical symbol $\Sigma$ represents summation, the mathematical symbol mod represents a modulo operation, $c()$ is the pseudo-random sequence, $k$ represents an index of a frequency hopping bandwidth and/or an index of a transmit bandwidth that correspond/corresponds to the frequency domain resource occupied by the first antenna port, Y is the maximum quantity that is of supported antenna ports and that is multiplexed through cyclic shifting on one comb, the quantity of the Fourier transform points, or the quantity of the subcarriers occupied by the first antenna port on one OFDM symbol.

It should be noted that m in the formula (53), the formula (54), the formula (55), or the formula (56) is irrelevant to a sequence length M. In the formula (53), the formula (54), the formula (55), or the formula (56), an example in which m is an integer ranging from 0 to 7 is used for description, and a value range of m in the formula (53), the formula (54), the formula (55), or the formula (56) is not limited in this application.

In some other embodiments, that the second code domain random number is determined based on at least the frequency domain resource occupied by the first antenna port may include: The second code domain random number is determined based on one of a plurality of eighth correspondences and the frequency domain resource occupied by the first antenna port.

Optionally, one of the plurality of eighth correspondences may be indicated by the network device to the terminal device. For example, the configuration information of the reference signal may include indication information indicating one of the plurality of eighth correspondences, and/or one of the plurality of eighth correspondences.

For example, the network device may select one eighth correspondence from the plurality of eighth correspondences, and indicate the selected eighth correspondence to the terminal device.

Optionally, one eighth correspondence may include a correspondence between at least one second code domain random number and at least one frequency domain resource.

For example, the at least one second code domain random number corresponds one-to-one to the at least one frequency domain resource.

For example, the terminal device may obtain, from the correspondence between at least one second code domain random number and at least one frequency domain resource based on the frequency domain resource occupied by the first antenna port, the second code domain random number corresponding to the frequency domain resource occupied by the first antenna port.

For example, a specific implementation of the eighth correspondence is similar to that of the seventh correspondence. For details, refer to the descriptions of the seventh correspondence. Details are not described herein again.

In this way, the second code domain random number obtained by the terminal device randomly changes on different frequency domain resources, and then the cyclic shift value occupied by the first antenna port of the terminal device is determined based on the second code domain random number, so that the cyclic shift value occupied by the terminal device randomly changes at different sending moments.

Optionally, the network device may indicate different eighth correspondences to terminal devices in different cells.

In this way, the network device indicates different eighth correspondences to terminal devices in different cells, so that a terminal device that causes interference to the terminal device randomly changes, to implement the interference randomization, and achieve the better interference randomization effect.

Optionally, a value of the cyclic shift value may satisfy $\alpha \in \{0, 1, ..., K \times Y - 1\}$, where $Y$ is a maximum quantity that is of supported antenna ports and that is multiplexed through cyclic shifting on one comb, or a quantity of cyclic shift values that can be configured by using a higher-layer parameter on one comb, and a value of $Y$ is determined based on a configured quantity of reference signal combs, and $K$ is an integer greater than 1.

Alternatively, optionally, a value of the cyclic shift value may satisfy $\alpha \in \{0, 1, ..., Y - 1\}$, where $Y$ is a quantity $M$ of Fourier transform points, $M = 2^x$, $x$ is a positive integer, and a value of $M$ is determined based on a system bandwidth or a sounding bandwidth of the reference signal.

Alternatively, optionally, a value of the cyclic shift value may satisfy $\alpha \in \{0, 1, ..., Y - 1\}$, where $Y$ is a quantity of subcarriers occupied by the first antenna port on one OFDM symbol.

In some embodiments, when the first code domain offset is the first code domain random number, a cyclic shift value $\alpha_i$ that is occupied by antenna port $p_i$ and that is determined based on the first code domain random number $A_1$ may satisfy the following formula: $\alpha_i = A_1 +$

$$\frac{2\pi}{n_{\text{SRS}}^{\text{cs,max}}} \left( \left( n_{\text{SRS}}^{\text{cs}} + \frac{n_{\text{SRS}}^{\text{cs,max}}(p_i - 1000)}{N_{\text{ap}}^{\text{SRS}}} \right) \bmod n_{\text{SRS}}^{\text{cs,max}} \right) \qquad , \qquad \alpha_i = \frac{2\pi}{M_{ZC}} A_1 + \frac{2\pi}{n_{\text{SRS}}^{\text{cs,max}}} \left( \left( n_{\text{SRS}}^{\text{cs}} + \right.$$

$$\left.\left.\frac{n_{\text{SRS}}^{\text{cs,max}}(p_i-1000)}{N_{\text{ap}}^{\text{SRS}}}\right) \mod n_{\text{SRS}}^{\text{cs,max}}\right) \ , \quad \alpha_i = \frac{2\pi}{M_{ZC}}A_1 + 2\pi\frac{n_{\text{SRS}}^{\text{cs},i}}{n_{\text{SRS}}^{\text{cs,max}}} \ , \text{ or } \quad \alpha_i = A_1 + 2\pi\frac{n_{\text{SRS}}^{\text{cs},i}}{n_{\text{SRS}}^{\text{cs,max}}} \ . \quad n_{\text{SRS}}^{\text{cs,max}}$$

represents a maximum cyclic shift value. $n_{\text{SRS}}^{\text{cs}}$ represents a cyclic shift reference value,

$n_{\text{SRS}}^{\text{cs}} \in \{0, 1, \ldots, n_{\text{SRS}}^{\text{cs,max}} - 1\}$, and is semi-statically configured by the network device by using a higher-layer parameter (for example, transmissionComb). For a meaning represented by $n_{\text{SRS}}^{\text{cs},i}$, refer to the corresponding

descriptions of $n_{\text{SRS}}^{\text{cs},i}$ in the foregoing "Third, cyclic shift value". Details are not described herein again. $N_{\text{ap}}^{\text{SRS}}$ represents a quantity of antenna ports (refer to the foregoing descriptions in "First, configuration information"), and $M_{\text{ZC}}$ is a

length of a sequence. $n_{SRS}^{cs}$ may be replaced with $n_{SRS}^{cs} + n_{SRS}^{csOffset}$ .

Optionally, in the formula (1), $n_{SRS}^{cs}$ may be replaced with $n_{SRS}^{cs} + n_{SRS}^{csOffset}$ , where $n_{SRS}^{csOffset}$ is the first code domain random number.

In some embodiments, when the first code domain offset is the second code domain random number, a cyclic shift value $\alpha_i$ that is occupied by antenna port $p_i$ and that is determined based on the second code domain random number $A_2$ may satisfy the following formula: $\alpha_i$ =

$$A_2 + \frac{2\pi}{n_{\text{SRS}}^{\text{cs,max}}}\left(\left(n_{\text{SRS}}^{\text{cs}} + \frac{n_{\text{SRS}}^{\text{cs,max}}(p_i-1000)}{N_{\text{ap}}^{\text{SRS}}}\right) \mod n_{\text{SRS}}^{\text{cs,max}}\right) \ , \qquad \alpha_i = \frac{2\pi}{M_{ZC}}A_2 + \frac{2\pi}{n_{\text{SRS}}^{\text{cs,max}}}\left(\left(n_{\text{SRS}}^{\text{cs}} + \right.\right.$$

$$\left.\left.\frac{n_{\text{SRS}}^{\text{cs,max}}(p_i-1000)}{N_{\text{ap}}^{\text{SRS}}}\right) \mod n_{\text{SRS}}^{\text{cs,max}}\right) \ , \quad \alpha_i = \frac{2\pi}{M_{ZC}}A_2 + 2\pi\frac{n_{\text{SRS}}^{\text{cs},i}}{n_{\text{SRS}}^{\text{cs,max}}} \ , \text{ or } \quad \alpha_i = A_2 + 2\pi\frac{n_{\text{SRS}}^{\text{cs},i}}{n_{\text{SRS}}^{\text{cs,max}}} \ . \quad n_{\text{SRS}}^{\text{cs,max}}$$

represents a maximum cyclic shift value. $n_{\text{SRS}}^{\text{cs}}$ represents a cyclic shift reference value,

$n_{\text{SRS}}^{\text{cs}} \in \{0, 1, \ldots, n_{\text{SRS}}^{\text{cs,max}} - 1\}$, and is semi-statically configured by the network device by using a higher-layer parameter (for example, transmissionComb). For a meaning represented by $n_{\text{SRS}}^{\text{cs},i}$, refer to the corresponding

descriptions of $n_{\text{SRS}}^{\text{cs},i}$ in the foregoing "Third, cyclic shift value". Details are not described herein again. $N_{\text{ap}}^{\text{SRS}}$ represents a quantity of antenna ports (refer to the foregoing descriptions in "First, configuration information"), and $M_{\text{ZC}}$ is a length of a sequence.

In some embodiments, when the first code domain offset includes the first code domain random number and the second code domain random number, a cyclic shift value $\alpha_i$ that is occupied by an antenna port $p_i$ and that is determined based on a first code domain random number $A_1$ and a second code domain random number $A_2$ may satisfy the following formula:

$$\alpha_i = A_1 + A_2 + \frac{2\pi}{n_{\text{SRS}}^{\text{cs,max}}}\left(\left(n_{\text{SRS}}^{\text{cs}} + \frac{n_{\text{SRS}}^{\text{cs,max}}(p_i-1000)}{N_{\text{ap}}^{\text{SRS}}}\right) \mod n_{\text{SRS}}^{\text{cs,max}}\right) \ , \qquad \alpha_i = \frac{2\pi}{M_{ZC}}(A_1 + A_2) +$$

$$\frac{2\pi}{n_{\text{SRS}}^{\text{cs,max}}}\left(\left(n_{\text{SRS}}^{\text{cs}} + \frac{n_{\text{SRS}}^{\text{cs,max}}(p_i-1000)}{N_{\text{ap}}^{\text{SRS}}}\right) \mod n_{\text{SRS}}^{\text{cs,max}}\right), \quad \alpha_i = \frac{2\pi}{M_{ZC}}(A_1 + A_2) + 2\pi\frac{n_{\text{SRS}}^{\text{cs},i}}{n_{\text{SRS}}^{\text{cs,max}}} \ , \text{ or } \alpha_i = A_1 +$$

$$A_2 + 2\pi\frac{n_{\text{SRS}}^{\text{cs},i}}{n_{\text{SRS}}^{\text{cs,max}}} \ . \quad n_{\text{SRS}}^{\text{cs,max}} \text{ represents a maximum cyclic shift value. } n_{\text{SRS}}^{\text{cs}} \text{ represents a cyclic shift reference value,}$$

$n_{\text{SRS}}^{\text{cs}} \in \{0, 1, \ldots, n_{\text{SRS}}^{\text{cs,max}} - 1\}$, and is semi-statically configured by the network device by using a higher-layer parameter (for example, transmissionComb). For a meaning represented by $n_{\text{SRS}}^{\text{cs},i}$, refer to the corresponding

descriptions of $n_{\mathrm{SRS}}^{\mathrm{cs},i}$ in the foregoing "Third, cyclic shift value". Details are not described herein again. $N_{\mathrm{ap}}^{\mathrm{SRS}}$ represents a quantity of antenna ports (refer to the foregoing descriptions in "First, configuration information"), and $M_{\mathrm{ZC}}$ is a length of a sequence.

The following describes, with reference to Table 20, determining the cyclic shift value of the first antenna port based on the first code domain random number and/or the second code domain random number.

The foregoing scenario 1 is used as an example. A cyclic shift value of each antenna port (antenna port $p_0$ to antenna port $p_3$) of UE 1 to UE 8 is determined based on the first code domain random number and/or the second code domain random number. The cyclic shift value (denoted by CS) of an antenna port of each UE may be shown in Table 20.

On frequency domain resource 1 and/or frequency domain resource 1, antenna ports of UE 1, UE 2, UE 5, and UE 6 use CS 0 and CS 2. UE 1 is used as an example. The antenna ports of UE 1 suffer interference from antenna ports of UE 5 and UE 6.

On frequency domain resource 2 and/or frequency domain resource 2, antenna ports of UE 1, UE 2, UE 7, and UE 8 use CS 1 and CS 3, and the antenna ports of UE 1 suffer interference from antenna ports of UE 7 and UE 8.

On frequency domain resource n and/or frequency domain resource n, the antenna ports of UE 1, UE 2, UE 5, and UE 6 use CS 1 and CS 3, and the antenna ports of UE 1 suffer interference from the antenna ports of UE 5 and UE 6.

It should be noted that, in Table 20, an example in which antenna port $p_0$ and antenna port $p_2$ of each UE occupy and use one cyclic shift value, and antenna port $p_1$ and antenna port $p_3$ use one cyclic shift value is used. For example, a cyclic shift value used by antenna port $p_0$ and antenna port $p_2$ is a cyclic shift value with a smaller cyclic shift value index in two cyclic shift values used by the UE, and a cyclic shift value used by antenna port $p_1$ and antenna port $p_3$ is a cyclic shift value with a larger cyclic shift value index in the two cyclic shift values used by the UE. For ease of understanding, Table 20 shows the UEs, corresponding base sequences, and corresponding cyclic shift values, but does not show the antenna ports.

Optionally, in Table 20, frequency domain resource 1 may be replaced with frequency domain unit 1, subband 1, frequency hopping bandwidth 1, frequency hopping bandwidth 1, or the like. Frequency domain resource 2 to frequency domain resource n are similar to frequency domain resource 1, and details are not described one by one. Sending moment 1 may be replaced with OFDM symbol 1, system frame number 1, slot number 1, time domain resource 1, or time unit 1. Sending moment 2 to sending moment 4 are similar to sending moment 1, and details are not described one by one.

**Table 20**

| Sending moment 1 and/or frequency domain resource 1 | | | | |
|---|---|---|---|---|
| Cell 1 | UE 1: $r_1$, CS 0 and CS 2 | UE 2: $r_1$, CS 0 and CS 2 | UE 3: $r_1$, CS 1 and CS 3 | UE 4: $r_1$, CS 1 and CS 3 |
| Cell 2 | UE 5: $r_2$, CS 0 and CS 2 | UE 6: $r_2$, CS 0 and CS 2 | UE 7: $r_2$, CS 1 and CS 3 | UE 8: $r_2$, CS 1 and CS 3 |
| Sending moment 2 and/or frequency domain resource 2 | | | | |
| Cell 1 | UE 1: $r_1$, CS 1 and CS 3 | UE 2: $r_1$, CS 1 and CS 3 | UE 3: $r_1$, CS 0 and CS 2 | UE 4: $r_1$, CS 0 and CS 2 |
| Cell 2 | UE 5: $r_2$, CS 0 and CS 2 | UE 6: $r_2$, CS 0 and CS 2 | UE 7: $r_2$, CS 1 and CS 3 | UE 8: $r_2$, CS 1 and CS 3 |
| ... | | | | |
| Sending moment n and/or frequency domain resource n | | | | |
| Cell 1 | UE 1: $r_1$, CS 1 and CS 3 | UE 2: $r_1$, CS 1 and CS 3 | UE 3: $r_1$, CS 0 and CS 2 | UE 4: $r_1$, CS 0 and CS 2 |
| Cell 2 | UE 5: $r_2$, CS 1 and CS 3 | UE 6: $r_2$, CS 1 and CS 3 | UE 7: $r_2$, CS 0 and CS 2 | UE 8: $r_2$, CS 0 and CS 2 |

In this way, cyclic shift values used by the antenna ports of UE 1 randomly change at different sending moments and/or on different frequency domain resources, so that a UE that causes interference to UE 1 randomly changes. UEs that cause interference to UE 1 at some sending moments and/or on some frequency domain resources are UE 5 and UE 6. UEs that cause interference to UE 1 at some sending moments and/or on some frequency domain resources are UE 7 and UE 8. An antenna port that causes interference to the antenna port of UE 1 randomly changes, to achieve the better interference randomization effect.

According to the communication method shown in FIG. 15, the cyclic shift value of the first antenna port of the terminal device is determined based on the first code domain offset, so that the cyclic shift value of antenna port of the terminal device may randomly change at different sending moments and/or on different frequency domain resources. In this way, an antenna port of a terminal device that causes interference to the antenna port of the terminal device randomly changes. Therefore, the interference randomization is implemented, and the better interference randomization effect can be achieved.

For example, the method shown in FIG. 13, the method shown in FIG. 14, and the method shown in FIG. 15 may be combined or separately used.

For example, the network device sends configuration information of a reference signal. Correspondingly, the terminal device receives the configuration information of the reference signal. The terminal device sends a reference signal via M antenna ports based on the configuration information. Correspondingly, the network device receives the reference signal via the M antenna ports based on the configuration information. A comb occupied by the first antenna port is determined based on at least a first offset, a cyclic shift value of the first antenna port is determined based on at least a first code domain offset, and/or a start position of a frequency domain resource occupied by the first antenna port is determined based on at least a fourth offset, for a specific implementation, refer to the corresponding descriptions in FIG. 13, FIG. 14, and FIG. 15.

In this application, unless otherwise specified, for same or similar parts in embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

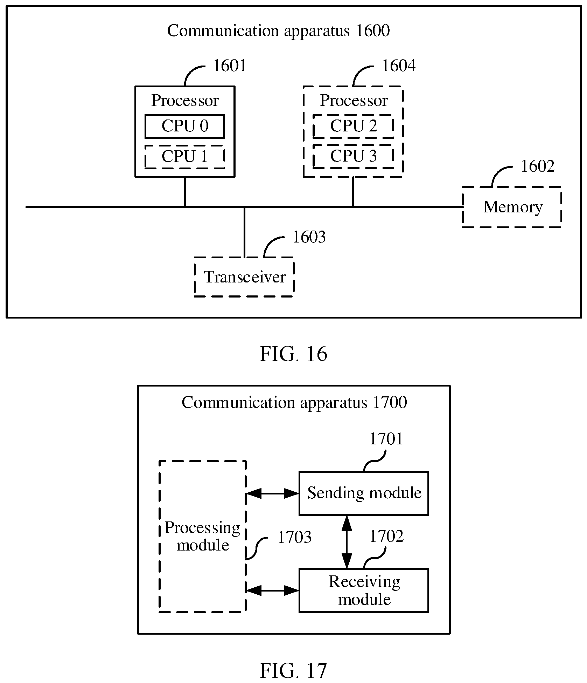

The communication methods provided in embodiments of this application are described above in detail with reference to FIG. 5 to FIG. 15. The following describes in detail communication apparatuses provided in embodiments of this application with reference to FIG. 16 and FIG. 17.

FIG. 16 is a diagram of a structure of a communication apparatus that can be configured to perform an embodiment of this application.

The communication apparatus 1600 may be a terminal device or a network device; may be a chip used in a network device or a terminal device; or may be another component having a corresponding function. As shown in FIG. 16, the communication apparatus 1600 may include a processor 1601. Optionally, the communication apparatus 1600 may further include one or both of a memory 1602 and a transceiver 1603. The processor 1601 and the or both of the memory 1602 and the transceiver 1603 may be coupled, for example, may be connected through a communication bus; or the processor 1601 may be used independently.

Various components of the communication apparatus 1600 are described specifically with reference to FIG. 16.

The processor 1601 is a control center of the communication apparatus 1600, and may be one processor or may be a collective name of a plurality of processing elements. For example, the processor 1601 is one or more central processing units (central processing units, CPUs), may be an application-specific integrated circuit (application-specific integrated circuit, ASIC), or may be one or more integrated circuits configured to implement embodiments of this application, for example, one or more microprocessors (digital signal processors, DSPs), or one or more field programmable gate arrays (field programmable gate arrays, FPGAs).

The processor 1601 may perform various functions of the communication apparatus 1600 by running or executing a software program stored in the memory 1602 and invoking data stored in the memory 1602.

During specific implementation, in an embodiment, the processor 1601 may include one or more CPUs, for example, a CPU 0 and a CPU 1 shown in FIG. 16.

During specific implementation, in an embodiment, the communication apparatus 1600 may alternatively include a plurality of processors, for example, the processor 1601 and a processor 1604 shown in FIG. 16. Each of the processors may be a single-core processor (single-CPU), or may be a multi-core processor (multi-CPU). The processor herein may be one or more communication devices, circuits, and/or processing cores configured to process data (for example, computer program instructions).

Optionally, the memory 1602 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage communication device, or any other medium that can be used to carry or store expected program code in a form of instructions or a data structure and that can be accessed by a computer. However, this is not limited thereto. The memory 1602 may be integrated with the processor 1601, or may exist independently, and is coupled to the processor 1601 through an input/output port (not shown in FIG. 16) of the communication apparatus 1600. This is not specifically limited in embodiments of this application.

For example, the input port may be configured to implement a receiving function performed by the terminal device or the network device in any one of the foregoing method embodiments, and the output port may be configured to implement a sending function performed by the terminal device or the network device in any one of the foregoing method embodiments.

The memory 1602 may be configured to store a software program for performing the solutions of this application, and the processor 1601 controls execution of the software program. For a specific implementation, refer to the following method embodiments. Details are not described herein again.

Optionally, the transceiver 1603 is configured to communicate with another communication apparatus. For example, when the communication apparatus 1600 is a network device, the transceiver 1603 may be configured to communicate with a terminal device. For another example, when the communication apparatus 1600 is a terminal device, the transceiver 1603 may be configured to communicate with a network device or the like.

In addition, the transceiver 1603 may include a receiver and a transmitter (not separately shown in FIG. 16). The receiver is configured to implement a receiving function, and the transmitter is configured to implement a sending function. The transceiver 1603 may be integrated with the processor 1601, or may exist independently, and is coupled to the processor 1601 through the input/output port (not shown in FIG. 16) of the communication apparatus 1600. This is not specifically limited in embodiments of this application.

It should be noted that a structure of the communication apparatus 1600 shown in FIG. 16 does not constitute a limitation on the communication apparatus. An actual communication apparatus may include more or fewer components than those shown in the figure, combine some components, or have different component arrangements.

The actions of the network device in FIG. 5 to FIG. 15 may be performed by the processor 1601 in the communication apparatus 1600 shown in FIG. 16 by invoking application program code stored in the memory 1602, to instruct the network device to perform the actions.

The actions of the terminal device in FIG. 5 to FIG. 15 may be performed by the processor 1601 in the communication apparatus 1600 shown in FIG. 16 by invoking application program code stored in the memory 1602, to instruct an application network element to perform the actions. This is not limited in this embodiment.

When the communication apparatus is a network device, the communication apparatus 1600 may perform any one or more possible design manners related to the network device in the foregoing method embodiments.

When the communication apparatus is a terminal device, the communication apparatus 1600 may perform any one or more possible design manners related to the terminal device in the foregoing method embodiments.

It should be noted that all related content of the steps in the foregoing method embodiments may be cited in function descriptions of corresponding functional modules. Details are not described herein again.

FIG. 17 is a diagram of a structure of another communication apparatus according to an embodiment of this application. For ease of description, FIG. 17 shows only main components of the communication apparatus.

The communication apparatus 1700 may include a sending module 1701 and a receiving module 1702, and may further include a processing module 1703.

The communication apparatus 1700 may be the terminal device or the network device in the foregoing method embodiments. The sending module 1701 may also be referred to as a sending unit and is configured to implement a sending function performed by the terminal device or the network device in any one of the foregoing method embodiments. The receiving module 1702 may also be referred to as a receiving unit and is configured to implement a receiving function performed by the terminal device or the network device in any one of the foregoing method embodiments.

It should be noted that the sending module 1701 and the receiving module 1702 may be separately disposed, or may be integrated into one module, namely, a transceiver module. Specific implementations of the receiving module and the sending module are not specifically limited in this application. The transceiver module may include a transceiver circuit, a transceiver machine, a transceiver, or a communication interface.

Optionally, the communication apparatus 1700 may further include a storage module (not shown in FIG. 17). The storage module stores a program or instructions. When the processing module 1703 executes the program or the instructions, the communication apparatus 1700 is enabled to perform the method in any one of the foregoing method embodiments.

The processing module 1703 may be configured to implement a processing function performed by the terminal device or the network device in any one of the foregoing method embodiments. The processing module 1703 may be a processor.

In this embodiment, the communication apparatus 1700 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 1700 may be in a form of the communication apparatus 1600 shown in FIG. 16.

For example, the processor 1601 in the communication apparatus 1600 shown in FIG. 16 may invoke computer-executable instructions stored in the memory 1602, so that the communication method in the foregoing method embodiments is performed.

Specifically, functions/implementation processes of the processing module 1703 and the storage module in FIG. 17 may be implemented by a transceiver 1603 in the communication apparatus 1600 shown in FIG. 16. Specifically, functions/implementation processes of the processing module 1703 in FIG. 17 may be implemented by the processor 1601 in the communication apparatus 1600 shown in FIG. 16 by invoking the computer-executable instructions stored in the memory 1602.

The communication apparatus 1700 provided in this embodiment may perform the foregoing communication method. Therefore, for technical effects that can be achieved by the communication apparatus 1700, refer to the foregoing method embodiments. Details are not described herein again.

In a possible design solution, the communication apparatus 1700 shown in FIG. 17 is applicable to the system shown in FIG. 1, and performs a function of the network device in the communication method according to any one of the foregoing method embodiments.

The sending module 1701 is configured to send configuration information, where the configuration information indicates a configuration of a reference signal.

The receiving module 1702 is configured to receive the reference signal via M antenna ports based on the configuration information, where M is an integer greater than 0, the M antenna ports include at least one first antenna port, a comb occupied by the first antenna port is determined based on at least a first offset, the first offset is an integer greater than 0, and the first offset is determined based on at least a cell identifier and a time domain resource occupied by the first antenna port; or the first offset is determined based on a cyclic shift value occupied by the first antenna port.

It should be noted that all related content of the steps in the foregoing method embodiments may be cited in function descriptions of corresponding functional modules. Details are not described herein again.

It should be noted that the receiving module 1702 and the sending module 1701 may be separately disposed, or may be integrated into one module, namely, a transceiver module. This is not specifically limited in this application.

Optionally, the communication apparatus 1700 may further include a processing module 1703 and a storage module (not shown in FIG. 17). The storage module stores a program or instructions. When the processing module 1703 executes the program or the instructions, the communication apparatus 1700 is enabled to perform a function of the network device in the communication methods shown in FIG. 5 to FIG. 15.

It should be noted that the communication apparatus 1700 may be a network device, or may be a chip (system) or another part or component that can be disposed in the network device. This is not limited in this application.

For technical effects of the communication apparatus 1700, refer to the technical effects of the communication method in any possible implementation of FIG. 5 to FIG. 15. Details are not described herein again.

In another possible design solution, the communication apparatus 1700 shown in FIG. 17 is applicable to the system shown in FIG. 1, and performs a function of the terminal device in the communication method according to any one of the foregoing method embodiments.

The receiving module 1702 is configured to receive configuration information, where the configuration information indicates a configuration of a reference signal.

The sending module 1701 is configured to send the reference signal via M antenna ports based on the configuration information, where M is an integer greater than 0, the M antenna ports include at least one first antenna port, a comb occupied by the first antenna port is determined based on at least a first offset, the first offset is an integer greater than 0, and the first offset is determined based on at least a cell identifier and a time domain resource occupied by the first antenna port; or the first offset is determined based on a cyclic shift value occupied by the first antenna port.

It should be noted that all related content of the steps in the foregoing method embodiments may be cited in function descriptions of corresponding functional modules. Details are not described herein again.

It should be noted that the receiving module 1702 and the sending module 1701 may be separately disposed, or may be integrated into one module, namely, a transceiver module. This is not specifically limited in this application.

Optionally, the communication apparatus 1700 may further include a processing module 1703 and a storage module (not shown in FIG. 17). The storage module stores a program or instructions. When the processing module 1703 executes the program or the instructions, the communication apparatus 1700 is enabled to perform a function of the terminal device in the communication methods shown in FIG. 5 to FIG. 9.

It should be noted that the communication apparatus 1700 may be a terminal device, or may be a chip (system) or another part or component that can be disposed in the terminal device. This is not limited in this application.

For technical effects of the communication apparatus 1700, refer to the technical effects of the communication method in any possible implementation of FIG. 5 to FIG. 9. Details are not described herein again.

In a possible design solution, the communication apparatus 1700 shown in FIG. 17 is applicable to the system shown in FIG. 1, and performs a function of the network device in the communication method according to any one of the foregoing method embodiments.

The sending module 1701 is configured to send configuration information, where the configuration information indicates a configuration of a reference signal.

The receiving module 1702 is configured to receive the reference signal via M antenna ports based on the configuration information, where a start position of a frequency domain resource occupied by each of the M antenna ports is determined based on at least a fourth offset, where the fourth offset is an integer greater than 0, and the fourth offset is determined based on at least a cell identifier and an index of a frequency hopping periodicity corresponding to the reference signal.

It should be noted that all related content of the steps in the foregoing method embodiments may be cited in function descriptions of corresponding functional modules. Details are not described herein again.

It should be noted that the receiving module 1702 and the sending module 1701 may be separately disposed, or may be integrated into one module, namely, a transceiver module. This is not specifically limited in this application.

Optionally, the communication apparatus 1700 may further include a processing module 1703 and a storage module (not shown in FIG. 17). The storage module stores a program or instructions. When the processing module 1703 executes the program or the instructions, the communication apparatus 1700 is enabled to perform a function of the network device in the communication methods shown in FIG. 11 and FIG. 12.

It should be noted that the communication apparatus 1700 may be a network device, or may be a chip (system) or another part or component that can be disposed in the network device. This is not limited in this application.

For technical effects of the communication apparatus 1700, refer to the technical effects of the communication method in any possible implementation of FIG. 11 and FIG. 12. Details are not described herein again.

In another possible design solution, the communication apparatus 1700 shown in FIG. 17 is applicable to the system shown in FIG. 1, and performs a function of the terminal device in the communication method according to any one of the foregoing method embodiments.

The receiving module 1702 is configured to receive configuration information, where the configuration information indicates a configuration of a reference signal.

The sending module 1701 is configured to send the reference signal via M antenna ports based on the configuration information, where a start position of a frequency domain resource occupied by each of the M antenna ports is determined based on at least a fourth offset, where the fourth offset is an integer greater than 0, and the fourth offset is determined based on at least a cell identifier and an index of a frequency hopping periodicity corresponding to the reference signal.

It should be noted that all related content of the steps in the foregoing method embodiments may be cited in function descriptions of corresponding functional modules. Details are not described herein again.

It should be noted that the receiving module 1702 and the sending module 1701 may be separately disposed, or may be integrated into one module, namely, a transceiver module. This is not specifically limited in this application.

Optionally, the communication apparatus 1700 may further include a processing module 1703 and a storage module (not shown in FIG. 17). The storage module stores a program or instructions. When the processing module 1703 executes the program or the instructions, the communication apparatus 1700 is enabled to perform a function of the terminal device in the communication methods shown in FIG. 11 and FIG. 12.

It should be noted that the communication apparatus 1700 may be a terminal device, or may be a chip (system) or another part or component that can be disposed in the terminal device. This is not limited in this application.

In still another possible design solution, the communication apparatus 1700 shown in FIG. 17 is applicable to the system shown in FIG. 1, and performs a function of the network device in the communication method according to any one of the foregoing method embodiments.

The sending module 1701 is configured to send configuration information of a reference signal.

The receiving module 1702 is configured to receive the reference signal via M antenna ports based on the configuration information, where M is an integer greater than 0, the M antenna ports include at least one first antenna port, a comb occupied by the first antenna port is determined based on at least a first offset, and the first offset is determined based on at least a time domain resource occupied by the first antenna port and/or a frequency domain resource occupied by the first antenna port.

It should be noted that all related content of the steps in the foregoing method embodiments may be cited in function descriptions of corresponding functional modules. Details are not described herein again.

It should be noted that the receiving module 1702 and the sending module 1701 may be separately disposed, or may be integrated into one module, namely, a transceiver module. This is not specifically limited in this application.

Optionally, the communication apparatus 1700 may further include a processing module 1703 and a storage module (not shown in FIG. 17). The storage module stores a program or instructions. When the processing module 1703 executes the program or the instructions, the communication apparatus 1700 is enabled to perform a function of the network device in the communication methods shown in FIG. 13 to FIG. 15.

It should be noted that the communication apparatus 1700 may be a network device, or may be a chip (system) or another part or component that can be disposed in the network device. This is not limited in this application.

For technical effects of the communication apparatus 1700, refer to the technical effects of the communication method in any possible implementation of FIG. 13 to FIG. 15. Details are not described herein again.

In still another possible design solution, the communication apparatus 1700 shown in FIG. 17 is applicable to the system shown in FIG. 1, and performs a function of the terminal device in the communication method according to any one of the foregoing method embodiments.

The receiving module 1702 is configured to receive configuration information of a reference signal.

The sending module 1701 is configured to send the reference signal via M antenna ports based on the configuration information, where M is an integer greater than 0, the M antenna ports include at least one first antenna port, a comb occupied by the first antenna port is determined based on at least a first offset, and the first offset is determined based on at least a time domain resource occupied by the first antenna port and/or a frequency domain resource occupied by the first antenna port.

It should be noted that all related content of the steps in the foregoing method embodiments may be cited in function descriptions of corresponding functional modules. Details are not described herein again.

It should be noted that the receiving module 1702 and the sending module 1701 may be separately disposed, or may be integrated into one module, namely, a transceiver module. This is not specifically limited in this application.

Optionally, the communication apparatus 1700 may further include a processing module 1703 and a storage module (not shown in FIG. 17). The storage module stores a program or instructions. When the processing module 1703 executes the program or the instructions, the communication apparatus 1700 is enabled to perform a function of the terminal device in the communication methods shown in FIG. 13 and FIG. 15.

It should be noted that the communication apparatus 1700 may be a terminal device, or may be a chip (system) or another part or component that can be disposed in the terminal device. This is not limited in this application.

For technical effects of the communication apparatus 1700, refer to the technical effects of the communication method in any possible implementation of FIG. 13 to FIG. 15. Details are not described herein again.

In still another possible design solution, the communication apparatus 1700 shown in FIG. 17 is applicable to the system shown in FIG. 1, and performs a function of the network device in the communication method according to any one of the foregoing method embodiments.

The sending module 1701 is configured to send configuration information of a reference signal.

The receiving module 1702 is configured to receive the reference signal via M antenna ports based on the configuration information, where M is an integer greater than 0, the M antenna ports include at least one first antenna port, a start position of a frequency domain resource occupied by the first antenna port is determined based on at least a fourth offset, and the fourth offset is determined based on at least a time domain resource occupied by the first antenna port and a pseudo-random sequence; or the fourth offset is determined based on one of a plurality of ninth correspondences and a time domain resource occupied by the first antenna port, the ninth correspondence includes a correspondence between at least one fourth offset and at least one time domain resource, and the plurality of ninth correspondences correspond to a same frequency scaling factor. It should be noted that all related content of the steps in the foregoing method embodiments may be cited in function descriptions of corresponding functional modules. Details are not described herein again.

It should be noted that the receiving module 1702 and the sending module 1701 may be separately disposed, or may be integrated into one module, namely, a transceiver module. This is not specifically limited in this application.

Optionally, the communication apparatus 1700 may further include a processing module 1703 and a storage module (not shown in FIG. 17). The storage module stores a program or instructions. When the processing module 1703 executes the program or the instructions, the communication apparatus 1700 is enabled to perform a function of the network device in the communication methods shown in FIG. 13 to FIG. 15.

It should be noted that the communication apparatus 1700 may be a network device, or may be a chip (system) or another part or component that can be disposed in the network device. This is not limited in this application.

For technical effects of the communication apparatus 1700, refer to the technical effects of the communication method in any possible implementation of FIG. 13 to FIG. 15. Details are not described herein again.

In still another possible design solution, the communication apparatus 1700 shown in FIG. 17 is applicable to the system shown in FIG. 1, and performs a function of the terminal device in the communication method according to any one of the foregoing method embodiments.

The receiving module 1702 is configured to receive configuration information of a reference signal.

The sending module 1701 is configured to send the reference signal via M antenna ports based on the configuration information, where M is an integer greater than 0, the M antenna ports include at least one first antenna port, a start position of a frequency domain resource occupied by the first antenna port is determined based on at least a fourth offset, and the fourth offset is determined based on at least a time domain resource occupied by the first antenna port and a pseudo-random sequence; or the fourth offset is determined based on one of a plurality of ninth correspondences and a time domain resource occupied by the first antenna port, the ninth correspondence includes a correspondence between at least one fourth offset and at least one time domain resource, and the plurality of ninth correspondences correspond to a same frequency scaling factor. It should be noted that all related content of the steps in the foregoing method embodiments may be cited in function descriptions of corresponding functional modules. Details are not described herein again.

It should be noted that the receiving module 1702 and the sending module 1701 may be separately disposed, or may be integrated into one module, namely, a transceiver module. This is not specifically limited in this application.

Optionally, the communication apparatus 1700 may further include a processing module 1703 and a storage module (not shown in FIG. 17). The storage module stores a program or instructions. When the processing module 1703 executes the program or the instructions, the communication apparatus 1700 is enabled to perform a function of the terminal device in the communication methods shown in FIG. 13 and FIG. 15.

It should be noted that the communication apparatus 1700 may be a terminal device, or may be a chip (system) or another part or component that can be disposed in the terminal device. This is not limited in this application.

For technical effects of the communication apparatus 1700, refer to the technical effects of the communication method in any possible implementation of FIG. 13 to FIG. 15. Details are not described herein again.

In still another possible design solution, the communication apparatus 1700 shown in FIG. 17 is applicable to the system shown in FIG. 1, and performs a function of the network device in the communication method according to any one of the foregoing method embodiments.

The sending module 1701 is configured to send configuration information of a reference signal.

The receiving module 1702 is configured to receive the reference signal via M antenna ports based on the configuration information, where

M is an integer greater than 0, the M antenna ports include at least one first antenna port, a cyclic shift value of the first antenna port is determined based on at least a first code domain offset, and the first code domain offset is determined based on at least a time domain resource occupied by the first antenna port and/or a frequency domain resource occupied by the first antenna port.

It should be noted that all related content of the steps in the foregoing method embodiments may be cited in function descriptions of corresponding functional modules. Details are not described herein again.

It should be noted that the receiving module 1702 and the sending module 1701 may be separately disposed, or may be integrated into one module, namely, a transceiver module. This is not specifically limited in this application.

Optionally, the communication apparatus 1700 may further include a processing module 1703 and a storage module (not shown in FIG. 17). The storage module stores a program or instructions. When the processing module 1703 executes the program or the instructions, the communication apparatus 1700 is enabled to perform a function of the network device in the communication methods shown in FIG. 13 to FIG. 15.

It should be noted that the communication apparatus 1700 may be a network device, or may be a chip (system) or another part or component that can be disposed in the network device. This is not limited in this application.

For technical effects of the communication apparatus 1700, refer to the technical effects of the communication method in any possible implementation of FIG. 13 to FIG. 15. Details are not described herein again.

In still another possible design solution, the communication apparatus 1700 shown in FIG. 17 is applicable to the system shown in FIG. 1, and performs a function of the terminal device in the communication method according to any one of the foregoing method embodiments.

The receiving module 1702 is configured to receive configuration information of a reference signal.

The sending module 1701 is configured to send the reference signal via M antenna ports based on the configuration information, where

M is an integer greater than 0, the M antenna ports include at least one first antenna port, a cyclic shift value of the first antenna port is determined based on at least a first code domain offset, and the first code domain offset is determined based on at least a time domain resource occupied by the first antenna port and/or a frequency domain resource occupied by the first antenna port.

It should be noted that all related content of the steps in the foregoing method embodiments may be cited in function descriptions of corresponding functional modules. Details are not described herein again.

It should be noted that the receiving module 1702 and the sending module 1701 may be separately disposed, or may be integrated into one module, namely, a transceiver module. This is not specifically limited in this application.

Optionally, the communication apparatus 1700 may further include a processing module 1703 and a storage module (not shown in FIG. 17). The storage module stores a program or instructions. When the processing module 1703 executes the program or the instructions, the communication apparatus 1700 is enabled to perform a function of the terminal device in the communication methods shown in FIG. 13 and FIG. 15.

It should be noted that the communication apparatus 1700 may be a terminal device, or may be a chip (system) or another part or component that can be disposed in the terminal device. This is not limited in this application.

For technical effects of the communication apparatus 1700, refer to the technical effects of the communication method in any possible implementation of FIG. 13 to FIG. 15. Details are not described herein again.

An embodiment of this application provides a communication system. The communication system includes a network device and a terminal device. A quantity of network devices and a quantity of terminal devices are not limited.

The network device is configured to perform an action of the network device in the foregoing method embodiments, and the terminal device is configured to perform an action of the terminal device in the foregoing method embodiments. For a specific execution method and process, refer to the foregoing method embodiments. Details are not described herein again.

An embodiment of this application provides a chip system. The chip system includes a logic circuit and an input/output port. The logic circuit may be configured to implement a processing function related to the communication method provided in embodiments of this application, and the input/output port may be configured to implement sending and receiving functions related to the communication method provided in embodiments of this application.

For example, the input port may be configured to implement a receiving function related to the communication method provided in embodiments of this application, and the output port may be configured to implement a sending function related to the communication method provided in embodiments of this application.

For example, the processor in the communication apparatus 1600 may be configured to perform, for example, but not limited to, baseband-related processing, and the transceiver in the communication apparatus 1600 may be configured to perform, for example, but not limited to, radio frequency receiving and sending. The foregoing components may be separately disposed on chips that are independent of each other, or at least some or all of the components may be disposed on a same chip. For example, the processor may further be divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system-on-chip (system on chip). Whether components are independently disposed on different chips or are integrated and disposed on one or more chips usually depends on specific requirements of a product design. Specific implementation forms of the components are not limited in embodiments of the present invention.

In a possible design, the chip system further includes a memory, and the memory is configured to store program instructions and data for implementing functions related to the communication method provided in embodiments of this application.

The chip system may include a chip; or may include a chip and another discrete component.

An embodiment of this application provides a computer-readable storage medium. The computer-readable storage medium stores a computer program or instructions. When the computer program is run or the instructions are run on a computer, the communication method provided in embodiments of this application is performed.

An embodiment of this application provides a computer program product. The computer program product includes a computer program or instructions. When the computer program is run or the instructions are run on a computer, the communication method provided in embodiments of this application is performed.

It should be understood that the processor in embodiments of this application may be a central processing unit (central processing unit, CPU). Alternatively, the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used for implementing the embodiments, all or some of the foregoing embodiments may be implemented in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

    sending configuration information of a reference signal; and
    receiving the reference signal via M antenna ports based on the configuration information, wherein M is an integer greater than 0, the M antenna ports comprise at least one first antenna port, a comb occupied by the first antenna port is determined based on at least a first offset, and the first offset is determined based on at least a time domain resource occupied by the first antenna port and/or a frequency domain resource occupied by the first antenna port.

2. A communication method, comprising:

    receiving configuration information of a reference signal; and
    sending the reference signal via M antenna ports based on the configuration information, wherein M is an integer greater than 0, the M antenna ports comprise at least one first antenna port, a comb occupied by the first antenna port is determined based on at least a first offset, and the first offset is determined based on at least a time domain resource occupied by the first antenna port and/or a frequency domain resource occupied by the first antenna port.

3. The communication method according to claim 1 or 2, wherein the first offset comprises a first random number and/or a fifth random number, the first random number is determined based on at least the time domain resource occupied by the first antenna port, and the fifth random number is determined based on at least the frequency domain resource occupied by the first antenna port.

4. The communication method according to claim 3, wherein that the first random number is determined based on at least the time domain resource occupied by the first antenna port comprises: the first random number is determined based on one of a plurality of first correspondences and the time domain resource occupied by the first antenna port, and the first correspondence comprises a correspondence between at least one first random number and at least one time domain resource.

5. The communication method according to claim 4, wherein one frequency hopping periodicity comprises at least one time of reference signal sending, and the correspondence between at least one first random number and at least one time domain resource comprises: a correspondence between the at least one first random number and a relative number of the at least one time of reference signal sending in the frequency hopping periodicity.

6. The communication method according to claim 4, wherein the correspondence between at least one first random number and at least one time domain resource comprises: a correspondence between the at least one first random number and an index of at least one frequency hopping periodicity.

7. The communication method according to claim 3, wherein that the first random number is determined based on at least the time domain resource occupied by the first antenna port comprises:
the first random number is determined based on the time domain resource occupied by the first antenna port and a pseudo-random sequence.

8. The communication method according to claim 7, wherein the first random number is further determined based on one or more of the following parameters: a quantity of slots comprised in each system frame, a quantity of OFDM symbols comprised in each slot, a comb quantity, and a comb offset, wherein the comb quantity is a quantity of combs comprised in a transmit bandwidth of the reference signal, and the comb offset is a reference quantity of combs occupied by the reference signal.

9. The communication method according to claim 7 or 8, wherein the first random number satisfies:

$$Q_1 = \left( \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m \right) \bmod K_{TC};$$

$$Q_1 = \left( \sum_{m=0}^{7} c(8(n_{\text{s,f}}^{\mu} N_{\text{symb}}^{\text{slot}} + l_0 + l') + m) \cdot 2^m \right) \bmod K_{TC};$$

$$Q_1 = \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m) \cdot 2^m;$$

or

$$Q_1 = \sum_{m=0}^{7} c(8(n_{\text{s,f}}^{\mu} N_{\text{symb}}^{\text{slot}} + l_0 + l') + m) \cdot 2^m,$$

wherein $Q_1$ represents the first random number, a mathematical symbol $\Sigma$ represents summation, a mathematical symbol mod represents a modulo operation, c() is the pseudo-random sequence, $n_f$ represents a system frame number corresponding to the first antenna port, $N_{\text{slot}}^{\text{frame}}$ represents the quantity of slots in each system frame, $N_{\text{symb}}^{\text{slot}}$ represents the quantity of OFDM symbols in each slot, $n_{\text{s,f}}^{\mu}$ represents a slot number corresponding to the first antenna port, $l_0$ represents an index of a start OFDM symbol in one or more OFDM symbols comprised in the time domain resource occupied by the first antenna port, $l'$ represents a relative index of one OFDM symbol in the one or more OFDM symbols comprised in the time domain resource occupied by the first antenna port, and $K_{\text{TC}}$ represents the comb quantity.

10. The communication method according to any one of claims 3 to 9, wherein that the fifth random number is determined based on at least the frequency domain resource occupied by the first antenna port comprises: the fifth random number is determined based on one of a plurality of second correspondences and the frequency domain resource occupied by the first antenna port, and the second correspondence comprises a correspondence between at least one fifth random number and at least one frequency domain resource.

11. The communication method according to any one of claims 3 to 9, wherein that the fifth random number is determined based on at least the frequency domain resource occupied by the first antenna port comprises:
the fifth random number is determined based on the frequency domain resource occupied by the first antenna port and a pseudo-random sequence.

12. The communication method according to claim 11, wherein the fifth random number satisfies:

$$Q_3 = (\sum_{m=0}^{7} c(8k + m) \cdot 2^m) \bmod K_{TC};$$

or

$$Q_3 = \sum_{m=0}^{7} c(8k + m) \cdot 2^m,$$

wherein $Q_3$ represents the fifth random number, the mathematical symbol $\Sigma$ represents summation, the mathematical symbol mod represents a modulo operation, c() is the pseudo-random sequence, k represents an index of a frequency hopping bandwidth and/or an index of a transmit bandwidth that correspond/corresponds to the frequency domain resource occupied by the first antenna port, and $K_{TC}$ represents the comb quantity.

13. The communication method according to any one of claims 1 to 12, wherein the time domain resource occupied by the first antenna port comprises one or more orthogonal frequency division multiplexing OFDM symbols, and the one or more OFDM symbols comprised in the time domain resource occupied by the first antenna port are determined based on one or more of the following parameters: a system frame number corresponding to the first antenna port, a slot number corresponding to the first antenna port, and an OFDM symbol number corresponding to the first antenna port.

14. The communication method according to any one of claims 1 to 13, wherein the frequency domain resource occupied by the first antenna port comprises one or more sub-bandwidths, and the one or more sub-bandwidths comprised in the frequency domain resource occupied by the first antenna port are determined based on one or more of the following parameters: the index of the frequency hopping bandwidth corresponding to the first antenna port, and the index of the transmit bandwidth corresponding to the first antenna port.

15. The communication method according to any one of claims 1 to 14, wherein the M antenna ports further comprise at least one second antenna port, a comb occupied by the second antenna port is determined based on at least a second offset, the second offset is determined based on at least a time domain resource occupied by the second antenna port and/or a frequency domain resource occupied by the second antenna port, and the second offset is different from the first offset.

16. The communication method according to claim 15, wherein the second offset comprises a second random number and/or a sixth random number, the second random number is determined based on at least the time domain resource occupied by the second antenna port, and the sixth random number is determined based on at least the frequency domain resource occupied by the second antenna port.

17. The communication method according to claim 16, wherein that the second random number is determined based on at least the time domain resource occupied by the second antenna port comprises: the second random number is determined based on one of a plurality of third correspondences and the time domain resource occupied by the second antenna port, and the third correspondence comprises a correspondence between at least one second random number and at least one time domain resource.

18. The communication method according to claim 17, wherein one frequency hopping periodicity comprises at least one time of reference signal sending, and the correspondence between at least one second random number and at least one time domain resource comprises: a correspondence between the at least one second random number and a relative number of the at least one time of reference signal sending in the frequency hopping periodicity.

19. The communication method according to claim 17, wherein the correspondence between at least one second random number and at least one time domain resource comprises: a correspondence between the at least one second random number and an index of at least one frequency hopping periodicity.

20. The communication method according to claim 13, wherein that the second random number is determined based on at least the time domain resource occupied by the second antenna port comprises:
the second random number is determined based on the time domain resource occupied by the second antenna port and a pseudo-random sequence.

21. The communication method according to claim 20, wherein the second random number is further determined based on one or more of the following parameters: the quantity of the slots comprised in each system frame, the quantity of the OFDM symbols comprised in each slot, the comb quantity, and the comb offset, wherein the comb quantity is the quantity of the combs comprised in the transmit bandwidth of the reference signal, and the comb offset is the reference quantity of the combs occupied by the reference signal.

22. The communication method according to claim 20 or 21, wherein the second random number satisfies:

$$Q_2 = \left(\sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m\right) \bmod K_{TC};$$

$$Q_2 = \left(\sum_{m=0}^{7} c(8(n_{\text{s,f}}^{\mu} N_{\text{symb}}^{\text{slot}} + l_0 + l') + m + 1) \cdot 2^m\right) \bmod K_{TC};$$

$$Q_2 = \sum_{m=0}^{7} c(8(n_f N_{\text{slot}}^{\text{frame}} N_{\text{symb}}^{\text{slot}} + n_{\text{s,f}}^{\mu} N_{\text{symb}}^{\text{slot}} + l_0 + l') + m + 1) \cdot 2^m;$$

or

$$Q_2 = \sum_{m=0}^{7} c(8(n_{\text{s,f}}^{\mu} N_{\text{symb}}^{\text{slot}} + l_0 + l') + m + 1) \cdot 2^m,$$

wherein $Q_2$ represents the second random number, the mathematical symbol $\Sigma$ represents summation, the mathematical symbol mod represents a modulo operation, c() is the pseudo-random sequence, $n_f$ represents a system frame number corresponding to the second antenna port, $N_{\text{slot}}^{\text{frame}}$ represents the quantity of the slots in each system frame, $N_{\text{symb}}^{\text{slot}}$ represents the quantity of the OFDM symbols in each slot, $n_{\text{s,f}}^{\mu}$ represents a slot number corresponding to the second antenna port, $l_0$ represents an index of a start OFDM symbol in one or more OFDM symbols comprised in the time domain resource occupied by the second antenna port, $l'$ represents a relative index of one OFDM symbol in the one or more OFDM symbols comprised in the time domain resource occupied by the second antenna port, and $K_{\text{TC}}$ represents the comb quantity.

23. The communication method according to any one of claims 16 to 22, wherein that the sixth random number is determined based on at least the frequency domain resource occupied by the second antenna port comprises: the sixth random number is determined based on one of a plurality of fourth correspondences and the frequency domain resource occupied by the second antenna port, and the fourth correspondence comprises a correspondence between at least one sixth random number and at least one frequency domain resource.

24. The communication method according to any one of claims 16 to 22, wherein that the sixth random number is determined based on at least the frequency domain resource occupied by the second antenna port comprises: the sixth random number is determined based on the frequency domain resource occupied by the second antenna port and a pseudo-random sequence.

25. The communication method according to claim 24, wherein the sixth random number satisfies:

$$Q_4 = \left(\sum_{m=0}^{7} c(8k + m) \cdot 2^m\right) \bmod K_{TC};$$

or

$$Q_4 = \sum_{m=0}^{7} c(8k + m) \cdot 2^m,$$

wherein $Q_4$ represents the sixth random number, the mathematical symbol $\Sigma$ represents summation, the mathematical symbol mod represents a modulo operation, $c()$ is the pseudo-random sequence, $k$ represents an index of a frequency hopping bandwidth and/or an index of a transmit bandwidth that correspond/corresponds to the frequency domain resource occupied by the second antenna port, and $K_{TC}$ represents the comb quantity.

26. The communication method according to claim 15, wherein the second offset is a sum of the first offset and a third offset, and the third offset is an integer greater than 0.

27. The communication method according to claim 26, wherein the third offset is determined based on at least the time domain resource occupied by the second antenna port and/or the frequency domain resource occupied by the second antenna port.

28. The communication method according to claim 27, wherein the third offset comprises a third random number and/or a seventh random number, the third random number is determined based on at least the time domain resource occupied by the second antenna port, and the seventh random number is determined based on at least the frequency domain resource occupied by the second antenna port.

29. The communication method according to claim 28, wherein that the third random number is determined based on at least the time domain resource occupied by the second antenna port comprises: the third random number is determined based on one of a plurality of fifth correspondences and the time domain resource occupied by the second antenna port, and the fifth correspondence comprises a correspondence between at least one third random number and at least one time domain resource.

30. The communication method according to claim 29, wherein one frequency hopping periodicity comprises at least one time of reference signal sending, and the correspondence between at least one third random number and at least one time domain resource comprises: a correspondence between the at least one third random number and a relative number of the at least one time of reference signal sending in the frequency hopping periodicity.

31. The communication method according to claim 29, wherein the correspondence between at least one third random number and at least one time domain resource comprises: a correspondence between the at least one third random number and an index of at least one frequency hopping periodicity.

32. The communication method according to claim 23, wherein that the third random number is determined based on at least the time domain resource occupied by the second antenna port comprises: the third random number is determined based on the time domain resource occupied by the second antenna port and a pseudo-random sequence.

33. The communication method according to claim 32, wherein the third random number is further determined based on one or more of the following parameters: the quantity of the slots comprised in each system frame, the quantity of the OFDM symbols comprised in each slot, the comb quantity, and the comb offset, wherein the comb quantity is the quantity of the combs comprised in the transmit bandwidth of the reference signal, and the comb offset is the reference quantity of the combs occupied by the reference signal.

34. The communication method according to claim 32 or 33, wherein the third random number satisfies:

$$\Delta = \left(\sum_{m=0}^{7} c(8(n_f N_{slot}^{frame} N_{symb}^{slot} + n_{s,f}^{\mu} N_{symb}^{slot} + l_0 + l') + m + 1) \cdot 2^m\right) \bmod (K_{TC}/2);$$

$$\Delta = \left(\sum_{m=0}^{7} c(8(n_{s,f}^{\mu} N_{symb}^{slot} + l_0 + l') + m + 1) \cdot 2^m\right) \bmod (K_{TC}/2);$$

$$\Delta = \left(\sum_{m=0}^{7} c(8(n_f N_{slot}^{frame} N_{symb}^{slot} + n_{s,f}^{\mu} N_{symb}^{slot} + l_0 + l') + m) \cdot 2^m\right) \bmod (K_{TC}/2);$$

or

$$\Delta = \left(\sum_{m=0}^{7} c(8(n_{s,f}^{\mu} N_{symb}^{slot} + l_0 + l') + m) \cdot 2^m\right) \bmod (K_{TC}/2),$$

wherein $\Delta$ represents the third random number, the mathematical symbol $\Sigma$ represents summation, the mathematical symbol mod represents a modulo operation, $c()$ is the pseudo-random sequence, $n_f$ represents the system frame number corresponding to the second antenna port, $N_{slot}^{frame}$ represents the quantity of the slots comprised in each system frame, $N_{symb}^{slot}$ represents the quantity of the OFDM symbols comprised in each slot, $n_{s,f}^{\mu}$ represents the slot number corresponding to the second antenna port, $l_0$ represents the index of the start OFDM symbol in the one or more OFDM symbols comprised in the time domain resource occupied by the second antenna port, $l'$ represents the relative index of the OFDM symbol in the one or more OFDM symbols comprised in the time domain resource occupied by the second antenna port, and $K_{TC}$ represents the comb quantity.

35. The communication method according to any one of claims 28 to 34, wherein that the seventh random number is determined based on at least the frequency domain resource occupied by the second antenna port comprises: the seventh random number is determined based on one of a plurality of sixth correspondences and the frequency domain resource occupied by the second antenna port, and the sixth correspondence comprises a correspondence between at least one seventh random number and at least one frequency domain resource.

36. The communication method according to any one of claims 28 to 34, wherein that the seventh random number is determined based on at least the frequency domain resource occupied by the second antenna port comprises: the seventh random number is determined based on the frequency domain resource occupied by the second antenna port and a pseudo-random sequence.

37. The communication method according to claim 36, wherein the seventh random number satisfies:

$$\Delta_1 = \left(\sum_{m=0}^{7} c(8k + m + 1) \cdot 2^m\right) \bmod (K_{TC}/2);$$

or

$$\Delta_1 = \left(\sum_{m=0}^{7} c(8k + m) \cdot 2^m\right) \bmod (K_{\mathrm{TC}}/2),$$

wherein $\Delta_1$ represents the seventh random number, the mathematical symbol $\Sigma$ represents summation, $c()$ is the pseudo-random sequence, the mathematical symbol mod represents a modulo operation, $k$ represents an index of a frequency hopping bandwidth and/or an index of a transmit bandwidth that correspond/corresponds to the frequency domain resource occupied by the second antenna port, and $K_{\mathrm{TC}}$ represents the comb quantity.

38. The communication method according to any one of claims 15 to 37, wherein the time domain resource occupied by the second antenna port comprises the one or more OFDM symbols, and the one or more OFDM symbols comprised in the time domain resource occupied by the second antenna port are determined based on one or more of the following parameters: the system frame number corresponding to the second antenna port, the slot number corresponding to the second antenna port, and an OFDM symbol number corresponding to the second antenna port.

39. The communication method according to any one of claims 15 to 38, wherein the frequency domain resource occupied by the second antenna port comprises one or more sub-bandwidths, and the one or more sub-bandwidths comprised in the frequency domain resource occupied by the second antenna port are determined based on one or more of the following parameters: the index of the frequency hopping bandwidth corresponding to the second antenna port, and the index of the transmit bandwidth corresponding to the second antenna port.

40. A communication apparatus, wherein the communication apparatus comprises a unit or a module configured to perform the method according to any one of claims 1 to 39.

41. A communication apparatus, wherein the communication apparatus comprises a processor, and the processor is configured to perform the communication method according to any one of claims 1 to 39.

42. A computer-readable storage medium, wherein the computer-readable storage medium stores a computer program or instructions; and when the computer program is run or the instructions are run on a computer, the communication method according to any one of claims 1 to 39 is performed.

43. A computer program product, wherein the computer program product comprises a computer program or instructions; and when the computer program is run or the instructions are run on a computer, the communication method according to any one of claims 1 to 39 is performed.

Network device      Terminal device

FIG. 1

RB

|   | (a) |   |   |   |
|---|---|---|---|---|

(a)
(b)

FIG. 2

FIG. 3

|  |  |  |  |
| --- | --- | --- | --- |
| Comb 1 | | UE 1, UE 2, UE 5, and UE 6 |
| Comb 2 | | UE 3, UE 4, UE 7, and UE 8 |
| Comb 3 | | UE 1, UE 2, UE 5, and UE 6 |
| Comb 4 | | UE 3, UE 4, UE 7, and UE 8 |

Any sending moment

FIG. 4

FIG. 5

0
1
2
3
4
5
6
7
8
9
10
11
12
13
14
15

Sending
moment 1

Sending
moment 2

Sending
moment n

UE 1, UE 2, UE 5, and UE 6

UE 3, UE 4, UE 7, and UE 8

UE 1, UE 2, UE 5, and UE 6

UE 3, UE 4, UE 7, and UE 8

Sending
moment 1

UE 1, UE 2, UE 7, and UE 8

UE 3, UE 4, UE 5, and UE 6

UE 1, UE 2, UE 7, and UE 8

UE 3, UE 4, UE 5, and UE 6

Sending
moment 2

UE 3, UE 4, UE 7, and UE 8

UE 1, UE 2, UE 5, and UE 6

UE 3, UE 4, UE 7, and UE 8

UE 1, UE 2, UE 5, and UE 6

Sending
moment n

FIG. 6

FIG. 7

Sending
moment 1

Sending
moment 2

...

Sending
moment n

UE 1 and UE 5

UE 2 and UE 6

UE 3 and UE 7

UE 4 and UE 8

Any sending moment

FIG. 8

Sending moment 1  Sending moment 2 ... Sending moment n

▦ UE 1 p0, UE 2 p3, UE 3 p2, UE 4 p1, UE 5 p0, UE 6 p3, UE 7 p3, and UE 8 p1

▨ UE 1 p1, UE 2 p0, UE 3 p3, UE 4 p2, UE 5 p1, UE 6 p0, UE 7 p2, and UE8 p2

▨ UE 1 p2, UE 2 p1, UE 3 p0, UE 4 p3, UE 5 p2, UE 6 p1, UE 7 p0, and UE 8 p3

▥ UE 1 p3, UE 2 p2, UE 3 p1, UE 4 p0, UE 5 p3, UE 6 p2, UE 7 p1, and UE 8 p0

Sending
moment 1

▦ UE 1 p3, UE 2 p2, UE 3 p1, UE 4 p0, UE 5 p2, UE 6 p1, UE 7 p0, and UE 8 p3

▨ UE 1 p0, UE 2 p3, UE 3 p2, UE 4 p1, UE 5 p3, UE 6 p2, UE 7 p1, and UE 8 p0

▨ UE 1 p1, UE 2 p0, UE 3 p3, UE 4 p2, UE 5 p0, UE 6 p3, UE 7 p2, and UE 8 p1

▥ UE 1 p2, UE 2 p1, UE 3 p0, UE 4 p3, UE 5 p1, UE 6 p0, UE 7 p3, and UE 8 p2

Sending
moment 2

...

▦ UE 1 p1, UE 2 p0, UE 3 p3, UE 4 p2, UE 5 p3, UE 6 p2, UE 7 p1, and UE 8 p0

▨ UE 1 p2, UE 2 p1, UE 3 p0, UE 4 p3, UE 5 p0, UE 6 p3, UE 7 p2, and UE 8 p1

▨ UE 1 p3, UE 2 p2, UE 3 p1, UE 4 p0, UE 5 p1, UE 6 p0, UE 7 p3, and UE 8 p2

▥ UE 1 p0, UE 2 p3, UE 3 p2, UE 4 p1, UE 5 p2, UE 6 p1, UE 7 p0, and UE 8 p3

Sending
moment n

FIG. 9

FIG. 10

Sending moment 1  Sending moment 2

Frequency hopping periodicity 1

Frequency hopping periodicity 2

Sending moment 4n

Frequency hopping periodicity n

UE 1 and UE 3

UE 2 and UE 4

Any frequency hopping periodicity

RB

| Network device | | Terminal device |
|---|---|---|

S1101: Send
configuration information

S1102: Send a reference signal
via M antenna ports based on
the configuration information

FIG. 11

FIG. 12

| Network device | | Terminal device |
|---|---|---|

S1301: Send configuration information of a reference signal

S1302: Send the reference signal via M antenna ports based on the configuration information

FIG. 13

| Network device | | Terminal device |
|---|---|---|

S1401: Send configuration information of a reference signal

S1402: Send the reference signal via M antenna ports based on the configuration information

FIG. 14

| Network device | | Terminal device |
|---|---|---|

S1501: Send configuration information of a reference signal

S1502: Send the reference signal via M antenna ports based on the configuration information

FIG. 15

Communication apparatus 1600

1601

Processor

CPU 0

CPU 1

1604

Processor

CPU 2

CPU 3

1602

Memory

1603

Transceiver

FIG. 16

Communication apparatus 1700

1701

Sending module

Processing module

1703

1702

Receiving module

FIG. 17

## INTERNATIONAL SEARCH REPORT

| International application No. |
|---|
| **PCT/CN2023/090409** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC: H04L H04W H04B

Documentation searched other than minimum documentation to the extent that such documents are included in the fields searched

Electronic data base consulted during the international search (name of data base and, where practicable, search terms used)

CNTXT; WPABS; ENTXT; 3GPP; CNKI: 参考信号, 端口, 偏移, 偏置, 梳齿, 配置, 随机, rs, reference signal, port, offset, comb, configur+, random

**C. DOCUMENTS CONSIDERED TO BE RELEVANT**

| Category* | Citation of document, with indication, where appropriate, of the relevant passages | Relevant to claim No. |
|---|---|---|
| A | WO 2021208779 A1 (ZTE CORP.) 21 October 2021 (2021-10-21) entire document | 1-43 |
| A | CN 113366900 A (GUANGDONG OPPO MOBILE TELECOMMUNICATIONS CORP., LTD.) 07 September 2021 (2021-09-07) entire document | 1-43 |
| A | CN 106922207 A (FUJITSU LTD.) 04 July 2017 (2017-07-04) entire document | 1-43 |
| A | CN 108260219 A (ZTE CORP.) 06 July 2018 (2018-07-06) entire document | 1-43 |
| A | CN 109802801 A (HUAWEI TECHNOLOGIES CO., LTD.) 24 May 2019 (2019-05-24) entire document | 1-43 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2023** | **09 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/090409**

| Patent document cited in search report | | | Publication date (day/month/year) | Patent family member(s) | | | Publication date (day/month/year) |
|---|---|---|---|---|---|---|---|
| WO | 2021208779 | A1 | 21 October 2021 | US | 2023136464 | A1 | 04 May 2023 |
| | | | | CA | 3175343 | A1 | 21 October 2021 |
| | | | | EP | 4138325 | A1 | 22 February 2023 |
| CN | 113366900 | A | 07 September 2021 | WO | 2021012981 | A1 | 28 January 2021 |
| CN | 106922207 | A | 04 July 2017 | EP | 3236596 | A1 | 25 October 2017 |
| | | | | EP | 3236596 | A4 | 08 August 2018 |
| | | | | EP | 3236596 | B1 | 08 April 2020 |
| | | | | EP | 3675411 | A1 | 01 July 2020 |
| | | | | KR | 20170085113 | A | 21 July 2017 |
| | | | | KR | 102059476 | B1 | 26 December 2019 |
| | | | | US | 2017279505 | A1 | 28 September 2017 |
| | | | | US | 11323157 | B2 | 03 May 2022 |
| | | | | WO | 2016095110 | A1 | 23 June 2016 |
| | | | | JP | 2018504027 | A | 08 February 2018 |
| CN | 108260219 | A | 06 July 2018 | KR | 20200108339 | A | 17 September 2020 |
| | | | | KR | 102469250 | B1 | 21 November 2022 |
| | | | | US | 2021067296 | A1 | 04 March 2021 |
| | | | | US | 11343046 | B2 | 24 May 2022 |
| | | | | EP | 3740011 | A1 | 18 November 2020 |
| | | | | EP | 3740011 | A4 | 15 September 2021 |
| | | | | JP | 2021511714 | A | 06 May 2021 |
| | | | | JP | 7181937 | B2 | 01 December 2022 |
| | | | | WO | 2019137098 | A1 | 18 July 2019 |
| CN | 109802801 | A | 24 May 2019 | JP | 2021503819 | A | 12 February 2021 |
| | | | | JP | 7080972 | B2 | 06 June 2022 |
| | | | | WO | 2019096248 | A1 | 23 May 2019 |
| | | | | EP | 3672102 | A1 | 24 June 2020 |
| | | | | EP | 3672102 | A4 | 18 November 2020 |
| | | | | EP | 3672102 | B1 | 09 March 2022 |
| | | | | US | 2020374074 | A1 | 26 November 2020 |
| | | | | US | 11258563 | B2 | 22 February 2022 |
| | | | | EP | 4054088 | A1 | 07 September 2022 |
| | | | | US | 2022140973 | A1 | 05 May 2022 |
| | | | | US | 11569959 | B2 | 31 January 2023 |
| | | | | US | 2020052853 | A1 | 13 February 2020 |
| | | | | US | 10771219 | B2 | 08 September 2020 |
| | | | | NZ | 763969 | A | 25 March 2022 |
| | | | | BR | 112020008403 | A2 | 03 November 2020 |

Form PCT/ISA/210 (patent family annex) (July 2022)

**EP 4 514 007 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210469116

- CN 202210969093